# EUROPEAN PATENT APPLICATION

(11) **EP 4 664 326 A2**
(43) Date of publication of application: **17.12.2025**
(21) Application number: 25211543.1
(22) Date of filing: 24.07.2018
(51) Int. Cl.: G06F 16/958

(54) **EDITING A DATABASE DURING PREVIEW OF A VIRTUAL WEB PAGE**

(30) Priority: 24.07.2017 US 201762536403 P; 23.07.2018 US 201862702278 P
(62) Divisional of application: 23180890.8
(71) Applicant: Wix.com Ltd., Tel Aviv 6936025 (IL)
(72) Inventor: BLUMENFELD, Uval, A., Tel Aviv (IL); KAUFMAN, Amit, Tel Aviv (IL); WEINER, Shay, Tel Aviv (IL); ABRAHAMI, Yoav, Tel Aviv (IL)
(74) Representative: Pfundner, Benjamin Patrick

(57) **Abstract**

Disclosed embodiments relate to updating a back-end database containing data sets that populate a plurality of web pages of a website. Operations include receiving via a user interface, a plurality of data elements; storing groups of at least one data element in a database; generating a plurality of virtual web pages, wherein each virtual web page is a preview of a corresponding actual web page before the corresponding actual web page goes live; displaying each group of at least one data element in a separate one of the plurality of virtual web pages; displaying an editing tool to permit a user to edit a virtual web page from the plurality of virtual web pages; translating the edits to the virtual web page into updates for the database; storing the updates in the database; and enabling a display on the corresponding actual web page with the updates.

## Description

### CROSS-REFERENCE TO RELATED APPLICATIONS

This application claims priority to U.S. Provisional Application No. 62/536,403, filed on July 24, 2017, and U.S. Provisional Application No. 62/702,278, filed on July 23, 2018, the entirety of which are both hereby incorporated by reference.

This application is also generally related to, and incorporates by reference in their entirety, the following applications: U.S. Application No. 13/596,146, filed on August 28, 2012; U.S. Application No. 13/771,119, filed on February 20, 2013; U.S. Application No. 13/779,798, filed on February 28, 2013; U.S. Application No. 13/786,488, filed on March 6, 2013; U.S. Application No. 13/959,759, filed on August 6, 2013; U.S. Application No. 15/339,984, filed on November 1, 2016; U.S. Application No. 14/053,614, filed on October 15, 2013; U.S. Application No. 15/233,987, filed on August 11, 2016; U.S. Application No. 14/176,166, filed on February 10, 2014; U.S. Application No. 14/207,761, filed on March 13, 2014; U.S. Application No. 14/483,981, filed on September 11, 2014; U.S. Application No. 14/559,943, filed on December 4, 2014; U.S. Application No. 14/619,903, filed on February 11, 2015; U.S. Application No. 15/706,789, filed on September 18, 2017; U.S. Application No. 14/207,930, filed on March 13, 2014; U.S. Application No. 15/657,156, filed on July 23, 2017; U.S. Application No. 14/699,828, filed on April 29, 2015; U.S. Application No. 15/653,568, filed on July 19, 2017; U.S. Application No. 14/926,007, filed on October 29, 2015; U.S. Application No. 14/619,145, filed on February 11, 2015; U.S. Application No. 15/708,160, filed on September 19, 2017; U.S. Application No. 15/168,295, filed on May 31, 2016; U.S. Application No. 15/175,272, filed on June 7, 2016; U.S. Application No. 15/224,616, filed on July 31, 2016; U.S. Application No. 15/292,172, filed on October 13, 2016; U.S. Application No. 15/224,579, filed on July 31, 2016; U.S. Application No. 16/000,907, filed on June 6, 2018; U.S. Application No. 15/607,586, filed on May 29, 2017; U.S. Application No. 15/661,342, filed on July 27, 2017; U.S. Application No. 15/850,151, filed on December 21, 2017; U.S. Application No. 16/002,356, filed on June 7, 2018; U.S. Provisional Application No. 62/591,297, filed on November 28, 2017; U.S. Provisional Application No. 62/624,824, filed on February 1, 2018; U.S. Provisional Application No. 62/626,093, filed on February 4, 2018; and U.S. Provisional Application No. 62/647,736, filed on February 25, 2018.

### BACKGROUND

This disclosure relates to website building systems for building indexable websites and web applications which integrate custom backend functionality running on a system fully managed by a third-party. For example, embodiments include developing custom backend functionality which may be executed in stateless server environment (such as containers, serverless code, or virtual machines) when a programmable event associated with a frontend component or system activity is triggered without the user of the system having to become involved in managing the client-server interaction.

Further, this disclosure relates to hosting and managing load of a website by providing on-demand run instances of the website or individual webpages instantaneously. The instances may in some embodiments be spun up as virtual machines, containers, or serverless code elements. More specifically, this disclosure relates to systems and methods for monitoring the load and activity of hosted websites in order to automatically add and remove instances serving websites hosted on the system without significant delay in responding to a request to serve a website. Further, hosted websites may be comprised of a combination of generic and website-specific code.

Still further, the disclosure relates to visualizing and testing websites with real-time access to data generated in a production environment for and by the end user of the website and the data linked to the website. More specifically, this disclosure relates to providing access to data usually seen by an end user of a website for testing the functionality and experience of a website by a developer or designer of the website.

Further, this disclosure relates to editing a database during preview of a virtual webpage. For example, users may store groups of data elements (e.g., text, graphics, videos, etc.) in a database, and one or more virtual webpages may be generated to display a preview of the webpages. During the display of the virtual webpages, users may be permitted to edit the virtual webpage, and their edits may be translated into updates for the database. Further, during a live view of an actual webpage corresponding to the virtual webpage, the updates to the database may be reflected in the displayed live view.

Website building systems, as disclosed herein, are used to allow people with limited software development experience and/or limited resources to develop and host a customized website. Conventional website development systems, on the other hand, offer a template frontend UI with no or limited backend control through calls to external services or embedded code snippets calling server-side code, thus limiting the system to webpages with no or minimal options for data manipulation or other custom functionality. Other systems expect to be fully involved in setting up client-server interactions in order to access full backend control.

Conventional website development systems lack the capability to create layouts of webpages to be populated with data to create multiple dynamic pages which can be indexed. Further, conventional systems lack the capability to integrate software-based routers for webpages, which may allow webpages to contain different content or function differently depending on how a user reached the webpages or interacts with them. Conventional systems also lack the capability to monitor the interaction of a user of the website and show resultant outputs based on prior registered functionality associated with those interactions.

Conventional managed website hosting systems are used to serve requests to a website either using dedicated servers, which cost significant money and resources to maintain ready and operational, or using a cold start of new instances when a new website is requested or the load of a particular website goes beyond a certain threshold of delay in responding to a request. Such a process of cold starting new instances of a website or webpages entails substantial processing delay and consequential latency in the user experience.

Conventional website development systems are also limited in terms of their ability to permit users to dynamically edit previews of pages. Such systems are also unable to receive edits to a previewed page, and translate those edits into updates to a database on which all or portions of the page are based. As a result, using such conventional systems involves more user action, more bandwidth, and more cumbersome operations.

Website testing systems, as disclosed herein, may be set up to create a realistic experience of using the website by an end user without disrupting the end user experience. Conventional website testing systems, however, provide a limited preview interface to review the site in a way an end user would experience the website, but they do not have a way to provide real-time access to data generated on the website being tested. Conventional systems also lack the ability to add new data and delete data generated for the site without impacting the end user experience.

Conventional website hosting systems are also vulnerable to plugins (e.g., software that may be integrated into the frontend or backend a website) that contain malicious code (e.g., malware). When such code is uploaded by one website owner or user, it may spread through the website hosting system to affect websites of other owners or users. Conventional website hosting systems lack the capability to isolate uploaded plugins and prevent them from infecting other websites that are commonly hosted by the system.

Accordingly, there is a need for technological solutions for new website development systems to manage backend functionality, to provide the freedom to have more customization of the website, and without involving a user in server setup, provisioning, or server-client interactions. There is further a need to provide technological tools to users for building customized websites, including with customized coding capabilities, without requiring users to code entire websites from scratch.

Further, there is a need for technological solutions for a new on-demand system to handle requests to websites without significant delay. Such technological solutions should utilize virtual computing resources, such as virtual machines, containers, serverless code, etc. Further, such solutions should allow for highly customized websites, including both common features across many pages or sites, as well as features unique to particular pages or sites.

Still further, there is also a need for technological solutions for a new website testing system with real-time data access to what is available in production.

In addition, there is a need for technological solutions for isolating uploaded plugins, and preventing them from infecting co-hosted websites. Such techniques should be capable of isolating both frontend and backend plugins, while still allowing such plugins to be uploaded and utilized by website owners and users.

### SUMMARY

Certain embodiments of the present disclosure relate to a system for building a website. The system may include an online website building system configured to permit website builders to add backend functionality to a centrally hosted website, the centrally hosted website including one or more webpages indexable by a search engine. The online system may allow for the editing and the dynamic preview of pages to use a common online database, which designers and users may access simultaneously. The system may comprise an online database configured to store a library of website building elements for configuring a frontend of an indexable webpage, as well as at least one processor configured to perform certain operations. Operations may include transmitting first instructions to a remote web browser of a user, the first instructions permitting the user to remotely access the stored library via a unified interface displayable by the remote web browser, and to permit the user to utilize a selection of the building elements for constructing the frontend of the indexable webpage, wherein the unified interface provides the user access to both the building elements and customized backend functionality associated with the indexable webpage; enabling, via the unified interface displayable by the remote web browser, the user to configure a programmable event for activating user-editable code providing customized backend functionality associated with the indexable webpage; receiving, via the unified interface, user edits to the user-editable code for implementing the customized backend functionality associated with the programmable event; storing the edited user-editable code in a code storage system in communication with the online database; and in response to a trigger associated with the programmable event, executing the edited user-editable code for implementing the customized backend functionality.

In some embodiments, the system includes the execution of the edited user-editable code for implementing the customized backend functionality based on a hook that causes the execution of the edited user-editable code.

Further, in some embodiments, the hook is a web hook, a data hook, or a data-binding router hook.

Still further, in some embodiments, the at least one processor is further configured to automatically generate, based on rules stored in the online database, skeleton code associated with a website building element selected by the user, and to transmit the skeleton code to the remote web browser to enable the skeleton code.

Additionally, in some embodiments, the system includes a function associated with the website building element selected by the user and a snippet of code associated with the function as part of the automatically generated skeleton code.

Moreover, in some embodiments, the system includes a unified interface displayable by a remote web browser which in turn includes a frontend website editing window and a customized backend editing window.

Further, in some embodiments, the system includes a trigger for data activity involving a particular data set that is associated with the customized backend functionality.

Still further, in some embodiments, the system includes a trigger for an update entered on the indexable webpage.

Additionally, in some embodiments, the system includes a trigger for a page transition on the indexable webpage.

Moreover, in some embodiments, the system includes a trigger for a defined interaction between the user and the indexable webpage.

Further, in some embodiments, the at least one processor is further configured to execute the edited user-editable code to implement a plurality of customized backend functionalities in response to the trigger associated with the programmable event.

Still further in accordance with some embodiments, the at least one processor is further configured to execute the edited user-editable code to implement a customized backend functionality in response to a plurality of triggers associated with a plurality of programmable events.

Additionally, in accordance with some embodiments, the system includes a code storage system configured to store code for a software-based router that handles incoming client requests to the indexable webpage.

Moreover, in some embodiments, the system includes a storage system which is both an online database and code storage system.

Certain embodiments relate to a computer-implemented method for building a website using customized backend functionality. The method may include maintaining an online database configured to store a library of website building elements for configuring a frontend of an indexable web page; transmitting first instructions to a remote web browser of a user, the first instructions permitting the user to remotely access the stored library via a unified interface displayable by the remote web browser, and to permit the user to utilize a selection of the building elements for constructing the frontend of the indexable webpage, wherein the unified interface provides the user access to both the building elements and customized backend functionality associated with the indexable webpage; receiving, via the unified interface displayable by the remote web browser, specifications from user to configure a programmable event for activating user-editable code providing customized backend functionality associated with the indexable webpage; receiving, via the unified interface, user edits to the user-editable code for implementing the customized backend functionality associated with the programmable event; storing the edited user-editable code a code storage system in communication with in the online database; and in response to a trigger associated with the programmable event, executing the edited user-editable code for implementing the customized backend functionality.

Moreover, in some embodiments, the method includes obtaining data external to the online database and external to the remote web browser for using in the executing of the edited user-editable code for implementing the customized backend functionality in response to the trigger.

Further, in accordance with some embodiments, the method includes providing to the user access to at least some portions of the user-editable code for editing in the form of selectable segments of code.

Still further, in accordance with some embodiments, the method includes execution of the edited user-editable code for implementing the customized backend functionality based on a hook that causes the execution of the edited user-editable code.

Additionally, in accordance with some embodiments, the method includes a hook which is either a webhook, or a data hook, or a data-binding router hook.

Moreover, in accordance with some embodiments, the method includes generation of skeleton code associated with a website building element selected by the user by at least one processor based on rules stored in the online database and transmission of the skeleton code to the remote web browser to enable the skeleton code.

Further, in accordance with some embodiments, the automatically generated skeleton code includes a function associated with a building element selected by the user and a snippet of code associated with the function.

Further, in some embodiments, the method includes providing a unified interface displayable by a remote web browser which includes a frontend website editing window and a customized backend editing window.

Still further, in some embodiments, the method includes a trigger for data activity involving a particular data set that is associated with the customized backend functionality.

Additionally, in some embodiments, the method includes a trigger for an update entered on the indexable webpage.

Moreover, in some embodiments, the method includes a trigger for defined interaction between the user and the indexable webpage.

Certain embodiments relate to a system for on-demand assignment of a webserver execution instance for a website server. The system may include at least a first memory location storing generic website server code for hosting a plurality of websites, and at least a second memory location storing, in a segregated manner from the first memory location, website specific code unique to each of the plurality of websites. The system may further include at least one processor configured to perform operations including to control a plurality of web-server execution instances, at least some of the instances running website specific code unique to at least one of the plurality of websites, and at least others of the web-server execution instances running the generic website server code devoid of the specific unique code for any one website; receive a request to access a specific website, the specific website having been built on a platform including the generic website server code; determine whether the specific website is already hosted by one of the plurality of web-server execution instances; and when it is determined that the requested specific website is not already hosted by one of the plurality of web-server execution instances: direct the request to a first one of the plurality of web-server execution instances running the generic website server code; inject into the first one of the plurality of web-server execution instances running the generic website server code, additional website specific code unique to the requested website from the at least one second memory location; and respond to the request, via the first one of the plurality of web-server execution instances, through a combination of both the generic website server code and the injected website specific code unique to the requested website.

In some embodiments, the system may include a plurality of web-server execution instances which in tum may include one or more containers, virtual machines, or physical machine processes.

Further, in some embodiments, the request is an HTTP request and the system includes an operation to respond to the request that is performed before the request times out.

Still further, in some embodiments, the system includes an operation to respond to the request that is performed within 100 ms of receiving the request.

Additionally, in some embodiments, the system includes a proxy server to handle HTTP requests, including the operations to receive and determine.

Moreover, in some embodiments, the operation to determine further includes querying a web-server execution instance manager as to whether the specific website is already hosted by one of the plurality of web-server execution instances.

Further, in some embodiments, the operation to determine further includes forwarding the request to a web-server execution instance manager and if the request fails, determining therefrom that the requested specific website is not currently hosted by one of the plurality of web-server execution instances.

Still further, in some embodiments, the operation to determine includes determining, based on a state table, that the specific website is already hosted by one of the plurality of web-server execution instances.

Additionally, in some embodiments, the system includes a state table maintained at a proxy server and identifies a list of websites already hosted by one of the plurality of web-server execution instances.

Moreover, in some embodiments, the system includes operations to update the state table to remove an inactive website from the list based on a predetermined period of inactivity of requests associated with the inactive website.

Further, in some embodiments, the additional website specific code unique to the requested website includes backend code unique to the requested website.

Still further, in some embodiments, the additional website specific code unique to the requested website includes code associated with a plugin referenced by the requested website.

Additionally, in some embodiments, the operations further comprise monitoring a set of web-server execution instances not already hosting a specific website, and when the size of the set of web-server execution instances is less than a threshold, instructing a web-server execution instance manager to spin up additional web-server execution instances.

Moreover, in some embodiments, the operations further comprise monitoring a set of web-server execution instances not already hosting a specific website, and when the size of the set of web-server execution instances is greater than a threshold, instructing a web-server execution instance manager to shut down at least one web-server execution instance.

Certain embodiments of the present disclosure relate to a computer-implemented method for on-demand assignment of a web-server execution instance for a website server. The method may include storing, in a first memory location, generic website server code for hosting a plurality of websites; storing, in a second memory location that is segregated from the first memory location, website specific code unique to each of the plurality of websites; controlling a plurality of web-server execution instances, at least some of the instances running website specific code unique to at least one of the plurality of websites, and at least others of the web-server execution instances running the generic website server code devoid of the specific unique code for any one website; receiving a request to access a specific website, the specific website having been built on a platform including the generic website server code; determining whether the specific website is already hosted by one of the plurality of web-server execution instances; and when it is determined that the requested specific website is not already hosted by one of the plurality of web-server execution instances: directing the request to a first one of the plurality of web-server execution instances running the generic website server code; injecting into the first one of the plurality of web-server execution instances running the generic website server code, additional website specific code unique to the requested website from the at least one second memory location; and responding to the request, via the first one of the plurality of web-server execution instances, through a combination of both the generic website server code and the injected website specific code unique to the requested website.

In accordance with some embodiments, the plurality of web-server execution instances may include one or more of containers, virtual machines, or physical machine process.

Further, in accordance with some embodiments, the request is an HTTP request and the method includes the Step of responding to the request before the request times out.

Still further, in accordance with some embodiments, the method includes the Step of responding to the request being performed within 100 ms of receiving the request.

Certain embodiments of the present disclosure relate to a system for on-demand assignment of a web-server execution instance for a website server. The system may comprise at least one memory device storing generic website server code for hosting a plurality of websites and website specific code unique to each of the plurality of websites; and at least one processor configured to perform operations. The operations may include to control a plurality of web-server execution instances, at least some of the instances running website specific code unique to at least one of the plurality of websites, and at least others of the web-server execution instances running the generic website server code devoid of the specific unique code for any one website; receive a request to access a specific website, the specific website having been built on a platform including the generic website server code; determine whether the specific website is already hosted by one of the plurality of web-server execution instances; when it is determined that the requested specific website is not already hosted by one of the plurality of web-server execution instances: direct the request to a first one of the plurality of web-server execution instances running the generic website server code, the request prompting the first one of the plurality of web-server execution instances running the generic website server code to obtain additional website specific code unique to the requested website from the at least one memory device; and respond to the request, via the first one of the plurality of web-server execution instances, through a combination of both the generic website server code and the injected website specific code unique to the requested website.

In accordance with some embodiments, the first one of the plurality of web-server execution instances running the generic website server code is configured to obtain the additional website specific code unique to the requested website from the at least one memory device based at least on an identifier of the requested website included in the request.

Certain embodiments relate to a system for simultaneously running live data of a website in a website deployment environment while also running test data of the website in a non-public website test environment. The system may include at least one common database storing both the live data of the website and the test data of the website, wherein the test data is associated in the at least one common database with the live data; and at least one processor configured to perform operations. Operations may perform functions including to access the live data stored in the at least one common database; use the accessed live data to render the website in the website deployment environment; receive a request to perform testing on the website while the website is live in the website deployment environment; access, in the at least one common database, a set of the test data responsive to the request, the set of test data including one or more test data elements corresponding to respective live data elements, wherein the set of test data is not accessible in the website deployment environment; and while the website is operating in the website deployment environment, test the website in parallel in the non-public website test environment such that both the set of test data and the live data are used simultaneously by the website in the non-public website test environment.

In accordance with some embodiments, the test data is associated with the live data using markers configured to cause, during the testing, specific test data elements to replace specific live data elements.

Further, in accordance with some embodiments, the markers are configured to be deleted following the testing.

Additionally, in accordance with some embodiments, the markers are indicative of instructions to ignore specific live data during the testing.

Moreover, in accordance with some embodiments, the system is a website hosting environment for hosting a plurality of websites generated by a plurality of users.

Further, in accordance with some embodiments, at least one common database is a centralized online database configured to store live data associated with the plurality of websites generated by the plurality of users.

Still further, in accordance with some embodiments, the test data includes newly added data not previously associated with the live data of the website.

Additionally, in accordance with some embodiments, the test data is hidden from the website deployment environment.

Moreover, in accordance with some embodiments, the system includes test data responsive to a request to add data in the non-public website test environment.

Further, in accordance with some embodiments, the test data is created in an area of the at least one common database hidden from the website deployment environment.

Still further, in accordance with some embodiments, the system includes test data elements corresponding to the respective live data elements include data elements indicative of a requested alteration performed on a duplicate of the respective live data elements.

Additionally, in accordance with some embodiments, the system includes determination of corresponding test data elements for the live data elements requested to be altered, and when corresponding respective test data elements exist, performing the requested alteration on the corresponding respective test data elements.

Moreover, in accordance with some embodiments, the system performs the receipt of a query initiated in the non-public website test environment, responding to the query with one or more of the live data elements when the one or more live data elements are not associated with corresponding respective test data elements, and responding to the query with one or more of the test data elements when the one or more live data elements are associated with corresponding respective test data elements.

Further, in accordance with some embodiments, the at least one processor is further configured to merge the test data into the live data, thereby replacing one or more of the live data elements with respective corresponding test data elements.

Certain embodiments of the present disclosure relate to a computer-implemented method for simultaneously running live data of a website in a website deployment environment while also running test data of the website in a non-public website test environment. The method may include storing both the live data of the website and the test data of the website, wherein the test data is associated in the at least one common database with the live data; accessing the live data stored in the at least one common database; using the accessed live data to render the website in the website deployment environment; receiving a request to perform testing on the website while the website is live in the website deployment environment; accessing, in the at least one common database, a set of the test data responsive to the request, the set of test data including one or more test data elements corresponding to respective live data elements, wherein the set of test data is not accessible in the website deployment environment; and while the website is operating in the website deployment environment, testing the website in parallel in the non-public website test environment such that both the set of test data and the live data are used simultaneously by the website in the non-public website test environment.

In accordance with some embodiments, the method may include associating the test data with the live data using markers configured to cause, during the testing, specific test data elements to replace specific live data elements.

Further, in accordance with some embodiments, the markers are configured to be deleted following the testing.

Still further, in accordance with some embodiments, the markers are indicative of an instruction to ignore the specific corresponding live data during the testing.

Additionally, in accordance with some embodiments, the method is performed by a server configured to provide a website hosting environment for hosting a plurality of websites generated by a plurality of users.

Moreover, in accordance with some embodiments, the test data is created in an area of the at least one common database hidden from the website deployment environment.

Certain embodiments of the present disclosure relate to a computer-based system for simultaneously running test data of a visual application system in a non-public test environment while also running live data of the visual application system in a deployment environment, the computer-based system comprising: at least one common database storing both the live data of the visual application system and the test data of the visual application system, wherein the test data is associated in the at least one common database with the live data; and at least one processor configured to: access the live data of the visual application system stored in the at least one common database; use the accessed live data of the visual application system in the deployment environment; receive a request to perform testing on the visual application system while the visual application system is live in the deployment environment; access, in the at least one common database, a set of the test data responsive to the request, the set of test data including one or more test data elements corresponding to respective live data elements, wherein the set of test data is not accessible in the deployment environment; and while the visual application system is live in the deployment environment, test the visual application system in parallel in the non-public test environment such that both the set of test data and the live data are used simultaneously by the visual application system in the non-public test environment.

Further, in accordance with some embodiments, the computer-based system is at least one of a website development system and a source code development system.

Certain embodiments of the present disclosure include a computer readable medium containing instructions that, when executed by at least one processor, cause the at least one processor to perform certain instructions for updating a backend database containing data sets that populate a plurality of web pages of a website. The instructions may perform operations to receive via a user interface, a plurality of data elements, the data elements organized into one or more groups of at least one data element, each group for display on a separate web page of a website; store the groups of at least one data element in a database; generate a plurality of virtual web pages, wherein each virtual web page is a preview of a corresponding actual web page before the corresponding actual web page goes live, wherein each of the corresponding actual web pages is not designed with functionality for updating the database; display each group of at least one data element in a separate one of the plurality of virtual web pages; display an editing tool to permit a user to edit a virtual web page from the plurality of virtual web pages; translate the edits to the virtual web page into updates for the database; store the updates in the database; and enable, during a live view of a corresponding actual web page associated with the virtual web page, a display of the corresponding actual web page with the updates made to the virtual web page during the preview.

In addition, in some embodiments each of the plurality of virtual web pages is displayable within a frame associated with an editor interface of the user interface.

In further embodiments, the operations display of a user-selectable feature enabling the user to navigate through the plurality of virtual web pages to individually and dynamically display each of the plurality of virtual web pages.

In additional embodiments, the operations display of a user-selectable feature enabling the user to select a particular virtual web page from the plurality of virtual web pages based on an identifier of the particular virtual web page.

In further embodiments, the identifier of the particular virtual web page is based on a data element associated with the particular virtual web page.

Further, according to some embodiments, the operations include associating a unique URL with each of the plurality of virtual web pages.

In additional embodiments, each of the plurality of virtual web pages is generated based on a sitemap referencing the unique URL of each of the plurality of virtual web pages.

According to some embodiments, the editing tool is configured to receive edits to the stored groups of at least one data element in the database.

Further, in some embodiments the editing tool is configured to receive edits to attributes of the plurality of virtual web pages.

In additional embodiments, the editing tool is configured to receive edits to code that is used to generate the plurality of virtual web pages.

In further embodiments, the editing tool is configured to display a plurality of segments of skeleton code representing actual code used to generate the plurality of virtual web pages, and receive edits to the skeleton code that are translated into edits to the actual code.

Further, in some embodiments the data elements are received via the user interface from an external source.

In additional embodiments, the operations further comprise accessing a software-based router associated with the plurality of virtual web pages, and configuring the software-based router to generate a different version of each of the plurality of virtual web pages based on one or more segments of a received URL.

In some embodiments, a subset of each group of at least one data element are organized by a repeater function, the repeater function generating one or more displayed instances of the subset of each group of at least one data element.

Further, additional embodiments include a live view of the corresponding actual web page that includes the one or more instances.

Also disclosed herein are computer-implemented methods for updating a backend database containing data sets that populate a plurality of web pages of a website. The method may comprise receiving via a user interface, a plurality of data elements, the data elements organized into one or more groups of at least one data element, each group for display on a separate web page of a website; storing the groups of at least one data element in a database; generating a plurality of virtual web pages, wherein each virtual web page is a preview of a corresponding actual web page before the corresponding actual web page goes live, wherein each of the corresponding actual web pages is not designed with functionality for updating the database; displaying each group of at least one data element in a separate one of the plurality of virtual web pages; displaying an editing tool to permit a user to edit a virtual web page from the plurality of virtual web pages; translating the edits to the virtual web page into updates for the database; storing the updates in the database; and enabling, during a live view of a corresponding actual web page associated with the virtual web page, a display of the corresponding actual web page with the updates made to the virtual web page during the preview.

In some embodiments, each of the plurality of virtual web pages is displayable within a frame associated with an editor interface of the user interface.

Further, in some embodiments the method further comprises displaying a user-selectable feature enabling the user to navigate through the plurality of virtual web pages to individually and dynamically display each of the plurality of virtual web pages.

In additional embodiments, the method further comprises displaying a user-selectable feature enabling the user to select a particular virtual web page from the plurality of virtual web pages based on an identifier of the particular virtual web page.

In further embodiments, the identifier of the particular virtual web page is based on a data element associated with the particular virtual web page.

Further, in some embodiments the method further comprises associating a unique URL with each of the plurality of virtual web pages.

In additional embodiments, each of the plurality of virtual web pages is generated based on a sitemap referencing the unique URL of each of the plurality of virtual web pages.

Further, in some embodiments, the editing tool is configured to receive edits to the stored groups of at least one data element in the database.

According to additional embodiments, the editing tool is configured to receive edits to attributes of the plurality of virtual web pages.

In further embodiments, the editing tool is configured to receive edits to code that is used to generate the plurality of virtual web pages.

Still further, in some embodiments the editing tool is configured to display a plurality of segments of skeleton code representing actual code used to generate the plurality of virtual web pages, and receive edits to the skeleton code that are translated into edits to the actual code.

In additional embodiments, the data elements are received via the user interface from an external source.

Additional disclosed embodiments relate to a system for enabling dynamic edits to web pages to update a backend database containing data sets that populate web pages. The system may include an online database configured to store a plurality of data elements for display on a plurality of web pages, the data elements organized into one or more groups of at least one data element, each group for display on a separate web page of a website, each separate web page lacking functionality for updating the online database; and at least one processor configured to perform operations. The operations may provide instructions remotely to a browser to provide an interface displaying an editable version of a first web page generated based on a group of at least one data element, the interface permitting a user to edit the at least one data element; translate edits received via the interface on the editable version of the first web page into updates for the online database; store the updates in the online database; and enable, during a live view of the first web page, a display on the first web page with the updates made to the editable version to the first web page.

Further embodiments include an operation to generate a plurality of separate editable versions of web pages, wherein each separate editable version of a web page is displayable within a frame associated with an editor interface of the interface.

Certain embodiments of the present disclosure relate to a system for previewing dynamic web pages via an online editor interface. The system may include an online database configured to: store a plurality of data elements for display on a plurality of web pages; and store first instructions for enabling organization of the data elements into a plurality of groups, each of the plurality of groups including at least one data element and being associated with at least one discrete web page, and each of the plurality of groups further being capable of being utilized by at least one of frontend code executable by a browser and backend code executable by a backend server remote from the browser to configure a plurality of scrollable virtual web pages; and at least one processor configured to: provide second instructions remotely to the browser to display an interface for enabling an user associated with the browser to add data elements to the database, to associate each added data element with at least one of the plurality of groups, and to modify the at least one of frontend code and backend code; execute third instructions to generate, based on the user's added data elements, association of added data elements with the at least one of the plurality of groups, and modification of the at least one of frontend code and backend code, the plurality of scrollable virtual web pages; wherein the plurality of scrollable virtual web pages are configured to be independently generated by the at least one processor and independently edited by the user; and provide fourth instructions remotely to the browser to display a preview interface configured to display the plurality of scrollable virtual web pages prior to generation of corresponding final web pages, the preview interface enabling the user to selectively scroll through the plurality of scrollable virtual web pages based on each of the plurality of groups of at least one data element and visualize how the groups of at least one data element will appear on a corresponding final web page before the corresponding final web page goes live.

In accordance with some embodiments, the system may provide additional instructions remotely to the browser to display the online editor interface to enable the user to drag and drop into a webpage template a selection of at least one building element for associating the at least one website building element with one of the data elements for constructing a front end of the corresponding final webpage.

Further, in accordance with some embodiments, the system includes a webpage template that is a dynamic webpage template configured to include adjustable data components for rendering the corresponding final webpage associated with each of the plurality of groups.

Still further, in accordance with some embodiments, the system may include a preview interface configured to be displayed at the browser within a frame associated with the online editor interface.

Additionally, in accordance with some embodiments, the system may include a plurality of scrollable virtual webpages displayable within a frame associated with the online editor interface.

Moreover, in accordance with some embodiments, the system may include a preview interface which may include a user-selectable feature enabling the user to scroll through the plurality of scrollable virtual webpages.

Further, in accordance with some embodiments, the system includes a preview interface which may include a user-selectable feature enabling the user to select a particular virtual webpage for display based on an identifier of the respective virtual webpage.

Still further, in accordance with some embodiments, the system may include identifiers for respective virtual webpages based on a data element stored in the database.

Additionally, in accordance with some embodiments, the system may associate a unique URL with each of the plurality of groups

Moreover, in accordance with some embodiments, the system includes a plurality of scrollable virtual webpages may be generated based on a sitemap referencing each webpage's unique URL.

Further, in accordance with some embodiments, the system includes database which may include a centralized online database configured to store data associated with a plurality of user-generated websites of a plurality of remote users.

Still further, in accordance with some embodiments, the at least one discrete webpage is indexable by a search engine.

Additionally, in accordance with some embodiments, the system may include at least one of frontend code and backend code configured to perform a function of a software-based router.

Moreover, in accordance with some embodiment, the software-based router may be capable of configuring the at least one discrete webpage in a plurality of different ways based on a plurality of different possible URL segments provided by the user.

Further, in accordance with some embodiments, the system may include at least one of frontend code and backend code associated with the at least one discrete webpage.

Still further, the system may include at least one of frontend code and backend code associated with a specific software-based router.

Additionally, the plurality of groups may be associated with at least one of a website comprising a plurality of discrete webpages and an associated group of websites.

Moreover, in accordance with some embodiments, the system may include a subset of the plurality of data elements organized by a repeater function, the repeater function generating one or more displayed instances of the subset of the plurality of data elements.

Further, in accordance with some embodiments, the one or more instances may be part of the preview interface configured to display the plurality of scrollable virtual webpages.

Certain embodiments of the present disclosure relate to a computer-implemented method for previewing dynamic web pages via an online editor interface. The method may include storing a plurality of data elements for display on a plurality of webpages; and storing first instructions for enabling organization of the data elements into a plurality of groups, each of the plurality of groups including at least one data element and being associated with at least one discrete webpage, and each of the plurality of groups further being capable of being utilized by at least one of frontend code executable by a browser and backend code executable by a backend server remote from the browser to configure a plurality of scrollable virtual webpages; providing second instructions remotely to the browser to display an interface for enabling a user associated with the browser to add data elements to the database, to associate each added data element with at least one of the plurality of groups, and to modify the at least one of frontend code and backend code; executing third instructions to generate, based on the user's added data elements, association of added data elements with the at least one of the plurality of groups, and modification of the at least one of frontend code and backend code, the plurality of scrollable virtual webpages; wherein the plurality of scrollable virtual webpages are configured to be independently generated by the at least one processor and independently edited by the user; and providing fourth instructions remotely to the browser to display a preview interface configured to display the plurality of scrollable virtual webpages prior to generation of corresponding final webpages, the preview interface enabling the user to selectively scroll through the plurality of scrollable virtual webpages based on each of the plurality of groups of at least one data element and visualize how the groups of at least one data element will appear on a corresponding final webpage before the corresponding final webpage goes live.

In accordance with some embodiments, the method includes providing additional instructions remotely to the browser to display the online editor interface to enable the user to drag and drop into a webpage template a selection of at least one building element for associating the at least one website building element with one of the data elements for constructing a front end of a webpage.

Further, in accordance with some embodiments, the webpage template is a dynamic webpage template configured to include adjustable data components for rendering the corresponding final webpage associated with each of the plurality of groups.

Still further, in accordance with some embodiments, the preview interface is configured to be displayed at the browser within a frame associated with the online editor interface.

Certain embodiments of the present disclosure relate to a system for navigating between dynamic webpages, the system comprising an online database storing a plurality of data elements for display on a plurality of dynamic web pages. The database may also store first instructions for enabling organization of the data elements into a plurality of groups, each of the plurality of groups including at least one data element and being associated with at least one of the plurality of dynamic webpages, and each of the plurality of groups further being capable of being utilized by at least one of frontend code executable by a browser and backend code executable by a backend server remote from the browser to configure the plurality of dynamic web pages; wherein each of the plurality of dynamic webpages is configured to be independently generated and independently edited. The system may also include at least one processor configured to: provide second instructions remotely to the browser to display a navigation interface as part of the at least one of the plurality of dynamic webpages, the navigation interface configured to enable a user to selectively navigate through each of the plurality of dynamic webpages automatically generated based on each of the plurality of groups of at least one data element, wherein the navigation interface is not a native element of the plurality of dynamic webpages.

Further, in accordance with some embodiments, the system may perform at least one of searching the plurality of dynamic webpages may be navigating by selecting a dynamic webpage via a displayed feature, scrolling sequentially through the plurality of webpages, and going directly to a next, prior, first, last, bookmarked or other specific webpage.

Still further, in accordance with some embodiments, the dynamic webpages have a determined order based on a sitemap.

Additionally, in accordance with some embodiments, the system may include a navigation interface configured to be displayed at the browser within a frame dissociated from other aspects of the plurality of dynamic webpages.

Certain embodiments of the present disclosure relate to a system for hosting website implemented in a server environment. The system may include at least one hosting server configured to co-host a plurality of websites generated by a plurality of users, the hosting server including hosted common editing tools accessible to the plurality of users to enable each of the plurality of users to selectively alter specific websites generated by each of the plurality of users, the hosting server further being configured to prevent at least some of the plurality of users from altering co-hosted specific websites generated by others of the plurality of users; at least one processor configured to generate an interface, for display by at least one subset of the plurality of users, for enabling the at least one subset of the plurality of users to upload to the hosting server plugin code associated with plugins for the co-hosted specific websites generated by the at least one subset of the plurality of users, the plugin code for at least one specific plugin including at least one of: front-end plugin functionality code executable by a client; or back-end plugin functionality code executable at a plugin server; memory for storing the user-uploaded plugin code associated with the at least one specific plugin, such that the stored user-uploaded plugin code is centrally hosted in a common domain with the co-hosted specific websites generated by the plurality of users, wherein a single instance of the at least one specific plugin is shared by a plurality of the co-hosted specific websites; and wherein for each of the plurality of the co-hosted specific websites that share the at least one uploaded plugin, the at least one processor is further configured to securely enable, using an isolation mechanism, at least one of: execution of the front-end plugin functionality code at the client; or execution of the back-end plugin functionality code at the plugin server; wherein, based on the isolation mechanism, any malicious code contained in the at least one uploaded plugin is prevented from affecting others of the plurality of the co-hosted specific websites on the hosting server.

In accordance with some embodiments, plugin server and the hosting server included in the system are the same server.

Further, in accordance with some embodiments, the system may include an isolation mechanism which enables execution of the back-end plugin functionality code at the plugin server, which is separate from the hosting server.

Still further, in accordance with some embodiments, the system may include an isolation mechanism which enables execution of the back-end plugin functionality code at a virtual machine.

Additionally, in accordance with some embodiments, the system may include an isolation mechanism which enables execution of the back-end plugin functionality code at a docker container.

Moreover, in accordance with some embodiments, the system may include an isolation mechanism which enables execution of the back-end plugin functionality code through an isolated process at the plugin server.

Further, in accordance with some embodiments, the system the system may include an isolation mechanism includes which in execution of the front-end plugin functionality code in a secure subregion of a co-hosted specific website.

Still further, in accordance with some embodiments, the system may establish a secure communications channel for controlling communications between the subregion of the co-hosted specific website and other subregions of the co-hosted specific website.

Additionally, in accordance with some embodiments, the system may include a secure communications channel which is configured for restricting access of the at least one uploaded plugin to other aspects of the co-hosted specific website.

Moreover, in accordance with some embodiments, the system may include a secure communications channel which is created using an application programming interface configurable to limit interaction between the at least one uploaded plugin and the co-hosted specific website.

Further, in accordance with some embodiments, the system may include an isolation mechanism which enables execution of the front-end plugin functionality code through an iframe at a browser of the client, wherein the iframe is configured to function as a secure sandbox for the execution of the front-end plugin functionality code.

Still further, in accordance with some embodiments, the system may associate the front-end plugin functionality code executable by the client with separate web page subregions of a co-hosted specific website.

Additionally, in accordance with some embodiments, the system may associate two or more trusted plugins with a co-hosted specific website.

Moreover, in accordance with some embodiments, the system may enable the at least one uploaded plugin to communicate with and control at least one component of the co-hosted specific web page in which its front-end plugin functionality code executes.

Further, in accordance with some embodiments, the system may co-host the plurality of the co-hosted specific websites on a shared platform accessible to the plurality of users.

Still further, in accordance with some embodiments, the system may include at least one uploaded plugin which is isolated from cookies associated with a web page of a co-hosted specific website.

Certain embodiments of the present disclosure relate to a computer-implemented method for hosting websites implemented in a server environment, The method may include co-hosting, on a hosting server, a plurality of websites generated by a plurality of users; making available to the plurality of users common editing tools to enable each of the plurality of users to selectively alter specific websites generated by each of the plurality of users; preventing at least some of the plurality of users from altering co-hosted specific websites generated by others of the plurality of users; generating an interface, for display by at least one subset of the plurality of users, for enabling the at least one subset of the plurality of users to upload to the hosting server plugin code associated with plugins for the co-hosted specific websites generated by the at least one subset of the plurality of users, the plugin code for at least one specific plugin including at least one of: front-end plugin functionality code executable by a client; or back-end plugin functionality code executable at a plugin server; storing the user-uploaded plugin code associated with the at least one specific plugin, such that the stored user-uploaded plugin code is centrally hosted in a common domain with the co-hosted specific websites generated by the plurality of users, wherein a single instance of the at least one specific plugin is shared by a plurality of the co-hosted specific websites; and for each of the plurality of the co-hosted specific websites that share the at least one uploaded plugin, securely enabling, using an isolation mechanism, at least one of: execution of the front-end plugin functionality code at the client; or execution of the back-end plugin functionality code at the plugin server; wherein, based on the isolation mechanism, any malicious code contained in the at least one uploaded plugin is prevented from affecting others of the plurality of the co-hosted specific websites on the hosting server.

In accordance with some embodiments, the method may include at least one uploaded plugin which is isolated from cookies associated with a web page of a co-hosted specific website.

Further, in accordance with some embodiments, plugin server and the hosting server are the same server.

Still further, in accordance with some embodiments, the method may include isolation mechanism which enables execution of the back-end plugin functionality code at the plugin server, which is separate from the hosting server.

Additionally, in accordance with some embodiments, the method may include isolation mechanism which enables execution of the back-end plugin functionality code at a virtual machine.

Moreover, in accordance with some embodiments, the method may include isolation mechanism which enables execution of the back-end plugin functionality code at a docker container.

Further, in accordance with some embodiments, the method may include isolation mechanism which enables execution of the back-end plugin functionality code through an isolated process at the plugin server.

Still Further, in accordance with some embodiments, the method may include front-end plugin functionality code executable by the client and which is configured to generate a user interface in an iframe of a browser.

It is to be understood that the foregoing general description and the following detailed description are exemplary and explanatory only and are not restrictive of the invention as claimed.

### BRIEF DESCRIPTION OF THE DRAWINGS

The accompanying drawings, which are incorporated in and constitute a part of this specification, illustrate several embodiments and, together with the description, serve to explain the disclosed principles. In the drawings:
FIG. 1 depicts an exemplary online website building system interacting with other systems and components, according to some embodiments of the present disclosure.
FIG. 2 depicts an exemplary online website building system, according to some embodiments of the present disclosure.
FIG. 3 illustrates a path to execution of backend code associated with a trigger, according to some embodiments of the present disclosure.
FIG. 4 depicts an exemplary online editor interface to update backend functionality, according to some embodiments of the present disclosure.
FIG. 5 is a block diagram showing an exemplary dynamic web page in development mode, according to some embodiments of the present disclosure.
FIG. 6 is a flowchart illustrating a backend functionality development method, according to some embodiments of the present disclosure.
FIG. 7 is a flowchart illustrating a method to trigger backend code execution, according to some embodiments of the present disclosure.
FIG. 8 depicts a block diagram of an on-demand web-server execution instance system, according to some embodiments of the present disclosure.
FIG. 9 depicts a schematic diagram of interaction between various on-demand web-server execution instance system components, according to some embodiments of the present disclosure.
FIG. 10 is a flowchart illustrating a method for responding to a web request sent for a website, according to some embodiments of the present disclosure.
FIG. 11 is an illustration of an on-demand webserver execution instance system for determining whether a website is hosted, and generating and instantiating webserver execution instances, according to some embodiments of the present disclosure.
FIG. 12 depicts instantiation of webserver execution instance elements with a website, according to some embodiments of the present disclosure.
FIG. 13 depicts load monitoring of hosted websites and managing in-use instances, according to some embodiments of the present disclosure.
FIG. 14 depicts monitoring number of webserver execution instances available for hosting, according to some embodiments of the present disclosure.
FIG. 15 depicts an exemplary website real-time testing system, according to some embodiments of the present disclosure.
FIG. 16a depicts a schematic diagram of deployment environment access to data elements, according to some embodiments of the present disclosure.
FIG. 16b depicts a schematic diagram of test environment access to data elements, according to some embodiments of the present disclosure.
FIG. 17 is an illustration of website access to live and test data in a test environment, according to some embodiments of the present disclosure.
FIG. 18 depicts generation of test data used in a test environment for testing websites, according to some embodiments of the present disclosure.
FIG. 19 is a flowchart illustrating a method to access a website in a deployment environment, according to some embodiments of the present disclosure.
FIG. 20 is a flowchart illustrating a method to access a website in a test environment, according to some embodiments of the present disclosure.
FIG. 21 is a flowchart illustrating a method for handling data requests in a test environment, according to some embodiments of the present disclosure.
FIG. 22 is a flowchart illustrating a method for handling read requests in a test environment, according to some embodiments of the present disclosure.
FIG. 23a is a flowchart of a method for updating data elements in a test environment, according to some embodiments of the present disclosure.
FIG. 23b is a flowchart of a method for updating data elements in a deployment environment, according to some embodiments of the present disclosure.
FIG. 23c is a flowchart of a method for adding data elements in a test environment, according to some embodiments of the present disclosure.
FIG. 24 is a flowchart illustrating a method for deleting data elements from a test environment, according to some embodiments of the present disclosure
FIG. 25 illustrates an overlay process to generate the results of querying test data, according to some embodiments of the present disclosure.
FIG. 26 is a flowchart showing Steps involved in editing a database during website preview, according to some embodiments of the present disclosure.
FIG. 27 is a system for the development and preview of web pages, according to some embodiments of the present disclosure.
FIG. 28 is a block diagram of a virtual web page, according to some embodiments of the present disclosure.
FIG. 29 is a timeline display of dynamic refresh of webpages, according to some embodiments of the present disclosure.
FIG. 30 depicts a block diagram of a dynamic preview system, according to some embodiments of the present disclosure.
FIG. 31 illustrates a preview of a virtual web page being edited, according to some embodiments of the present disclosure.
FIG. 32 is a schematic diagram depicting a relation between data groups and websites, according to some embodiments of the present disclosure.
FIG. 33 is a schematic diagram depicting components involved in the generation of virtual webpages, according to some embodiments of the current disclosure.
FIG. 34 is flowchart showing Steps involved in a preview of virtual webpages, according to some embodiments of the present disclosure.
FIG. 35 is a schematic diagram of users interacting with website hosting system, according to some embodiments of the present disclosure.
FIG. 36 depicts a controlled access to co-hosted websites, according to some embodiments of the present disclosure.
FIG. 37 depicts co-hosted website groups sharing plugin code under common routes, according to some embodiments of the present disclosure.
FIG. 38 depicts isolated execution environments of Backend plugin code, according to some embodiments of the present disclosure.
FIG. 39 depicts a controlled access and execution of Frontend plugin code, according to some embodiments of the present disclosure.
FIG. 40 depicts client-side isolated execution of plugin code, according to some embodiments of the present disclosure.
FIG. 41 is a flowchart showing Steps involved in accessing and execution of website and plugin code, according to some embodiments of the present disclosure.
FIG. 42 is an example user interface for editing a webpage and creating a database collection, according to some embodiments of the present disclosure.
FIG. 43 is an example user interface for editing a webpage and configuring permissions for a database collection, according to some embodiments of the present disclosure.
FIG. 44 is an example user interface for editing a webpage and entries in a database collection, according to some embodiments of the present disclosure.
FIG. 45 is an example user interface for editing a webpage and displaying output from a database collection, according to some embodiments of the present disclosure.
FIG. 46 is an example user interface for editing a webpage and creating a repeater function, according to some embodiments of the present disclosure.
FIG. 47 is an example user interface for editing a webpage and showing the result of a repeater function, according to some embodiments of the present disclosure.

### DETAILED DESCRIPTION

In the following detailed description, numerous specific details are set forth in order to provide a thorough understanding of the disclosed example embodiments. However, it will be understood by those skilled in the art that the principles of the example embodiments may be practiced without every specific detail. Well-known methods, procedures, and components have not been described in detail so as not to obscure the principles of the example embodiments. Unless explicitly stated, the example methods and processes described herein are neither constrained to a particular order or sequence, nor constrained to a particular system configuration. Additionally, some of the described embodiments or elements thereof can occur or be performed simultaneously, at the same point in time, or concurrently. Reference will now be made in detail to the disclosed embodiments, examples of which are illustrated in the accompanying drawings. Unless explicitly stated, sending and receiving as used herein are understood to have broad meanings, including sending or receiving in response to a specific request or without such a specific request. These terms thus cover both active forms, and passive forms, of sending and receiving.

Systems and methods consistent with the present disclosure are directed to website building systems, including customized frontend and backend functionality. In some embodiments, the website building systems may include options for user configuration of backend functionality development capabilities.

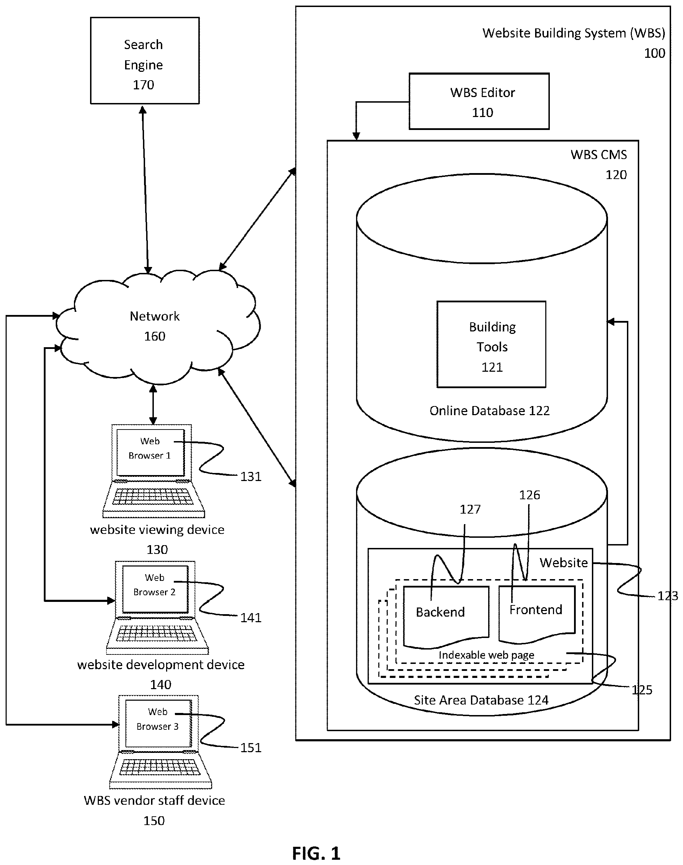

FIG. 1 depicts an exemplary system interacting with other components and users over a network, according to some embodiments of the present disclosure. As shown in FIG. 1, Website Building System (WBS) 100 includes WBS editor 110, which may be a tool to create and edit websites. WBS 100 may also include a WBS content management system (CMS) 120, which may be a repository of widgets and other tools used in building websites, databases or similar data-storing structures, code or data which represents built or in-development websites, and the data created, updated, and viewed using the built or in-development websites (such as, for example, the inventory of an e-shop underlying an e-commerce web site).

WBS Editor 110 may be an editor to build and edit websites. The editor may allow web sites and web site pages to be built starting with a blank canvas or based on pre-developed sites, site sections or pages (jointly known as templates) which may be stored in WBS CMS 120. WBS editor 110 may define the visual layout and other attributes of the pages of a website being built. The templates may define the web pages belonging to the website being built and their initial content. WBS editor 110 may also includes a UI section to determine the arrangement of the site by defining the navigation between various pages. WBS Editor 110 defines layout of a page by allowing users to place components on web pages the way they would prefer the actual web pages to appear.

In some embodiments, as discussed further below, WBS 100 may host websites and individual pages through virtual machines, container instances, or serverless code. These techniques may improve load times and reduce latency for the user. For example, in a situation where a website has integrated backend or frontend code that must execute, or includes site-specific components, such code and components may be loaded into stateless server execution instances the first time such instances are associated with a request made by a browser (e.g., Web Browser 131) for a given site. Such stateless server instances could then be reused for further browser requests involving the same site. It further offers the benefit of allowing WBS 100 to use its server resources based on the actual requests being served, which is vastly more efficient then using dedicated web serve execution instances (such as servers, VMs or containers) and infrastructure.

Building Tools 121 may include widgets, which are components laid out on the pages being edited by the WBS Editor. In some embodiments, widgets may include apps that are developed by the user building the web page, other users, the WBS vendor itself or third-party application providers. Apps may come from repositories such as the WIX APP MARKET. Examples of widgets include simple widgets (such as text fields, shape etc.) or complex widgets (such as calendars, form generators, image editing, video editing, visitor counting, social media incorporation, etc.)

WBS CMS 120 may store both components for building websites and websites that have been built. In some embodiments, the components and websites are maintained in separate CMS systems. As shown in FIG. 1, the Building Tools 121 stored in WBS CMS 120, which includes widgets and other tools which aid in the easy building of a website.

Building Tools 121 are the building blocks of a website which ease the process of constructing and including content in a website. Building Tools 121 may include both component tools or widgets, as discussed above, such as tabs, search bar, buttons, gallery, slide decks etc., as well as operational tools such as alignment tools. Building Tools 121 may include both simple widgets (e.g., Buttons, Text Fields, etc.) and complex widgets (e.g., gallery, calendar widgets, etc.) and are configured to perform advanced functions. Building Tools 121 may be represented as an abstraction of the code representing the widgets and other tools. Building Tools 121 may include public default tools offered to all users of the system and private tools offered exclusively to a specific website or user. Private tools may include public tools that have been customized for the user or the website or new tools. Private tools may be created by the user of the system building the website or by third-party vendors. Building Tools 121 can be shared between multiple websites built by different groups of users and owned by different groups of users. Building Tools 121 can also be customized by editing code of the existing Building Tools 121 (e.g., updating a style sheet of a button to create a new style sheet for a new button). Custom building tools can be stored along with the original Building tools 121 in the System Area Database 122.

WBS editor 110 provides remote access to Building Tools 121 stored in System Area Database 122 of WBS CMS 120. An instance of a selected widget of Building Tools 121 may be created when a user places a widget on the pages being edited by WBS Editor 110. An instance of a widget selected from Building Tools 121 may be created by a reference to the widget in the page. An instance of a widget selected from Building Tools 121 may also be created by copying the code which represents the selected widget to the web page of the website being built.

WBS Editor 110 is software which is typically hosted on a server, while some or all of its elements may be loaded for execution on to user's website viewing device 130 (or its Web Browser 131). In some embodiments, WBS Editor 110 might share System Area Database 122 with Building Tools 121, or might share a common server. Nevertheless, in other embodiments, WBS Editor 110 and System Area Database 122 are separately hosted.

Site Area Database 124 stores the websites built using the WBS Editor 110. As shown, Website 123 is a website being built using WBS Editor 110 and stored in Site Area Database 124. Website 123 stored in Site Area Database 124 may include text representing code and data that can be accessed, updated, and viewed using Website Development Device 140. Website 123 may include one or more webpages including Indexable Web Page 125. In some embodiments, for example, one or more Indexable Web Pages 125 all share the same common domain (e.g., http://www.my-site.com), sub-domain (e.g., http://my-site.wix.com/) or URL prefix (e.g., http://www.wix.comlwixsites/my-site/). Indexable Web Page 125 may include Frontend 126 and Backend 127. Indexable Web Page 125 might include a special file or code, including or referencing Frontend 126 and Backend 127, or may be just a name for the collection Frontend 126 and Backend 127, as indicated by a dashed line. Frontend 126 may be composed of widgets and other UI elements, which may be instances of Building Tools 121, including instance-specific information (such as position, size, and attribute values); Such instance-specific information may also include containment information (i.e., which components are contained inside which containers). Frontend 126 may also include code elements such code segments to be executed in the Frontend 126 (possibly affecting the widgets during run-time). Frontend 126 may be further composed of other elements, such as page metadata, titles, etc.

Frontend 126 includes instances of Building Tools 121 placed on the Indexable Web Page 125 of Website 123 built using WBS Editor 110, such as those that are always visible to a user, are visible by default, or are visible at least some of the time. Backend 127 represents the functionality which may be activated when a user interacts with the Frontend 126 or through non-interaction events such as an incoming communication to Website 123, a time-based trigger, or a change to database connected to Website 123. Backend 127 may be seen only some of the time or may never be seen by the user of Website Development Device 140 and WBS Vendor Staff Device 150. Frontend 126 and Backend 127 may be stored in the Site Area Database 124 as code or structured data (e.g., XML, JSON, JSON-LD, etc.). The code can be stored in either in textual format or compiled object code. The code representing Frontend 126 and Backend 127 might be in same programming language or structured data format. In some embodiments, the code representing Backend 127 and code which is part of FE 126 is converted to a different programming language prior to saving to the Site Area Database 124.

In some embodiments, Website 123 code and data might share a database or might have separate databases. In some embodiments, the code representing Frontend 126 and Backend 127 may be stored in the Site Area Database 124 as plain text in a database table. In other embodiments, the code might be stored as file objects and might store a location of the file in Site Area Database 124. In some embodiments, the code is stored in a single location in a column of Site Area Database 124 or a file. In some embodiments the code might be divided between multiple files.

In some embodiments, Indexable Web Page 125 may be a dynamic web page and the Frontend 126 may be a template and not the actual webpage. As discussed further below, a dynamic webpage may be a web page configured to change in its appearance or content based on customized backend functionality. Examples of customized backend functionality, as discussed further below, include updating of data shown the webpage, resizing or altering images on the web page, triggering rendering of video content on the webpage, and more. In some embodiments, Frontend 126 of dynamic webpages may be a template bound directly to data from a database table to update the content and appearance of various dynamic web pages.

In some embodiments, WBS 100 may include greater or fewer of the components shown in FIG. 1. For example, the databases 122 and 124 might be a single database or separate databases. The databases might be distributed set of databases. Both databases 122 and 124 can be relational database, object-oriented databases, data language file repositories (for languages such as XML or JSON) or No SQL databases. Further, databases 122 and 124 may be maintained in an on-premises network (e.g., local area network, with access to the internet), in a cloud-based network (e.g., public or private cloud architecture), or a hybrid of an on-premises and cloud-based network.

As shown in FIG. 1, Website 123 stored in a Site Area Database 124 in WBS CMS 120 can be accessed by Website Viewing Device 130 (e.g., desktop computer, tablet, laptop, smartphone, etc.) via Web Browser 131. A user (not pictured) of Website Viewing Device 130 may request access to Website 123 via Network 160 (e.g., the internet, including intermediary networks between Website Viewing Device 130 and WBS 100). The Web Browser 131 (e.g., APPLE SAFARI, GOOGLE CHROME, MOZILLA FIREFOX, MICROSOFT EXPLORER, etc.) of Web Viewing Device 130 may be used to view the Website 123 and the data created and edited using the Website 123. Website Development Device 140 may be used to build Website 123 using WBS Editor 110. Web Browser 141 on Website Development Device 140 may be used to make a request to access the WBS Editor 110 to build Website 123. The WBS Vendor Staff Device 150 may be used to provide customer support for a user (not pictured) of Website Development Device 140 when building and maintaining Website 123. The WBS Vendor Staff Device 150 can also be used by third-party vendors to create and customize Building Tools 121. The WBS Vendor Staff Device 150 can also be used to configure WBS 100 itself - for example for managing the site designer and the user accounts, for managing of the site or page templates described above (creating new ones or editing existing ones) or for managing the various elements comprising WBS 100.

In some embodiments, Website Viewing Device 130, Website Development Device 140, and WBS Vendor Staff Device 150 can be physically different devices. In other embodiments, they can be different views accessed from same device using different credentials and/or different roles. In some embodiments, the web browser 131, 141, and 151 can be same browser or different browsers on the same or different devices or different tabs on the same browser.

The Website Viewing Device 130, Website Development Device 140, and WBS Vendor Staff Device 150 may access Website 123 via Network 160. In some embodiments, the Website Viewing Device 130, Website Development Device 140, and WBS Vendor Staff Device 150 might be a mobile device, laptop, desktop computer, tablet, etc.

As shown in FIG. 1, Search Engine 170 (e.g., GOOGLE, YAHOO, BING, etc.) may access Indexable Web Page 125 of Website 123 stored in Site Area Database 124 via Network 160, with or without also interacting with WBS 100. Search Engine 170 may index Indexable Web Page 125 of Website 123 for easy discovery and thereby increase the number of users using Website Viewing Device 130 to view the Website 123. In some embodiments, Building Tools 121 further allow users to optimize Website 123 for indexing and searching through Search Engine 170. For example, Building Tools 121 may allow users to choose text that appears in headers of a particular Indexable Web Page 125, in certain locations on Indexable Web Page 125, or that is associated (e.g., as metadata) with Indexable Web Page 125.

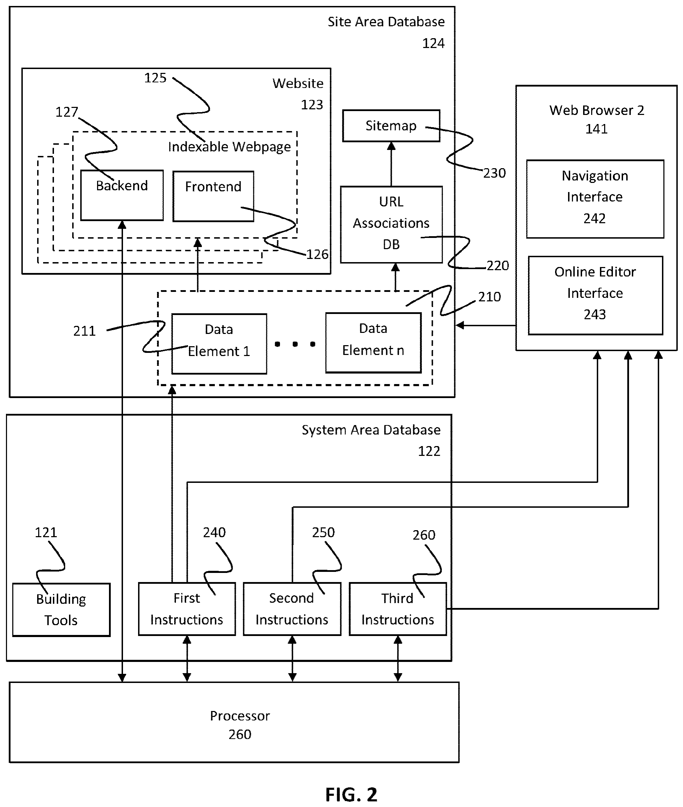

FIG. 2 depicts an exemplary structure for WBS 100, according to some embodiments of the present disclosure. As shown in FIG. 2, WBS 100 includes Site Area Database 124 including components for both building and hosting websites, as discussed above in connection with FIG. 1.

In some embodiments, Indexable Webpage 125 may be a dynamic or virtual webpage where Frontend 126 components might be populated with data from Data Group 210. Data Group 210 may be associated with more than one webpage. Data Group 210 may be composed of Data Elements including Data Element 211. Data Element 211 may be associated with one or more components of Building Tools 121 used in Frontend 126 of Indexable Webpage 125. As an example, Data Group 210 may be an employee database with each Data Element 211 being an employee record containing multiple data fields (such as name, age and department information). These multiple fields may be used to populate multiple visible components (display fields) in the Frontend 126 of Indexable Webpage 125. In some embodiments, Data Group 210 is stored in Site Area Database 124 as part of a table and Data Element 211 is a row in that table. A webpage associated with the Data Group 210 can be, for example, a dynamic webpage.

Data Elements 210 may be associated with URL Associations DB 220. When a user accesses Indexable Web Page 125 of Website 123 using Web Viewing Device 130 by typing a URL, the URL (or a segment thereof) may be matched against the URLs or URL segments stored in URL Associations DB 220 for referencing. Data groups may be associated with a URL or URL segment in URL Associations DB 220. A URL or URL segment in URL Associations DB 220 may help determine the data group to use in generating the virtual or dynamic webpage using the associated Indexable Web Page 125. In some embodiments, Indexable Webpage 125 is a template of a dynamic or virtual webpage and the actual webpage is generated using the data in Data Group 210 determined using a URL in URL Associations DB 220.

Data Elements 210 may be determined using a software-based router, which analyzes a URL (or URL segments) typed by a user or otherwise provided to access a Webpage 125 of Website 123 using Web Viewing Device 130. The analysis by the software-based router of the URL may result in a key to access Data Element 211 in Data Group 210. For example, with the URL http://mysite.wix.com/users/20, a software-based router may analyze the URL to determine that prefix "users" is associated with the data group and suffix "20" is the key resulting in looking up for data element in "users" associated data group which is identified by a key value "20." As described herein, a software-based router may be configured to analyze the suffix of a URL or a parameter within a URL to determine what version of a webpage, or what content in a webpage, to display. All of the above may apply to URL's which are not directly typed by the user, but are otherwise received by the system (e.g. URL's generated automatically by another page or page-associated code in the website). The system may also support multiple concurrently defined software routers, with the website building system 100 performing an initial analysis of a received URL to determine which of the defined software routers to use. Such analysis may make its determination based on the received URL, based on definitions included in URL Associations DB 220 or based on additional information or conditions (such as system environment conditions).

First Instructions 240 are a set of instructions accessed by Web Browser 141 and may be configurable through Processor 260. The First Instructions 240 help Web Browser 141 to remotely access a stored library of tools including Building Tools 121. The Online Editor Interface 243 may be the visual representation of the WBS Editor 110 software on Web Browser 141. Online Editor Interface 243 is used to create and edit Indexable Web Page 125's Frontend 126 layout implementation with the help of Building Tools 121 and associated Frontend 126 and Backend 127 code of Indexable Web Page 125. Similar to First Instructions 240, additional instructions (e.g., Second Instructions 250 and Third Instructions 260, among other instructions) may also be accessible to Processor 260 and Web Browser 141.

Web Browser 141 is used to build Website 123 by displaying Navigation Interface 242 to navigate among different parts of Website 123 and Online Editor Interface 213 to edit the accessed part of Website 123. Code representing WBS Editor 110 in WBS 100 may be transmitted to Web Browser 141 to display Navigation Interface 242 and Online Editor Interface 243.

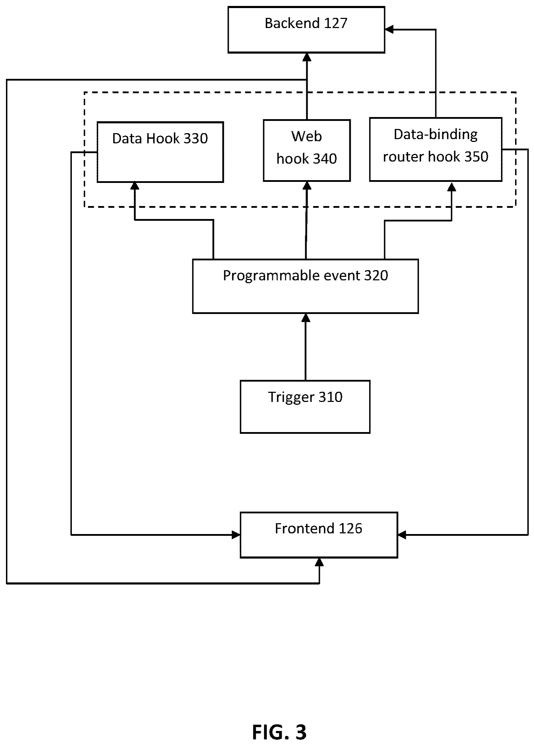

FIG. 3 illustrates a path to execution of backend code associated with a trigger, according to some embodiments of the present disclosure. As shown in FIG. 3, a Trigger 310 may result in execution of code associated with Backend 127. A Trigger 310 may occur, for example, when a user of a Web Viewing Device 130 interacting with Indexable Web Page 125 of Website 123 performs a specific action (e.g., a mouse or touchpad click, a selection, a hovering of a cursor, a reload request, entry of text, uploading of multimedia content, etc.). A Trigger 310 may also occur during a non-interaction event. For example, periodic time-based actions or database updates could result in a trigger and execution of Backend 127 and / or Frontend 127 code. Trigger 310 may be customizable and may take many different forms. Further, interactions which need to result in execution of code related to Backend 127 may be done through a Programmable Event 320. Programmable Event 320 passes control to Backend 127 for execution through a hook linking the Frontend 126 and Backend 127. The type of hook used for passing control between Programmable Event 320 and Backend 127 may be configurable and may also be dependent on the type of interaction or other type of event which caused Trigger 310. Programmable Event 320 utilizes one or more of Data Hook 330, Web Hook 340, or Data Binding Router Hook 350, among other possible types of hooks, to pass the control to Backend 127 to execute the code in it.

Data Hook 330 may be used to pass control from Programmable Event 320 to Backend 127 when any data update is entered by a user of Web Viewing Device 130 on Indexable Web Page 125 of Website 123 shown on Web Browser 131. For example, a form submission can be regarded as a data update and Data Hook 330 can be used to pass the control to Backend 127, which in some embodiments creates or updates a database entry. Similarly, as another example, posting text to a blog or social media interface may be a data update associated with Data Hook 330. Data Hook 330 may be also used to pass control to Backend 127 programmatically through an API call. For example, a periodic time-based action Trigger 310 may result in entries in a database older than a period to be deleted or marked inactive.

Web Hook 340 may be used to pass control from Programmable Event 320 to Backend 127 when a web module function is imported and called in the code which is part of Frontend 126. In some embodiments, for example, the code which is part of the Frontend 126 is called a frontend script and is executed when a user of web viewing device is interacting with the Frontend 126 components of the Indexable Web Page 125 of Website 123 displayed on Web Browser 123. For example, Web Hook 340 may be based on a user of Indexable Web Page 125 utilizing an app, making a purchase, subscribing to content on Indexable Web Page 125, etc.

Data Binding Router Hook 350 may be used to pass control from Programmable Event 320 to Backend 127 when a specific dynamic web page is requested by a user of Web Viewing Device 130 by navigating to a certain URL in Web Browser 131. One can navigate, for example, by entering an URL in the Web Browser 131 address bar, by clicking on a hyperlink on an Indexable Web Page 125 of Website 123 being viewed on Web Browser 131 or by performing an operation which automatically navigates to a predefined or programmatically generated URL. Data Binding Router Hook 350 helps determine the Data Group 210 and the Backend 127 code function to execute in order to apply the Data Element 211 of the determined Data Group 210 to the template of a web page defined in the function in Backend 127 code.

In some embodiments, Data Binding Router Hook 350 may function together with a software-based router. For example, if a user accessing Indexable Web Page 125 enters a URL for Indexable Web Page 125, a software-based router may determine what data to show on the Indexable Web Page 125 or even what specific webpage to show. A router may be associated with a prefix which may be the first part of a URL (or with another segment of the URL). For example, in the URL http://www.wix.com/label, "label" may be the prefix. Further, in the URL http://www.wix.com/label/sub-label, "sub-label" may be a suffix. Based on the particular segment (e.g., prefix, suffix, or value of a parameter) of the URL that is provided, the router may determine that content associated with either, or that a particular webpage associated with either, should be displayed. For example, the prefix may be associated with a router, while a suffix may be passed to the selected router to determine what page to access or what data to use in the page. Routers can also be used to generate complete virtual or dynamic pages based on selected data and a template. In this way, Indexable Web Page 125 of Website 123 can be made dynamic and customizable based on how users interact with it.

Data Binding Router Hook 350 may also function to pass control based on internal events following user interaction with Website 123 on Website Viewing Device 130. For example, Data Binding Router Hook 350 might be registered to execute a function prior to determining a routing to a page as described above to verify if a user has a permission to access the routed-to page. Data Hooks 330 might optionally run before or after Data Binding Router Hooks 350 for the same Trigger 310. For example, a Data Hook 330 might run after a query is run against database connected to Website 123 to filter out entries no longer active (e.g., a merchant store website might filter products no longer sold from database query search results). Thus, the system may support operating various combinations of hooks, and chaining of hooks to each other.

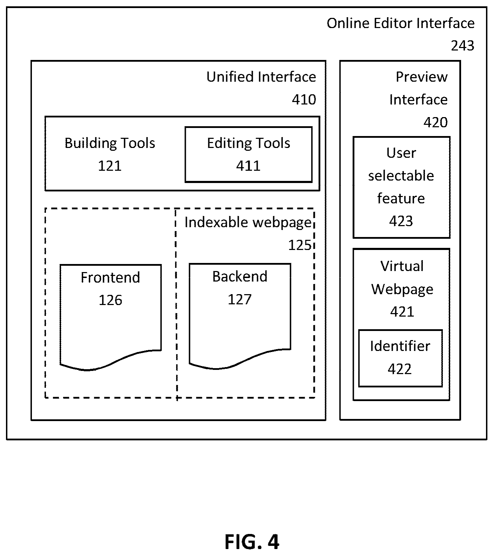

FIG. 4 is a block diagram showing an exemplary dynamic Web Page 125 in development mode being accessed on a Web Development Device 140 through Web Browser 141, according to some embodiments of the present disclosure. As shown in FIG. 4, Online Editor Interface 243 is composed of Unified Interface 410 and Preview Interface 420.

Unified Interface 410 may be used to develop or build Indexable Web Page 125 of a Website 123. Unified Interface 410 may provide access to the Building Tools 121, as discussed above. Building Tools 121 may include Editing Tools 411 to help edit Indexable Web Page 125 of Website 123. In some embodiments, the Unified Interface 410 might be a separate section visible on a Web Browser 141 during development. In other embodiments Unified Interface 410 might be a collective name for the various tools and user interface sections. In some embodiments, the Unified Interface 410 can be a separate section of a displayed webpage or a floating window or a frame. In some embodiments, components of the Unified Interface 410 might float around within a section of the Web Browser 141.

The Frontend 126 and Backend 127 might be shown or represented in an editing mode together or in separate windows. In some embodiments they might only be shown one at a time. Also, Backend 127 might not be specific to the Web Page 125 or Website 123 being displayed, and part or all of it may be shared between websites and developers of different websites. When a developer saves the Website 123, the frontend may be saved in the form of Frontend 126.

Preview Interface 420 helps users visualize the Website 123 being built by displaying Web Pages 125 as in the real world, i.e. as they would be shown in Web Browser 131 on Web Viewing Device 130 displaying the Virtual Webpage 421. Each Virtual Webpage 421 may be associated with a unique Identifier 422. In some embodiments the unique Identifier 422 is a URL or URL segment stored in the Site Area Database 124 along with other URLs 210. Other forms of Identifier 422 are possible as well.

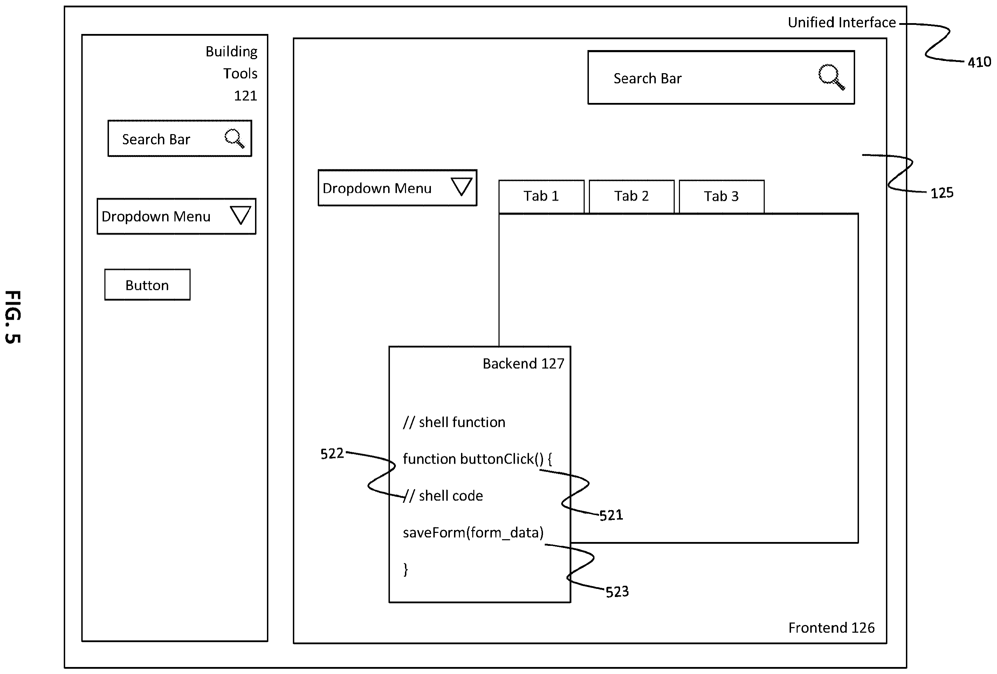

FIG. 5 is a block diagram showing an exemplary dynamic or virtual webpage in development mode, according to some embodiments of the present disclosure. For example, as discussed above in connection with FIG. 4, the dynamic or virtual webpage may be Virtual Webpage 421.

As shown in FIG. 5, Unified Interface 410 displays Building Tools 121 and Indexable Web Page 125. In this exemplary illustration, Frontend 126 is shown using a WYSIWYG editor to edit visually the content of the page (e.g., text, graphics, widgets, etc.). In some embodiments, the Frontend 126 can be edited directly as code. In some embodiments, Building Tools 121 are a user interface section within the Unified Interface 410. In further embodiments, the Building Tools 121 can be accessed by menu items in Online Editor Interface 243. In some embodiment, particular website building tools selected from Building Tools 121 can be dragged and dropped in the Frontend 126 section of the Unified Interface 410. The Frontend 126 of the Indexable Web Page 125 shows the visual arrangement of Building Tools 121.

In some embodiments, Backend 127 is shown as a floating window within the Unified Interface 410. In other embodiments, Backend 127 could be a separate section similar to Frontend 126. Code representing Backend 127 might be hidden and not shown unless requested. In some embodiments, all the Backend 127 code is shown all the time, and in other embodiments only Backend 127 code associated with a single element from Building Tools 121 is shown.

WBS 100 may be configured to automatically to generate skeleton code on selecting an element from Building Tools 121 and placing the element in Frontend 126. The generated skeleton code shown in Backend 127 may include, for example, Shell Function 521 and Shell Code 522. Shell Function 521 and Shell Code 522 together represent a Programmable Event 320 in code executed by a Trigger 310. In some embodiments, as illustrated, buttonClick Shell Function 521 is code representing the event of clicking a button. The trigger of a button click results in a programmable event buttonClick.

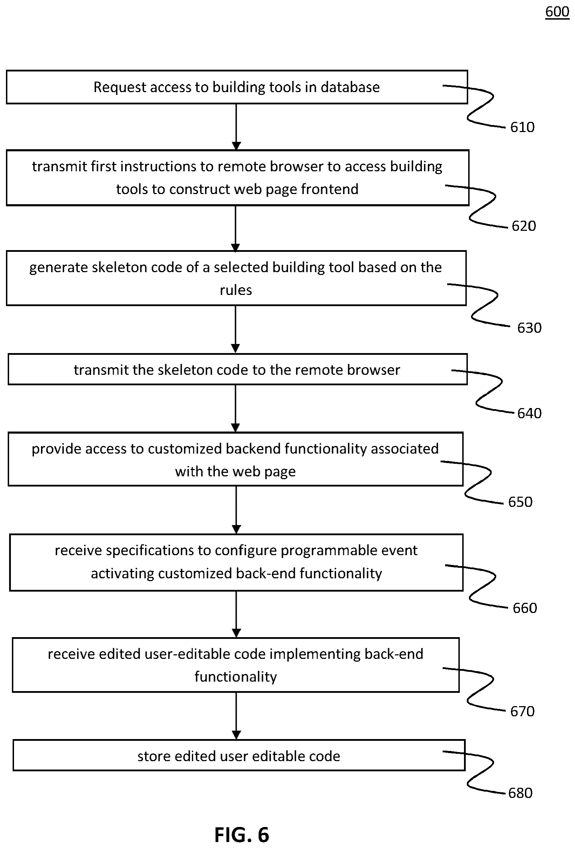

FIG. 6 is a flowchart illustrating Backend functionality 127 development Method 600, according to some embodiments of the present disclosure. In some embodiments, Method 600 may be performed by components of the WBS 100, as discussed above.

As shown in FIG. 6, in Step 610, WBS 100 receives a request to access Building Tools 121 in the Site Area Database 124 from a user of Web Development Device 140 when the user makes a request for Website 123 development via Web Browser 141. As discussed above, examples of Building Tools 121 include widgets, graphics, and other content.

In Step 620, WBS 100 transmits the First Instructions 240 on a request from Website Development Device 140 via the Web Browser 141. The request is received by the WBS 100 via the Network 160. The request is forwarded to website CMS 120. The website CMS 120 provides access to First Instructions 240 as requested by Processor 260 and are transmitted to the Website Browser 141. The First Instructions 230 provide access to the Building Tools 121 stored in Site Area Database 124 and which allow one to construct Web Page 125's Frontend 126 and Backend 127.

In Step 630, WBS 100, upon receiving a request from Website Development Device 140 over a Network 160 to use a tool within Building Tools 121, automatically generates skeleton code of a selected tool in Building Tools 121 based on the rules. For example, as discussed above in connection with FIG. 5, the skeleton code may be associated with an event, such as a mouse click, hovering, content selection, etc.

In Step 640, WBS 100 may transmit the skeleton code to the Website Development Device 140 to be shown on Web Browser 141.

In Step 650, WBS 100 may provide access to customized Backend functionality 127 associated with the Web Page 123 whose Frontend 126 is being edited or created. As discussed above, the Backend functionality 127 may take various different forms and may be configured to occur based on various defined events.

In Step 660, WBS 100 may receive specifications from a user of Website Development Device 140 through the Web Browser 141 to configure programmable Event 320 for activating customized Backend functionality 127.

In Step 670, WBS 100 may receive from the user of Website Development Device 140 through Web Browser 141 user-editable code implementing Backend functionality 127. The user may make edits to the code, such as by changing the functionality of the code, updating the code, etc.

In Step 680, WBS 100 may store the edited user editable code in Site Area Database 124 as received from Website Development Device 140 via the Network 160. The edited user editable code may then be ready for deployment to provide customized Backend 127 functionality for the Indexable Web Page 125.

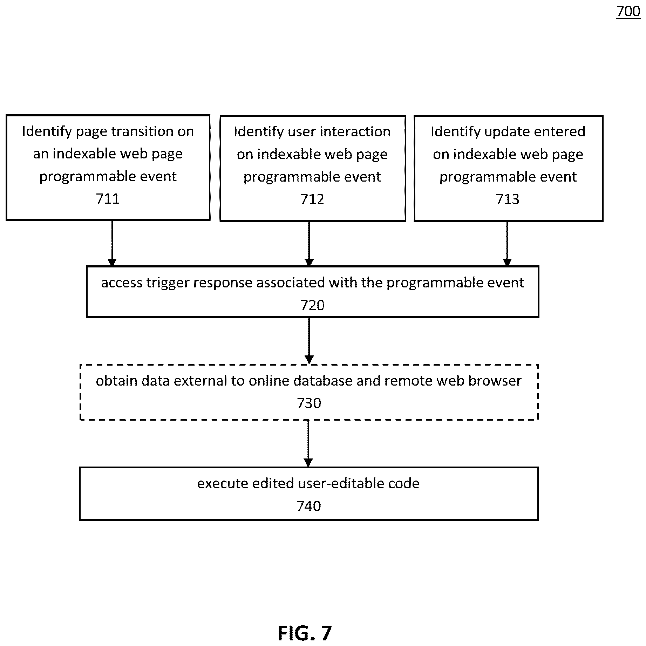

FIG. 7 is a flowchart illustrating a Method 700 to trigger Backend 127 code execution, according to some embodiments of the present disclosure. Method 700 may be performed in conjunction with Method 600, as discussed above. Consistent with the above discussion, Method 700 may be performed in the system of WBS 100.

As shown in FIG. 7, a user of a Website Viewing Device 130 can Trigger 310 a Programmable Event 320 associated with the Backend 127 by either transitioning on an Indexable Web Page 125 as shown in Step 711, when a user of Website Viewing Device 130 interacts with the Indexable Web Page 125 as shown in Step 712, or when the user enters an update on an Indexable Web Page 125 and results in Trigger 310 as shown in Step 713. For example, Step 711 may involve a user clicking a nested hyperlink in Indexable Web Page 125 associated with another webpage part of the same Website 123. Similarly, Step 711 may involve a user clicking a "next" or "continue" hyperlink on Indexable Web Page 125 to view a subsequent related page. Step 712 may involve, for example, a user hovering a cursor over a graphic or text on Indexable Web Page 125, pausing for a predefined duration of time, clicking on an image or text on Indexable Web Page 125, etc. Step 713 may involve the user updating textual content on Indexable Web Page 125, uploading an image or video file to Indexable Web Page 125, filling out a form on Indexable Web Page 125, a period timer resulting in certain actions, a database update, etc.

In Step 720, WBS 100, upon receiving a notification of a Programmable Event 320, accesses Trigger 310 in response that is associated with the Programmable Event 320. As discussed above, the Programmable Event 320 may be based on various types of hooks, such as a Data Hook 330, Web Hook 340, Data-Binding Router Hook 350, or others. The hooks associated with the Programmable Event 320 may involve accessing data internal to a Website 123 (e.g., WixData) stored in Site Area Database 124.

In Step 730, WBS 100 may optionally obtain data external to online Site Area Database 124 and remote Web Browser 141 (e.g., from an external database, from another website, from a remote service, etc.). In some embodiments, such data may be used as part of the Programmable Event 320.

In Step 740, WBS 100 may request the Processor 260 to execute edited user-editable Backend 127 code. Accordingly, upon the Programmable Event 320, customized backend functionality may occur on the Indexable Web Page 125. As discussed above, this customized backend functionality may be defined in terms of its functionality, data source, and timing by input from the user. The user may be given guided control over the creation and editing of code (e.g., not having to code entire functions from scratch, but instead being given templates or samples of code) over each of these attributes of the customized backend functionality.

Systems and methods consistent with the present disclosure are also directed to on-demand website hosting systems, including functionality for hosting websites, serving websites to clients, monitoring website load, and responding to website load dynamics. In some embodiments, the on-demand executable instance may monitor website usage activity and automatically spin up or remove some or all execution instances. Further, as discussed below, webserver execution instances spun to serve websites or pages may include combinations of generic website code and site-specific or page-specific code, thus resulting in responsive and very efficient serving of highly tailored and individualized websites and pages.

In general, when users interact with websites, they may make a variety of HTTP requests. For example, an initial HTTP request may be made to load a webpage (which could, in some situations, trigger additional HTTP requests to load additional page elements, such as images or scripts). In addition, a user may make mid-session HTTP requests (e.g., selecting a value for a field, clicking a hyperlinked image, etc.). Further, a user may make a data-related HTTP request, such as through the submission of a form. In addition, a user may make a backend HTTP request, which could activate backend functionality (e.g., through backend code, as described herein).

In order to speed up the process of loading pages and handling HTTP requests, the system (e.g., WBS 100) may be configured to utilize rapid booting of docker containers or serverless code that are configured for a specific website or page. In some embodiments, as discussed herein, a pool of standby containers or other virtual computing resources may be provided with all relevant non-site-specific code but without any user-specific or site-specific code. The system may then listen on a live port for a request to a server for a specific web site. If there is a live container or other virtual computing resource associated with the specific website, the system may attach to it. Otherwise, the system can use a standby container from the pool and inject the requested site-specific content into it, or instruct it to load such content. Once the site-specific content for a given site is loaded, the container joins a pool of containers associated with the given site. As discussed herein, the injected site-level content may or may not include the actual site pages. Such site page information may be, for example, actual browser-ready page material (e.g., a collection of HTML, CSS and JavaScript code), underlying site definition data (e.g., using XML files or JSON expressions) which is converted into browser-ready material by client-side or server-side code (such as a WBS viewer module), or frontend or backend code (e.g. JavaScript code invoked by the page to run on the client, the server, or both).

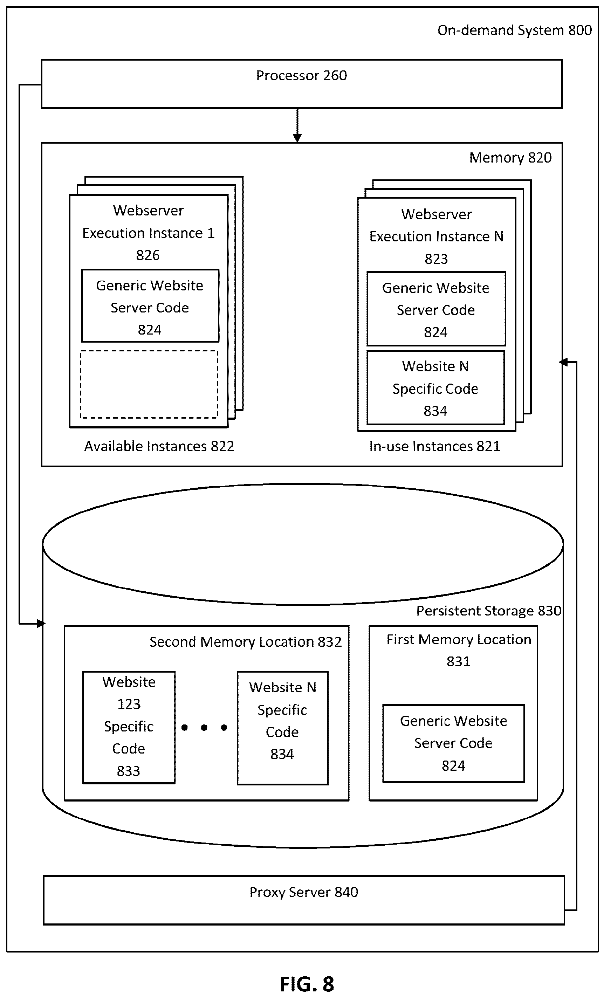

FIG. 8 depicts a block diagram of an On-Demand Web-Server Execution Instance System 800, according to some embodiments of the present disclosure. As show in FIG. 8, On-Demand System 800 includes a Processor 260, Memory 820 for storing currently or recently served websites, and Persistent Storage 830 to store all websites available to be served. In some embodiments, On-Demand System 800 may also include or be associated with a Proxy Server 840 to help determine if a new webserver execution instance is needed to serve a website request.

WBS System 100 and On-Demand System 800 store and access the code for web site editing and serving web requests, respectively. WBS Editor 110 is used to present web pages of websites for requests to edit, received from Web Development Device 140. Webserver execution instances are instantiated with code and page definitions created and edited using the WBS Editor 110 and stored in Site Area Database 124 so to view Indexable Web Page 125 during Web Site 123 editing as well runtime. In some embodiments, On-Demand System 800 may be a sub-system within the WBS 100. In some other embodiments, WBS 100 and On-Demand System 800 may share access to Frontend 126 and Backend 127 of Indexable Web Page 125 of Website 123. In some embodiments, Persistent Storage 830 may be a database similar to Site Area Database 124 in WBS 100. While WBS 100 may store Frontend 126 in structured data format, On-Demand System 800 might transform Frontend 126 into a code format understood by Web Browser 131 of Web Viewing Device 130. Unlike WBS 800, On-Demand System 800 typically has a read only access to the stored Frontend 126 and Backend 127 of an Indexable Web Page 125 (when used for run-time serving of web sites). But, when used in conjunction with the WBS Editor 110, On Demand System 800 can modify the Frontend 126 and/ or Backend 127 of the Website 125 and other components of the Website 125. It should be clarified that the WBS 100 editor may work in conjunction with On-Demand System 800 (with the editor code being part of the Generic Website Server Code 824), but the editor itself may function as a layer above On-Demand System 800, and may not directly affect its functionality and decisions (e.g. allocation of execution instances to serve incoming requests).

Processor 260 may be associated with one or more servers that host elements of On-Demand System 800. For example, Processor 260 may be associated with a single server or a coordinated collection (e.g., farm) of servers. Further, in some embodiments each of the elements (e.g., each element within Memory 820, each element within Persistent Storage 830, Proxy Server 840, etc.) may have its own Processor 260 (e.g., as part of a dedicated server). Regardless of the number or type of Processors 260, each of the elements shown in On-Demand System 800 is capable of functioning both independently and in a coordinated manner.

Memory 820 may have one or more webserver execution instances to serve websites or pages to clients. In-Use Instances 821 may be webserver execution instances which are currently or actively serving websites. Available Instances 822, on the other hand, may be a set of webserver instances available in Memory 820 that are currently not hosting any specific website but are available to do so. In some embodiments, the number of webserver execution instances in Available Instances 822 may be a constant number. In some other embodiments, the number of webserver execution instances in Available Instances 822 might vary and depend on the number of webserver execution instances in In-Use Instances 821. For example, if there are a total of 10,000 execution instances, an increase in In-Use Instances 821 may mean a decrease in Available Instances 822, and vice versa. The number of webserver execution instances in Available Instances 822 may also be a percentage of the number of webserver execution instances in In-Use Instances 821. In-Use Instances 821 may, in some embodiments, be represented by a data structure containing a unique identifier identifying webserver Execution Instance 823 and other instances currently serving websites. In some embodiments, a similar data structure may be maintained per website hosted by On-Demand System 800 and all such data structures collectively represent In-Use Instances 821.

A Webserver Execution Instance 823 may be one of the In-Use Instances 821 serving requests to a website with the help of a webserver. Webserver Execution Instance 823 may include Generic Website Server Code 824 and Website N Specific Code 833. Generic Website Server Code 824 may, for example, be common code included in all web server execution instances. For example, such common code may include underlying webserver execution instance system elements (operating systems, web servers (e.g. Apache), database servers, etc.) In some embodiments, it may also include a WBS 100 editor or runtime environment along with common external services and plugins. Additionally, in some embodiments, the common code may include common website application-level server-side elements, such as the libraries and code related to major common items, such as WBS 100 vertical applications, etc. The common code may also include elements of common components (e.g., galleries) especially for co-hosted websites discussed below. For all of the above, the generic code may include actual server-side elements (which may be stored and executed on the server), as well as client-side elements (stored on the server and loaded on web page requests to the executing WBS 100 runtime client). In some embodiments, different groups of websites may include different Generic Website Server Code 824. Thus, for example, a commonly owned group of websites may have common Generic Website Server Code 824. This may also apply, for example, to multiple sites based on the same vertical market application framework (e.g. restaurants or hotels). Alternatively, different websites may have their own Generic Website Server Code 824, which may pertain to all webpages within each website.

Website N Specific Code 834 may include the code specific to the website or page being served by the Webserver Execution Instance 823 (such as Frontend 126 or Backend 127 code created by the website 126 Developer /Designer 1540 for the specific site). Webserver Execution Instance 823 may serve a website or page which includes Website N Specific Code 834 using a webserver (e.g., Apache, Tomcat, Nginx etc.) or a WBS-specific server. Website N Specific Code 834 may include, for example, code for performing functionality unique to the specific website or page, such as shopping cart functionality, payment processing, database access, app integration or execution, software-based router functions, and more. The discussion above and herein refers to Website Specific Code 834 related to a given website or page, and correspondingly to Webserver Execution Instance 823 which can serve requests coming from clients using the given website or page. However, On-Demand System 800 may be implemented at different levels of specific code granularity. The typical granularity level may be at the site level, i.e., where the Website Specific Code 834 covers an entire site - which is a level typically optimal for Webserver Execution Instance 823 reuse. However, the system can be implemented using a granularity level of a site group (for a group of very similar sites), entire site, site section (i.e., set of pages) and single page. For site groups, common parts for numerous sites can also be included in the Generic Website Server Code 824 as noted above.

Webserver Execution Instance 826 of Available Instances 822 may be used to serve the same website served by Webserver Execution Instance 823 of In-Use Instances 821 by injecting Website N Specific Code 833 into Webserver Execution Instance 826. In this manner, Webserver Execution Instance 823 may generate (and serve) individualized websites and pages based on the unique Website N Specific Code 834 associated with each website or page.

Persistent Storage 830 may include code generic and specific to all the websites hosted by On-Demand System 800 at First Memory Location 831 and Second Memory Location 832, respectively. Generic Website Server Code 824 may be stored, for example, in Persistent Storage 830 at First Memory Location 831. Website Specific Code 833 and 834 may be stored at Second Memory location 832, and may be code specific to websites 1 and N respectively. Persistent Storage 830 may, in various embodiments, be a distributed file system, database, or other storage system, and may be cloud-based (e.g., storage as a service). First Memory Location 831 and Second Memory Location 832 may be in different locations of the same storage system or in different storage systems which together form Persistent Storage 830. In some embodiments, Website Specific Code 833 and 834 each may be in different secondary memory locations or in the same location but separately labeled.

Generic Website Server Code 824 residing at First Memory Location 831 of Persistent Storage 830 may be copied to a webserver execution instance similar to Web Server Execution Instance 823 after spinning-up the instance. In this manner, the Generic Website Server Code 824, as well as any Website Specific Code 833-834, may be integrated to serve websites or pages that include common systems, web frameworks, libraries, components and plugins and individualized elements.

In various embodiments, each of the components of Memory 820, Persistent Storage 830, and Proxy Server 840 may be implemented through an on-premises computer network, a cloud computer network, or a hybrid network comprising both architectures. Examples of cloud hosting environments may include AMAZON WEB SERVICES, MICROSOFT AZURE, IBM CLOUD, and others, as well as proprietary cloud networks maintained by website hosting companies.

Proxy Server 840 helps determine whether a set of In-Use Instances 821 includes a webserver execution instance available to serve a request for a website generated from a Web Browser 131 of Web Viewing Device 130. Proxy Server 840 determines, for example, the availability of a webserver execution instance by interacting with Memory 820. For example, Memory 820 may maintain a list of Available Instances 822 and In-Use Instances 821, may poll Webserver Execution Instances 823 and 826 to determine their current status, or may receive other reporting information regarding the availability of a webserver execution instance. In some embodiments, Proxy Server 840 may handle HTTP requests (e.g., from clients) to access a specific website or page, and determine whether the specific website or page is already hosted by a Webserver Execution Instance 823. Further, in some embodiments, Proxy Server 840 may maintain a State Table 941 for use in determining the status of Available Instances 822 and In-Use Instances 821. Such a state table may identify such resources and the websites or pages they are already hosting.

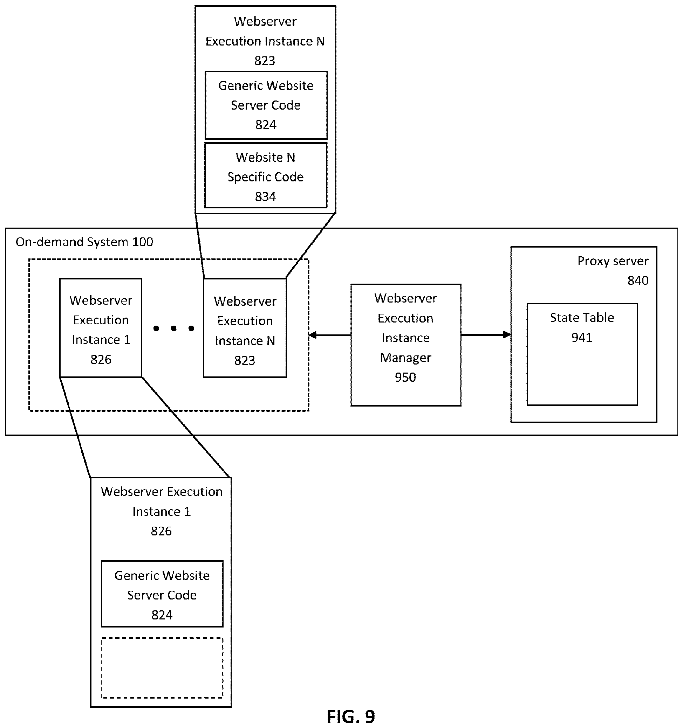

FIG. 9 depicts a schematic diagram of interaction between On-Demand System 800 components, according to some embodiments of the present disclosure. As shown in FIG. 2, Webserver Execution Instance Manager 950 of On-Demand System 800 manages web server execution instances by communicating with the Webserver Execution Instances 823 and 826 and Proxy Server 840. In some embodiments, Webserver Execution Instance Manager 950 may determine if new web server execution instances need to be added to Available Instances 822. This may occur, for example, if there is an increase in the traffic associated with a particular website or page that is being hosted. In some embodiments, increased traffic load may be predicted based on prior knowledge inferred from gathered periodic traffic information for the site in the past. The past traffic information may include monthly, weekly, daily and hourly traffic data collected so to understand seasonal trends other times with most active usage of the site and automatically add more webserver execution instances serving a particular website. In some other embodiments, Webserver Execution Instance Manager 950 may determine if an instance of the In-Use Instances 821 is inactive. In this situation, resources may be wasted, since In-Use Instances 821 are operating or operational, despite not having any requests from clients to respond to with websites or pages. Thus, as discussed further below, any inactive In-Use Instances 821 may be deactivated or shut down. Similar to the process of adding new webserver execution instances for a website, predictions as discussed above based on prior usage information may be used to shutdown instances when there is less anticipated traffic. Webserver Execution Instance Manager 950 may make a determination to add more instances to the Available Instances 822 set and/or mark an Instance in In-Use Instances 821 as inactive by delegating the determination to Proxy Server 840. Proxy Server 840, as noted above, may include State Table 941 to help determine whether to add or remove webserver execution instances from In-Use Instances 821 and Available Instances 822. State Table 941 may maintain information associating particular In-Use Instances 821 and Available Instances 822 with their current status, historical status, or projected future status. Such status information may identify specific websites or pages that they are hosting, may host in the future, or have hosted in the past. Further, State Table 841 may include further information (e.g., how long In-Use Instances 821 and Available Instances 822 have been hosting websites or pages, how long In-Use Instances 821 and Available Instances 822 have been inactive, etc.).

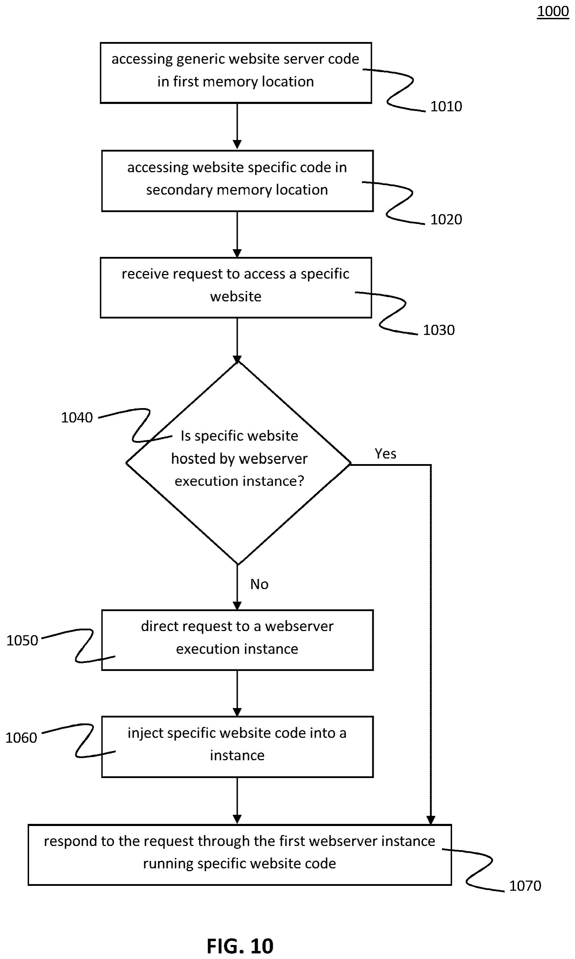

FIG. 10 is a flowchart illustrating a Method 1000 for responding to a web request sent for a website, according to some embodiments of the present disclosure. The Method 1000 in FIG. 10 identifies two paths to serve incoming web requests received by On-Demand System 800 from a Web Browser 131 of Web Viewing Device 130. Any setup requirements to serve the request might result in copying requested website specific code to a webserver execution instance serving the request to access a specific website.

As shown in FIG. 10, in Step 1010, On-Demand System 800 stores Generic Website Server Code 824 at First Memory Location 831 of Persistent Storage 830. As discussed above, this may involve storing code common to a group of websites (e.g., all of those owned by a common owner or based on a common vertical site framework) or common to a group of pages within a website. Further, Generic Website Server Code 824 may be associated with a defined, arbitrary grouping of websites or pages. As discussed above, Generic Website Server Code 824 may include code specifying common pieces of software different layers including operating systems, web frameworks, software libraries and website components and plugins, as well the WBS 100's own editor and viewer code.

In Step 1020, On-Demand System 800 may store Website N Specific Code 834 at Second Memory Location 832 of Persistent Storage 830. As discussed above, the Website N Specific Code 834 may be specific to a particular website or webpage. The Website N Specific Code 834 may include, for example, a widget, app, or custom backend or frontend functionality. Further the Website N Specific Code 833 may function such as a router for a particular website or page, as discussed above, where one or more segments from a URL entered by a user, or otherwise provided, determines how the website or page should assemble its contents (e.g., custom images, text, hyperlinks, forms, e-commerce features, personalized content, etc.).

In Step 1030, On-Demand System 800 may receive a request to access a website received from a Web Browser 131 on a Web Viewing Device 130. On-Demand System 800 handles the request by verifying if the website or page being requested is currently being served by one or more webserver execution instances in In-Use Instances 821. As discussed above, this may involve querying In-Use Instances 821 itself, querying Proxy Server 840, or obtaining a report from another service that monitors In-Use Instances 821. By referencing a lookup table or state table, the current operation (or lack thereof) of In-Use Instances 821 may be confirmed. In some embodiments, a single server may serve multiple websites or multiple clients of the same site, and the traffic load to and activity on to a particular server may be tracked and taken into account when determining which server to use to respond to additional requests.

In Step 1040, On-Demand System 800 verifies if Webserver Execution Instance 823 or other webserver execution instances in In-Use instances 821 serves the requested website. If yes, process 1000 may in some embodiments jump to Step 1070, which is discussed below.

If the answer in Step 1040 is no, process 1000 may proceed to Step 1050. If none of the webserver execution instances in In-Use Instances 821 serve the requested website, then the request may be forwarded to an available webserver execution instance in Available Instances 822. In some embodiments, the one of the webserver execution instances in Available Instances 822 may be selected for serving the requested website. In other embodiments, as shown in FIG. 10, Webserver Execution Instance 826 in Available Instances 822 receives the request for serving.

In Step 1060, a request may be sent to look up Website Specific Code 833 in Secondary Memory Location 832 matching the requested website. For example, as illustrated, Website 123 Specific Code 833 is the matching code if the request was received for Website 1. In some embodiments, Website Specific Code 833 matching the requested website is identified and copied to the Webserver Execution Instance 826. Webserver Execution Instance 826 is added to the list of In-Use Instances 821 (e.g., in a state table, or in Proxy Server 840), and removed from the list of Available Instances 822. The request is responded to (e.g., to the client) by Webserver Execution Instance 826. Process 1000 may then repeat (e.g., repeat to Step 1010, 1020, or 1030). Further, in Step 1060, the Website Specific Code 833 may be injected into Webserver Execution Instance 826, as discussed above, for integration into building a specific website or page requested by the user.

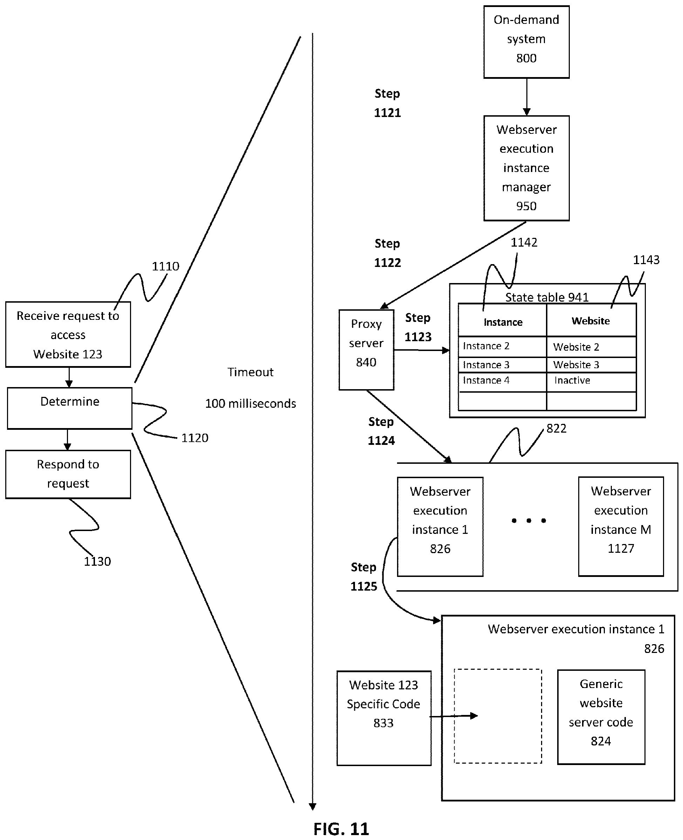

FIG. 11 is an illustration of On-Demand System 800 configured for determining whether a website is hosted, and generating or instantiating execution instances, according to some embodiments of the present disclosure. As shown in FIG. 11, Proxy Server 840 is used to determine the Steps to handle a request to access Website 123 received over Network 160 from Web Browser 131 of Web Viewing Device 130. Such a determination may result in immediate handling of the request by Webserver Execution Instance Manager 950 or instantiation of a webserver execution instance in Available Instances 822 using requested website specific code prior to handling the request.

As shown in FIG. 11, in Step 1110 On-Demand System 800 may receive a request for Website 123 over a Network 160. The request may come from a client computer or application, as discussed above. The request may be an HTTP request, HTTPS request, or another type of network request.

In Step 1120, On-Demand System 800 determines how best to serve the requested Website 123. As discussed above, the determination may include identifying whether a request can be handled by a current set of In-Use Instances 821 or an additional webserver execution instance is required. For example, On-Demand System 800 may determine that the current load on In-Use Instances 821 has passed a threshold of usage (e.g., threshold number of instances, amount of bandwidth used, percentage of bandwidth used, level of use of server resources such as memory or processor power etc.). In that event, it may be determined that one or more Available Instances 822 should be spun up or utilized to satisfy the demand for the particular website or page. Further, as discussed above, On-Demand System 800 may attempt to predict a future load state of In-Use Instances 821. Such a prediction may be made based on prior load levels, for example. Based on a predicted load level for In-Use Instances 821, On-Demand System 800 may likewise determine that one or more Available Instances 822 should be spun up or utilized to satisfy the forecasted demand for the particular website group, website, page set or page. On-Demand System 800 may also direct such incoming request to one of the In-Use Instances 821 (so to provide the best response time), and in parallel decide to spin up one or more Available Instances 822 so to make them available for future requests related to the given website or page.

In Step 1121, as part of the determination process, On-Demand System 800 may pass control to Webserver Execution Instance Manager 950 along with the request for Website 123 (e.g., a copy of the request, or information about the request). The request may be a request to access an indexable webpage of Website 123, a submission of a form, or various other types of requests.

In Step 1122, Webserver Execution Instance Manager 950 may delegate the determination to Proxy Server 840 to help determine how to handle the request to serve Website 123. This may involve the types of decision-making discussed above, including a determination of the current load status associated with the Website 123, projections of future load for the website, etc.

In Step 1123, Proxy Server 840 may reference the State Table 941 in Proxy Server 840 for the instances in In-Use Instances 821 which may serve the requested website. In some embodiments, the look up in State Table 941 may involve looking at a column termed "Website" 1143 in the table for a matching website URL. Other identifiers (e.g., URL, account name, arbitrary name, etc.) are possible too. In some embodiments, Step 1122 occurs periodically even when On-Demand System 800 did not receive a request to serve a website - as On-Demand System 800 may periodically monitor load levels based on historic website traffic trends and may automatically spin-up or shutdown webserver execution instances except when the current traffic trend suggests otherwise. In some embodiments, Webserver Execution Instance Manager 950 is forwarded the request for Website 123 after a failure to handle the request, indicating non-availability of a webserver execution instance to serve the request for the Website 123.

In Step 1123, Proxy Server 840 may send a request to a webserver execution instance in Available Instances 822 to pick the first available Webserver Execution Instance 826 to be marked for serving request for Website 123. In other embodiments, Webserver Execution Instance 826 may be chosen based on a policy that accounts for differences among Webserver Execution Instances 826 that makes them suitable or more optimal to handle the request (e.g., geographical location, applications running, memory available, processing power, disk / memory fragmentation level etc.).

In Step 1124, On-Demand System 800 selects a webserver execution instance in Available Instances 822 for serving the request for Website 123. In some embodiments, Webserver Execution Instance 826 is selected to serve the request for Website 123.

In Step 1125, Webserver Execution Instance 826 may be added to the set of In-Use Instances 121 by injecting Website 123 Specific Code 833 into Webserver Execution Instance 826. In some embodiments, the On-Demand System 800 may request the Proxy Server 840 to update State Table 941 with the entry for Webserver Execution Instance 826. State Table 841 may thus change, including adding a row with Instance 1142 and Website 1143 identifiers in State Table. In some embodiments, the first available instance, e.g., Webserver Execution Instance 826, may be selected to be injected with Site Specific Code 833. After this injection, Webserver Execution Instance 826 would be removed from the set of available instances 822.

In other embodiments, the selection may be based on geographical proximity to the Website 123 request location or the number of potential web requests which might originate from a certain geographical location. In some embodiments, multiple web server execution instances may be injected with Website 123 Specific Code 833 and added to the set of In-Use Instances 821.

Determination 1120 to handle requested Website 123 may further have a timeout threshold (e.g., 10 or 100 milliseconds). The timeout period may match the general web standard to serve web page requests. Webserver execution instances which are part of Available Instances 822 help reduce the time to spin-up instances when a new website request is placed. The cold start problems of prior, conventional website building systems are thus reduced.

In Step 1130, Webserver Execution Instance 826 may serve the request for Website 123 using Website 123 Specific Code 833. As discussed above, by serving a website or page generated using Website 123 Specific Code 833, the content of the website may be tailored to the user or how the user arrived at the site (e.g., using a software-based router). In some embodiment, the injection step itself may modify the injected material, e.g. adapting it to the specific user / platform / device making the request or to other "environmental" conditions (country, language, database accessed, user access history, etc.). The client code initiating the network request may add additional parameters or information to the network request so to enable the injecting module to perform such adaptation. The additional information can be added directly (e.g. as added URL or other request parameters) or indirectly (e.g. by available through an additional request, prior storage in a database or other method).

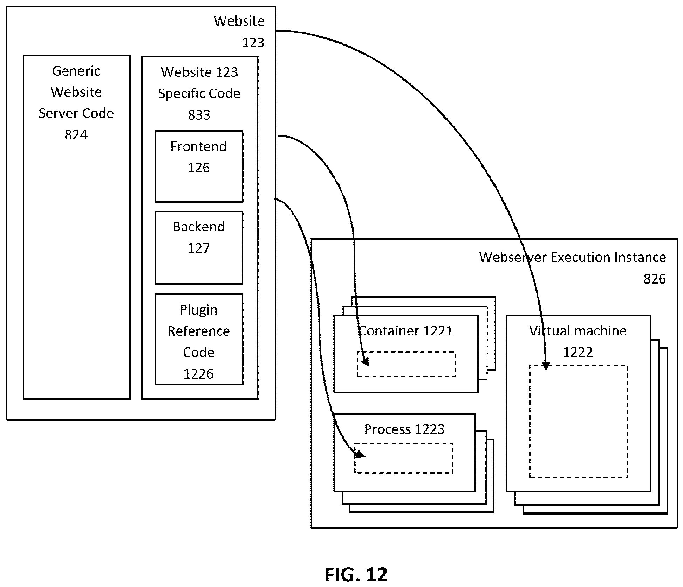

FIG. 12 depicts an instantiation of server infrastructure elements with a website, according to some embodiments of the present disclosure. The techniques of FIG. 12 may be practiced in the systems described above and described throughout this disclosure.

As shown in FIG. 12, Website 123 may be served through a webserver execution instance by copying Website 123 Specific Code 833 to Container 1221 or Virtual Machine 1222. In some embodiments, Website 123 may be served by a separate operating system Process 1223 (e.g., via serverless code). Website 123 Specific Code 833 may include Frontend 126, Backend 127, and Plugin Reference Code 1226, as discussed above in connection with the customized backend functionality that may be provided in websites. In some embodiments, Frontend 126, Backend 127, and Plugin Reference Code 1226 may be copied to individually to Container 1221, Virtual Machine 1222, or Process 1223. In some embodiments, Generic Website Server Code 824 may be copied to Container 1221 or Virtual machine 1222 (which would later include Website 123 Specific Code 833) as part of Webserver Execution Instance 826 instantiation.

In some embodiments, the use of On-Demand System 800, such as through a serverless code implementation, may improve processing times and server utilization, while reducing latency for users. In serverless code embodiments, there are no dedicated servers to manage. Instead, code (e.g., Frontend 126, Backend 126, and Plugin Reference Code 1226) may be provided as code and executed on-demand in the cloud. To the extent users are charged for the code execution, they may be charged proportional the actual execution of the code (rather than based on dedicated infrastructure costs or servers which must remain allocated to a given site while waiting for incoming requests). Alternatively, this may substantially reduce the costs for an on-line WBS vendor, while allowing it to provide better service to its users. In some embodiments, On-Demand System 800 may define a set of programming languages or web frameworks that it supports for processing serverless code. On-Demand System 800 may also support WebSockets, streaming or chunked communications, additional protocols (e.g., TCP and UDP, etc.), memory as a service functionality (e.g., for stateless, side-effect-free code functions), and native serverless options (e.g., Go, Rust, C, etc.). By being able to process serverless code on-demand, the problems of conventional website hosting systems (e.g., experiencing a "cold start" to load instances of machines or websites) may be reduced. Start time for websites or pages (including any running code) may be less than 100 ms, thus reducing latency and improving the user experience. By contrast, some conventional systems experience a start time of websites or pages of roughly 600 ms to 2 seconds, including the functions of scheduling overhead, starting an instance, starting a process (e.g., code execution), and request handler functioning.

Website Execution Instance 826 may serve multiple websites through Container 1221, Virtual Machine 1222, or Process 1223. In some embodiments, Webserver Execution Instance 826 may have a set of Container 1221, Virtual Machine 1222, and Process 1223 resources devoted to it or available to it. Multiple Containers 1221, Virtual Machines 1222, and Processes 1223 may serve multiple websites. In some embodiments, Website Execution Instance 826 variants which may serve multiple websites may include a single Container 1221, Virtual Machine 1222, or Process 1223 serving multiple websites. Container 1221, Virtual Machine 1222, and Process 1223 serving multiple websites may need multiple websites site specific code to be copied to serve various website requests.

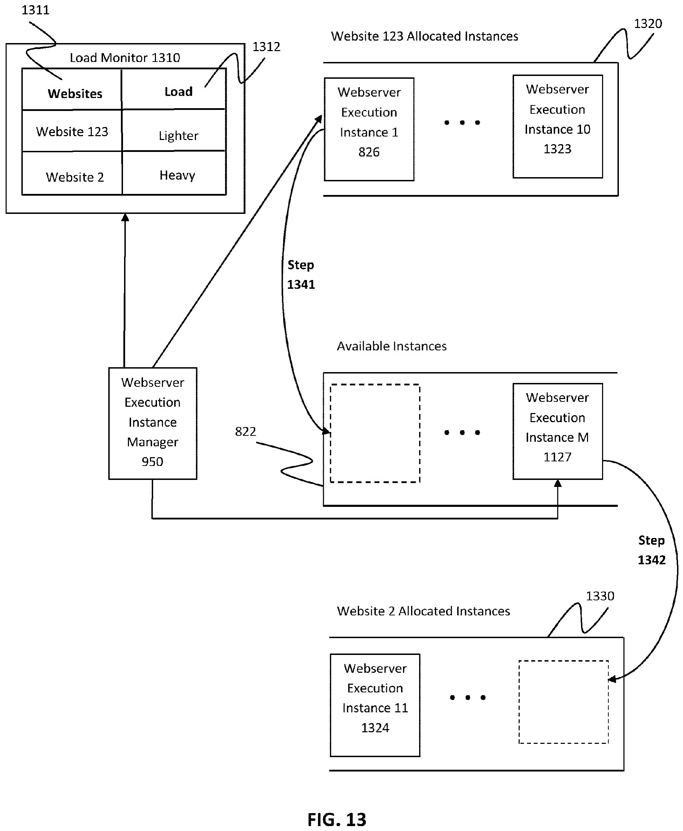

FIG. 13 depicts techniques of load monitoring of hosted websites and managing In-Use Instances 821, according to some embodiments of the present disclosure. These techniques may be practiced in the systems as described above.

As shown in FIG. 13, Webserver Execution Instance Manager 950 (as discussed above in connection with FIG. 11) monitors or communicates with the Load Monitor 1310 to determine if any of the websites served by On-Demand System 800 have a heavier load than desired or budgeted. As discussed above, this may be determined based on current, prior, or future load characteristics. In some embodiments, future load may be predicted based on prior knowledge based on gathered periodic load of the website/webserver hosting multiple websites in the past. The past load may include monthly, weekly, daily and hourly to understand seasonal trends other times with most active usage of the site and automatically add more webserver execution instances serving a particular website or group of websites being served by a webserver.

When websites have a relatively lighter load, some instances are removed from the set of In-Use Instances 821 for a particular website and moved back to Available Instances 822. In some embodiments, Load Monitor 1310 lists all the Websites 1311 hosted by On-Demand System 800 and their Load 1312 in a tabular form. In some embodiments, Load Monitor 1310 table listing Website load may be part of State Table 941 managed by or accessible to Proxy Server 840. In some other embodiments, Load Monitor 1310 may be a separate table in Proxy Server 840. In other embodiments, Load Monitor 1310 may be in Memory 820 of On-Demand System 800.

In some embodiments, In-Use Instances 821 may be a collection of separate sets of instances hosting some or all websites of On-Demand System 800. In some embodiments, Websites 123 and 2, as illustrated, are the websites hosted by On-Demand System 800. In various embodiments, Website 123 Allocated Instances 1320 and Website 2 Allocated Instances are 1330 are the set of webserver execution instances of Website 123 and Website 2. In some embodiments, Website 123 Allocated Instances 1320 and Website 2 Allocated Instances 1330 together are considered In-Use Instances 822.

Load Monitor 1310 load table may be updated by Webserver Execution Instance Manager 950 directly or it might request Proxy Server 840 to update it. In some embodiments, Load Monitor 1310 load table is updated periodically by Proxy Server 840 based on the number of requests to access to Websites 1311 hosted by On-Demand System 800. Load Monitor 1310 load table may be updated based on other website usage statistics. For example, for a multimedia-heavy website, the usage statistics might include usage of memory and processor cycles to serve website requests involving conversion of video and audio to different formats based on the environment of the device used by the use. Webserver execution instances of In-Use Instances 821 are moved to Available Instances 822 when the website they are hosting has a lighter load. Similarly, when a website has a higher load, webserver execution instances of Available Instances 822 are marked In-Use Instances 821 and website specific code for the website with heavier load is injected into these webserver execution instances.

In some embodiments, based on Proxy Server 840 observing that Website 123 has a load that is lighter, On-Demand System 800 may cause Webserver Execution Instance 826 to be moved from Website 123 Allocated Instances 1320 set to Available Instances 822 set. In some embodiments, Webserver Execution Instance 1323 is moved to Available Instances 822. In some embodiments, multiple webserver execution instances are moved to Available Instances 822 at the same time. Proxy Server 840, on observing that Website 2 has a heavier load in Load Monitor 1310, may move Webserver Execution Instance 1127 from Available Instances 822 set to Website 2 Allocated Instances 1330 set. As part of Step 1342, Website 2 may have site-specific or page-specific code that is injected into Webserver Execution Instance M 1127 before moving it to Website 2 Allocated Instances 1330. Of course, Step 1341 and Step 642 are independent and do not have occur together or in any specific order.

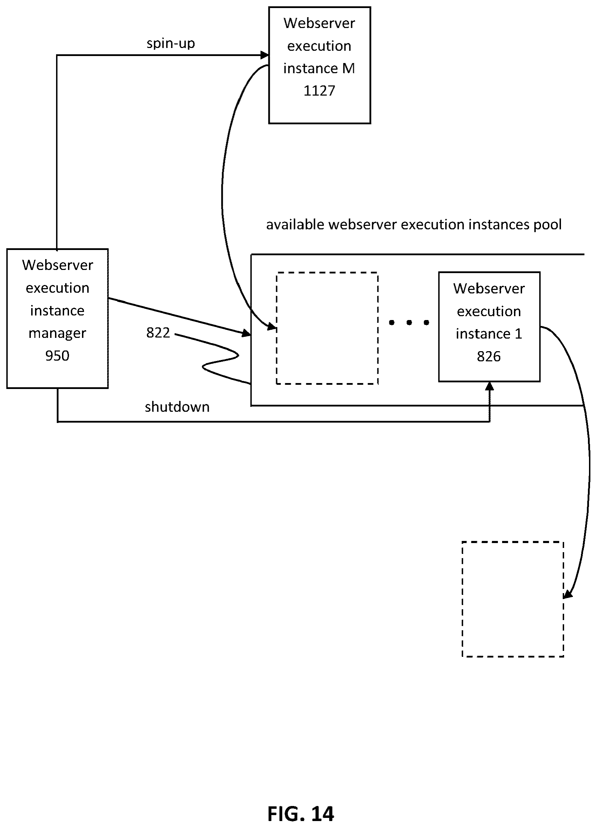

FIG. 14 depicts monitoring webserver execution instances available for hosting, according to some embodiments of the present disclosure. As shown in FIG. 14, Webserver Execution Instance Manager 950 monitors the number of Available Instances 822. Webserver Execution Instance Manager 950 may spin-up new instances and add them to the set of Available Instances 822 pool when the number of webserver execution instances in the set of Available Instances 822 is less than a threshold, as discussed above. Webserver Execution Instance Manager 950 may conversely shutdown instances in the set of Available Instances 822 when the number of webserver execution instances is higher than a threshold. These techniques of spinning up and shutting down execution instances may account for current, prior, or anticipated future demand for particular websites or pages, as discussed above.

In some embodiments, Webserver Execution Instance Manager 950 may wait for a certain amount of time prior to spinning-up new instances to make sure inactive instances identified through State Table 841 are not added back to the pool. Similarly, in some embodiments, Webserver Execution Instance Manager 950 may wait for certain amount of time prior to shutting down available instances to make sure an instance is not required to be injected with website specific code to handle a new website request. Shutting down and spinning-up instances can be a time intensive process and Website Execution Instance Manager 150 avoids doing it frequently by waiting after discovering that a number of available instances deviate from a threshold number.

In some embodiments, Webserver Execution Instance Manager 950 spins-up and shuts down webserver execution instances when the current number of instances in Available Instances 822 set differs from threshold by a specified number or percentage. This allows for a range of values for the number of Available Instances 822 to be present at any point of time. In other embodiments, Webserver Execution Instance Manager 850 may react immediately on deviation from a threshold to spin-up and shutdown instances.

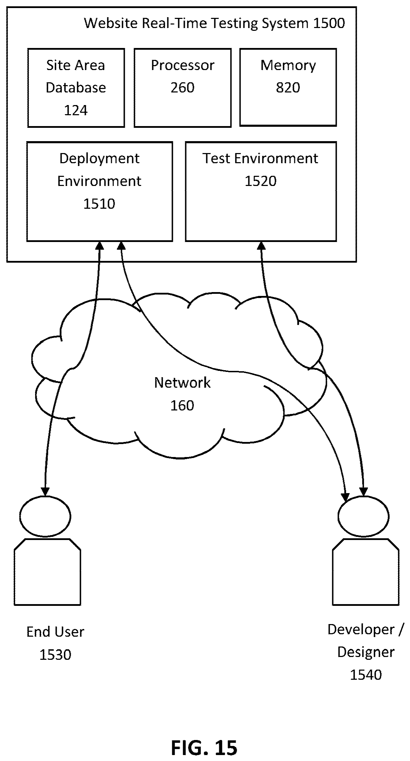

FIG. 15 depicts an exemplary website real-time testing system, according to some embodiments of the present disclosure. As shown in FIG. 15, Website Real-Time Testing System 1500 includes Processor 260, Memory 820, Site Area Database 124 for storing data used by websites, Deployment Environment 1510 providing access to data related to a website being accessed. In some embodiments, Website Real-Time Testing System 1500 may also include Test Environment 1520 providing access to data related to a website being accessed for testing purposes. Alternative terms may be used for test / deployment such as development / run-time, staging / production and testing / live.

In some embodiments, On-Demand System 800 may be a sub-system included in whole in the Website Real-Time Testing System 1500. In some embodiments, Website Real-Time Testing System 1500 may be composed partially of, or may include On-Demand System 800.

Deployment Environment 1510 may be a set of software components executing in a webserver execution instance in an On-Demand System 800.

Test Environment 1520 may be set of software components executing in a webserver execution instance in On-Demand System 800. In some embodiments, a Test Environment 1520 is generated based on the type of device used to access a website. For example, Website 123 accessed through Web Browser 141 on Web Viewing Device 140 may result in creation of Test Environment 1520, which may be different in appearance and layout if Web Viewing Device 140 is a desktop computer or mobile phone. In some other embodiments, a Test Environment 1520 may be generated based on which user is accessing the website. For example, a Developer/Designer 1540 requesting access to Website 123 may result in creation of Test Environment 1520. In some embodiments, a Test Environment 1520 may be shared across users. Test Environment 1520 may be different for different users. In some embodiments, Test Environment 1520 may be shared across multiple websites stored in Site Area Database 124. In some embodiments, an instance of Test Environment 1520 may always be available, and Developer/Designer 1540 may select between accessing a given website through Test Environment 1520 or Deployment Environment 1510.

End User 1530 may access a website and its data in a Deployment Environment 1510 through Network 160. In some embodiments, End User 1530 may access Website 123 through Web Browser 131 on Website Viewing Device 130, consistent with above embodiments.

Developer/Designer 1540 may access a website and its data in a Test Environment 1520 through Network 160. Developer/Designer 1540 may access Website 123 through Web Browser 141 on Website Development Device 140. In some embodiments, Developer/Designer 1540 may access Website 123 in Deployment Environment 1510 by using Web Browser 131 on Web Viewing Device 130. It should be noted that Web Viewing Device 130 and Development Device 140 may be the same device.

End User 1530 and Developer/Designer 1540 may be different roles of a same user accessing Website 123. In some embodiments, a user can change roles by accessing the Website 123 using different devices. For example, a user accessing Website 123 using WBS Vendor Staff Device 150 or Website Development Device 140 may be regarded as Developer/Designer 1540. A user accessing Website 123 using Website Viewing Device 130 may be regarded as End User 1530. A website may be accessed using Deployment Environment 1510 or Test Environment 1520 based on the whether the user is End User 1530 or Developer/Designer 1540 respectively. Also, a website may be accessed using Deployment Environment 1510 or Test Environment 1520 based on whether the request originated from Website Viewing Device 130 or Website Development Device 140. In some embodiments, a website may be accessed using Deployment Environment 1510 or Test Environment 1520 based on a combination of user and device type.

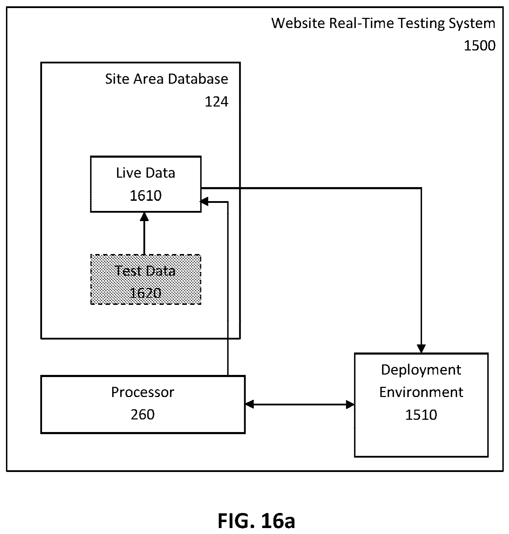

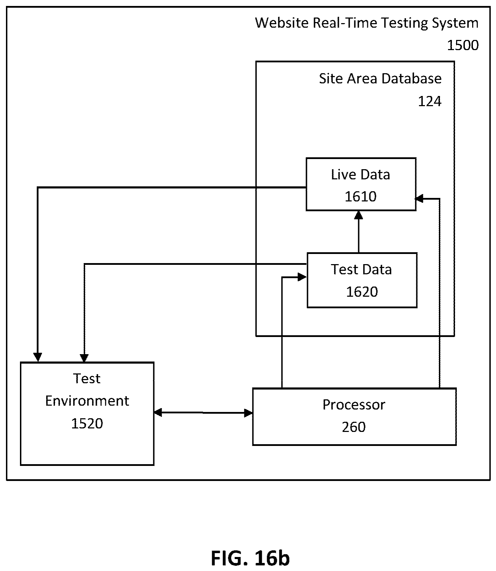

FIG. 16a depicts a schematic diagram of a Development Environment 1510 for accessing data elements, according to some embodiments of the present disclosure. As shown in FIG. 16a, Deployment Environment 1510 may request Processor 260 to help access Live Data 1610. Deployment Environment 1510 may not access Test Data 1620, depicted by a broken line. FIG. 16b depicts a schematic diagram of a Test Environment 1520 for accessing data elements, according to some embodiments of the present disclosure. As shown in FIG. 16b, Test Environment 1520 may request Processor 260 to help access Live Data 1610 and Test Data 1620. Developer/Designer 1540 accessing a Website 123 using Test Environment 1520 may request data elements associated with Indexable Webpage 125 of Website 123. Test Environment 1520 may be configured for receiving requests for data elements from a user, and may forward the requests to Test Data 1620. In some embodiments, Test Data 1620 may determine if the requested data element is present in Test Data 1620 or forward the request to Live Data 1610. In some embodiments, Test Environment 1520 may itself determine whether to request Live Data 1610 or Test Data 1620 for a certain data element. In some embodiments, Test Environment 1520 may access Live Data 1610 and Test Data 1620 after copying them to Memory 820.

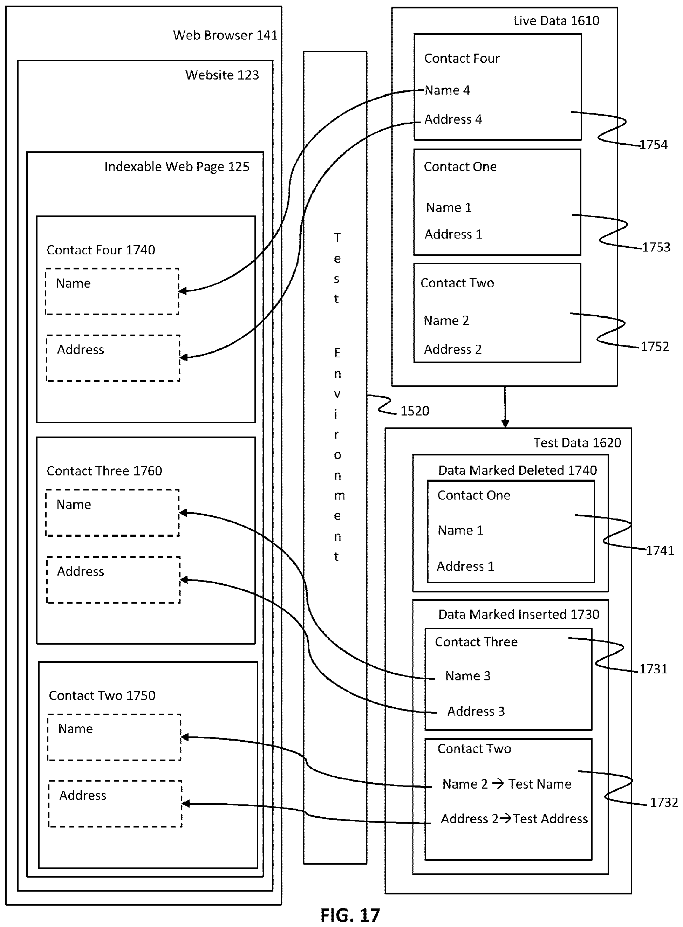

FIG. 17 is an illustration of website access to live and test data in Test Environment 1520, according to some embodiments of the present disclosure. As shown in FIG. 17, Indexable Web Page 125 of Website 123 is being accessed using Web Browser 141 on Web Development Device 140. Indexable Web Page 125 and the associated data elements are being accessed through Test Environment 1520.

Indexable Web Page 123 may access both Live Data 1610 and Test Data 1620 as part of accessing data elements associated with Indexable Web Page 125. In some embodiments all requests to access data elements may first be sent to Test Data 1620. Test Data 1620 may filter out data element access requests which can be handled by Test Data 1620 itself before forwarding the requests to Live Data 1610.

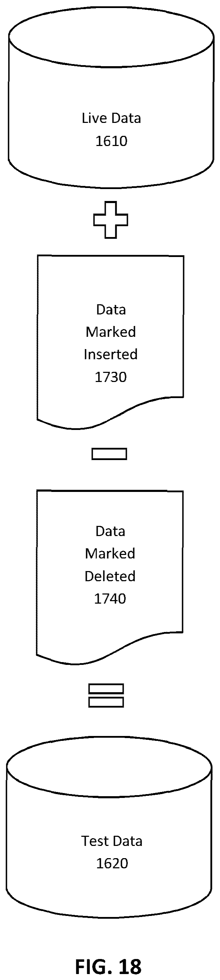

FIG. 18 depicts the generation of test data used in Test Environment 1520 for testing websites, according to some embodiments of the present disclosure. As shown in FIG. 18, Live Data 1610 forms part of the Test Data 1620. In some embodiments, the order of adding Data Marked Inserted 1730 and Data Marked Deleted 1740 may be different. Data Marked Inserted 1730 and Data Marked Deleted 1740 might traversed concurrently to avoid adding something to the Test Data 1620 and later deleting the same marked deleted in Data Marked Deleted 1740.

Data Marked Inserted 1730 and Data Marked Deleted 1740 may be persisted in Site Area Database 124. In some embodiments Data Marked Inserted 1730 and Data Marked Deleted 1740 may reside in Memory 920 until the session to access Website 123 in Test Environment 1520 is active. Data Marked Inserted 1730 and Data Marked Deleted 1740 may be persisted to Site Area Database 124 when a session becomes inactive. For example, Developer/Designer 1540 may explicitly request Data Marked Inserted 1730 and Data Marked Deleted 1740 to be persisted to Site Area Database 124. In some embodiments, Data Marked Inserted 1730 and Data Marked Deleted 1740 may share the same location in Site Area Database 124. Data Marked Inserted 1730 and Data Marked Deleted 1740 may be persisted based on number of read requests. Data elements within Data Marked Inserted 1730 may be selectively persisted to Site Area Database 124. Data elements may be selectively persisted based on additional criteria, such as the number of times a data element is requested to be read or the time for which a data element in them has not changed or number of sessions the data was accessed.

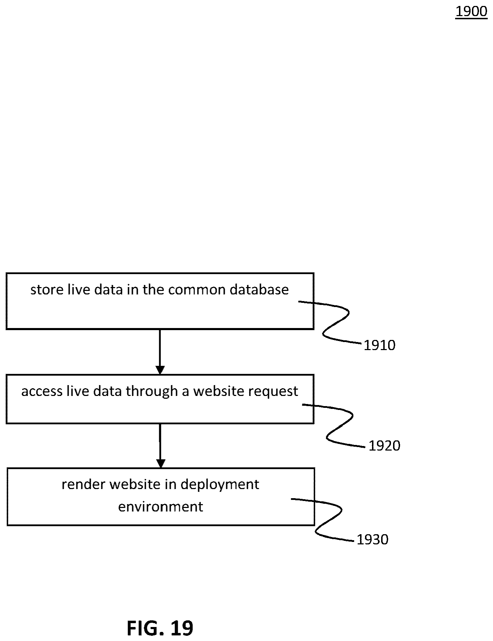

FIG. 19 is a flowchart illustrating a Method 1900 to access a website in a deployment environment, according to some embodiments of the present disclosure.

As shown in Step 1910. Data elements that are updated and added when accessing a website in Deployment Environment 1510 are stored in Live Data 1610 of Site Area Database 124.

In Step 1920, Live Data 1610 stored in Site Area Database 124 associated with an indexable webpage of a website accessed in Deployment Environment 1510 is accessed by Website Real-time Testing System 1500 as part of serving webpages requested by a user.

In Step 1930, data elements accessed in Step 1920 are applied to the indexable webpage they are associated with to render the webpage in Web Browser 131 of Web Viewing Device 130 used by End User 1530.

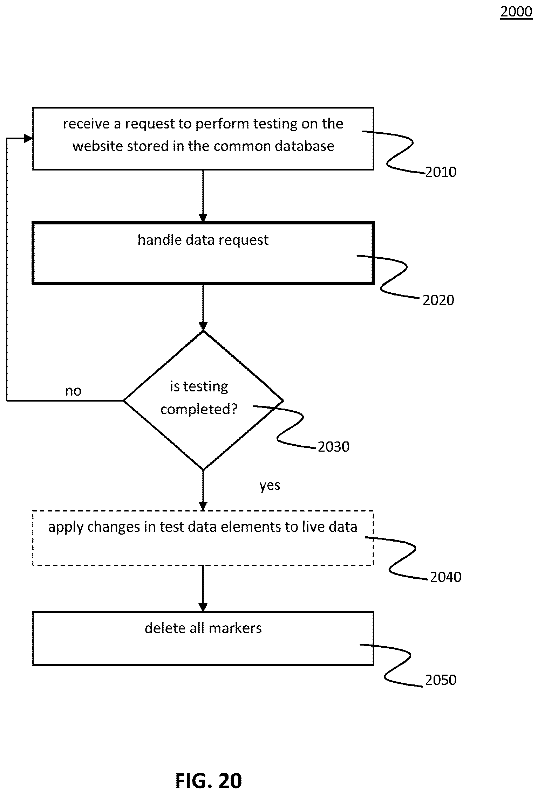

FIG. 20 is a flowchart illustrating a Method 2000 to access a website in a test environment, according to some embodiments of the present disclosure.

In Step 2010, Website Real-Time Testing System 1500 may receive a request to perform testing on the website (e.g., Website 123) stored in the common database (e.g., Site Area Database 124). In Step 2020, Website Real-Time Testing System 1500 handles the data request made as part of the process of testing a website using Test Environment 1520. For example, Website 123 may be tested by Developer/Designer 1540 by accessing the Website 123 using Web Browser 141 of Website Development Device 140. For example, Developer/Designer 1540 may request Indexable Web Page 125 of Website 123 by typing the URL. Further, in some embodiments the URL may be specified by an application. The request includes both request to Frontend 126 and also data elements of Data Group 210 associated with Indexable Web Page 125 of Website 123. A read request for the data may be made as part of the process of accessing a webpage.

As shown in FIG. 20, in Step 2030, Website Real-Time Testing System 1500 verifies if the testing is completed. In some embodiments, testing a website is considered completed if the website is accessed through Test Environment 1520 for a certain period of time. Testing may be considered completed after a certain number of data requests. Testing may also be considered completed when Developer/Designer 1540 accessing a website through Web Browser 141 of Website Development Device 140 closes the browser tab or window used to access the website. Testing may also be considered completed when Developer/Designer 1540 explicitly request this from Website Real-Time Testing System 1500. If the answer to Step 2030 is no, Method 2000 may jump back to Step 2010 and be ready to receive the next data request. If the answer to Step 2030 is yes, Method 2000 may proceed to Step 2040. In Step 2040, Method 2000 may apply changes made to data elements and saved in Test Data 1620 to corresponding data elements in Live Data 1610. Step 2040 may be optional, as Developer/Designer 1540 may request, for example, that the data changes incorporated in Test Data 1620 be dropped.

In Step 2050, all the markers associated with the updates to the data elements made during testing of Website 123 in Test Environment 1520 may be deleted.

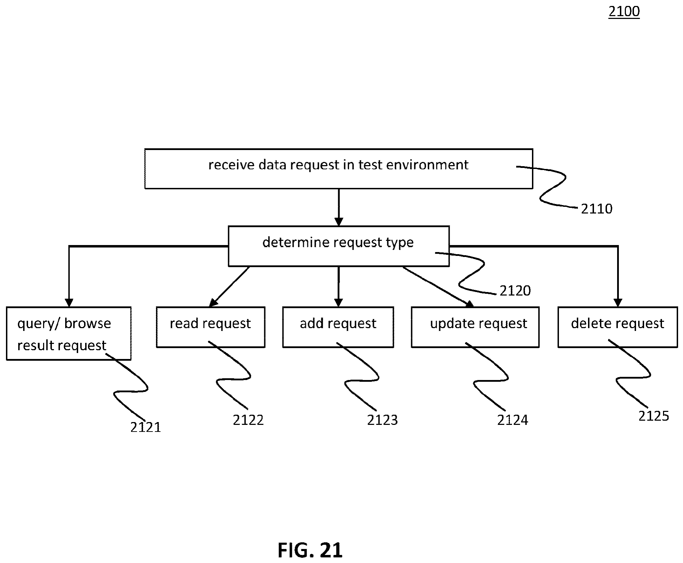

FIG. 21 is a flowchart illustrating Method 2100 for handling data requests in Test Environment 1520, according to some embodiments of the present disclosure. The Method 2100 in FIG. 21 identifies one of five exemplary paths to handle the incoming request for data elements associated with a website being accessed by a Developer/Designer 1540.

As shown in FIG. 21, in Step 2110, Website Real-Time Testing System 1500 receives a data request in Test Environment 1520. The data request is part of accessing a website for testing in Test Environment 1520. For example, a Developer/Designer 1540 accessing a Website 123 through Website Development Device 140 may cause a request for Data Element 211 of Data Group 210 associated with Website 123.

In Step 2120, Website Real-Time Testing System 1500 determines the type of the request to access to data elements associated with a website being tested. The determination results in different types of requests being processed. The data request may be a read request to access data elements associated with a website being tested by Developer/Designer 1540 when they request an indexable web page by typing a URL. In some embodiments, the data request may be a write request to add a data element. For example, Developer/Designer 1540 testing Website 123 may submit a form on Indexable Web Page 125 requesting creation of a new data element to be added to Data Group 210. The data request may be an update request to alter the contents of a data element associated with the website being tested by Developer/Designer 1540. The data request may be a delete request to remove a data element associated with a website being tested by Developer/Designer 1540.

In Step 2121, Website Real-Time Testing System 1500 has determined in Step 2120 that the data request is to search for data elements associated with the website being tested by Developer/Designer 1540, or to browse the result of such searching operation.

In Step 2122, Website Real-Time Testing System 1500 has determined in Step 2120 that the data request is to read data elements associated with the website being tested by Developer/Designer 1540.

In Step 2123, Website Real-Time Testing System 1500 has determined in Step 2120 that the data request is to add data elements associated with the website being tested by Developer/Designer 1540.

In Step 2124, Website Real-Time Testing System 1500 has determined in Step 2120 that the data request is to update data elements associated with the website being tested by Developer/Designer 1540.

In Step 2125, Website Real-Time Testing System 1500 has determined in step 2120 that the data request is to delete data elements associated with the website being tested by Developer/Designer 1540.

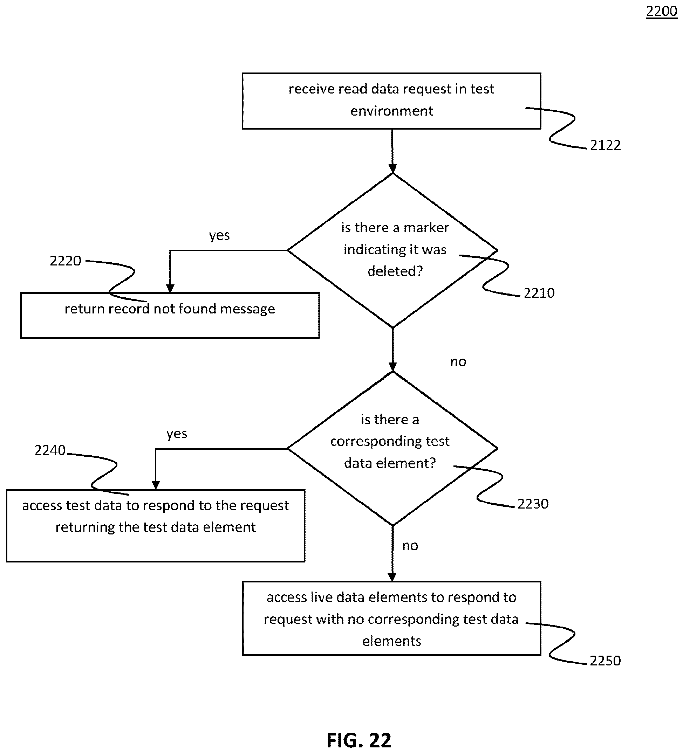

FIG. 22 is a flowchart illustrating a Method 2200 for handling read requests in test environment, according to some embodiments of the present disclosure. The Method 2200 in FIG. 22 identifies three paths to determine if a data request need to be responded and if so whether to use data elements in Test Data 1620 or Live Data 1610.

As shown in FIG. 22, in Step 2122, a received data request has been determined in Method 2100 to be a read request for data elements in Site Area Database 124 and Memory 820.

In Step 2210, Website Real-Time Testing System 1500 looks up the requested data element in Test Data 1620 and when a match is found verifies if it is marked as deleted. If the answer in Step 2210 is yes, Method 2200 may proceed to Step 2120 and regards Method 2200 to be complete. In Step 2 no data element found message is returned. For example, Developer/Designer 1540 accessing Indexable Web Page 125 of Web Site 123 may send a request for Data Element 1741 in Data Marked Deleted 1740 of Test Data 1620 resulting in "no data element found" message being returned.

If the answer in Step 2210 is no, Method 2100 may proceed to step 2130. As shown in FIG. 22, in Step 2230, Website Real-Time Testing System 1500 looks up the requested data element in Data Marked Inserted 1730 of Test Data 1620.

If the answer in Step 2230 is yes, Method 2200 may proceed to Step 2240. In Step 2240, the data element requested is found in Test Data 1620 and is returned. The requested data element may be in Data Marked Inserted 1730 of Test Data 1620 as it added as a new data element previously. Further, the requested data element may be in Data Marked Inserted 1730 as it was updated while testing a website previously. For example, Developer/Designer 1540 request to access data element of Contact Two 1760 in Test Environment 1520 will result in Data Element 1732 in Data Marked Inserted 1730 of Test Data 1620 is returned after Method 2200 executes Step 2240. The same data element when requested in Deployment Environment 1510 may result in Data Element 1752 being returned.

If the answer in Step 2230 is no, Method 2200 may proceed to Step 2250. In Step 2250, Data element requested is returned from Live Data 1610.

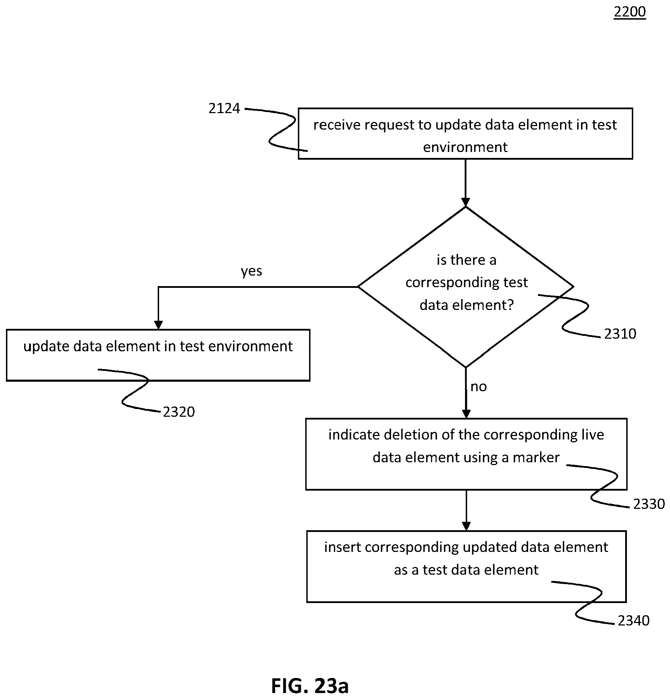

FIG. 23a is a flowchart illustrating a Method 2300 for updating data elements in test environment, according to some embodiments of the present disclosure. Method 2300 in FIG. 23a defines a location to store the updated data element requested while testing a website.

As shown in FIG. 23a, in Step 2124 a received data request has been determined in Method 2100 to be a request to update a data element present in Live Data 1610 or Data Marked Inserted 1730 of Test Data 1620 while testing a website.

In Step 2310, Website Real-Time Testing System 1500 determines the location of the of the data element being requested to be updated by first checking in Data Marked Inserted 1730 of Test Data 1620.

If the answer to Step 2310 is yes, then Method 2200 proceeds to Step 2320. In Step 2320, a data element corresponding one being requested to be updated is updated.

If the answer to Step 2310 is no, then Method 2200 proceeds to Step 2330 indicating that the data element requested to be updated was not updated in the past and is present only in Live Data 1610. The data element in Live Data 1610 is copied to Data Marked Deleted 1740 to avoid any future access to the data in Test Environment 1520.

In Step 2340, Website Real-Time Testing System 1500 inserts the updated data element into Test Data 1620. In some embodiments, adding a data element involves adding a database entry and marking in an additional column that it was added through Test Environment. The data element inserted into Data Marked Inserted 1730 of Test Data 1620 from Test Environment 1620 cannot be accessed in by requests in Deployment Environment 1610. For example, Developer/Designer 1540 request to update Data Element 1752 through Website 123 results in Data Element 1732 being inserted into Data Marked Inserted 1730 of Test Data 1620.

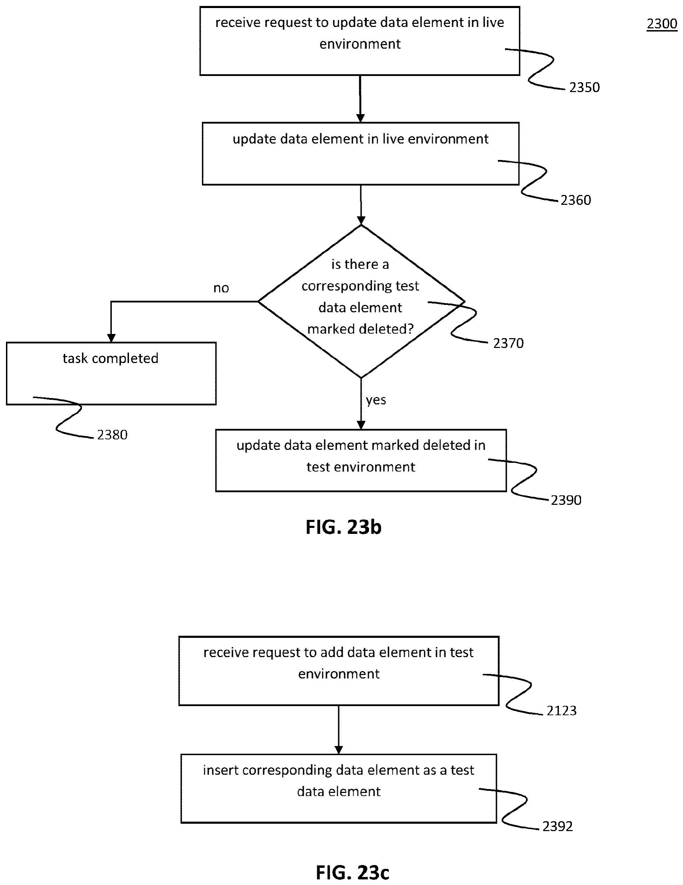

FIG. 23b is a flowchart illustrating another Method 2300 for updating data elements in Deployment Environment 1510, according to some embodiments of the present disclosure. The method makes sure Live Data 1610 is available real-time to Developer/Designer 1540 testing a website using Test Environment 1520.

In Step 2350, a request to update data element in Deployment Environment 1510 is received.

In Step 2360, a data element in Live Data 1610 is updated as per the request.

In Step 2370, a look up request to identify data element updated in Live Data 1610 in Step 2360 is made against Data Marked Deleted 1740. A corresponding data element found in Data Marked Deleted 1740 was either updated or deleted in Test Environment 1520.

If the answer in Step 2370 is no, the Method 2300 proceeds to step 2380 where task is regarded complete and Method 2300 exits.

If the answer in Step 2370 is yes, then Method 2300 proceeds to Step 2390. In Step 2390 the data element requested to be updated through Deployment Environment 1510 is updated in Data Marked Deleted 1740. This results in the data element being updated in Live Data 1610 being not included in the query results as discussed in Process 2500 below.

FIG. 23c is a flowchart illustrating another Method 2300 for adding data elements in test environment, according to some embodiments of the present disclosure. The Method 2300 in FIG. 23c defines a location to store new data requested to be added while testing a website.

As shown in FIG. 23c, in Step 2123 a received data request has been determined in Method 2100 to be a request to add a new data element not present in Live Data 1610 to Test Data 1620 while testing a website.

In Step 2392, Website Real-Time Testing System 1500 inserts the data element into Test Data 1620. In some embodiments, adding a data involves adding a database entry and marking in an additional column that it was added through Test Environment. The data element inserted into Data Marked Inserted 1730 of Test Data 1620 from Test Environment 1620 cannot be accessed in by requests in Deployment Environment 1610. For example, Developer/Designer 1540 may request to add Data Element 1731 through Website 123 results in Data Element 1731 being inserted into Data Marked Inserted 1730 of Test Data 1620.

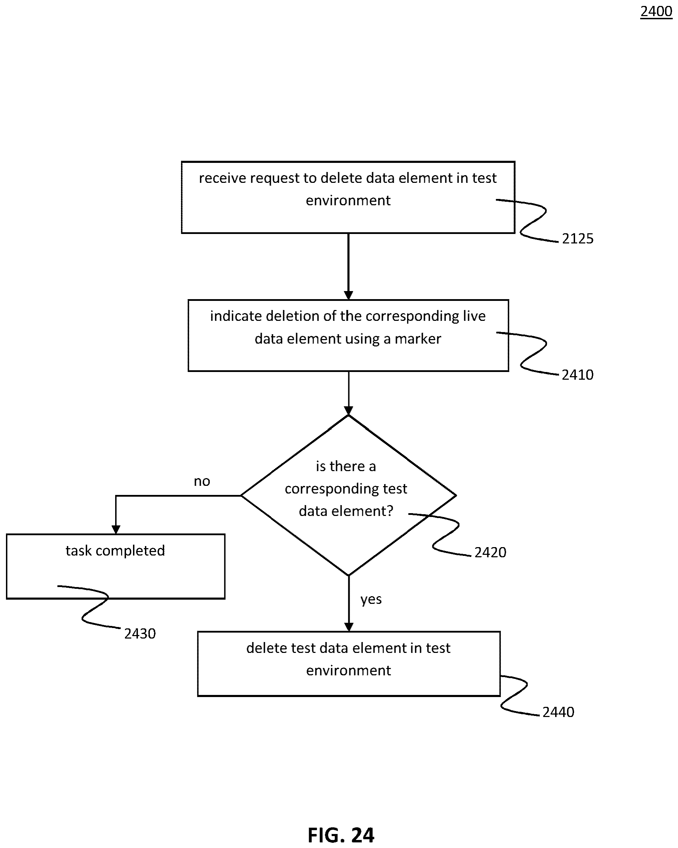

FIG. 24 is a flowchart illustrating a Method 2400 for deleting data elements from test environment, according to some embodiments of the present disclosure. As shown in FIG. 24, the data element requested to be deleted may be presented in Live Data 1610 or may have been previously added through Test Environment and is present in Data Marked Inserted 1730.

As shown in FIG. 24, in Step 2125, a received data request has been determined in Method 2100 to be a delete request for data element in Site Area Database 124 or Memory 820.

In Step 2410, Website Real-Time Testing System 1500 may insert the data element requested to be deleted to Data Marked Deleted 1740 of Test Data 1620. Any data element, whether it was added or updated in Test Environment, may be added to Data Marked Deleted 1740 as all data elements in Data Marked Deleted 1740 may be skipped when a request for data elements associated with a website being tested is made.

In Step 2420, a look up for the data element requested to be deleted is searched in Data Marked Inserted 1730 of Test Data 1620. Process 2300 is regarded complete if no such data element is found in Test Data 1620. For example, Developer/Designer 1540 testing Website 123 on Web Browser 141 makes a request to delete Data Element 1741 results in Data Element 1741 inserted into Data Marked Deleted 1740. Data Element 1741 is not present in Data Marked Inserted 1730 indicates no data needs to be removed and Process 2400 is regarded as complete. If the answer in Step 2420 is no, then Method 2400 has not found a Data Marked Inserted 1730 a data element requested to be deleted and Method 2400 proceeds to Step 2430 where the task is complete and Method 2400 exits.

If the answer in Step 2420 is yes, then Method 2400 found in Data Marked Inserted 1730 a data element requested to be deleted. In Step 2440, data element of Test Data 1620 is removed from Data Marked Inserted 1730.

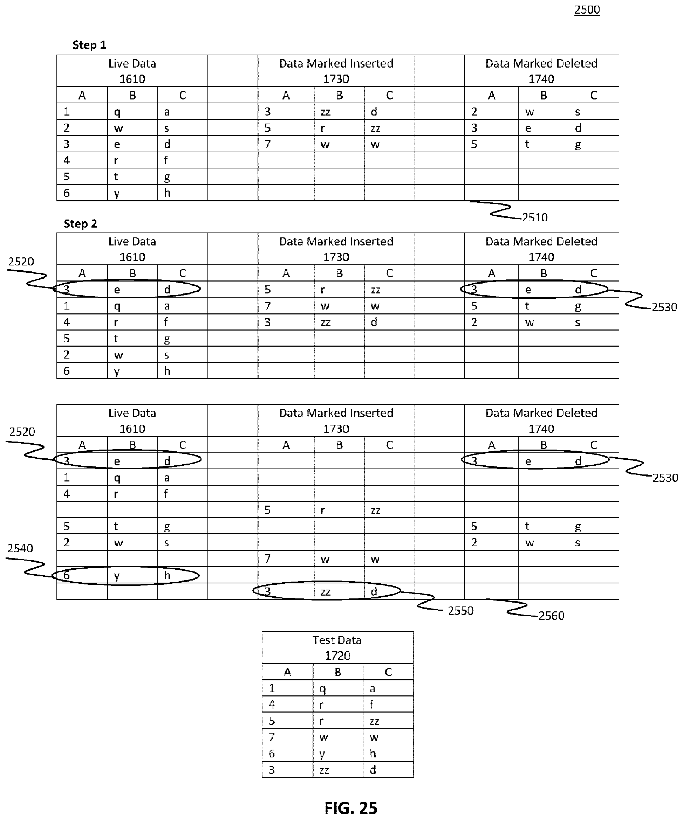

FIG. 25 illustrates an overlay process to generate the results of querying test data, according to some embodiments of the present disclosure. As shown in FIG. 25, Method 2500 is a four-step process which accesses concurrently Live Data 1610, Data Marked Inserted 1730, and Data Marked Deleted 1740 of Test Data 1620.

As shown in FIG. 25, in Step 1, data elements matching the query are accessed from Live Data 1610, Data Marked Inserted 1730, and Data Marked Deleted 1740. In some embodiments, data elements are accessed by executing a query in Site Area Database 124 against Live Data 1610, and Data Marked Inserted 1730 and Data Marked Deleted 1740 of Test Data 1620. In some embodiments, the results of the queries may be arranged as one Fused Table 2510.

Data elements are sorted as requested in the query. In some embodiments, the data elements are sorted by column "B" in the 2510 in descending order. In some embodiments, the order may involve more than one column. In some embodiments, when there is no order requested a random column is chosen and sorted in ascending or descending order. In some embodiments a primary key is added to the columns used in sorting.

In Step 2, the system traverses the data elements in Live Data 1610, Data Marked Inserted 1730, and Data Marked Deleted 1740 simultaneously to select the data elements to be included in Test Data 1620.

In order to determine the data elements to be included in Test 1720, a pointer is set at the first element of Live Data 1610, Data Marked Inserted 1730, and Data Marked Deleted 1740. In some embodiments, the pointer is placed at the lowest data element based on column "B." The current lowest record in Live Data 1610, Data Marked Inserted 1730, and Data Marked Deleted 1740 is compared to identify the lowest data element. The lowest may be found might be present in multiple locations. For example, Data Element 2520 and 2530 are the lowest data elements in Live Data 1610 and Data Marked Deleted 1740 and have same content.

Once the lowest data element is identified it is determined whether a data element is to be included in Test Data 1620 based on the following rules. If the data element exists in both Live Data 1610 and Data Marked Deleted 1740 then data element is skipped from being included in Test Data 1620. For example, Data Element 2520 and 2530 have the same content and exist in Live Data 1610 and Data Marked Deleted 1740 indicating the data element was requested to be deleted in Test Environment 1520 earlier while testing a website. It could have also been updated and Data Element 2560 was the resulting updated element.

If the data element exists only in Live Data 1610 then it is included in Test Data 1620. For example, Data Element 2540 is only present in Live Data 1610 indicating it was not altered or deleted in Test Environment when a testing a website which is associated with Data Element 2540.

If the data element exists only in Data Marked Inserted 1730 then it is included in Test Data 1620. For example, Data Element 2540 is only present in Data Marked Deleted 1740 indicating it was either inserted as a new data element or inserted as part of updating Data Element 2520 while testing a website.

Once a data element is included or skipped only those sources of data element which had the lowest data element have their pointers for moved to the next data element. In some embodiments, the pointers for Live Data 1610 and Data Marked Deleted 1740 are moved to the next record after the first iteration of traversal.

On reaching the last data element in all the three sources of data elements, Method 2500 terminates and Test Data 1620 is obtained. Fused Table 2560 indicates the lowest data elements identified in each iteration of Step 2 discussed above. Only those sources which had the lowest data element are shown filled and the rest are left empty. For example, in first iteration of Step 2, the lowest Data Elements 2520 and 2530 have same content are shown as part of their respective sources Live Data 1610, and Data Marked Deleted 1740 and Data Marked Deleted 1740 is left empty indicating it did not have the lowest data element. Similarly, in the last iteration only Data Marked Inserted 1730 has the lowest data element 2550 indicated in the last row of the Fused Table 2560.

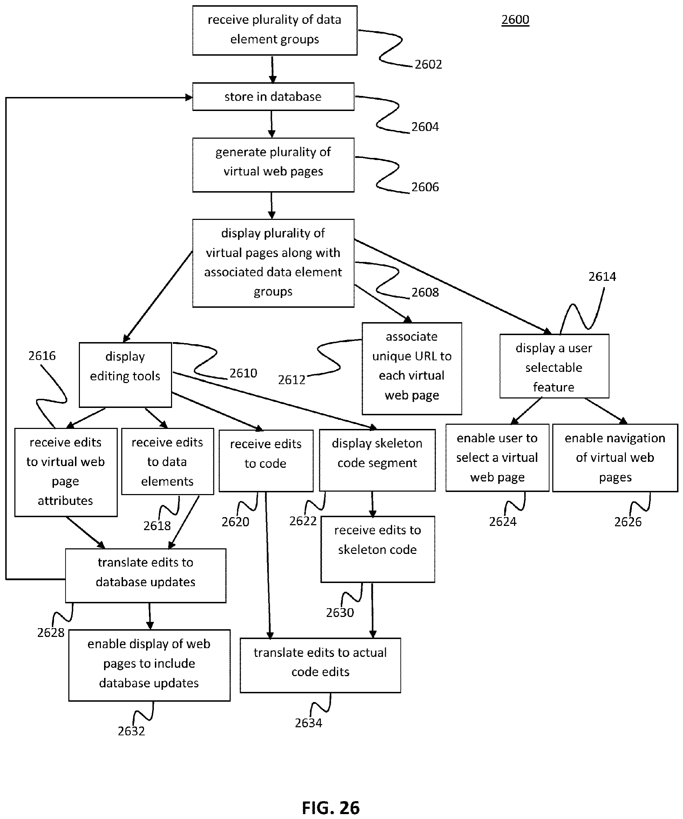

FIG. 26 depicts a flowchart showing steps of a Method 2600 for editing a database during website preview, according to some embodiments of the present disclosure. Method 2600 may be practiced in the system environments described throughout this disclosure, such as those of FIGS. 1, 2, 15, and others.

As shown in FIG. 26, Step 2602 may involve receiving one or more groups of data elements (e.g., from a user of a website building system). The data elements, as discussed above, may include a variety of different types of content, or records of content, that can be integrated into a website, such as text, images, videos, advertisements, database output displays, etc. In some embodiments, data elements may further include a set of data objects (e.g., two instances of text, and one image). Each group may have one or more data element. A group may thus define a related set of one or more elements. For example, a first website or page (e.g., an identifier of the webpage) may be associated with a group comprising only text, a second website or page may be associated with a group comprising of data elements (each of which comprising one text and three images), a third website or page may be associated with a group comprising of data elements comprising text and video, etc. Through a website editing interface, as discussed above, the user may identify what groups of data elements should appear on or be associated with individual webpages of a website, or with given virtual page templates.

Data groups may, in some embodiments, be site-level entities that can be used and re-used in multiple pages of a website, or may be owner-level entities that can be used and reused by a particular website owner. Further, data groups may also be system-level entities (e.g., a database of zip codes, geographical area descriptions, etc.) or page-level entities.

Method 2600 may also include a Step 2604 of storing the groups of one or more data elements in a Site Area Database 124, consistent with above embodiments. Examples of such databases are described above (e.g., in connection with FIGS. 1, 2, 15, and others). The databases may be configured to maintain each group, maintain associations between the groups and websites or pages, or virtual page templates, and store other content and information. As discussed further below, when a user makes edits to a virtual webpage during a preview mode, such edits may be translated into edits to the database in real-time, thus maintaining an up-to-date database for each webpage.

In addition, Method 2600 may include a Step 2606 of generating one or more virtual webpages. Each of the virtual webpages may represent data element (consisting of one or more objects) which may be displayed in preview mode (during development) before the actual website goes or its updated parts go live (i.e., becomes viewable through the Internet to other users). In order to subsequently publish a virtual web page collection in live mode, a user may select an option titled "Publish," "Post," or the like, which will make the website viewable through the Internet (as publishing is typically done at the site level and not for a single page). Once published, virtual pages (i.e. instances derived from the Web Page Template 2704) may behave similarly to ordinary (actual) pages, though they are dynamically generated. In some embodiments, each of the actual webpages is not designed with functionality for updating the database, while the virtual webpages may be designed with that functionality in place. As an example, a hotel rental website may maintain five different virtual page templates for five different types of rooms available in a particular hotel (such as single bed, double bed, etc.). Each of the virtual page templates may be associated with its own group of data elements (i.e. records for rooms of the given type), and each room would thus have a virtual webpage which may be displayable and editable during a preview mode as a virtual web page.

Further, Method 2600 may include a Step 2608 of displaying each group of at least one data element in a separate one of the virtual webpage sets. For example, in the above hypothetical of a hotel website, during the preview mode each of the five virtual webpages templates corresponding to different types of hotel rooms may have its associated groups of data elements (e.g., different text describing the rooms, images of the rooms, videos of the rooms, etc.). The generated virtual webpage sets (i.e. instances) may be displayed to the user via a browser or other client, as discussed above in connection with other techniques.

Method 2600 may also include a Step 2610, which involves displaying an editing tool to permit a user to edit one or more of the virtual webpage templates and instances. The templates may be edited as though they are regular pages. The instances may be editable in preview mode only, as they are may not be visible as part of the regular editor page browsing and editing process. In an alternative embodiment, the system may allow editing of instances as part of the regular site editing process. A variety of editing tools may be used, including rulers and grids (e.g., to align data elements), drag and drop selectors (e.g., for moving data elements with a cursor), hyperlink insertion and editing, integration of widgets or apps (e.g., from an app store), button insertion and editing, text creation and editing, image insertion and editing, video insertion and editing, slideshow creation and editing, cursor hovering functionality, background styles, repeaters (e.g., which create multiple versions of a particular data element or group), software-based routers (e.g., which create a different version of a webpage based on an element of the URL used to access it), and more. The system may display (and operate) different subset of the available editing tools for templates and for instances, and may also customize the displayed editing tool subset depending on the user, virtual page template, specific instance, underlying connected data group or element etc. As discussed further below, a user may make edits to the virtual webpage templates and instances through the editing tools, and the edits may be translated into edits to the database maintaining component information and/or content for the webpages.

Method 2600 may also include a Step 2612 of associating a unique URL to each virtual webpage. For example, a website may have a domain name (e.g., wix.com) and each page within the website may have a different suffix (e.g., wix.com/page1, wix.com/page2, wix.com/page3, etc.). Further, in some cases, URLs associated with virtual webpages may have different paths (referring to files or directories) or parameter values. In some embodiments, a software-based router may be configured for the website or for individual webpages. The software-based router may be configurable, for example, to associate particular URL prefixes, paths, segments or parameters with particular webpages. Each of the webpages may be configured to pull different data from the database storing data elements. In a JavaScript implementation, for example, an incoming request for a webpage may be associated with an object that includes information about the request (e.g., the URL, where it came from, who it came from, etc.). The software-based router can process this information and decide which (possibly virtual) webpage to show and what data elements to include in it.

In addition, Method 2600 may include a Step 2614 of displaying a user selectable feature (e.g., buttons, scroll bars, links, etc.) enabling the user to navigate through the virtual webpages to individually and dynamically display each of the virtual webpages. In the above example, therefore, the user selectable feature may allow the user to view each of the five webpage sets corresponding to different hotel room types. Each page may be dynamically selected and viewed as a virtual webpage.

Method 2600 may further include a Step 2616 of receiving edits to one or more virtual webpage attributes from a user. For example, using the editing tool described above, a user may change the background of a page, the layout or template of a page, the apps or widgets integrated into a page, the URL prefixes or suffixes associated with a page, repeater functionality within a page, software-based router functionality for a page, or perform various other types of edits. Changes made to the Web Page Template 2704 may be written directly to the template page definition in the Site Area Database 124. Changes made to virtual page instances may be stored in a separate database, which shall contain adaptations to virtual page instances. Under such a scheme, the adaptations shall be indexed with a unique index of the specific virtual page instance (e.g. in our hotel example, "Single bed room #1234"). The adaptation would be retrieved and re-applied whenever this virtual page instance is generated for display (e.g. during preview or during live display).

In some embodiments, users are permitted to edit virtual page instances but only in terms of their field information (e.g., text, graphics, videos, etc.). For example, in such embodiments, users may be prohibited from editing other elements (i.e., other than content) of a virtual page instance, including layout, attributes, etc.

Method 2600 may also include a Step 2618 of receiving edits to data elements themselves. Such edits may be made directly to a display of the data group (i.e., a display user interface elements which allow browsing and editing of the underlying data groups and elements). Alternatively, such editing may be performed though editing of field content in the generated virtual page instances related to the items. The system may enable such editing by adding (in preview mode) additional editing controls to the displayed virtual page instances (such as a "select alternative picture" button added to each displayed image originating from a data group). As discussed above, the data elements may be stored in a database. The edits may include editing text, replacing or modifying images, replacing or modifying videos, altering the functionality of hovering a cursor over an element, and various other types of edits.

In addition, Method 2600 may include a Step 2620 of receiving edits to code associated with one or more virtual webpages. Examples of the code may be the frontend code and backend code described above in connection with FIGs. 1-7. For example, the code may relate to collecting and storing data and content in a database, creating dynamic pages, implementing user-facing widgets and apps, repeating layouts of data elements, configuring software-based routers, and more. In some embodiments, in a Step 2622, skeleton code segments may be generated to facilitate user edits to code associated with webpages. For example, skeleton code may be high-level abstractions of functions associated with more granular source code, which can implement the various types of frontend and backend functionality described above for webpages. The skeleton code may be displayed to users through the editing interface and the users may make edits to it. User edits to skeleton code may then be translated into edits to the more granular actual code associated with individual webpages. As for edits to page attribute and page data/field content noted above, the system may support edits to the Web Page Template 2704 (which are stored in the Site Area Database 124, possibly subject to sandboxing of development changes before publishing) or to virtual page instances (which may be stored in the virtual page instance adaptations database). This is further detailed in the description of Steps 2630 and 2634 below.

In Method 2600, a Step 2624 may enable a user to select particular virtual webpages and a Step 2626 may enable a user to navigate through virtual webpages. For example, users may select pages individually by clicking on hyperlinks or other links associated with images or visual representations of the pages, or may navigate through pages visually (e.g., by a left/right or up/down toggle button, or through other selection visualizations).

According to Method 2600, any edits to virtual webpages (e.g., editing instances through Steps 2616 or 2618) may be translated into updates to the database maintaining the data elements for the webpages in a Step 2828. For example, if a user replaces an image on a virtual webpage with another image (e.g., user-uploaded image, etc.), the new image may be stored in the database. Further, if the user replaces text on the virtual webpage (e.g., the description of a specific hotel room), the updated text may also be stored in the database. In some embodiments, the updates to the database may be performed automatically based on the user's edits to the virtual webpage. Because the database is used to build the virtual webpages and is associated with the contents of the virtual webpages, edits to the virtual webpages may be associated back to the database used to build them. In some embodiments, multiple versions of the database are stored, at least temporarily, so that users can perform undo or revert operations if they want to negate a change to a virtual webpage they have made and return to an earlier version. For example, users may select an undo or revert option, or may be presented with timestamps or version identifiers associated with prior versions of a virtual webpage to which they can return and resume their editing. Such versioning system may also support making change to development database version which are not part of the published version until a publish operation is performed. This is also known as "sandboxing" of the development database.

Method 2600 may also include a Step 2630, where any edits to skeleton code made by the user are received. Further, in a Step 2634, any edits to the actual code (e.g., through Step 2620) or the skeleton code (e.g., through Step 2630 may be translated into edits to actual code for the webpage. As described above, for example, users may make edits to actual or skeleton code associated with various backend or frontend functionalities of virtual webpages. Such edits to the code may be stored in the same database hosting the data elements for a virtual webpage or a separate code database.

Further, in a Step 2632, Method 2600 may include enabling, during a live view of an actual webpage associated with a virtual webpage, a display of the webpages with the updates made to the virtual webpage during the preview mode - including both regular webpages and virtual webpage instances. As discussed above, for example, users may be able to edit numerous features of a virtual webpage during preview mode (e.g., page structure, data elements, frontend code, backend code, etc.) for both templates and instances. Such edits may be translated into corresponding updates to page definitions or data element changes, which may be stored in the Site Area Database 124 and/or in separate databases (e.g., a data element database, an instance adaptation database, and/or a separate code database on which the virtual webpage is based). Such separate databases may also be hosted by WBS 100, for example, as part of Memory 820 or Persistent Storage 830. Further, such edits may be translated into corresponding updates for the actual, live webpage as well. In various embodiments, virtual webpages and actual webpages may be based on the same database(s) or different (e.g., linked) database(s). It should be noted that these databases (e.g., Site Area Database 124 and other databases, such as a data element database, instance adaptation database, or separate frontend/backend code database) may be implemented as a single database, a set of databases, or a combination of databases (each of which may support a subset of the required functions).

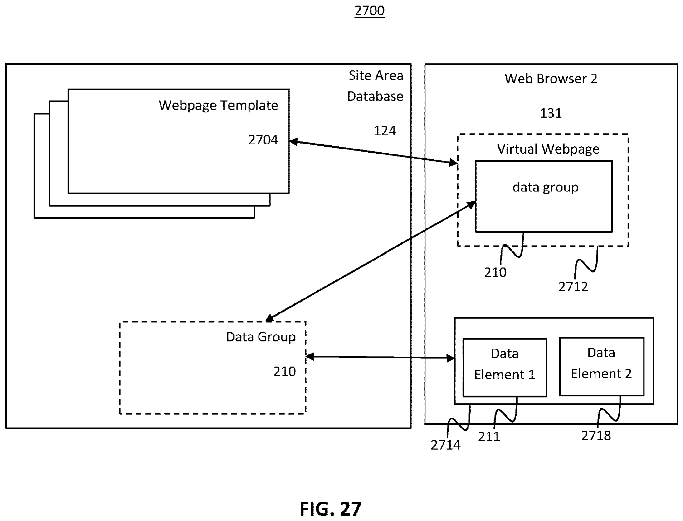

FIG. 27 is a system 2700 for the development and preview of web pages, according to some embodiments of the present disclosure. As discussed above, system 2700 may be similar to, or operate within, the systems discussed in connection with FIGS. 1, 2, 15, and others. In some embodiments, system 2700 may include a Site Area Database 124, which stores data elements and/or code for one or more webpage 2704. As shown, numerous webpages 2704 may be maintained, each of which may have its own corresponding data elements. As discussed above, the data elements may be organized into Data Group 210 of one or more data elements. As noted above, such data group 2710 may be system-wide, site-group specific, site-specific or page-specific (typically for a given Web Page Template 2704).

As shown in FIG. 27, Site Area Database 124 may communicate over a network with a Web Browser 131 or other client application, which may be operated by a user. The Web Browser 131 may display a Virtual Webpage 2712 corresponding to each Webpage Template 2704 in Site Area Database 124 using data elements in Data Group 210. Further, each virtual webpage 2712 may be associated with a Data Element 211. Further, users may have a display of data elements individually (e.g., Data Element 1 211 and Data Element 2 2718) as part of data element group 2714. As discussed above, users may interact with the displayed virtual webpage 2712, including its elements 2710, 2714, 211, 2718, to edit the various features of Virtual Webpage 2712. The edits may involve specific data elements, page structure features, frontend code, backend code, and more. As discussed above, such edits may be received by Site Area Database 124 and/or other databases.

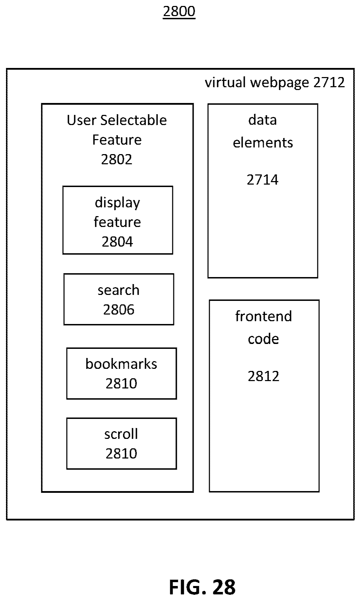

FIG. 28 is a block diagram 2800 of virtual web page, according to some embodiments of the present disclosure. Consistent with the above examples, virtual webpage 2712 may include various User Selectable Features 2802, including a display feature 2804, search element 2806, bookmarks 2810, scroll feature 2810, and other features. Virtual webpage 2712 may further include data elements 2714 and frontend code 2812, as discussed above. Further, virtual webpage 2712 may be associated with backend code (not shown), such as dynamic webpage code. Users may view, interact with, and make edits to virtual webpage 2712 as discussed above. Such edits may be received by one or more components of the website building system, such as Site Area Database 124. Through the display of virtual webpage 2712, users may visualize the edits they are making before a corresponding webpage goes live. To publish the virtual webpage 2712 in a live mode, a user may select a "publish" or "render" link, as discussed above.

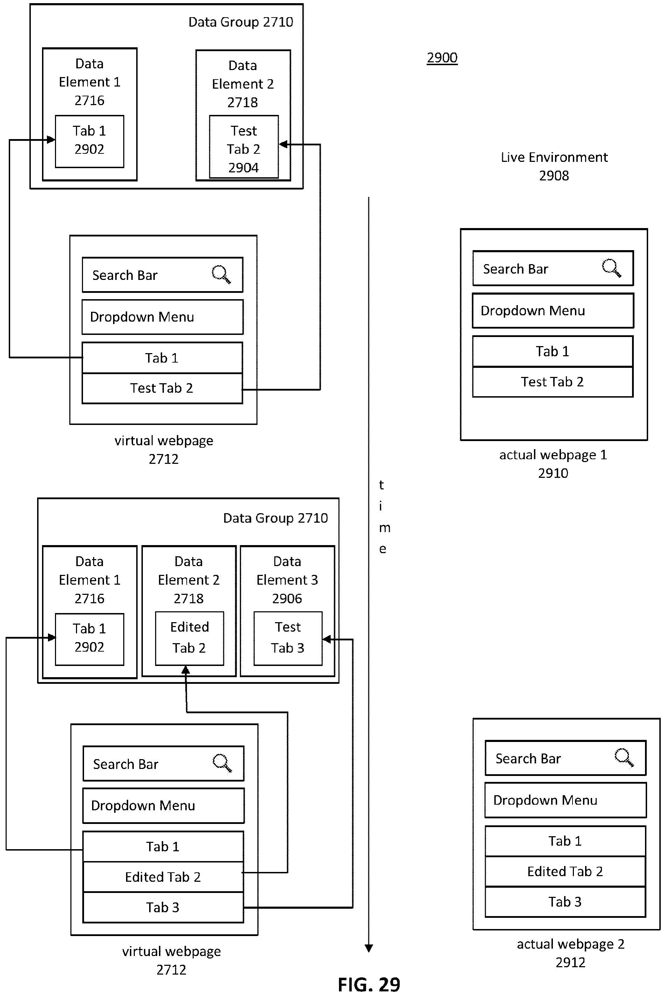

FIG. 29 is a timeline display 2900 of dynamic refresh of webpages, according to some embodiments of the present disclosure. In particular, as a user makes edits to a virtual webpage 2712, the edits may be refreshed in Site Area Database 124 and thus also in the user's browser. As shown in FIG. 29, data group 2710 may include Data Element 1 211 and Data Element 2 2718, among other data elements. Within Data Element 1 211, a Tab 1 2902 may be displayed and within Data Element 2 2718, a Test Tab 2 2904 may be displayed. Tab 1 2902 and Test Tab 2 2904 may be displayed on virtual webpage 2712, as shown, along with other elements (e.g., a search bar, dropdown menu, etc.).

As time progresses in timeline display 2900, the user may make edits to the virtual webpage 2712. For example, as shown, the user may make edits to Test Tab 2 2904, resulting in Edited Tab 2. Further, a new Data Element 3 2906 may be added to virtual webpage 2712, as part of data group 2710. As the edits to the virtual webpage 2712 are made, corresponding edits may be made in a Live Environment 2908. For example, upon the user selecting a "publish" or "render" function, Live Environment 2908 may be updated to display the updates to data group 2710 and other aspects of virtual webpage 2712. For example, a first version of the actual webpage 2910 may not include the Edited Tab 2 or Tab 3, while the subsequent version of the actual webpage 2912 may include those updates. In various embodiments, updates to the virtual webpage 2712 may be made automatically or upon the user selecting a refresh or update function. Further, updates to the actual webpage 2910 and 2912 in Live Environment 2908 may be made upon the user confirming a transition to the Live Environment 2908 (e.g., selecting a "publish" or "render" link).

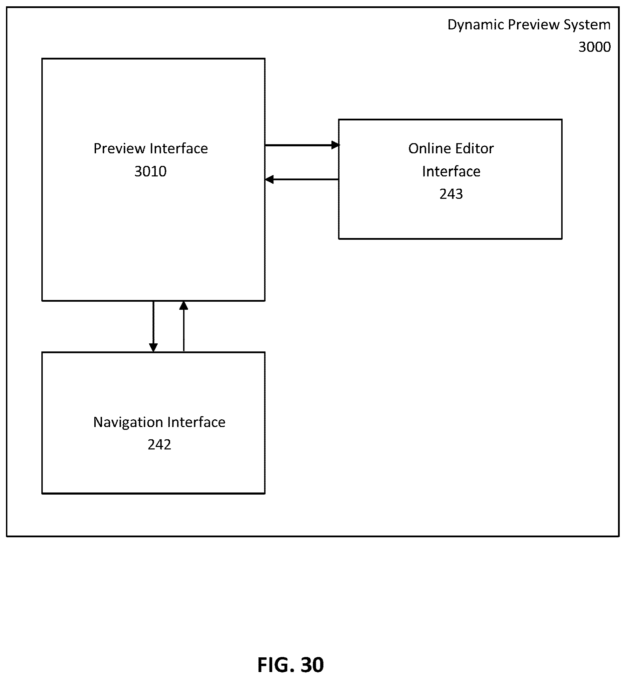

FIG. 30 depicts a block diagram of a Dynamic Preview System 3000, according to some embodiments of the present disclosure. As shown in FIG. 30, Dynamic Preview System 3000 helps display web pages as they would appear, for example, in Deployment Environment 1510. Preview Interface 3010 may be a frame or other graphical interface within Online Editor Interface 243 displaying a web page. In some embodiments, Preview Interface 3010 may be a separate tab opened on the web browser being used to show Online Editor Interface 243.

Preview Interface 3010 may be used to display both static web pages and virtual web pages (i.e. instances of a given Webpage Template 2704). Virtual web pages generated for viewing in the Preview Interface 3010 may be accompanied by a Navigation Interface 242. Preview Interface 3010 may allow Navigation Interface 242 to include scrollable features to allow users to scroll across multiple virtual web pages generated for display in Preview Interface 3010. Navigation Interface 242 may allow both sequential navigation and direct access to specific virtual web pages, as well as navigation between virtual pages via searching (e.g. using values of the key data item used to identify specific virtual pages). Navigation Interface 242 may have direct access to specific virtual web pages and may support bookmarked virtual web pages to selectively browse. For example, the virtual web pages being displayed in Preview Interface 3010 may be accompanied by a links to first, last, previous or next virtual web pages. The WBS 100 may also support other arrangements of the virtual pages - not just a linear one. For example, the WBS 100 may support a hierarchical arrangement of virtual pages, which may be navigated using additional options such as "go to higher tree level" or "expand level below current page".

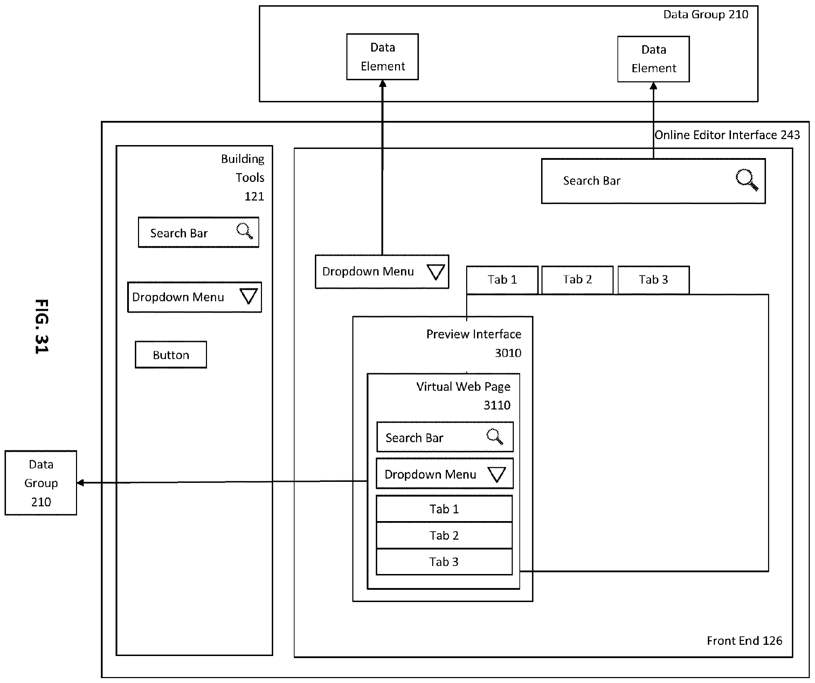

FIG. 31 illustrates a preview of a Virtual Web Page 3110 being edited, according to some embodiments of the present disclosure. As shown in FIG. 31, Front End 126 is associated with Data Group 210. Building Tools 121 included in Front End 126 may be associated with specific data elements of Data Group 210. Virtual Web Page 3110 may display Indexable Web Page 125, including Front End 126, and can be previewed in Preview Interface 3010. In some embodiments, Preview Interface 3010 may be a frame or other graphical representation within the Online Editor Interface 243. Preview Interface 3010 may allow Virtual Web Page 3110 to be previewed as it would appear on different mobile and desktop devices, using different languages, adapted for accessibility requirements or otherwise modified for specific audiences.

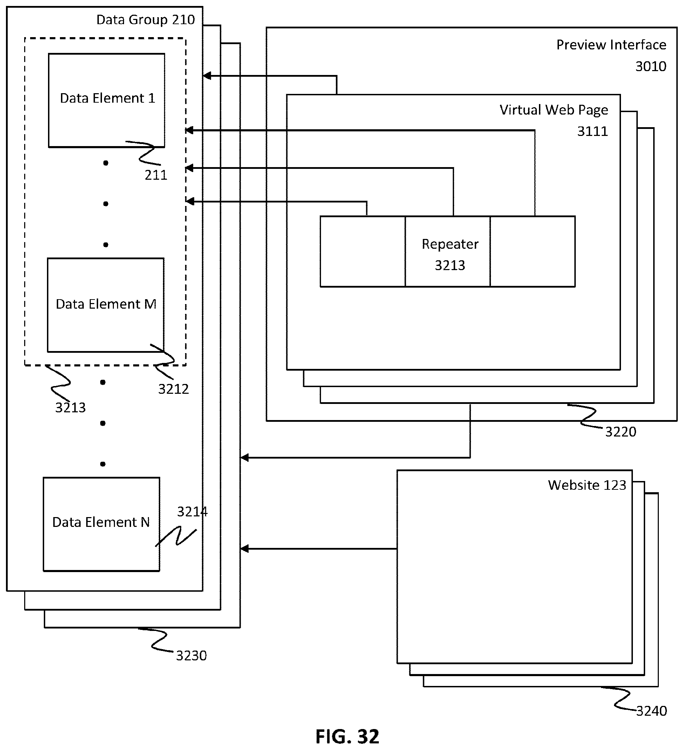

FIG. 32 is a schematic diagram depicting relations between data groups and websites, according to some embodiments of the present disclosure. As shown in FIG. 32, a group of Virtual Web Pages 3220 of a website may be associated with a same Data Group 210. In some embodiments, group of Virtual Web Pages 3220 may be associated with a set of Data Groups 3230. In some embodiments, a group of Websites 3240 may share the same set of Data Groups 3230. A group of Websites 3240 sharing set of Data Groups 3230 may have a same owner or operator, or may have otherwise been granted appropriate permissions (though an access control mechanism) to access specific Data Groups 210. In some embodiments, a group of Websites 3240 sharing a set of Data Groups 3230 may have been built by same Developer/Designer 1540, as discussed above.

As illustrated in FIG. 32, a Repeater 3213 is a building tool visible on front end of a web page displaying different content items or groupings in different sections with a repeated design or layout. In some embodiments, Repeater 3213 may be part of a Virtual Web Page 3111 generated using a software-based router, as discussed further herein or a part of a regular (static) Indexable Web Page 125. Repeater 3213 displays different content based on Data Element 1 211 and Data Element M 3212 of Data Group 210. Repeater may be associated directly with a Data Group subset 3213 of Data Group 210. For example, a repeater may be used to create five different groupings of text and images. Each grouping may automatically position the text and images with the same proportions and layout. Nevertheless, in some embodiments, the actual content of the text and images may be different in each grouping.

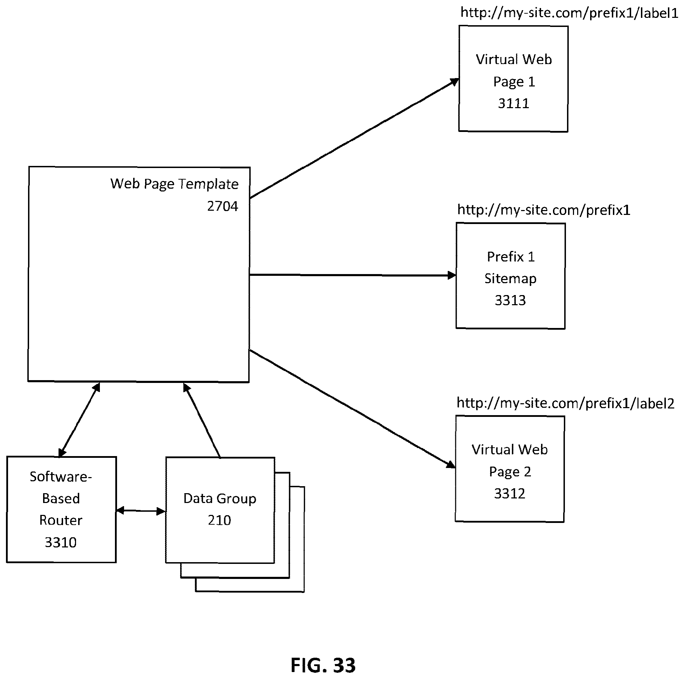

FIG. 33 is a schematic diagram depicting components involved in the generation of virtual web pages, according to some embodiments of the current disclosure. As shown in FIG. 33, Web Page Template 2704, similar to indexable web pages, may be associated with Data Group 210 and other data groups. As discussed above, Software-Based Router 3310 may be used to bind data elements in a Data Group 210 and may be applied to Web Page Template 2704 to generate Virtual Web Pages 3111, 3313, and 3312. Software-Based Router 3310 may select/ filter/ sort data elements in Data Group 210 to apply to Web Page Template 2704 and to virtual web page groups based on the URL sent by a user. Software-Based Router 3310 identifies Web Page Template 2704 based on a URL prefix. Software-Based Router 3310 may identify data elements in Data Group 210 to be applied to Web Page Template 2704 to generate virtual web pages based on URL elements (e.g., suffix components, text segments or parameter values) following the URL prefix. In some embodiments, the URL prefix "prefix1" identifies Software-Based Router 3310 for Web Page Template 2704. Software-Based Router 3310 may generate Virtual Web Page 3111 and 3312 based on suffix value "label1" and "label2" respectively. Software-Based Router 3310 may generate a sitemap Prefix 1 Sitemap 3313 listing possible URLs of all the virtual web pages that can be generated using Web Page Template 2704 and associated Data Group 210, as well as other data groups. Prefix 1 Sitemap 3313 may aid in indexing Virtual Web Pages 3111 and 3312 by Search Engine 170.

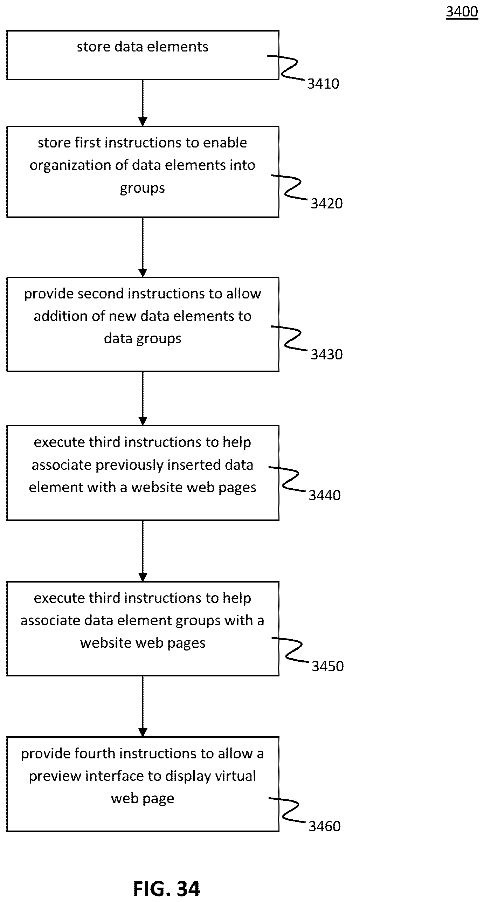

FIG. 34 is flowchart 3400 showing steps involved in the generation and preview of virtual web pages, according to some embodiments of the present disclosure. The flowchart 3400 represents steps that may be performed in the system embodiments described above.

As shown in FIG. 34, in Step 3410, a Dynamic Preview System 3000 may store data elements in Site Area Database 124. As discussed above, data elements may take a variety of different forms, such as text, images, videos, backgrounds, as well as records consisting of a combination of any of these object types.

In Step 3420, Dynamic Preview System 3000 may store instructions enabling organization of the stored data elements into data groups. For example, groups may be defined in databases. Further, groups may be defined by the relationships between elements in the group, or by fields in data elements whose values rely on other fields. Consistent with above embodiments, data groups may be defined before any visual elements, fields, or specific webpages are defined.

In Step 3430, Dynamic Preview System 3000 may provide further instructions to the web browser displaying the Online Editor Interface 243 to allow addition of additional data elements to previously created data groups in Site Area Database 124. In this manner, existing groups may be supplemented or edited to contain different or additional elements. A user can repeat Step 3420 and can come back at anytime to further add data elements. Similarly, this step may include instructions for performing additional operations on data elements, such as deletion and update. For example, a user can cycle between Steps 3410, 3420, and 3430, or proceed to Step 3430.

In Step 3440, Dynamic Preview System 3000 may execute instructions to aid in associating previously inserted data elements of data groups stored in Site Area Database 124 to the website being edited in Online Editor Interface 243. A user can repeat Step 3420 and can come back at anytime to further create associations between web pages of the website being built and data elements organized as data groups stored in Site Area Database 124.

In Step 3450, Dynamic Preview System 3000 provides instructions to help associate data element groups with a website's web pages. This may involve, as discussed above, linking fields in a form with each other to both activate/de-activate and filter potential values allowed for a field (e.g., a form to fill address may list in city field values depending on selection in the state field).

In Step 3460, Dynamic Preview System 3000 provides instructions to Online Editor Interface 3000 to allow preview of web pages of a website being built in Online Editor Interface 243. The previews may allow for user editing in real-time, as discussed above.

A user can repeat Steps 3430, 3440, 3450, 3460 any number of times and repeat them in any order.

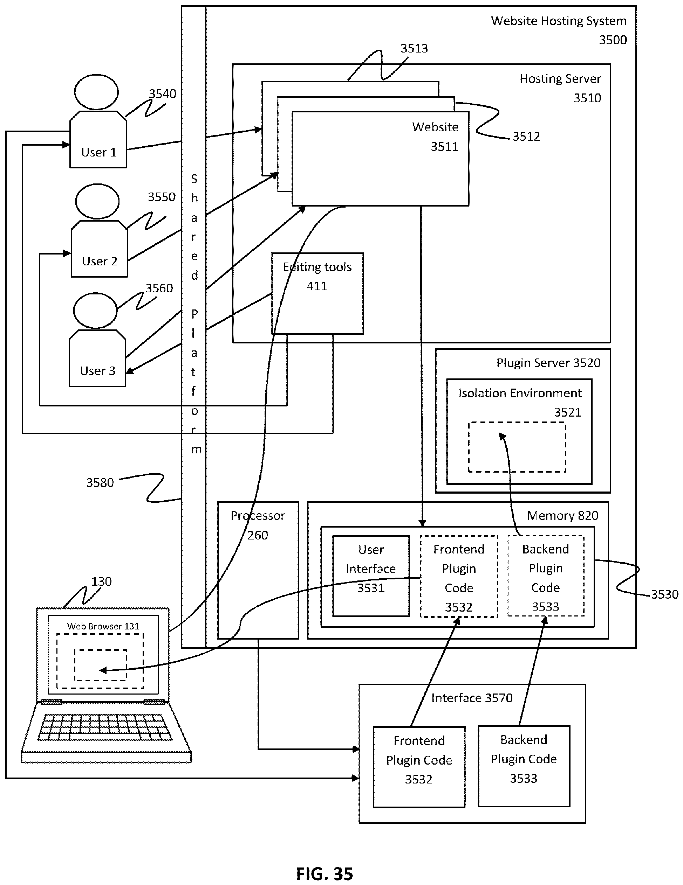

FIG. 35 is a schematic diagram of users interacting with a Website Hosting System 3500, according to some embodiments of the present disclosure. As shown in FIG. 35, Website Hosting System 3500 includes Hosting Server 3510, which includes one or more systems to build and view websites, Plugin Server 3520 executing plugin code, Processor 260, Memory 820 storing plugin components and code, an Interface 3570 to develop, and upload plugin code and other components.

Hosting Server 3510 may be one or more servers hosting co-hosted websites 3511, 3512, and 3513. Hosting Server 3510 may be a webserver execution instance in On-Demand System 800, for example, or in another type of website hosting system. In some embodiments, Hosting Server 3510 may be multiple web server execution instances in On-Demand System 800. Hosting Server 3510 may also be WBS 100 which is storing websites edited and accessed by Developer/Designer 1540 and End User 1530, as discussed above.

Editing Tools 411, as discussed above, are common tools to edit a website shared by websites hosted by Hosting Server 3510. In some embodiments, Editing Tools 411 may be shared across multiple Hosting Servers 3510 hosting co-hosted Websites 3511-3513.

Plugin Server 3520 may be one or more servers executing plugin code in an Isolation Environment 3521. In some embodiments Plugin Server 3520 uses the same infrastructure as hosting server 3510 (which may be physical servers or webserver execution instance as noted above). Plugin 3530 is present in memory 820 and is viewable or accessible through a User Interface 3531, Frontend Plugin Code 3532, and Backend Plugin Code 3533.

Users 3540-3560 may access Editing Tools 411 from Hosting Server 3510 to edit the Websites 3511-3513 respectively. In some embodiments, for example, Website 3511 being edited by User 3540 may include a Plugin 3530. For example, Website 3511 may play video through a video player Plugin 3530 when Website 3511 is accessed using Web Browser 131 on Web Viewing Device 130. User 3540 altering Website 3511 may include editing and uploading plugin code via Interface 3570. In some embodiments, Interface 3570 may be part of Editing Tools 411.

Users 3540-3560 interact with Websites 3511-13 on Hosting Server 3510 via shared platform 3580. Shared Platform 3580 allows groups of users edit groups of websites. Shared Platform 3580 may be software configured for determining which groups of Users 3540-3560 have access to edit which Websites 3511-13. In some embodiments, Hosting Server 3510 hosting multiple Websites 3511-13 might itself act as a Shared Platform 3580.

End User 1530 viewing Website 3511 using Web Browser 131 on Web Viewing Device 130 may include User Interface 3531 of Plugin 3530. For example, Plugin 3530 may be a video player and User Interface 3531 may include play back control buttons stylized for video player Plugin 3530. Frontend Plugin Code 3532 may also be passed along through User Interface 3531 when End User 3540 accesses a website. End User 1530 interacting with User Interface 3531 of Plugin 3530 may result in Frontend Plugin Code 3532 of Plugin 3530 executing in Web Browser 131. In some embodiments, End User 1530's interaction with Website 3511 may also result in Backend Plugin Code 3533 executing in Plugin Server 3520. For Example, End User 3540 clicking on play back controls of a video player plugin may result in Frontend Plugin Code 3532 executing and making a request to stream the video, and further Backend Plugin Code 3533 may compress the video based on network bandwidth availability.

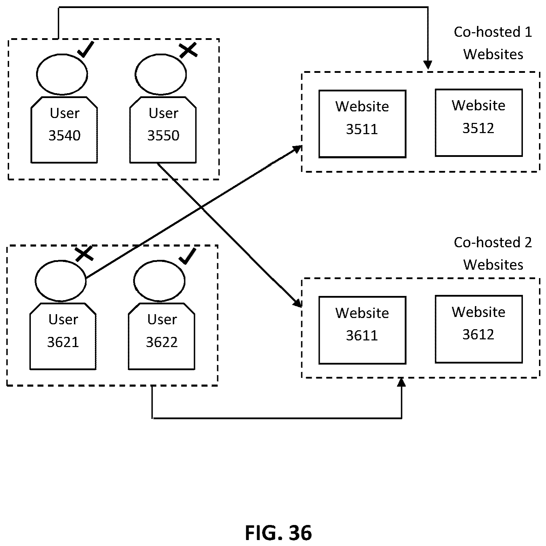

FIG. 36 depicts a technique of controlled access to co-hosted websites, according to some embodiments of the present disclosure. As shown in FIG. 36, Users 3540, 3550 are grouped together and are allowed access to Co-Hosted 1 Websites 3511 and 3512. User 3621 and 3622 may have access to Co-Hosted 2 Websites 3611 and 3612. Users may access one or more Co-Hosted websites but are not allowed to access websites they are not part of the allowed group. Users may have their access rights defined, for example, based on whether they are the owner of particular websites, are registered users, have been authenticated, etc.

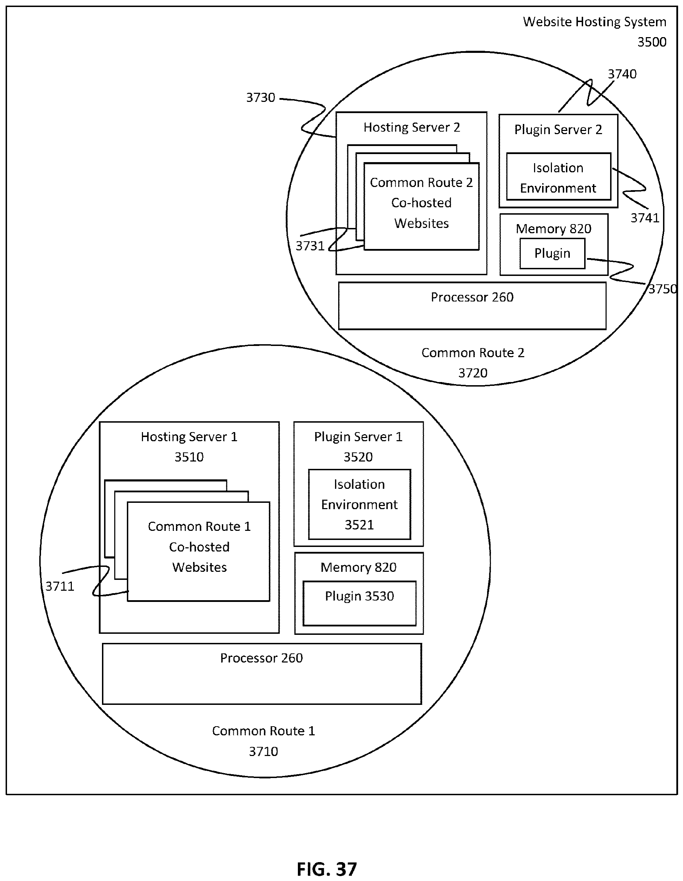

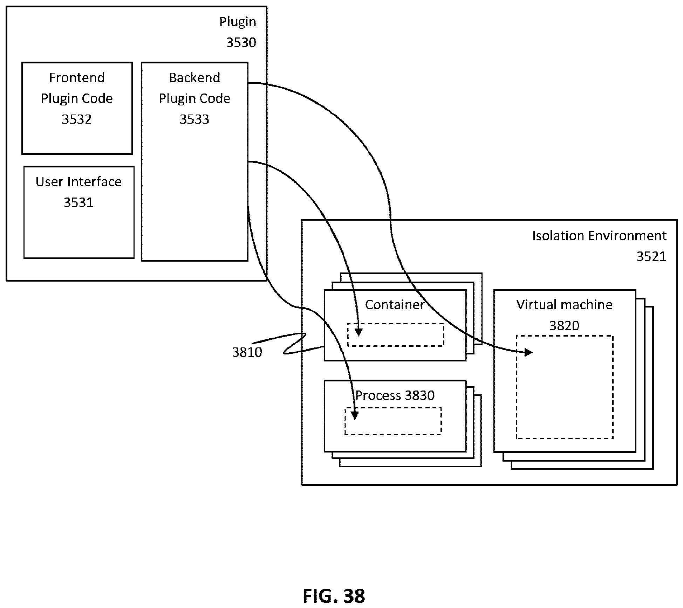

FIG. 37 depicts co-hosted website groups sharing plugin code under common routes, according to some embodiments of the present disclosure. As shown in FIG. 37, Web Hosting System 3500 has two sets of co-hosted websites, each set differing from the other by a URL route. For example, Common Route 1 Co-Hosted Websites 3711 may share domain www.a.com and Common Route 2 Co-hosted Websites 3731 may share domain www.b.com. Alternatively, Common Route 1 Co-Hosted Websites 3711 may have a common subdomain a.wixsite.com and Common Route 2 Co-Hosted Websites 3731 may have a common subdomain b.wixsite.com. Websites with common routes may be co-hosted on a hosting server or environment to create an isolation environment and eliminate interaction with other sets of co-hosted websites. Co-hosted websites may also have different plugin servers to create isolated environments for the plugin code to execute. Common Route 1 Co-Hosted Websites 3711 and Common Route 2 Co-Hosted Websites 3731 may still share the same Processor 260 and Memory 820 or have different processors and memory. FIG. 38 depicts isolated execution environments of Backend Plugin Code 3533, according to some embodiments of the present disclosure. As shown in FIG. 38, Backend Plugin Code 3533 of Plugin 3530 Isolation Environment may be based on a Container (e.g., Docker) 3810 or Virtual Machine 3820 or Operating System Process 3830. In some embodiments, Isolation Environment 3521 may include one or more Container 3810, Virtual Machine 3820, and Operating System Process 3830 (e.g., serverless code), each running separate Plugin Backend Code 3533. In some embodiments a plugin server hosting Plugin 3530 may include multiple isolation environments.

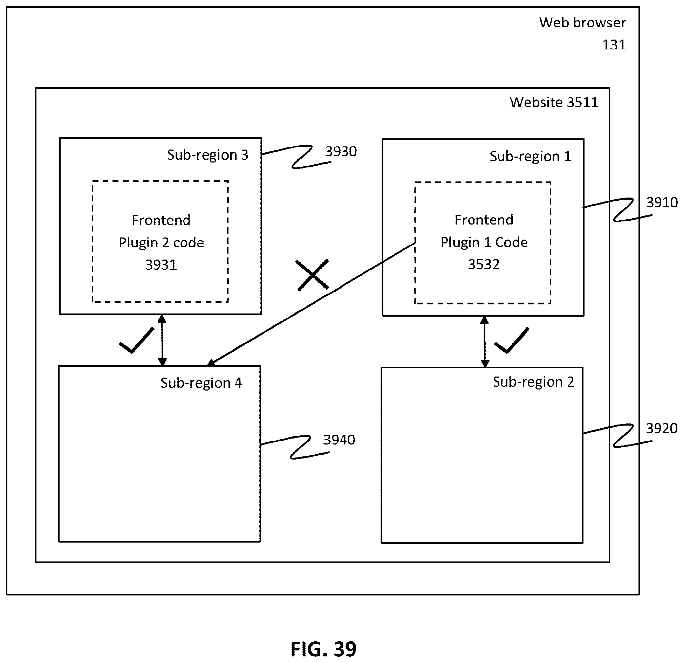

FIG. 39 depicts a controlled access and execution of Frontend Plugin Code 3532, according to some embodiments of the present disclosure. As shown in FIG. 39, accessing Website 3511 may result in access to Frontend Plugin 1 Code 3532 of Plugin 3530 and Frontend Plugin 2 Code 3931 of another plugin. Website 3511 may make sure to run each of the plugins in separate Sub-Regions 3910 and 3930 respectively. Website Hosting System 3500 may also create a secure communication channel (e.g., SSL, secure tunnel, etc.) to allow only certain other sub-regions of the website to be accessible. The secure communication channel may restrict access of a Frontend plugin to other sub regions of the website. For example, Frontend Plugin 1 code 3532 executing in Sub-Region 3910 may communicate with another Sub-Region 3920 but may be denied access to Sub-Region 3940. The accessible sub-regions of a plugin may be listed in a tabular form, in a trusted registry, in a configuration file, or in a secure database. For example, in a cloud-computing based arrangement, a cloud orchestrator platform may maintain a list or mapping of virtual computing resources (e.g., Sub-Region 3910, Sub-Region 3920, Sub-Region 3940, etc.) and may define their connection permissions. Such a list or mapping may permit specific connections or actions by Sub-Region 3910, Sub-Region 3920, and Sub-Region 3940 and deny other connections or actions. In some embodiments, secure communication channel is provided by allowing all communications to pass through one or more hubs (e.g., a hub that performs authentication or authorization verifications). Such hubs may be, for example, resident on a system client, a system server or both. Secure communication can also be established by verifying the communication originating sub-region unique identifier. For example, a getId() method call may be used to identify the origin sub-region id of a communication message and determine if it is in the allowed list or mapping.

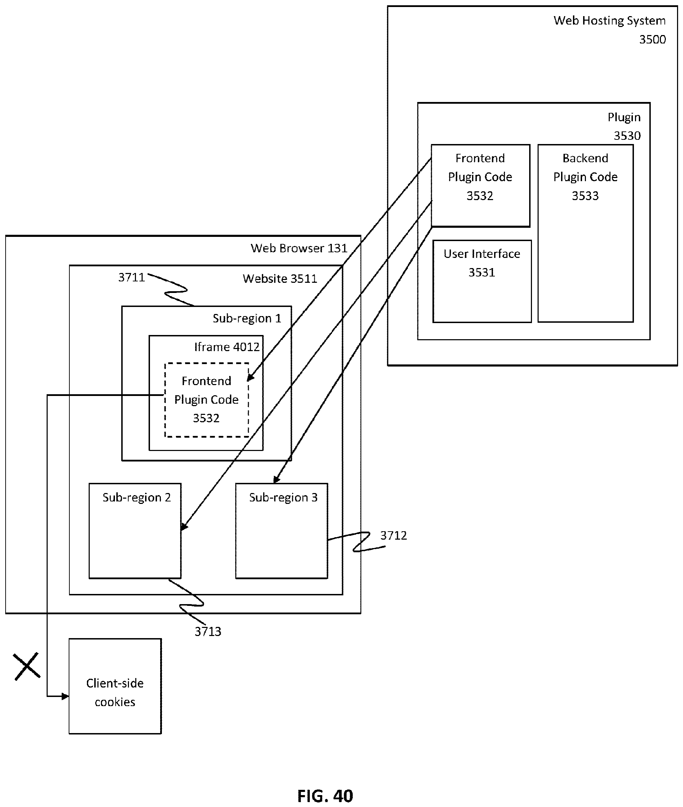

FIG. 40 depicts client-side isolated execution of plugin code, according to some embodiments of the present disclosure. As shown in FIG. 40, Website 3511 accessed using Web Browser 131 by an End User 1530 may result in access to Frontend Plugin Code 3532 of Plugin 3530. End User 1530 access may result in creation of an iframe for executing the Frontend Plugin Code 3532 in isolation. In some embodiments Frontend Plugin Code 3532 may be copied to different Sub-regions 3712-3713 of the Website 3511 for execution in isolation. For example, Website 3511 may show multiple Video Players each streaming different video streams but using the same plugin code. In some embodiments, Plugin Code 3532-3533 executing in an Iframe may not have access to client side cookies (e.g., HTTP cookies).

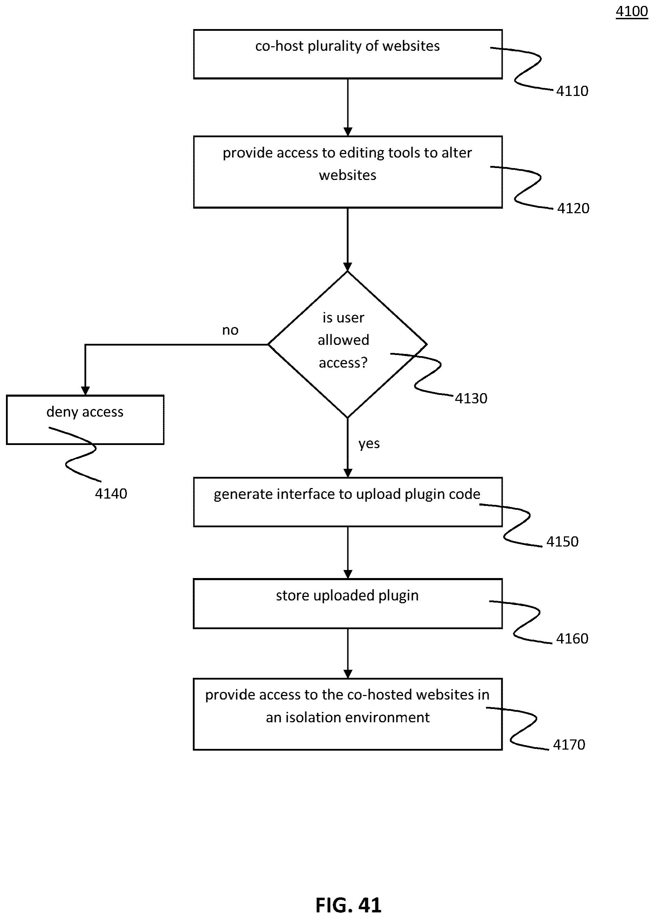

FIG. 41 is a flowchart showing steps involved in accessing and execution of website and plugin code, according to some embodiments of the present disclosure. As shown in FIG. 41, in step 4110, Website Hosting System 3500 hosts websites sharing one or more common data elements, templates, portions of code, routes, or other functionality in a common hosted server or set of servers. Servers may also be co-hosted on the basis of ownership or administrative and editing privileges for the plurality of users. For example, Website Hosting System 3500 may host websites created and managed by several independent and unaffiliated entities or individuals.

In Step 4120, Website Hosting System 3500 provides access to Editing Tools 411 to further edit the websites co-hosted by the system. As discussed above, Editing Tools 411 may allow the user to edit numerous aspects of the websites.

In step 4130, an effort by a user to access a website for editing purposes results in Web Hosting System 3500 evaluating if the user making the request has access or privileges to edit the website. The evaluation may depend on ownership of a certain website. In some embodiments, owner or administrator of a website may provide admin and/or edit access to other users using Editing Tools 411. Further, in some embodiments, editing rights may depend on whether the user is a registered user or has been authenticated to access Web Hosting System 3500.

If the answer to Step 4130 is no, the requested access to website is denied and the user may need to request editing privileges from the administrator of the website. The process 4100 is regarded complete on failure to gain access to edit the website. Alternatively, the process 4100 may cycle back to Step 4120 or 4130.

If the answer to Step 4130 is yes, the process 4110 proceeds to Step 4150. In Step 4150, an interface to upload plugin is presented to user requesting access to edit a website. The interface may be similar to those discussed above for users to edit frontend or backend code.

In Step 4160 Website Hosting System 3500 receives the plugin changes and stores them. A user-uploaded plugin may, for example, include edits to Backend Plugin Code 3533 of Plugin 3530. In some embodiments, user edits may include edits to Frontend Plugin Code 3532 of Plugin 3530. Alternatively, a user may also edit the User Interface 3531 of Plugin 3530. In some embodiments, a user may edit all of User Interface 3531, Frontend Plugin Code 3532, and Backend Plugin Code 3533.

A user editing plugin code (e.g., Frontend Plugin Code 3532 or Backend Plugin Code 3533) may edit plugin code over multiple sessions resulting repetition of Steps 4120 to 4160, as well as fewer or additional steps.

In Step 4170, Web Hosting System 3500 executes Plugin 3530 when Website 3511 is accessed by a user (e.g., End User 1530, 3540, 3550, 3560). Plugin code execution includes creation of an Isolation Environment 3521 to execute the code. Isolation Environment 3521 may include isolation on client side on a web browser and on the server side to execute Frontend 3532 and Backend 3533 Plugin Code 3530 respectively.

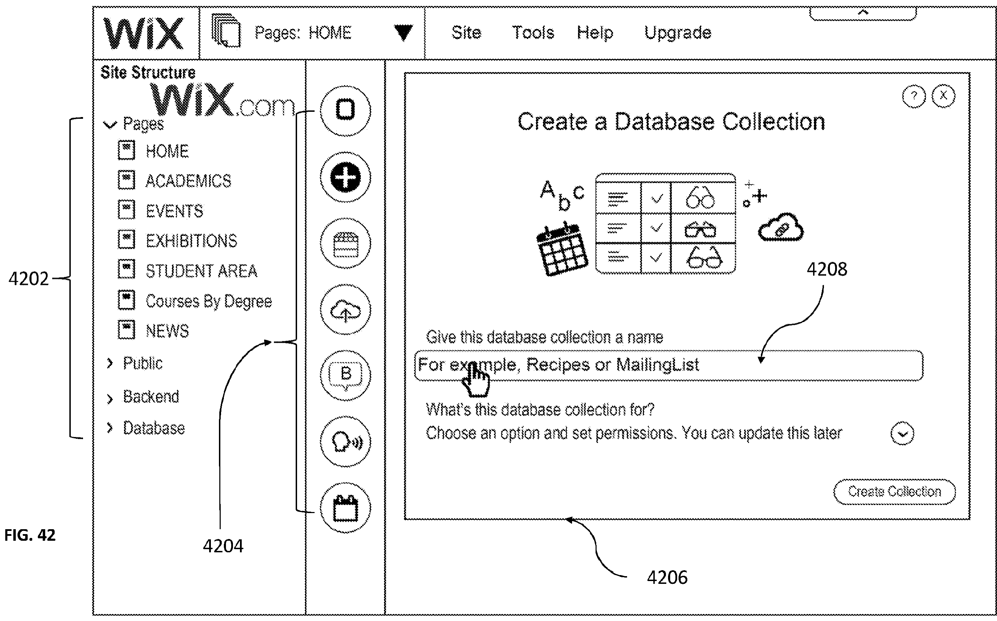

FIG. 42 is an example user interface for editing a webpage and creating a database collection, according to some embodiments of the present disclosure. For example, the webpage may be generated through a website development system, such as that provided by WIX.COM. As illustrated, a database may be created that supports one or more dynamic webpages.

A Site Structure sidebar 4202 may include various options for editing and configuring the website, such as a listing of different pages (e.g., HOME, ACADEMICS, EVENTS, EXHIBITIONS, STUDENT AREA, Courses by Degree, and NEWS), as well as options for Public features, Backend functionality, and Database functionality. Further, a toolbar 4204 may include various options for adding and editing content on the webpages.

As illustrated, interface 4206 allows a user to configure a database. The interface 4206 may be generated, for example, if a user selects the "Database" option from Site Structure sidebar 4202. The user may customize the database by giving it a unique name in field 4208. In this example, the database may be called the "courses" database.

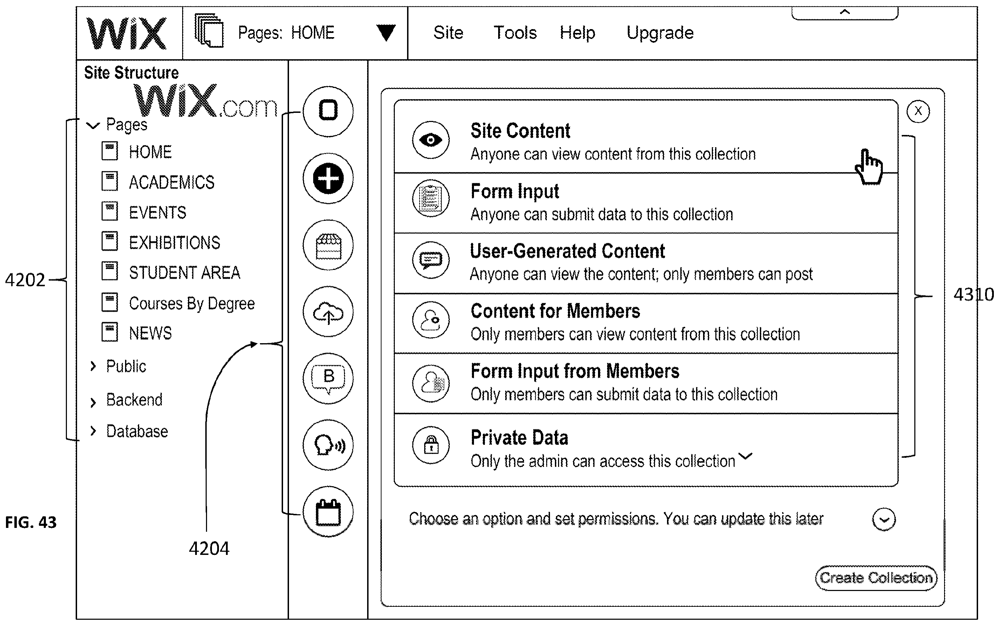

FIG. 43 is an example user interface for editing a webpage and configuring permissions for a database collection, according to some embodiments of the present disclosure. For example, continuing with the above example, a user creating a "courses" database may access various different permissions 4310 options for the database and the corresponding dynamic pages that may be based on it. Permissions 4310 may address the content of webpages, data input on forms, content generated by users of the page, content restricted to registered members, forms that only registered members may complete, and certain private data that only certain users (e.g., administrators) may access.

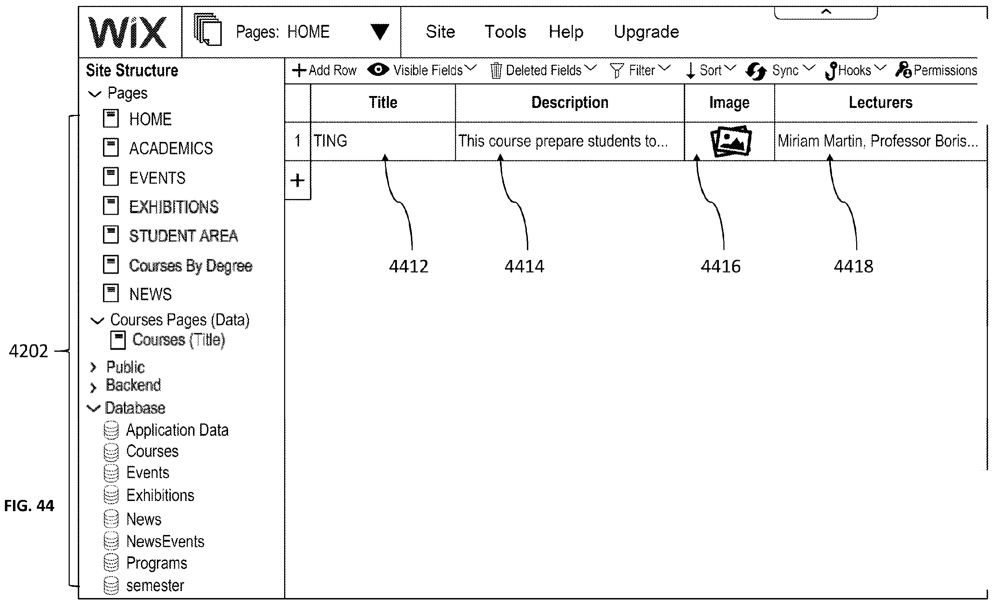

FIG. 44 is an example user interface for editing a webpage and entries in a database collection, according to some embodiments of the present disclosure. For example, the "courses" database may be comprised of fields 4412 (Title), 4414 (Description), 4416 (Image), 4418 (Lecturers), and others. These fields may include information on courses that can be extracted from the database and included in specific dynamic webpages. Notably, the fields may contain textual content (e.g., fields 4412, 4414, and 4418) as well as other content, such as images or videos (e.g., field 4316). As illustrated, field 4416 includes an image corresponding to the course tiled TING. In some embodiments, a user may further define the type or layout of each dynamic webpage and specify a URL for each dynamic page. For example, suffixes of the URL may correspond to columns in the database (e.g., Title).

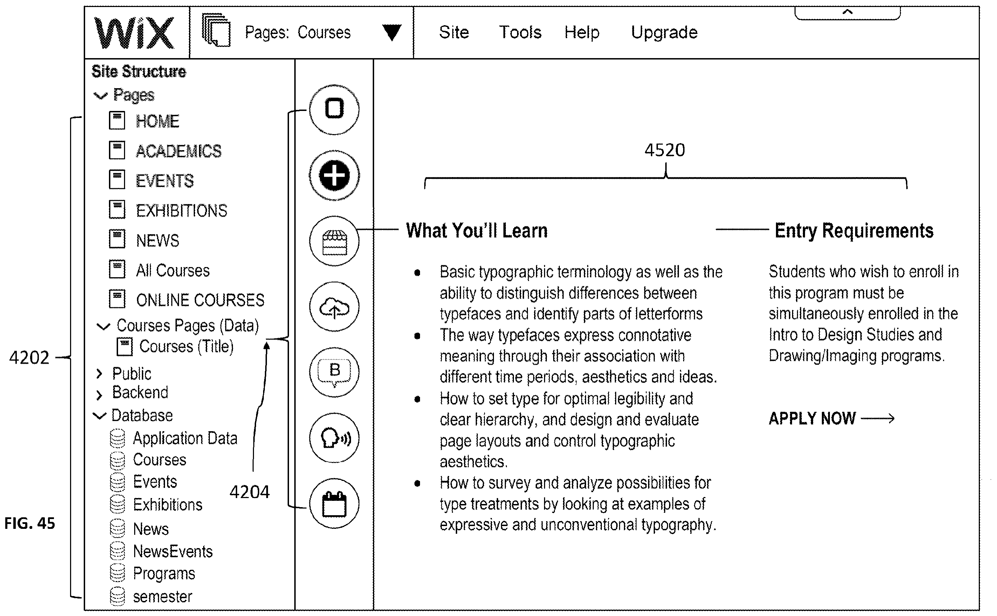

FIG. 45 is an example user interface for editing a webpage and displaying output from a database collection, according to some embodiments of the present disclosure. For example, in a dynamic webpage that has been created, content from the database may be included. As illustrated, content 4520 includes a description of a course from the database. The content 4520 is automatically extracted from the database without the user having to manually copy it into the webpage. Using this technique, numerous dynamic pages may be created, each linking to a different portion of the database and having a unique arrangement of content based on its linking to the database.

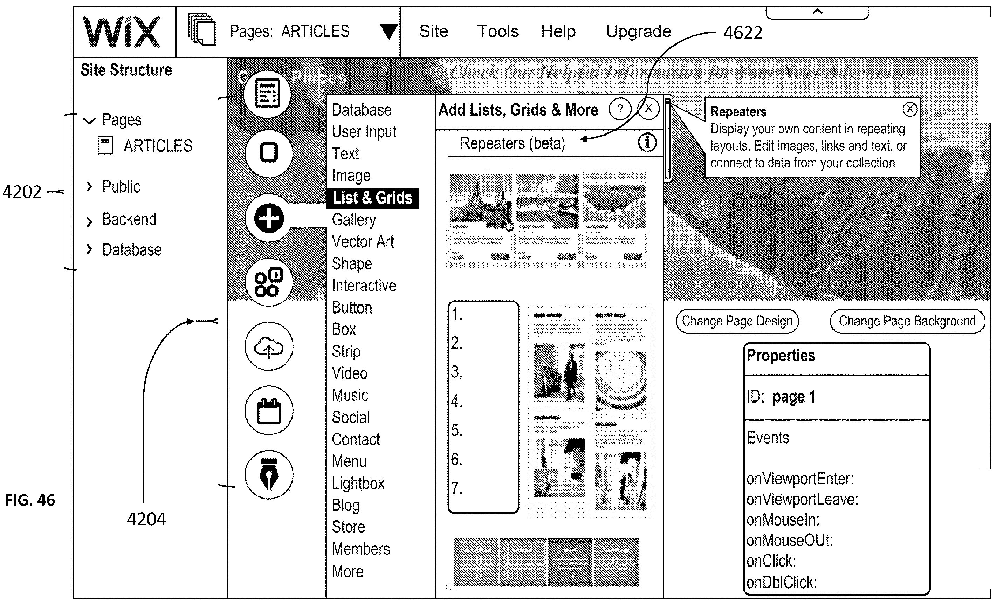

FIG. 46 is an example user interface for editing a webpage and creating a repeater function, according to some embodiments of the present disclosure. As described above, a repeater function may be added to a website or page to create two or more instances of elements (e.g., combinations of text and images) that are similar in structure or layout. Using a repeater, two or more instances of elements may be created that differ in at least one respect (e.g., having different text, images, etc.).

As shown, a user may access a Repeaters menu 4622 to configure a repeater. For example, using toolbar 4204, a user may select the Lists & Grids option, which allows for the creation of repeaters and various other elements which display multiple objects. In order to populate repeater instances with content, a user may link the repeater or individual instances to datasets, such as data stored in a database. In some embodiments, a user may decide to add one element to each of the instances identically. By adding the element to one instance, it may automatically be added to each instance. Alternatively, a user may wish to specify (e.g., through backend or frontend code) that each instance created by a repeater should have different content.

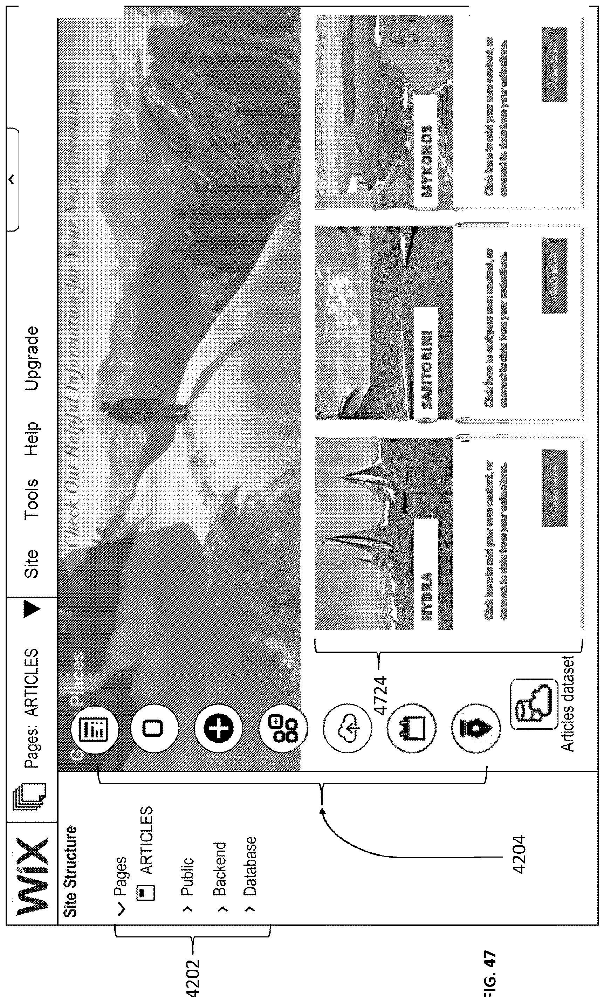

FIG. 47 is an example user interface for editing a webpage and showing the result of a repeater function, according to some embodiments of the present disclosure. As illustrated, a user has created three combinations of elements 4724 through a repeater. Each combination 4247 has a similar structure of an image, text (place name), text (description) and a "Read More" hyperlink icon. In the editing mode, the user may further edit the layout and appearance of these instances, for example by repositioning the image relative to the text elements, changing the hyperlink, resizing the fields, etc. Further, as discussed above, each element of the instances may connect to a different part of a database. For example, the three combinations of elements 4724 may each link to a different column in a database corresponding to the content they should each extract from the database. In this manner, while the three combinations of elements 4724 have a common layout, each has different textual or graphical content.

Various operations or functions are described herein, which may be implemented or defined as software code or instructions. Such content may be directly executable ("object" or "executable" form), source code, or difference code ("delta" or "patch" code). Software implementations of the embodiments described herein may be provided via an article of manufacture with the code or instructions stored thereon, or via a method of operating a communication interface to send data via the communication interface. A machine or computer readable storage medium may cause a machine to perform the functions or operations described and includes any mechanism that stores information in a form accessible by a machine (e.g., computing device, electronic system, and the like), such as recordable/non-recordable media (e.g., read only memory (ROM), random access memory (RAM), magnetic disk storage media, optical storage media, flash memory devices, and the like). A communication interface includes any mechanism that interfaces to any of a hardwired, wireless, optical, and the like, medium to communicate to another device, such as a memory bus interface, a processor bus interface, an Internet connection, a disk controller, and the like. The communication interface can be configured by providing configuration parameters and/or sending signals to prepare the communication interface to provide a data signal describing the software content. The communication interface can be accessed via one or more commands or signals sent to the communication interface.

The present disclosure also relates to a system for performing the operations herein. This system may be specially constructed for the required purposes, or it may comprise a general-purpose computer selectively activated or reconfigured by a computer program stored in the computer. Such a computer program may be stored in a computer readable storage medium, such as, but not limited to, any type of disk including floppy disks, optical disks, CDROMs, and magnetic-optical disks, read-only memories (ROMs), random access memories (RAMs), EPROMs, EEPROMs, magnetic or optical cards, or any type of media suitable for storing electronic instructions, each coupled to a computer system bus.

Embodiments of the present disclosure may be implemented with computer executable instructions. The computer-executable instructions may be organized into one or more computer-executable components or modules. Aspects of the disclosure may be implemented with any number and organization of such components or modules. For example, aspects of the disclosure are not limited to the specific computer-executable instructions or the specific components or modules illustrated in the figures and described herein. Other embodiments may include different computer-executable instructions or components having more or less functionality than illustrated and described herein.

Computer programs based on the written description and methods of this specification are within the skill of a software developer. The various programs or program modules can be created using a variety of programming techniques. For example, program sections or program modules can be designed by means of JavaScript, Scala, python, Java, C, C++, assembly language, or any such programming languages, as well as data encoding languages (such as XML, JSON, etc.), query languages (such as SQL), presentation-related languages (such as HTML, CSS etc.) and data transformation language (such as XSL). One or more of such software sections or modules can be integrated into a computer system, non-transitory computer readable media, or existing communications software.

The words "comprising," "having," "containing," and "including," and other similar forms are intended to be equivalent in meaning and be interpreted as open ended, in that, an item or items following any one of these words is not meant to be an exhaustive listing of such item or items, or meant to be limited to only the listed item or items. In addition, the singular forms "a," "an," and "the" are intended to include plural references, unless the context clearly dictates otherwise.

Having described aspects of the embodiments in detail, it will be apparent that modifications and variations are possible without departing from the scope of aspects of the invention as defined in the appended claims. As various changes could be made in the above constructions, products, and methods without departing from the scope of aspects of the invention, it is indented that all matter contained in the above description and shown in the accompanying drawings shall be interpreted as illustrative and not in a limiting sense.

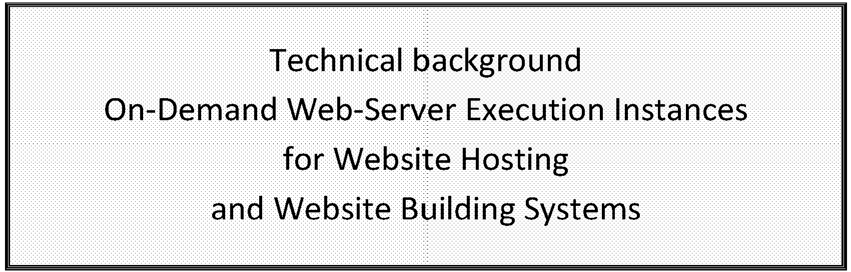

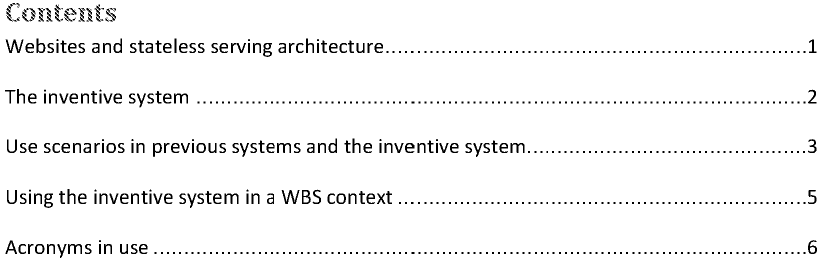

### Websites and stateless serving architecture

1. When the user interacts with a web site, he will typically be interacting most of the time with the client side pages, web application and FE code running on the client machine / browser - rather than interacting with any BE code or web server. However, this client side web site / application would still make multiple HTTP (or other) server requests. These may include, for example:
   1.1.An initial HTTP request made to load the page - which could trigger additional HTTP requests to load additional page elements (such as included images and scripts).
   1.2. Mid-session HTTP requests. For example, when selecting a value for a field, the page may make an HTTP request to retrieve a set of possible values for the given field.
   1.3. Data related HTTP requests, such as the submission of a form filled by the user.
   1.4.BE related HTTP requests which activate BE functionality - which could be performed by the system serving the website or using external (3^{rd} party) web services.
2. "Server" in this context may refer to actual physical servers, but may also refer to other website server execution instances, such as VM's and containers (also known as dockers). HTTP requests as discussed throughout this document may also refer to HTTPS request or any other network request.
3. Users expect the system (client + server + communication medium) to respond very quickly - as measured from making the request to receipt of initial response. The response time is often measured as "server-side time from receipt of request to sending the first response byte" (typically expected to be 100ms or less). Server-side time measurement is used so not to take into account highly variable network transport time.
4. Actually completing the response may take substantial additional time. For example, when loading a new page, the user expects the page to **start** appearing in his browser very quickly - but the page loading may take considerable additional time, and the user may also start interacting with the page even if not fully loaded.
5. The server system (typically consisting of multiple servers or server farms) could respond to these using a stateless or stateful system/protocol. Note that the HTTP protocol is stateless by nature, but stateful server use may be implemented using out-of-protocol techniques (such as URL rewriting or hidden form fields).
6. A stateful system is typically used when a client interacts with a pre-allocated server. Such a server could provide continuous session context, but the arrangement is very difficult to scale up, as servers have to be continuously associated with (one or more) users, and may remain idle or partially idle, waiting for the next HTTP request to arrive.
7. In a stateless system, each HTTP request - even from a single page - **may be served by a different server** (or server execution instance). The user is not aware of "jumping" between different servers for different HTTP requests, and these different servers may transparently access external resources required for response (such as database servers).
8. There are many advantages to a stateless system, i.e. one using stateless servers. In particular, the system is highly scalable as any incoming request can be directed to any (stateless) server in the system, and there is no need to have special handling for broken connections.
9. As the (multiple) stateless servers of existing system must be completely interchangeable, they cannot be adapted to the particular web site or page involved. Thus, such an arrangement is suitable for simple, static web sites. This arrangement cannot function well when serving complex websites which require site-specific BE code (possibly including user-provided code), site-specific components or site-specific plug-ins.

### The inventive system

10. As described herein, the inventive system involves rapid boot of docker containers (or website server execution instances) running a web server instance configured for a specific site (including the specific plug-ins and server-side user provided code for this site), and doing so quickly enough to respond to an HTTP request without timeout, and in a total timeframe acceptable to users.
11. Starting a new virtual machine typically takes a number of **minutes.** Starting a new docker container still takes 2-3 seconds. Both of these times are not acceptable.
12. In disclosed systems, a pool of standby containers may be provided containing all relevant non-site-specific code but without any user/site specific code.
13. The system may listen on a live port for a request to attach to a server for the specific web site. If there is a live container associated with the specific web site the system may attach to it. Otherwise, it can use a standby container from the pool and inject the requested site-specific content into it, or instruct it to load such content. Once the site-specific content for a given site is loaded, the container joins a pool of containers associated with the given site.
14. Note that such a stateless container instance may serve a specific HTTP request (e.g. involving data verification) without being the which handled the original page loading HTTP request.
15. The injected site-level content may or may not include the actual site pages. Such site page information may be, for example:
   15.1. Actual browser-ready page material (e.g. a collection of HTML, CSS and JS code).
   15.2. Underlying site definition data (e.g. using XML files or JSON expressions) which is converted into browser-ready material by client or server side code (such as a WBS viewer module).
   15.3. Frontend / backend code, e.g. JavaScript code invoked by the page to run on the client, the server or both.
16. The system may drop standby containers if a site has not been active for a given period (such as 15 minutes).
17. In order to preserve the user's state, and keep the user's feeling that he is working within a single session (having a continuous context) the persistent context is kept using a combination of the client-side storage (e.g. browser local storage, cookies, ...) and server-side storage (e.g. saving to server DB's).

### Use scenarios in previous systems and the inventive system

18. Assume the following typical use scenario:
   18.1. The user enters a URL page into his browser, requesting a page to be loaded. The loaded page contains a data entry form and has a substantial amount of associated (site-level-specific) FE and BE code. An HTTP request is made to the server to get the page and its site-level associated FE code, while the BE code should be loaded to the server but not sent to the client. The site also employs a number of components (such as display widgets) having their own UI, FE code and BE code.
   18.2. The user fills the form over a span of 10 minutes, generally working locally with the browser running a local page with a <form> HTML tag. This can also be done using Ajax calls or Fetch calls, or any JavaScript or HTML setup that can initiate an HTTP request.
   18.3. The form may make some requests during this (e.g. get lists of allowed values from a DB for a given field) which are sent to a server. Each of these requests activates a server-side BE script which does the actual DB access and information gathering (e.g. so to avoid sending the DB access credentials in the code to the client). Such requests may be implemented as HTTP requests or using a different mechanism.
   18.4. When the user submits the form, the form is verified by a FE script. The form is then sent to the server and activates a server process executing associated BE code, which may (for example) save the form to a database.
19. In the scenario above, the user's activity may generate (for example) 20 requests during a span of 10 minutes - using HTTP requests or other mechanism. Many of these requests would activate site-specific BE scripts or component-specific BE scripts (for components used in the site).
20. Previous stateless / stateful technologies would handle this scenario as follows:
   20.1. In the case of working with a stateful server, the server who originally served the page containing the form would have to continue running - even if not doing anything, except maybe serving intermediate request (such as the "get list of values for field X" noted above) - until the final filled form is submitted, which could occur 10 minutes later.
   20.2. Previous stateless server technology couldn't cold-start a server for each specific HTTP request (containing code specific to the given site) - or even a VM or a container in the right time. Thus, they could either support sites having no specific BE functionality, or had to keep a specific server instance running during the entire form filling session (and are thus not really stateless).
21. Using the inventive technology, a stateless server instance (e.g. a container) would be allocated to serve each specific HTTP requests (load a page, get value list for field X, save filled form in DB). This could amount (for example) to 20 request serving times (e.g. 20 x 200 ms == 4 seconds) of server time use instead of the entire 10 minute form filling session. The allocated server could be a new container (injected with the site-specific elements) or an existing available site-adapted container.
**22. Thus, under the same use scenario, the inventive system may use substantially less server resources than the prior-art systems** - **only requiring a server for 4 seconds instead of 10 minutes (during most of which the server instance is idle but is still waiting for requests from the specific user).**
**23. This allows the website hosting provider to provide the same level of service using a vastly smaller amount of resources (servers, containers, etc.).**
24. As a side note, since the user is working locally with the form, if the user closes the browser window and re-opens it he would generally get an empty form (and not the partially filled one). The inventive system may provide an API though which the form content can be kept in the browser local storage. Thus, if the user closes a partially-filled form window and re-opens it, the re-opened form would contain the previously entered values. This would also work if the browser is completely closed.
25. Similarly, BE tasks can still provide context information to each other, e.g. by saving context information in a server DB (on the server side) or by providing information to be maintained by the client and passed to subsequent BE invocations. Such information may be session-duration only or persistent as required (e.g. using browser local storage).
26. It should also be noted that the injection of specific component code and associated FE/BE scripts would typically be done for the entire site (i.e. all special components and scripts used by the all pages in the site) rather than the specific page level of granularity. This way, injected containers may be reused for any page in the site whenever a new HTTP request for this site arrives (from the same user or other users).
27. However, the system may implement a different level of granularity, depending on the amount of "material" to be injected on one hand, and the pattern of its use on the other hand. Thus, the system may implement an injection granularity level of (for example) pages, page groups (i.e. site sections), sites or site groups. The site group case may be relevant, for example, when a large number of sites are very similar and use common associated components and scripts. This way, containers injected with the content specific to the site group could be reused to serve requests for any of the sites in the group and not just one site.

### Using the inventive system in a WBS context

28. An on-line WBS is characterized in have two modes of use:
   28.1. Editing the site - where a site definition (e.g. XML / JSON data or DB records or actual HTML page material) is typically edited by a visual editor application running on the browser with server support. Such a site may include FE and BE code (which may also be editable by the editor), as well as specific components required for the site (e.g. third party applications). The editor may also invoke the site in a preview mode. The editor may also support a publishing operation, in which a version of the site is published for use by external users.
   28.2. RT (run-time) mode - where the system serves a published site to users, while activating FE or BE code as required.
29. The inventive system described above may be used during **both** the editing and the RT modes of the system.
30. When working in editing mode:
   30.1. The edited site context includes the following:
      30.1.1. The complete site definition (pages, components and associated data) typically kept as a client-side in-memory structure by the editor client (e.g. as a JSON expression).
      30.1.2. The site FE code.
      30.1.3. The site BE code.
   30.2. The actual editor code (editor FE code which is loaded to the client + editor BE code running on the server) is part of the system's general code (in the "general section" preloaded into the containers).
   30.3. The site JSON/FE site code/BE site code is kept in the DB (when the user does an explicit save).
   30.4. There are limited interim saves of the FE/BE code - so user can continue editing the same code though any container to which the user "moves". This is required as the site's FE/BE code is not part of the site JSON code.
31. It should be noted that the site code is kept in the DB so it could be used when running a preview, and further so the editor would not have to load the entire site code (which may be large), but only the relevant section being edited or otherwise related to the current page.
32. When working in run-time mode, the system operates as described for regular web site serving above. The WBS may have a viewer module (which would be required by all sites edited in the WBS) - such a module would be part of the system's general code preloaded into started server / container instances.
33. Thus, the inventive system can be used by a WBS during both editing and RT.

### Acronyms in use

| | |
|---|---|
| BE | Back end |
| FE | Front end |
| VM | Virtual machine |
| WBS | Website building system |

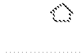

> Wix Code > Wix Code Basics

### Working with the Site Structure Sidebar

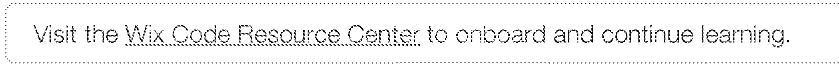

The Site Structure sidebar shows all of the files that make up your site, including pages, lightboxes, files, and database collections. Working in this sidebar, you can perform a variety of actions that affect your site as detailed below. 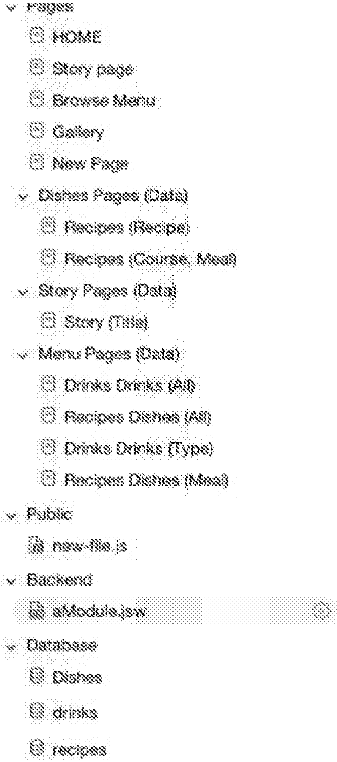
- To hide the sidebar, click the < **Hide** icon at the bottom left of the Editor.
- To show the sidebar, click the > **Show** icon at the bottom left of the Editor.

### Pages

The Pages section of the sidebar lists all of the regular, dynamic, and router pages in your site. Your regular pages appear immediately beneath the Pages section title. Dynamic and router pages appear in subgroups.

### Regular Pages

Your site's regular pages appear immediately beneath the Pages section title. You can change a page's settings by clicking the 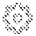 Settings icon that appears when you hover over the page's name. You can set any page other than your site's home page as a gynamic page.

### Dynamic Pages

You can add a new dynamic page to a group by clicking the 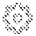 Settings icon that appears when you hover over a section's name.

You can change a page's settings, such as its URL and SEO data, remove its dynamic connections to make it a regular page, or delete it by clicking the 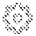 Settings icon that appears when you hover over the dynamic page's name.

### Router Pages

If you've created a router, all the pages associated with that router's prefix will be grouped together in the same section. For example, if you created a router with the prefix **myrouter,** the section will be named **Myrouter Pages (Router).**

Each individual router page is given a default name that is used in your router's code. You can change the name, if you want. Your visitors cannot see the page name.

You can change a router's prefix and the names of the associated functions that are implemented in the routers.js file, or you can add a new page to a router, by clicking the 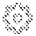 Settings icon that appears when you hover over the name of the *router section.*

You can change a page's settings, rename it, delete it, or remove it from a router to make it a regular page, by clicking the 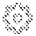 Settings icon that appears when you hover over the name of the *router page.*

You can add a new router by clicking the 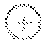 plus icon that appears when you hover over the Pages section header.

### Lightboxes

If you've added a lightbox to a page on your site, it appears in the Lightboxes section of the sidebar. This section only appears if you've added at least one lightbox to your site.

You can add a new lightbox using the **Add** menu in the Editor.

When you select an existing lightbox in the sidebar, the Editor enters Lightbox Mode.

The Public section of the sidebar contains files that are publicly accessible from your site. You can create JavaScript files and text files for use in public, and you can organize these files in folders. Your page and site code. which are also publicly accessible, do not appear in the Public section.

To edit page and site code, use the code panel.

You can add a new file or folder to the Public section by clicking the 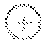 plus icon that appears when you hover over the section name.

You can add a new file, new folder, or delete a folder by clicking the 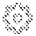 Settings icon that appears when you hover over the folder name.

You can rename or delete a file by clicking the 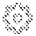 Settings icon that appears when you hover over the file name.

### Backend

The Backend section of the sidebar lists files that are not publicly accessible from your site. This is where you put code that you want to run server-side. You can create JavaScript files, web modules. and text files for use in the backend, and you can organize these files in folders.

There are two special JavaScript files that may be present in your site's Backend section. The data.js file contains the code for data hooks, and the routers.js file contains the code for routers and data binding router hooks.

You can add a new file or folder to the Backend section by clicking the 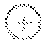 plus icon that appears when you hover over the section name.

You can add a new file, new folder, or delete a folder by clicking the 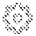 Settings icon that appears when you hover over the folder name.

You can rename or delete a file by clicking the 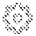 Settings icon that appears when you hover over the file name.

### Database

You can add a new collection by clicking the 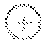 plus icon that appears when you hover over the section name.

You can add a new dynamic page based on a collection, update a collection's permissions, or remove a collection by clicking the 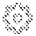 Settings icon that appears when you hover over a collection name.

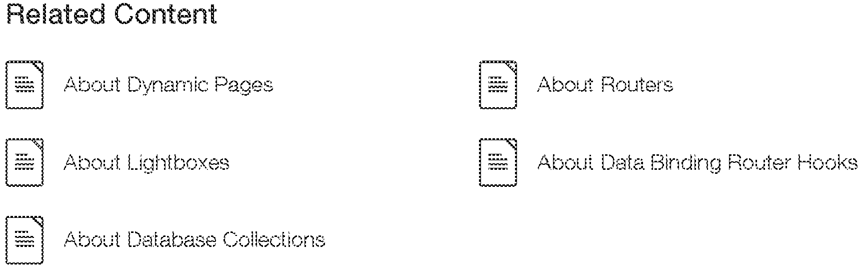

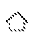

> Wix Code > Wix Code Basics

### Working in the Code Panel

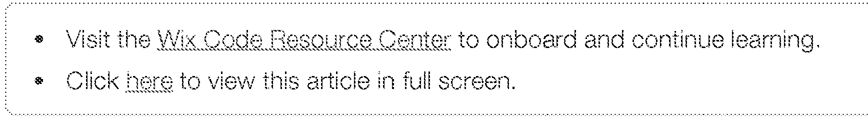

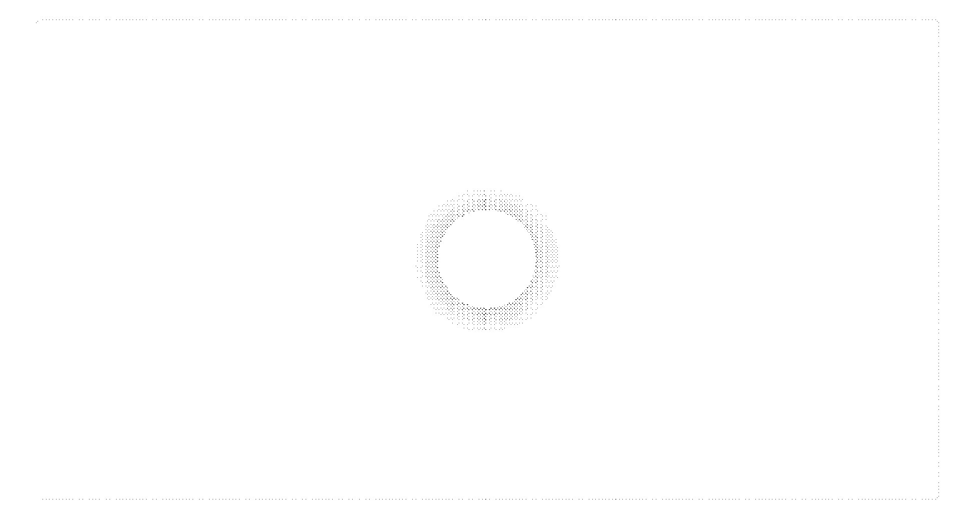

You edit the code for your site in the code panel, which is displayed at the bottom of the Editor. The code panel has a special toolbar and two tabs that contain the code for the different elements in your site. You can also add any other code you want to either of the tabs, depending on how and where the code will be used.

### Tip:

You can just drag the Code Panel up from the bottom of the page to open it.

Elements in the Editor can appear either on a specific page or on all of your site pages. You also may want to add code that relates only to a specific page or to all your site pages. The Code Panel has two tabs on the left side: Page and Site.
- **Page:** The Page tab contains the code for elements that appear on a specific page. When you use the Properties panel to add an event to your element, the code for that event is automatically placed in the Page tab. If you have code that relates to a specific page only, add it here.
- **Site:** When an element appears on all your site pages and you want to add functionality to it that will be consistent across your site, add that code in the Site tab. When you use the Properties panel to add an event to your element that appears on all pages, the code for that event is automatically placed in the Site tab. If you have code that relates to all the pages of your site, add it here.

If you have an element that appears on all pages. but you want to add code to it that is specific to one page, add the code to the Page tab for that page.

### Wix Code Syntax and Autocomplete

### Selecting a specific element

Wix Code lets you code using standard JavaScript. It also has a specific syntax, or set of rules, for selecting an element on your page, which is:

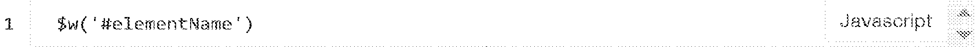

If you know jQuery, this should look familiar. If you don't, what you need to know is this.

### To select an element

1. Type $w.
2. Enclose the name of the element in parentheses and quotes.
3. Add a hashtag before the element name.

### Note:

You can use either single quotes or double quotes.

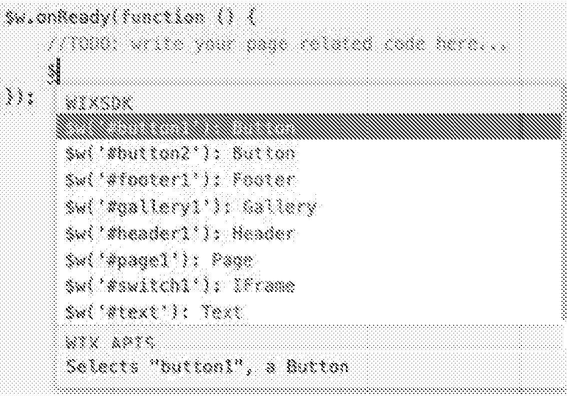

Use the up and down arrow keys to select the element you want, and then press Enter. Alternatively, you can click the element in the list. The reference to the element is added to your code with all the necessary syntax.

### Tips:

- You can press Ctrl+space at any time to view the code completion pop-up.
- Element names are case sensitive. '#Button1' is not the same as '#button1'.
- If you add a new .js file in Public, code completion lists the elements from the last page you were on.

You can find the name of any element by hovering over it or selecting it. You can rename any element in the Properties panel.

### Selecting multiple elements

If you want to select multiple elements by name, use the same syntax as above to refer to your elements and separate each element with a comma, like this:

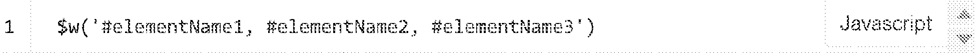

### Selecting all elements of a specific type

To select all the elements of a specific type, use the name of the element type without the hashtag. like this:
The name of the element type is the name of the element as it appears in the Wix Code API.

### JavaScript Templates

In addition to autocomplete that relates directly to Wix Code, the Code Panel also includes autocomplete for standard JavaScript templates and keywords. For example, if you type the word "for," the autocomplete list includes templates for "for statements" as well as the keyword "for." Each template includes a link to a standard JavaScript API where you can read more information.

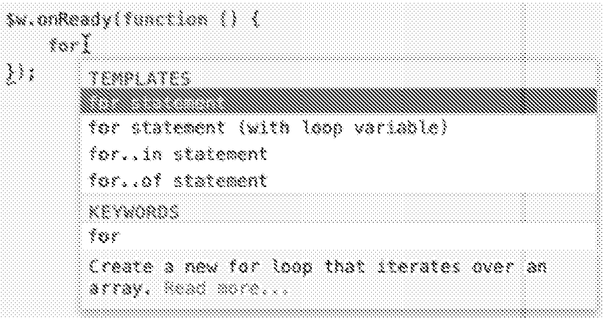

When you select a JavaScript template, the full syntax for the template is added to the Code Panel. For example, if you select the "for statement," the following template gets added to your code:

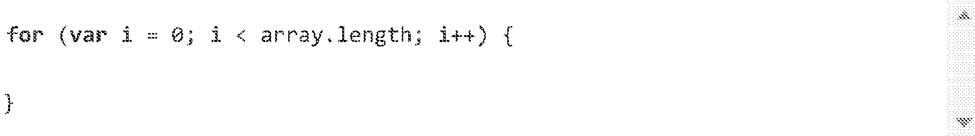

All you need to do is to add the code you want to run in the loop.

### Making Sure the Element Has Loaded Before You Reference It

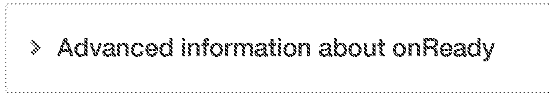

When a page loads in a browser, it's possible for the code on the page to run before the page finishes loading. This can cause an error if your code tries to reference an element in the page before it's loaded.
the following function:

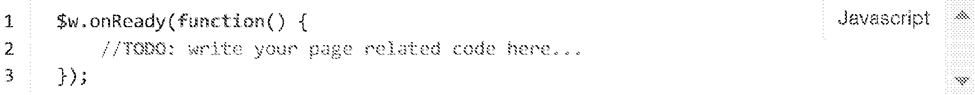

This is only required if you add code on your own using the $w selector. Any code you add to a function using the Properties panel runs only after the page loads.

### Working with Your Elements

All of the elements in the Editor have **properties, methods,** and **event handlers** that you can use to work with your elements and add functionality to your site.

After you select an element, type a period to see the full list of these items.

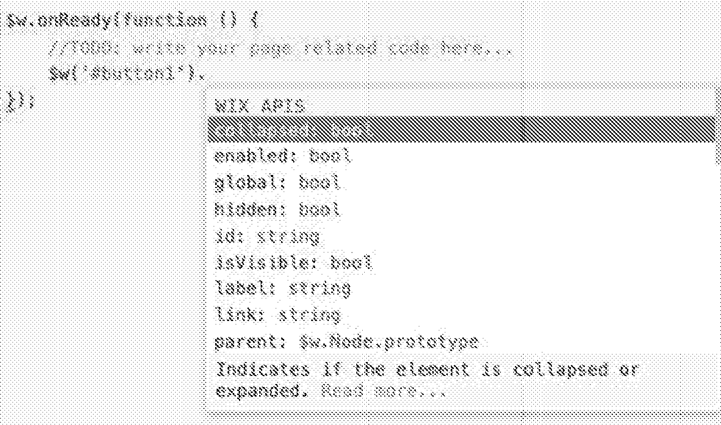

Use the up and down arrow keys to select the item you want, and then press Enter. The necessary syntax is added to the end of your element selector. As you move through the options. a brief description of the functionality is displayed. Click the "Read more" link for more information.

The autocomplete pop-up also includes standard Javascript methods that you can call on your element.

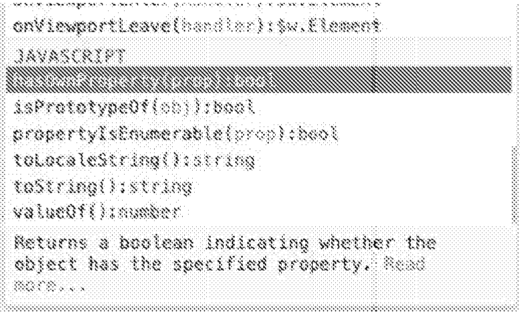

### Properties

Properties contain information about your elements. Some of these are read-only, while others have values you can also set.

For example, the text element has an isvisible property that returns whether the element is actually visible on-screen. This property is read-only. The text element also has the text property that contains the current text in the text element. This is a property you can both read and set.

### Methods

Methods perform actions on your elements.

For example, the button element has a hide method that causes the button not to appear on your site.

Some methods have additional options that affect how the action occurs. For example, you can add animation to the hide method by specifying it in the parenthesis, like this:

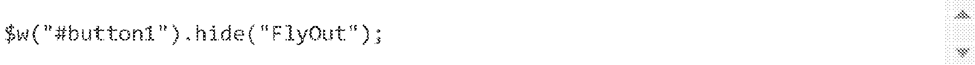

Here also you'll need to look at the Wix Code API to learn all the options.

### Event Handlers

Evert handlers let your elements respond to user actions (events). When you add an event handler to an element. you also need to specify what you want to happen when the event occurs. You do this in

For example, let's say you have a button that says "Take the Tour" on it. You want to add functionality so that when a visitor hovers over the button the text changes to "Let's Go!". You would add code to your site that looks like this (we've added comments to explain each part of the code):

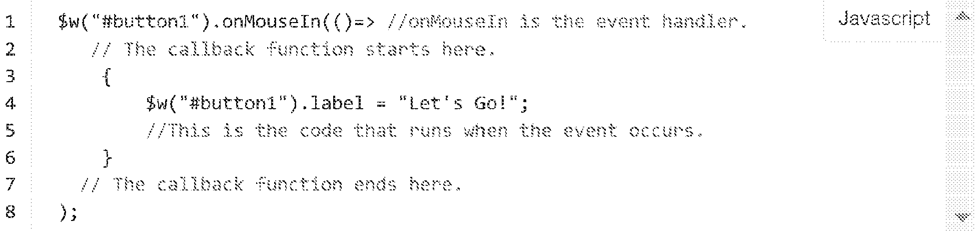

Don't forget that you can also add event handlers to your elements using the Properties Panel. Unless you have a specific reason for wanting to add event handlers manually, we recommend using the Properties Panel.

### Warnings and Errors

As you write your code in the code panel, you may see warning and error indications. Warnings are indicated in yellow, and errors in red. The indications take the form of a colored wavy line underneath the relevant code and an icon to the left of the line number.

To view the warning or error message, hover over the icon.

### Warnings

A warning in your code is an informational message that brings your attention to some code that you might want to change. Warnings do not stop your code from running and can often be safely ignored. Warnings are indicated by a yellow triangle and yellow wavy underline.

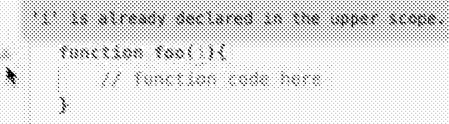

A common warning message occurs when you have an unnecessary 'else' after 'return'. This most often occurs when you use the following coding pattern:

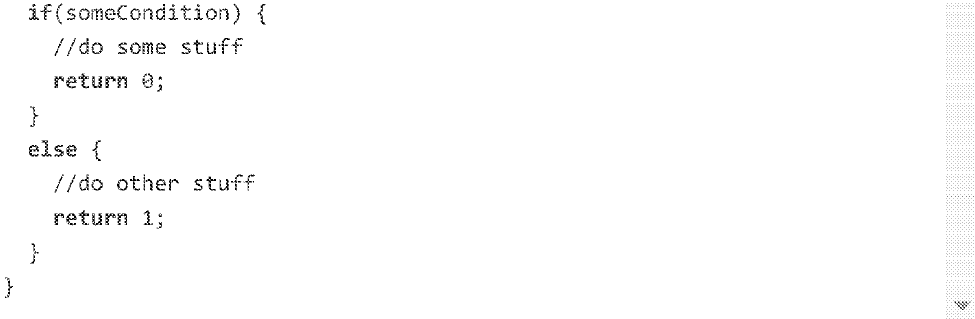

If someCondition is true, the function will return. That means that we don't need the else to stop the code from executing when someCondition is true.

You can safely ignore this warning or change your code to the following pattern:

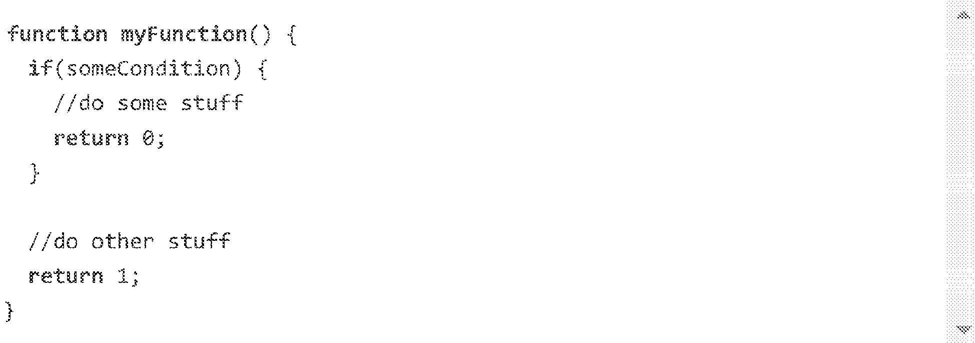

### Errors

An error in your code means that your code will not function properly. Depending on the type of error. your code either will not work as expected or might not run at all. Make sure to fix all errors in your code before publishing your site for your site visitors to use.

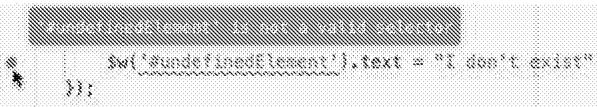

Here are some common situations where you might find errors in your code.
- Error message: "#text1" is not a valid selector (see image above) and you change the ID to **statusMessage,** all instances where you selected the element using $w('#text1') will now be errors. Note: you can use the Search and Replace functionality to fix this error throughout your code.
- Error message: 'import' and 'export' may only appear at the top level When you import an API module, the import statement must appear at the top level of your code before the module is used. That means you cannot import the module inside a function as shown below. In general, it is recommended that you place all import statements on the first lines of your code, before any variable declarations and function definitions. 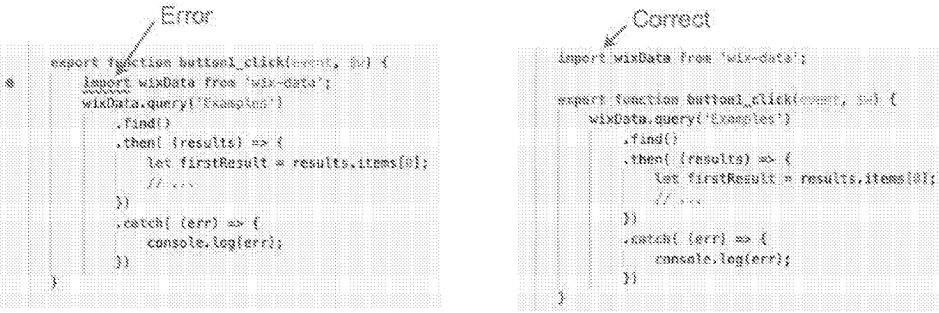
- In certain cases, the error indication does not appear at the point of your actual mistake, but occurs on the first line on which your mistake causes an error. For example, if you leave out the closing curly brace ( } ) in one of the functions of your page code, an error will most probably occur on whatever the next line of code happens to be. In the code shown below, a closing curly brace is missing from line 6, but the error does not occur until line 8.

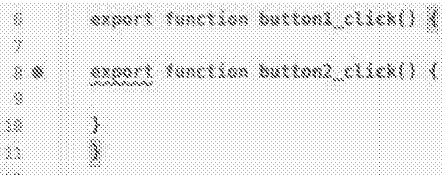

### Media Manager Integration

Wix Code allows you to use images that you've stored in the Wix Media Manager in your code. When you work with elements that include an image property, such as src , a pop-up window opens,

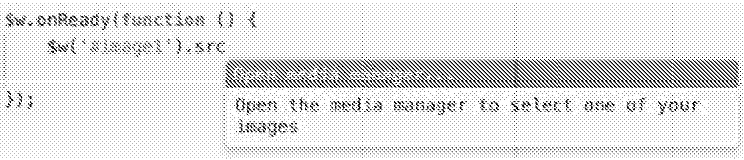

### Testing Your Code

Your code will run in your published site, but you may want to test your code before make sure it works as expected.

You can test your code before you publish by previewing your site. Any code in your the same in Preview Mode as it will in the published version. You may also want todebug your code in your published site.

### Saving Versions of Your Code

When you save, the corresponding code is saved with that version of your site. If yc History and revert to a saved version of your site, the code that was saved with that restored as well.

### Related Content

Your code will run in your published site, but you may want to test your code before you publish to make sure it works as expected.

You can test your code before you publish by previewing your site. Any code in your site runs exactly debug your code

When you save, the corresponding code is saved with that version of your site. If you go to the Site History and revert to a saved version of your site, the code that was saved with that version is restored as well.

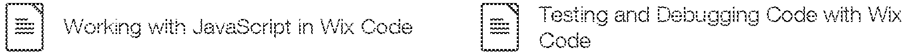

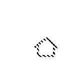

> Wix Code > **Database Collections**

### About Database Collections

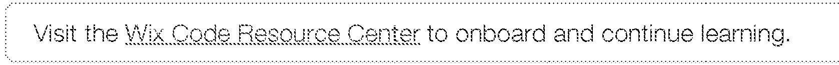

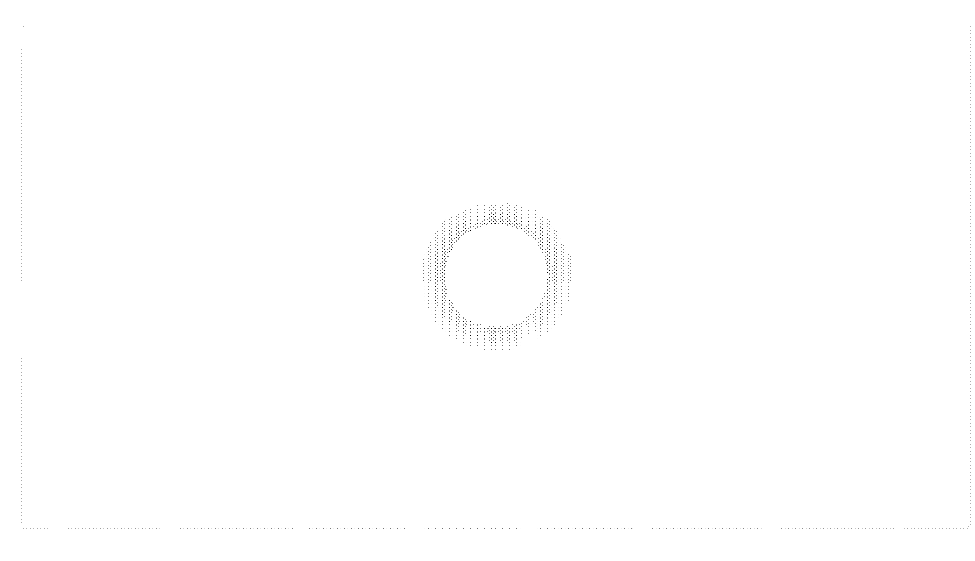

Your site's database is made up of collections. Each collection can be thought of as a table of data, like a spreadsheet. Each row in the table represents an item in the collection; each column in the table represents a field. Each item, therefore, contains the fields that are defined by the columns of your collection.

For example, the collection below contains four fields and five items.

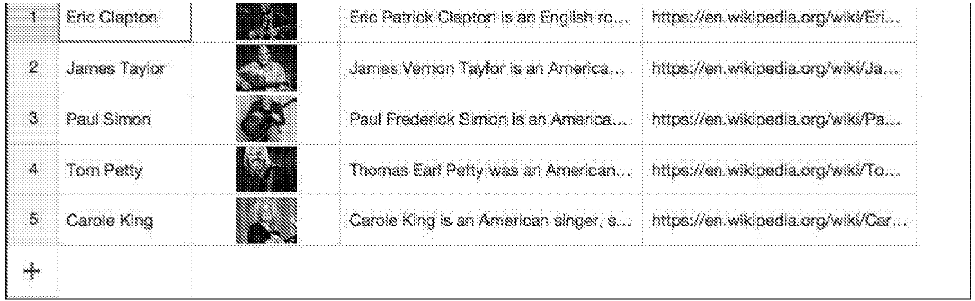

### Creating a New Collection

1. In the Site Structure sidebar, hover over the Database section name, and then click the 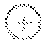 plus icon.
2. Give your collection a name. Note that you will not be able to change the name later.
3. By default, the "Site Content" collection permission preset is selected. This lets anyone see your content but only you can add, modify, and delete content. You can click the dropdown to choose a different preset or to define custom permissions. You can also update the permissions later.
4. Click Create Collection when done.

### Editing Collections

Each collection in your database has a Sandbox version and a Live version of your data.

You edit your Sandbox version in the Content Manager in the Editor, and your Live version in the Dashboard. Click the **Edit Live Data** link at the top of the screen to go to the Content Manager in your Dashboard.

### Regular Fields

Each field in a collection has a **Field Name, Field Key,** and **Field Type.**

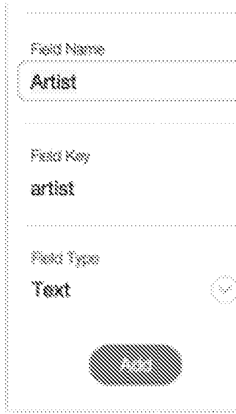

### Field Name

The **Field Name** is the label you see at the top of the column in the Content Manager. The **Field Name** is also used when connecting page elements to a dataset in the Editor.

For example, when connecting a text element to a field from your collection, you use the **Field Name** in the Connect Text panel.

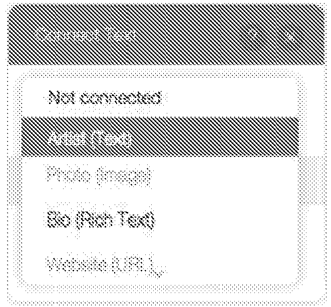

When you add a new field in the Content Manager, you specify the **Field Name.** You can change the **Field Name** after the field has been created, and all connections to that field will be updated.

### Field Key

The **Field Key** is used when referring to the field in code using the Data API or Dataset API.

For example, if you want to insert an item using the Data API, you use the **Field Key.**

When you add a new field in the Content Manager, the **Field Key** is created automatically based on the **Field Name.** You can specify your own field key, if you wish.

### Important:

You cannot change the **Field Key** once the field has been created.

### Field Type

The **Field Type** defines what kind of data the field contains. When you add a new field in the Content Manager, you choose one of the following **Field Types.** You can read about field type support and limitations here.
- Reference
- Text
- Image
- Boolean
- Number
- Date and Time
- Rich Text
- URL
- Document

The field type is used when connecting page elements to fields in your collections. You can only connect certain input elements to fields of relevant **Field Types.** For example, you can connect a text element to a Text or URL field but not to an image field.

While the Content Manager doesn't allow you to add new values of the wrong field type, data imported from a CSV file or added via code is not validated. For example, you could import a text value to a number field. in this case, the Content Manager will show an error.

You use the Reference field type to select an item from the primary field of the referenced collection. For more information, see How to Create a Reference Field.

### Note:

### Primary Fields

Every database collection has a primary field, indicated in the Content Manager by a lock icon next to its field name. By default, the **Title** field is the primary field, but you can set any other text field in your collection to be the primary field except for the ID system field.

When you fill in information in a Reference field, you select from the values in the primary field of the referenced collection. If you change the primary field in the referenced collection, the values displayed in the reference field change to match the ones in the new primary field. It is good practice to ensure that each item has a unique value in the primary field.

For more information, see About Reference Fields.

### System Fields

Every database collection contains the default fields shown here. They cannot be edited and are hidden by default.

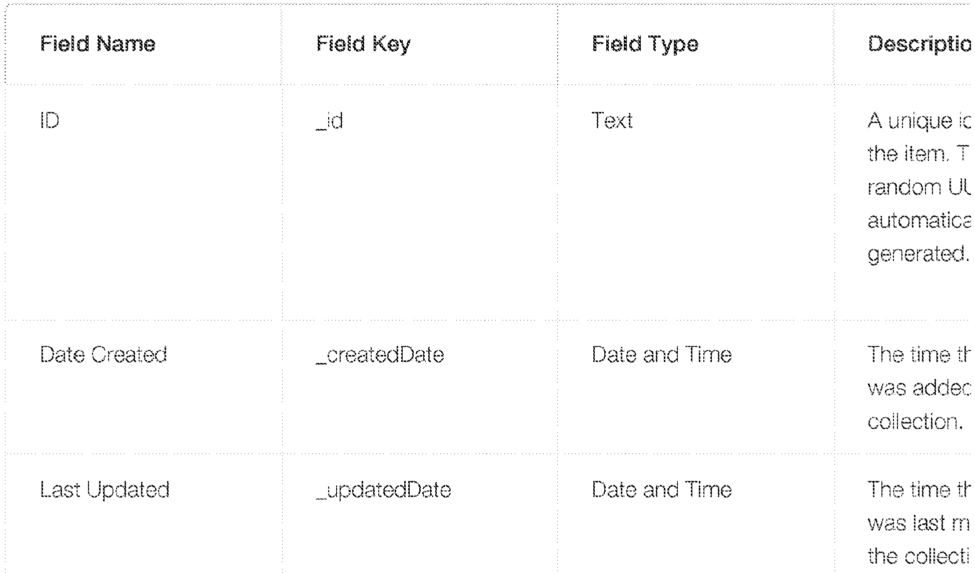

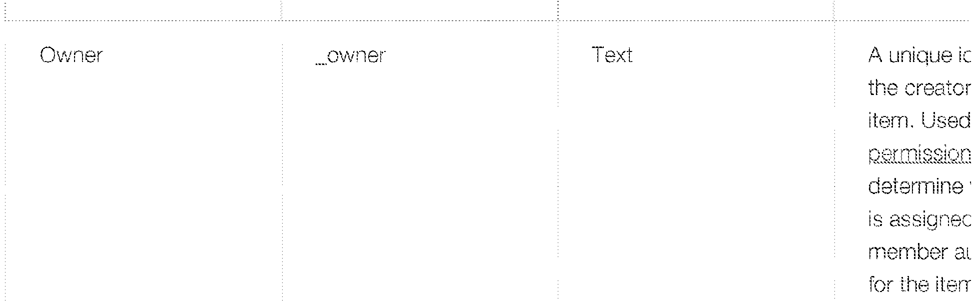

The value of the ID field can be assigned when adding items with the Data API or when importing new data from a CSV file. It cannot be changed afterwards. In all other cases, the values in these fields are automatically generated and cannot be changed.

### Calculated Fields

When you create a dynamic page, a new field is added to the collection that the dynamic page pulls data from. This field contains a calculated URL with the dynamic page's prefix and the values of the fields that determine which data will be bound to the page.

For example, you might have a dynamic item page to show items from a **Dishes** collection based on their **Title** field. In your collection there will be a field called **Dishes (Title)** with URLs such as **/Dishes/pizza** and **/Dishes/chicken.**

When a visitor goes to a dynamic page, all the items in the collection with a URL that matches the URL of the page will be bound to the page's dataset.

For dynamic item pages, each item will have a unique URL. For dynamic category pages, multiple items will share a URL.

You cannot edit the contents of calculated fields. However, if you change the URL of your dynamic page, the URL in your collection will change accordingly. If you create multiple dynamic pages based on a collection, the collection will have one calculated field for each dynamic page.

For more information, see About Calculated Fields.

The permissions model gives you control over which visitors are allowed to interact with the data in your collections and what they are allowed to do.

Permissions are set per collection. You assign permissions that determine which user roles can perform which actions. For example, you might grant **Create** permissions to **Site members** for your Comments collection, but restrict them from creating items in another collection.

To learn more. see About Database Collection Permission.

### Importing and Exporting Data

You can export data from a collection to a CSV file, and you can import data into a collection from a CSV file.

Now you should learn:
- About Sandbox and Live Data

### Related Content

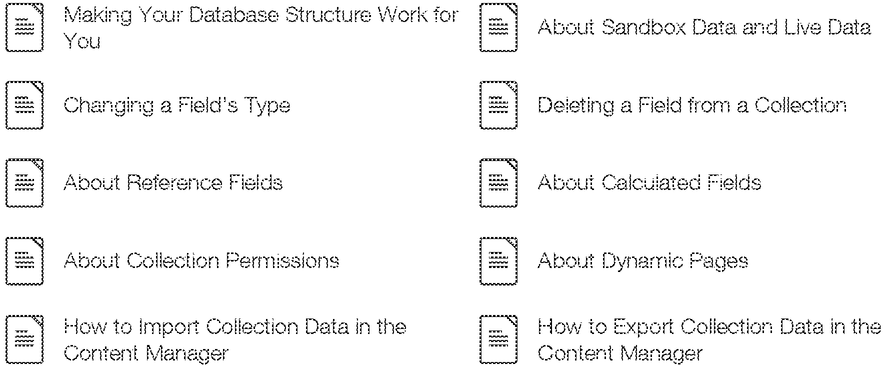

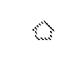

> Wix Code > Advanced

### About Routers

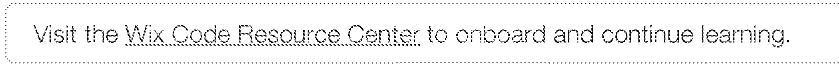

Using Wix Code you can create routers that allow you to take complete control when handling incoming requests to your site. To do so. you set up a router to receive all incoming requests with a specified prefix and define the logic of what to do when a request with that prefix is received. You decide what actions to perform, what response to return, where to route the request. and what data to pass to the page.

You might want to use a router to:
- Display a dynamic page using content from any data source.
- Customize your URLs to make them more meaningful and yield better SEO results.
- Authenticate users and then display content just for them.
- Return custom HTTP response codes.

The API reference for routers can be found here.

### URL Prefix

When creating a router, you choose which requests will get handled by the router based on a URL prefix that you specify. All incoming requests with that URL prefix will be sent to your router for handling. The URL prefix is also used as the router's name.

The prefix is the part of the URL shown in bold in the following examples:
- Premium site: hitps://domain.com/**prefix**/category/item
- Free site: https://user.wixsite.com/yoursite/**prefix**/category/item

Your routing logic is defined in the **routers.js** tile, which can be found in the **Backend** section of the Site Structure sidebar. There are two main functions that are the entry points to your router.

They are named with the following convention:
- <router prefix>_router(request)
- <router prefix>_sitemap(sitemapRequest)

### router()

The router() function is where page requests with the defined prefix are sent. The router receives a WixRouterRequest object containing information about the incoming request. The function then decides what to do with the request and returns the appropriate WixRouterResponse. Typically, the router() function will decide which page to show (if any) and what data to pass to the page. The response is then sent using the forbidden(), notFound(), ok(), redirect(), or sendStatus() functions.

### sitemap()

The sitemap() function is where sitemap requests are handled. You can use this function to make sure search engines can find the links to your router's pages. Each WixSitemapEntry includes information about a page, such as its URL, title, and name.

The sitemap() function is also used to populate the items preview widget, allowing you to switch between URLs in preview mode.

### Router Data

Your router() function may choose to send data to the pages it routes to. You can access that data in the frontend page code using the getRouterData() function of the wix-window module.

### Related Content

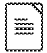

Creating a Router 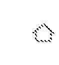 > Wix Code > Advanced

### Creating a Router

Creating a router allows you to take complete control when handling certain incoming requests to your site.

This article takes you through what code you have to write in order to make your router work. To learn more about what a router is and why you would want to create one. see About Routers.

### Add a Router

To add a router:
1. Click on the 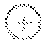 icon that appears when hovering over the **Pages** section header in the Site Structure sidebar and choose **Add a Router.**
2. Enter a URL prefix for your router and click **Add & Edit Code.** All incoming requests with the specified URL prefix will be sent to your router for handling.

When adding a router:
- Your router's router(.). and sitemap(.), functions are added in a **routers.js** file with sample code for a simple routing scenario. The **routers.js** file is found in the **Backend** section of the Site Structure sidebar.
- A new section under **Pages** is also created for your router. The section is named using the prefix you chose earlier and it contains one page to start with. For example, if you named your router "myRouter", a **MyRouter Pages (Router)** section is added with a page named **myRouter-page.**

### Sample Scenario

There are four parts to the sample code that's added to the **routers.js** file: 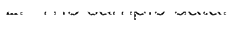
3. The router(.).function.
4. The sitemap(.). function.

### Import statement

The functionality used to create a router is contained in the Router API. To use this functionality, you need to import it. By default, the ok(.). and notFound(.). functions are imported, as well as the WixRouterSitemapEntry object.

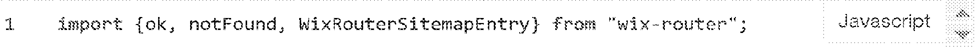

If you want to use more of the functionality from the Router API. you need to add it to the import statement.

### Sample Data

In the sample scenario, the router uses some static data contained in an object named peopleData.

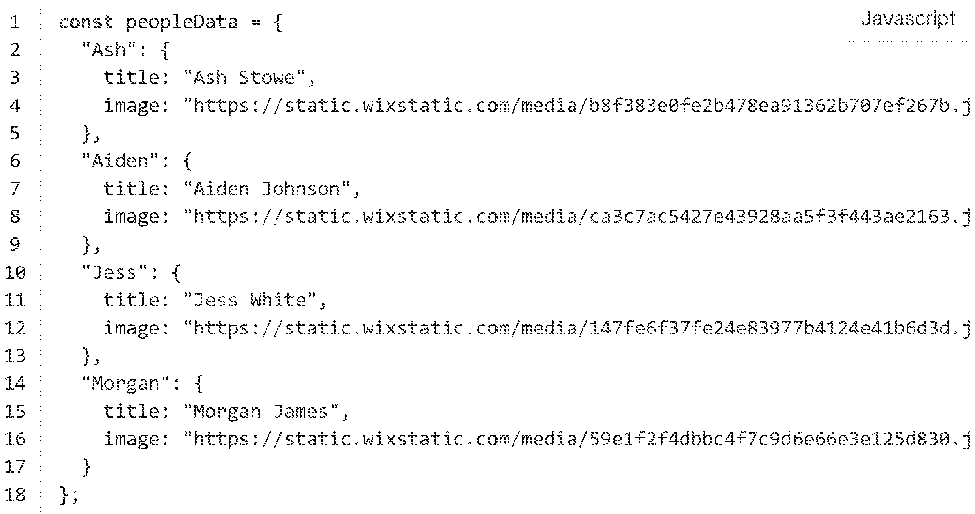

person.

Although you can use static data with a router, typically you would use data from your site's database or an external source. We'll see where you would write code to retrieve that data a little later.

Regardless of where you get the data from, since you'll be writing the code that handles it, the data can be structured in any way you like.

### Router Function

Remember, all incoming requests with the URL prefix you specified when creating the router are sent to your router for handling. The router(.). function is where you handle those requests.

The router(.). function is named with the following convention:

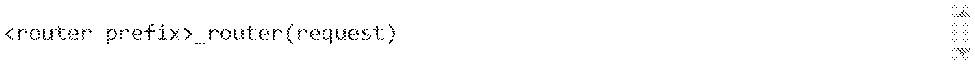

So if you named your router myRouter, the code added to the routers.js file should look like:

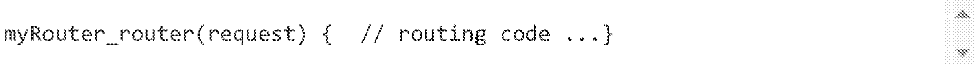

The router(.). function has a request parameter which receives a WixRouterRequest object that contains information about the incoming request. The object has information about the URL used to reach the router. where the request came from, and who the request came from.

Typically. the router() function will decide which page to show (if any) and what data to pass to the page. A response is then sent using the forbidden(.), notFound(.)., ok(.)., redirect(.)., or sendStatus(.). functions.

Let's take a look at the sample router(.). function code:

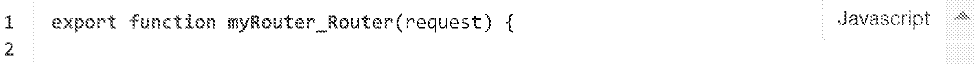

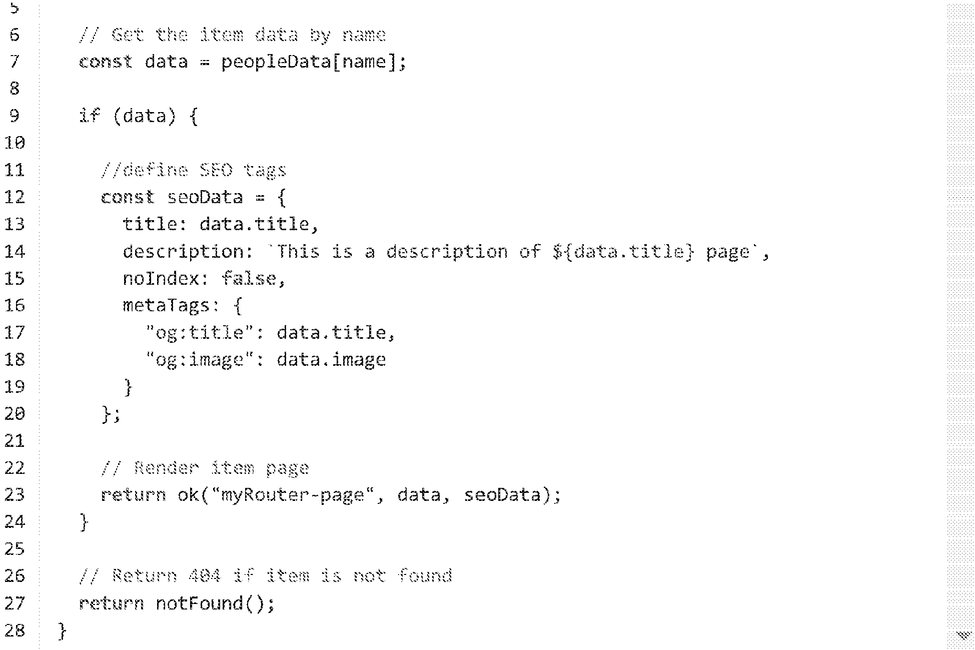

The router(). function begins by parsing the request's path to pull out a name value.

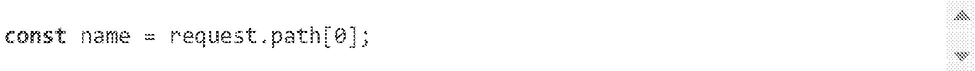

For example, a user might reach this router(.). function by browsing to https: //mysite. com/myRouter/Ash . The received WixRouterRequest object's path property will be an array with one element: ["Ash"] . Now the value of name is "Ash" .

Next, the router(.). function retrieves data based on the name it received.

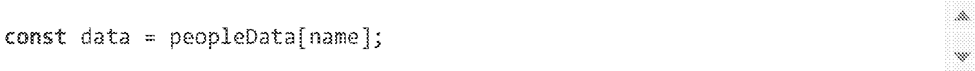

Continuing our example above, we pull out Ash's information from the peopleData object. So data now holds:

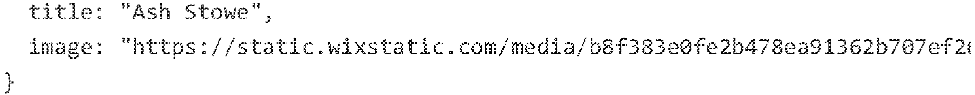

If you want to retrieve data from an external source, this is where you place the call to retrieve that data.

After attempting to retrieve the data that corresponds to the incoming request, we check to see if any data was found:

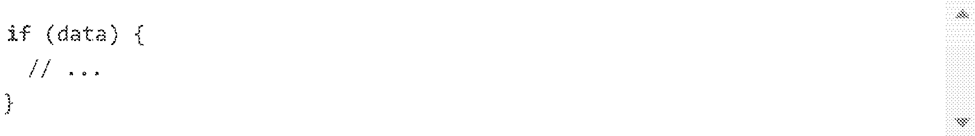

If nothing was found, the if is skipped and we return a 404 error using the notFound (.). function.

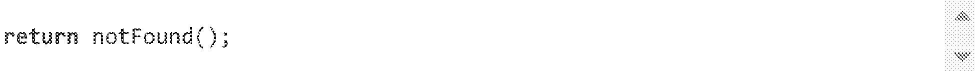

Assuming we found the data we were looking for, we now prepare some header data for our page:

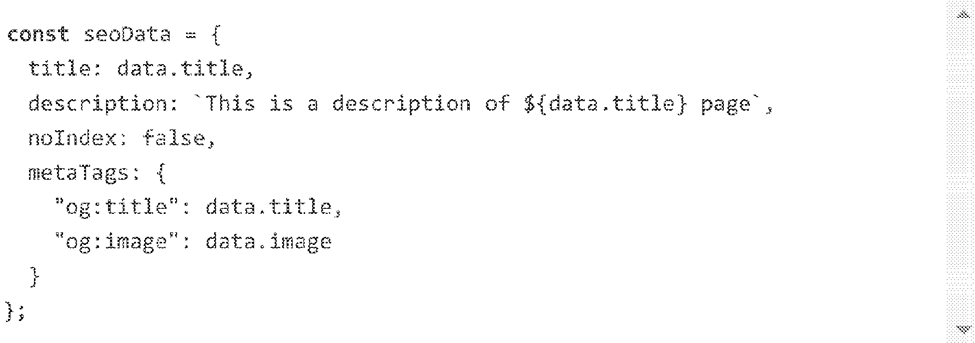

The sample code creates a title and description based on the title property of the retrieved data object. It also sets noIndex to false, meaning search engines should index the page. Finally, some metaTags properties are added as well.

You can create the HeadOptions object using any information you want.

You can also add a keywords property to the HeadOptions object with a string containing the page's keywords.

Finally, we return a WixRouterResponse object using the ok(). function.

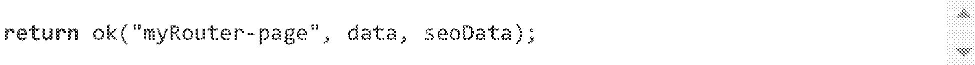

Here we route the user to the router page named "myRouter-page" and pass it the data that was retrieved and the seoData that was built for the page.

Depending on the situation, you can return a number of different responses from the router(). function. So far we've seen the notFound(.). and ok() functions in use. You can also use the forbidden() function to return a 403 response, the redirect() function to return a 301 or 302 response, or the sendStatus() function to return a response with any status code you choose.

### Router Data

To use the data that was returned with a WixRouterResponse using the ok() function, use the wix-window getRouterData() function.

For example, we can take the data passed by the sample router code and use it to present a person's information on the **myRouter-page** page that was created.

First, we need to add a text and image element to serve as placeholders for a person's title and image.

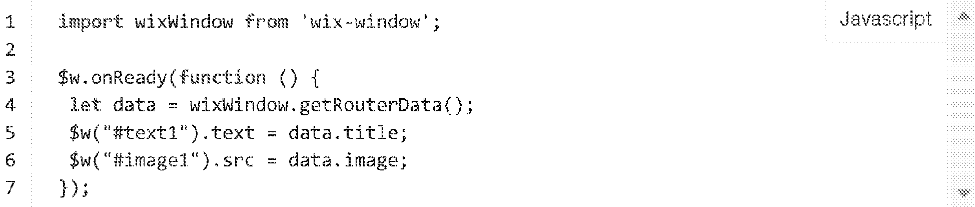

If you preview the page, you'll see that the placeholders we put on the page are filled in with information from the data that was passed to the page. You can use the preview widget to see what the page looks like for any of the people in the peopleData object that was defined in the **routers.js** file.

The preview widget gets populated with the **title** values from the WixRouterSitemapEntry objects that are returned by the router's sitemap(.). function.

### Sitemap Function

Like the router() function, the sitemap() function is named with the following convention:

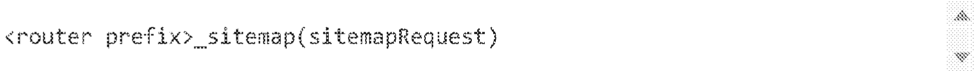

So if you named your router myRouter, the code added to the **routers.js** file should look like:

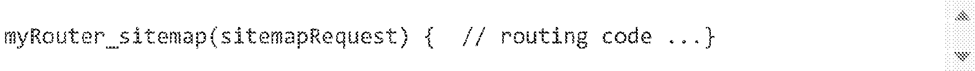

The sitemap() function has a sitemapRequest parameter which receives a WixRouterSitemapEntry object that contains information about the incoming request. The object has information about the URL used to reach the router, the pages in the router, and who the request came from.

Typically, the sitemap( ) function creates a WixRouterSitemapEntry object for each item in the data used by the router. So, in our example, we create an entry for each person in the personData object. You also might want to include entries for other pages, like an index page or a search page.

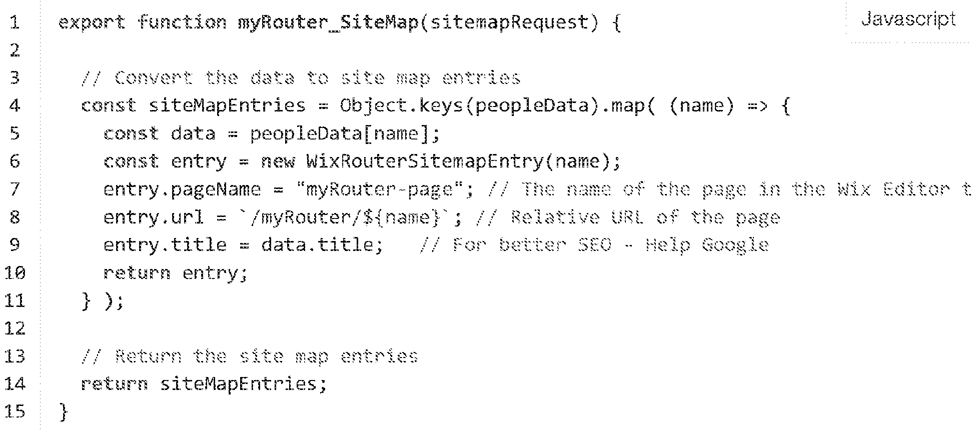

The sitemap() function takes the keys of the peopleData object and uses the JavaScript map( ) function to create an array of WixRouterSitemapEntry objects, one object for each key. Each entry is given values for the pageName, ur1, and title properties. Then the array is wrapped in a Promise and returned.

A sitemap entry can also contain changeFrequecy, lastModified , and priority properties to give search engines more information about each page.

In a case where you're using a router with external data, in the sitemap() function you would retrieve that data and build sitemap entries for each item that was retrieved.

### Related Content

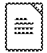

About Routers 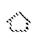 > Wix Code > Advanced

### SEO and Routing

SEO Settings for router pages vary slightly from the settings for regular pages. Learn about SEO for Wix pages here.

You can define the page title, description, and social network images for router pages just like you can for regular pages. The difference is that since router pages do not contain static data, their SEO information must be set dynamically, so they reflect the real content they will hold when they are viewed.

There are two parts to setting up SEO on your router pages:
- Create meta tags for Google to learn about your pages.
- Create a sitemap for Google to use to find your pages.

### Meta Tags

You set SEO meta tags for your router's pages when you create the router's router() function. Within that function, you create a HeadOptions object and pass it to the page you route to using the ok() function.

For example, in the sample code that is provided when you add a router, the following code uses the data retrieved by the router to build a HeadOptions object and pass it to the page named **myRouter-page.**

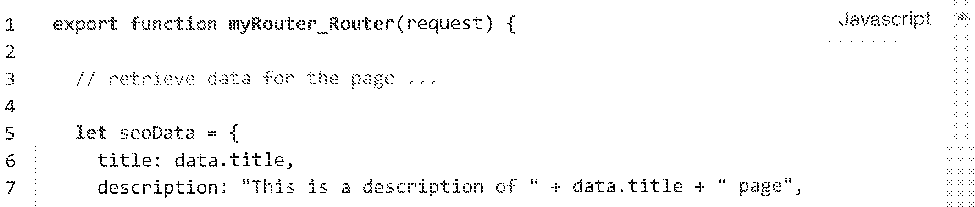

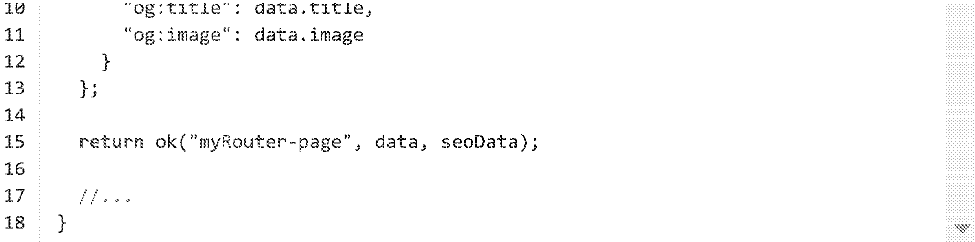

The HeadOptions object contains several properties that you can set with relevant values using the data you retrieve in your router() function. The title and description properties contain the page's title and description that are used for SEO purposes. The object can also contain a noIndex flag that tells Google whether it should index your page. Additional meta tags can be added to the metaTags property.

The HeadOptions object can also contain a keywords property, but Google ignores your site's keywords.

### Sitemap

Your site's sitemap is what Google uses to find all your site's pages. Pages on your site that don't belong to a router are added to your site's sitemap for you. However, since you fully control what pages are available through your router, including all of their dynamically different versions, you need to create a sitemap that contains all possible URLs that are connected to your router's prefix so Google can find them.

To add your router's pages to your site's sitemap, you create a sitemp() function for the router. Within that function, you create a WixRouterSitemapEntry object for each URL the router can possibly route to. Each **WixRouterSitemapEntry** includes information about a page, such as its URL. title, and name. You can also add additional information about each page, such as how often its content changes, when the last change was, and its relative priority within your site. Google uses the sitemap entries to discover all the pages in your site.

For example, in the sample code that is provided when you add a router, the following code uses the data retrieved by the router to build a HeadOptions object and pass it to the page named **myRouter-page.**

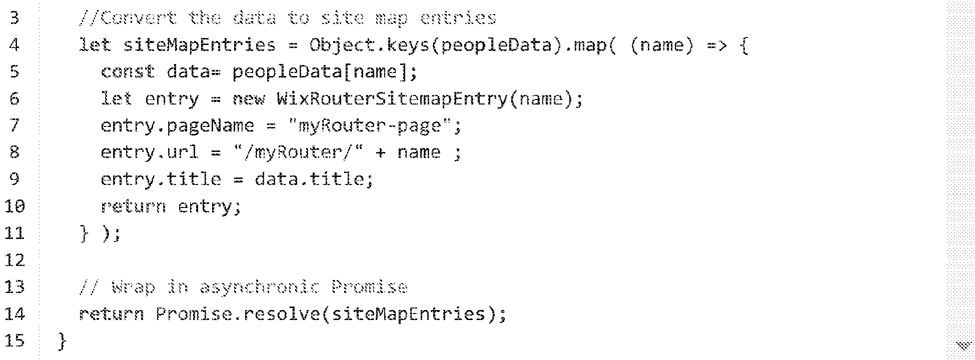

To ensure that your sitemap is working properly, you can get the sitemap from your published site. In a web browser, go to your published site's URL and append **/sitemap.xml** to it.

For example, for premium sites, if your site's published URL is: **https://mysite.com**

Go to: **https://mysite.com/sitemap.xml**

For free sites, if your site's published URL is: **https://usemame.wixsite.com/site-name**

Go to: **https://usemame.wixsite.com/site-name/sitemap.xml** 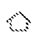 > Wix Code > Advanced

### Accessing 3rd-Party Services

Using Wix Code you can write code to access 3rd-party web services. You can call a 3rd-party service directly from your client-side code. However, if you have security concerns, such as exposing API keys, you can call the service from a backend web module.

### Note:

You cannot request HTTP content from a service if your site is an HTTPS site. Invalid requests will cause an error that you can see using your browser's developer tools. To fix the request, you can either use the HTTPS protocol to fetch the requested resources from you HTTPS site or you can turn off SSL on your site to fetch an HTTP resource.

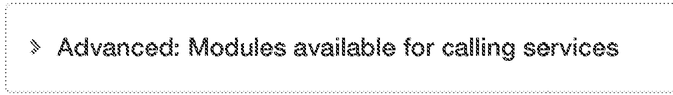

### Client-Side Service Call

For example, suppose you want to call a 3rd-party service to look up a currency exchange rate.

For this example, we've created a simple form with the following elements:

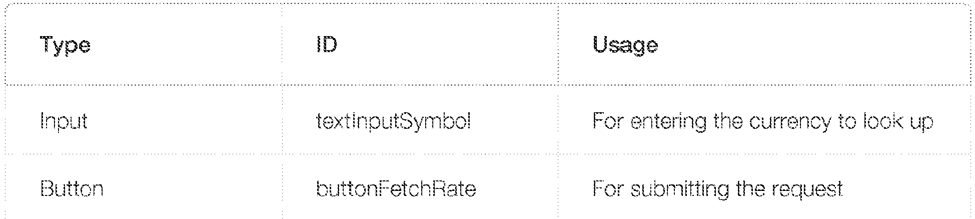

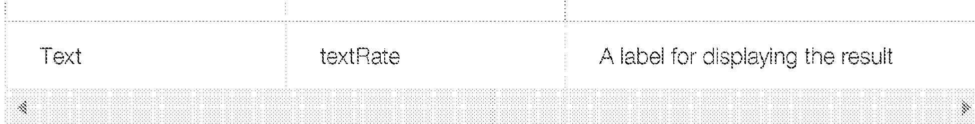

When you have the form set up, you can set the button's properties so that its onClick handler will call the following function:

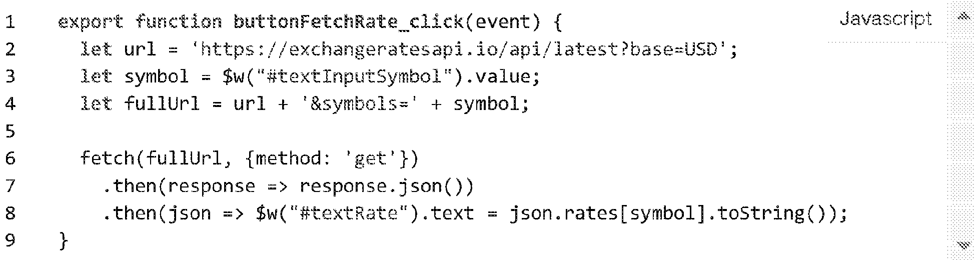

In this example, you start by constructing the full URL for the fetch request. The URL is made up of the service's address and some query parameters. For simplicity, we'll always convert U.S. dollars, so the base parameter's value is hardcoded to USD. The value for the symbols parameter is pulled from the form. Then the function makes the actual request. When it receives a response, it pulls out the conversion rate for the symbol we passed and sets it as the label's text.

### Note:

Certain CORS (Cross-Origin Resource Sharing) requests are restricted when originating from a browser. Usually, GET requests and certain POST requests can be made from your site's **Public. Page, or Site** code. All other requests need to be made from your site's **Backend** code. Invalid requests will cause an error that you can see using your browser's developer tools. If you are experiencing an issue with a **fetch** call due to a CORS restriction, move the call to the backend as described below.

### Backend Service Call

Making a service call from the backend is done in two parts. First, you write code that will make the service call in a backend web module. This avoids the security concerns, such as exposing API keys, For example, suppose you want to call a 3rd-party weather service to find the current weather in a city the user has chosen.

First, you create a function in a backend web module to call the weather service and retrieve the data:

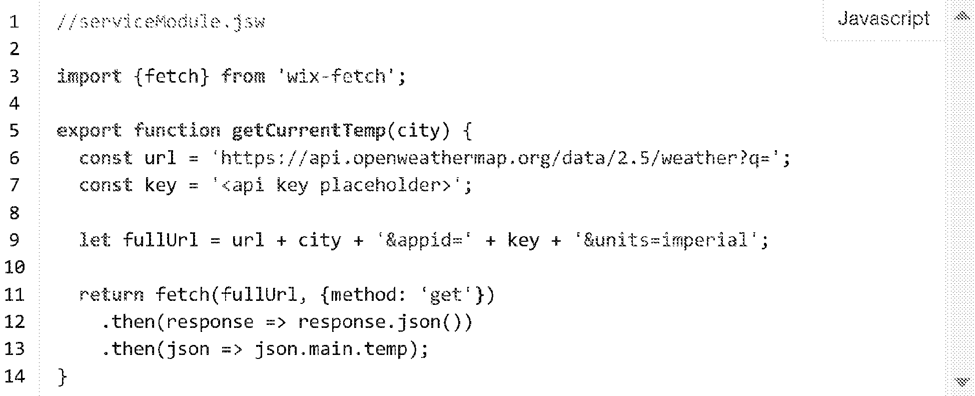

In this example, you start by importing **fetch** from **wix-fetch,** which is used to make **https** requests. Then you create a new function that takes in a city whose weather you want to look up. The function begins by constructing the full URL for the fetch request. The URL is made up of the service's address and an API key. To make this example work, you'd have to replace **<api key placeholder>** with your own API key. Then the function makes the actual request. When it receives a response, it pulls out the temperature data. That temperature data will be received by the client-side call.

On the client side, you need to decide where to call the backend function and what to do with the data it returns.

For this example, we've created a simple form that has the following elements:

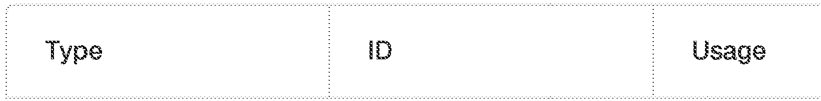

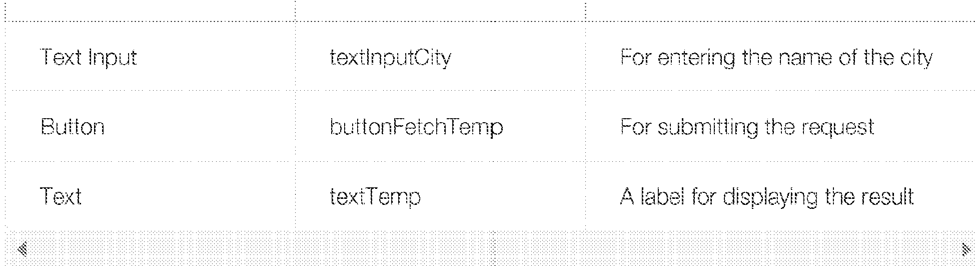

When you have the form set up, you can set the button's properties so that its onClick handler calls the function you wrote in the backend module.

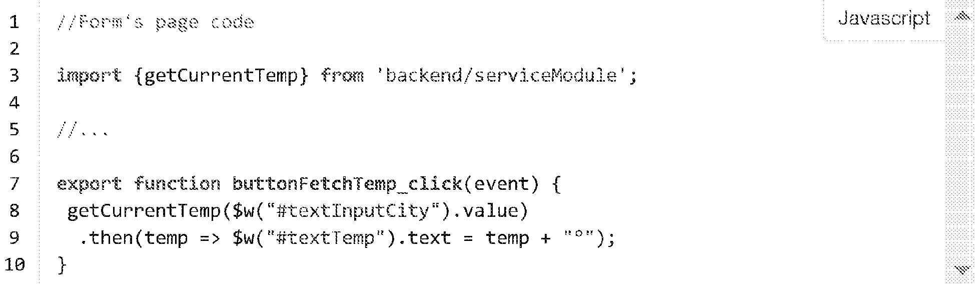

You start here by importing the function that you wrote in the backend. Then, in the button's event handler, call the getCurrentTemp function. The Input element's value gets passed as the city argument. When the function has finished running, set the text label to display the temperature that was returned.

### Related Content

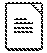

Calling Server-Side Code from the Front-End with Web Modules ← All topics

### Dynamic Pages

### Articles

> About Dynamic Pages
> Do I Need a Dynamic Page?
> How to Choose a Dynamic Page Type
> How to Add a Dynamic Item Page
> How to Add a Dynamic Category Page
> Working with Dynamic Page Dataset Settings
> Previewing Dynamic Pages
> Linking to a Dynamic Page
> Deleting a Dynamic Page
> How to Convert Between Dynamic Pages and Regular Pages
> Creating Dynamic Page URLs
> About Dynamic Pages and Which Items They Display
> Making Multiple Dynamic Page URL.s Unique
> About URL Prefixes and Page Grouping of Dynamic Pages
> SEO Settings for Dynamic Pages
> Page Info Settings for Dynamic Pages
> Working with Page Settings for Dynamic Pages in Mobile View
> About Calculated Fields 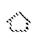
> Wix Code > Dynamic Pages

### About Dynamic Pages

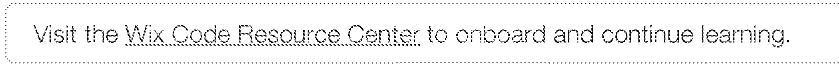

When you create a dynamic page, you're designing one page layout that can be used over and over again, each time displaying a different item from your database collection. Since a dynamic page displays a different item each time it's viewed, it's not like a regular page. A regular page stores its content in the page itself, while the content for a dynamic page is stored in a database collection.

Dynamic pages can be helpful:
- If you've been duplicating a page and changing each page's content or design manually. Dynamic pages let you create one page that displays each one of your items one at a time, or multiple items in groups.
- When you want to edit your site's content without changing anything in the Editor or modifying your site's design.

There are two types of dynamic pages:
- Dynamic item page: A page designed to display one item in your collection.
- Dynamic category page: A page designed to display multiple items in your collection that all match some criteria. These items would be displayed in a repeater, gallery, or table.

### Example

Let's say you have a recipes site. When you create your new database collection, the **Title** field is added automatically to the collection. Let's assume you use this field to store the names of your recipes. You add a **Meal** field to your collection where you note if the recipe is for breakfast, lunch, or dinner. You also add a **Course** field that notes if the recipe is an appetizer, main, or dessert.

Now you want to design your site so that each recipe can be displayed on its own page. You also In this example, the page that displays each individual recipe is a dynamic item page, and the page that displays all your recipes based on their meal is a dynamic category page.

Let's look at some content in a collection to see how this works:

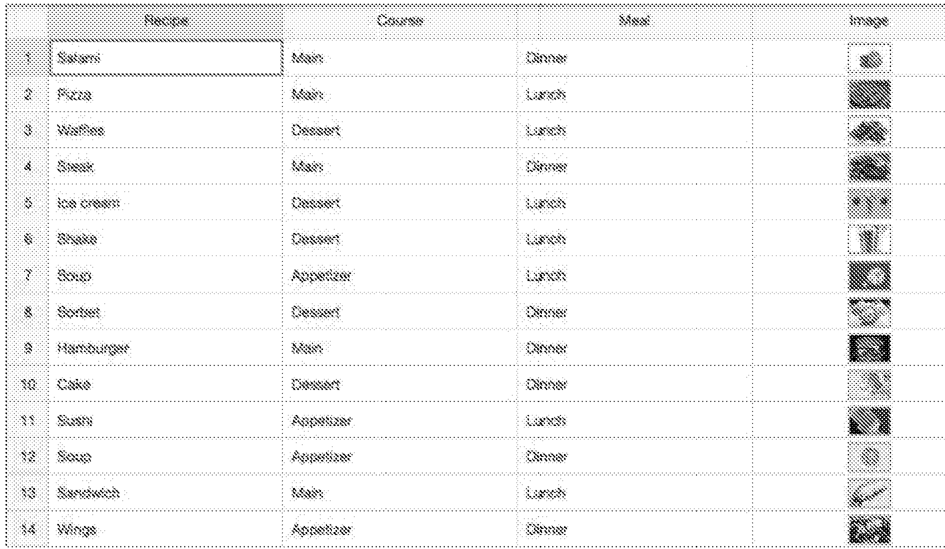

Now let's see how this content can be displayed in a dynamic item page.

### Note:

In this example, we explain what you can do using the power of dynamic pages. To learn how to set them up, see the How to Add a Dynamic Item Page and How to Add a Dynamic Category Page.

### Dynamic Item Page

To display each item in your collection you could create a dynamic item page. It could look like this:

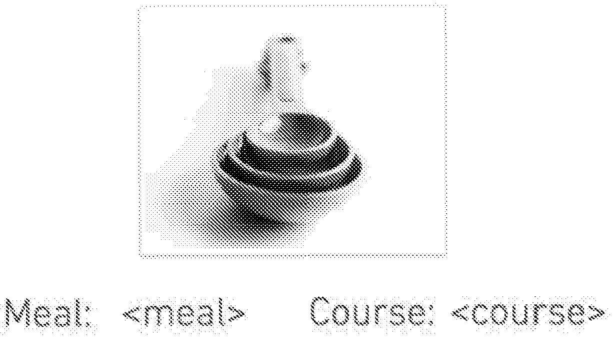

Note that in this layout, the only elements that have actual content in them are the headings "Recipe", "Meal", and "Course". The content that will be displayed next to those headings, where the text has "<>". hasn't been placed in the page yet. "<recipe title>" is just the placeholder text for the text box where the actual recipe name will appear, and so on. Also, the image in the middle is only a placeholder image (not one from your collection). The actual content these elements will display comes from your collection.

Now let's preview this dynamic item page for your cupcake recipe:

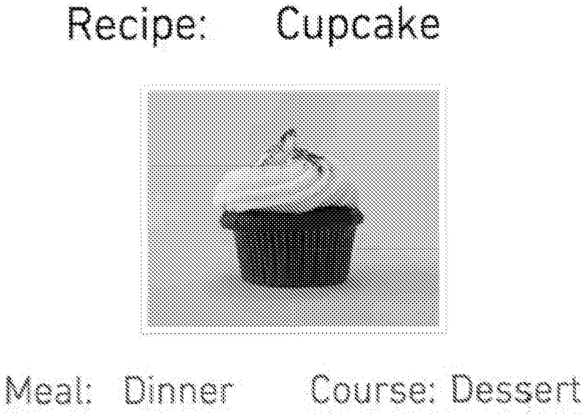

Notice how each of the placeholders has been replaced with the specific information for the cupcake recipe, and how the image displays the cupcake image from your collection.

We can preview your eggs Benedict recipe on the same page, and see the placeholder content change.

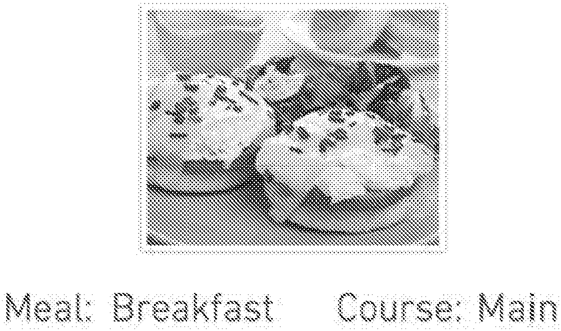

Now let's see how you can display this content in a dynamic category page.

### Dynamic Category Page

You can create a dynamic category page that displays different groups of your recipes based on the criteria you choose.

Let's assume you want a page that can display your recipes based on which meal they are served in. You could use a table to display those recipes.

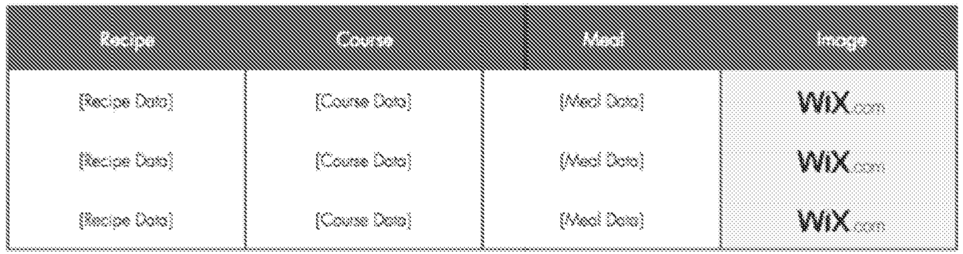

Just like with the item page, in this dynamic category page there is no real content. Let's see what it looks like when you preview your lunch recipes.

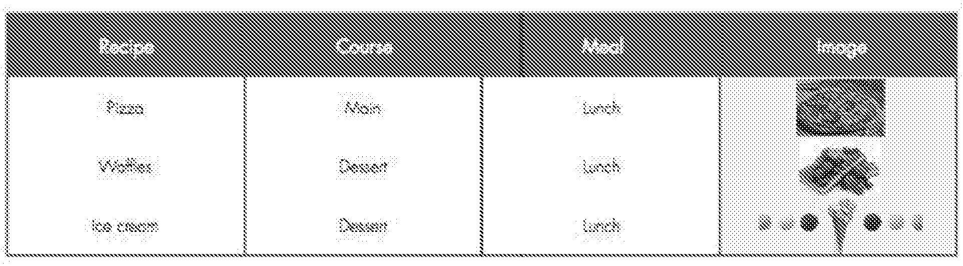

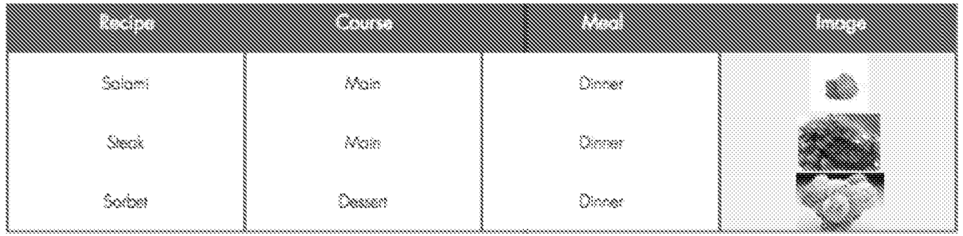

### Linking to Dynamic Pages

Because dynamic pages display content dynamically, you can't link to them in the same way you link to regular pages. To learn more, see Linking to a Dynamic Page.

### Tip:

Now you should read:
- Creating Dynamic Page URLs
- About Dynamc Pages and Which Items They Display
- Making Dynamic Page URLs Unique

### Related Content

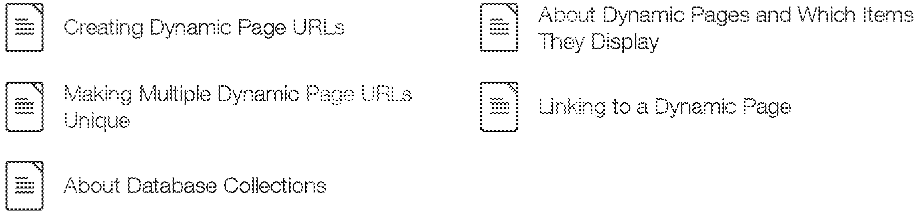

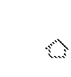

> Wix Code > Advanced

### About Data Hooks

Data hooks run code before or after certain interactions with your site's collections. A data hook allows you to intercept the interaction immediately before or immediately after it occurs. The hook's code can even be used to affect the interaction itself. For example, you may want to intercept an item before it is added to your collection to perform a final validation or to tweak the data that actually makes it into the collection.

In general, hooks are run whether the interaction with your collection is initiated by a page element or programmatically using the Data API. However, a Data API call from the backend code of your site may pass the optional WixDataOptions object and use it to suppress hooks from being called on that particular interaction.

### Hook Types

There are a number of different points in the lifecycle of a data interaction that you can hook into. Different hooks receive different arguments and return different values. For more information, see the Data API reference.
- item: The current item. For example, in beforeInsert, this is the item that is about to be inserted. If there are many items, such as can happen with afterQuery for example, the hook function will be called repeatedly, once for each of the items,
- **itemId** : The current item's ID value.
- **query:** The **WixDataQuery** object that will be executed.
- **count :** The number of items in the count.
- **error :** An error object.

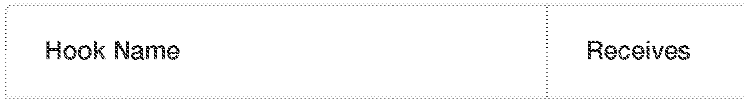

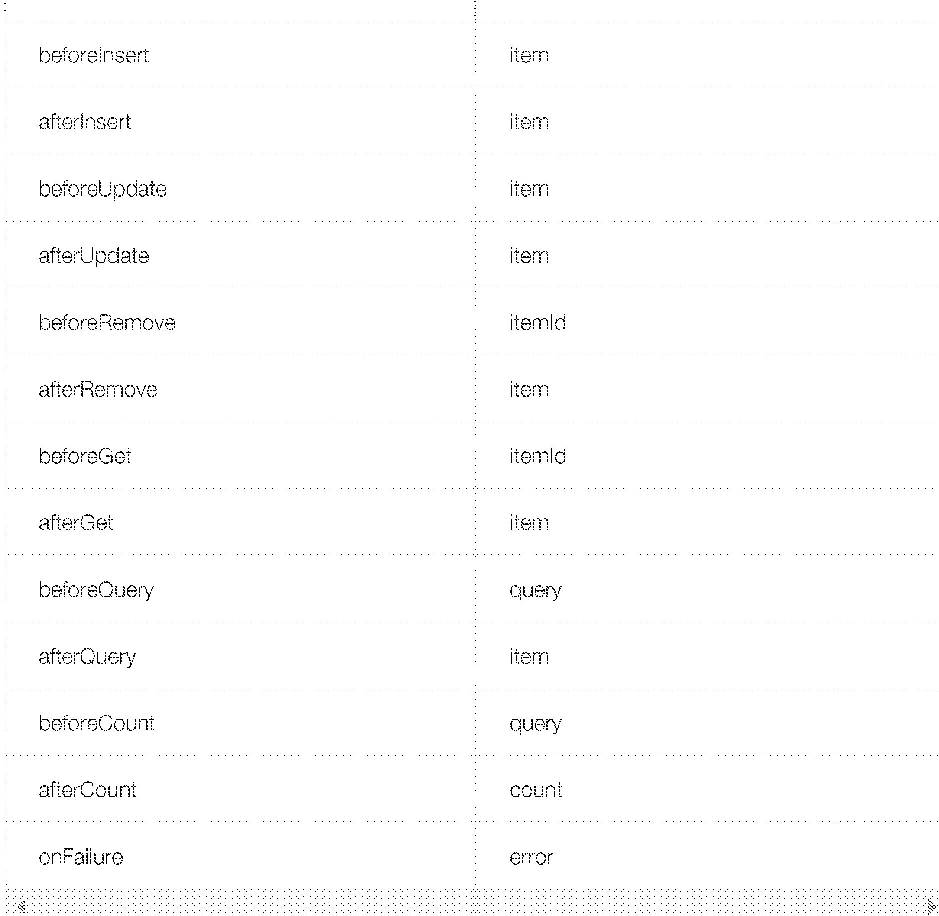

### Related Content

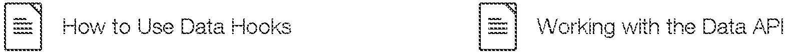

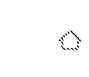

> Wix Code > Advanced

### About Data Binding Router Hooks

When a request comes in for one of your dynamic pages, a router uses the URL of the request to decide which page to show and what data to bind to the page's dataset. You can add a data binding router hook to intercept this process at certain points and insert additional logic. Some hooks can be used with router pages as well.

### Hooks

Data binding router hooks are defined in the **routers.js** file which can be found in the Backend section of the Site Structure sidebar.

The hook functions are named with the following convention:

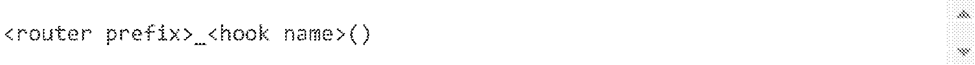

The router prefix is the first part of the URL you chose when creating your dynamic page. You can find the URL of your dynamic page in the page's settings.

For example, if you have a page with the URL /dishes/name and you want to create a beforeRouter hook, the function would look like this:

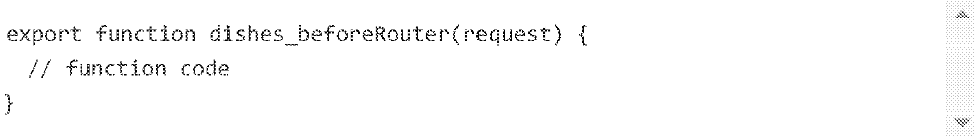

- beforeRouter
- customizeQuery
- afterRouter
- afterSitemap

To learn more about the hook functions, see the Router API reference.

You can also register data hooks that run code before or after certain interactions with your site's collections. If you've done so, the data hooks will run between customizeQuery ( ) and afterRouter().

### before Router()

This hook is triggered before the router goes to the requested page. You can use this hook to route requests to a different page or return an error response. For example, you can check who is requesting the page and then decide based on the user's role whether to let the router continue to the next step or to return an error type response code.

### customizeQuery()

This hook is triggered before the page's data query is executed. You can use this hook to further refine or change the query that will determine what data is bound to your page's dataset. For example, you can filter the query to only return items that have a status field set to active.

### afterRouter()

This hook is triggered after the router has bound the data, but before the page is displayed. You can use this hook to change the router's response based on the data that was retrieved. For example, you can have two versions of a page, one for portrait oriented images and another for landscape oriented ones. After the image is pulled from the database, you can show the page that corresponds to the image's orientation.

### afterSitemap()

This hook is triggered after a sitemap is created. You can use this hook to revise the list of pages in your sitemap. For example, you can add a search page's information to your sitemap. 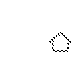 > Wix Code > Advanced

### Creating a Data Binding Router Hook

Creating a data binding router hook allows you to intercept the process of a dynamic page's data getting bound to the page.

This article takes you through what code you have to write in order to make a data binding router work. To learn more about what a data binding router hook is and why you would want to create one, see About Data Binding Router Hooks.

### Add a Data Binding Router Hook

To add a data binding router hook:
1. Click on the settings icon that appears when hovering over one of your dynamic pages in the Site Structure sidebar and click **Settings** to show the page's Page Info settings.
2. Under **More Functionality,** click on **Add hooks** to display the **Add Hooks** dialog.
3. In the **Add Hooks** dialog, select which hooks you want to add and click **Add & Edit Code.**

When adding a data binding router hook, function stubs for the data binding router hooks you chose are added to the **routers.js** file. The **routers.js** file is found in the **Backend** section of the Site Structure sidebar.

The data binding router hook functions are named with the following convention:

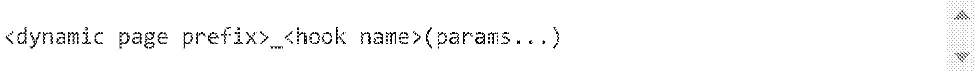

So if your dynamic page has the prefix **myPrefix,** the code added to the **routers.js** file for the beforeRouter hook should look like:

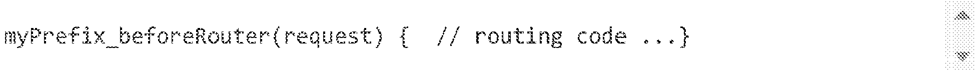

The hooks you can register are listed here in the order they run:
- beforeRouter
- customizeQuery
- afterRouter
- afterSitemap

To learn more about the hook functions, see the Router API reference.

You can also register data hooks that run code before or after certain interactions with your site's collections. If you've done so, the data hooks will run between customizeQuery() and afterRouter().

### beforeRouter( )

This hook is triggered before the router goes to the requested dynamic page. You can use this hook to route requests to a different page or return an error response. If you need the data that will be bound to the page to determine the correct response, use the afterRouter() hook instead.

The beforeRouter() hook receives a WixRouterRequest object that contains information about the incoming request. The object has information about the URL used to reach the router, where the request came from, and who the request came from.

Within the body of the hook you can write any code you want. The code you write there should help you determine how you want to respond to the request.

The function needs to return a WixRouterResponse object that causes the router to continue its routing, or respond with an HTTP response code.

If you want the router to continue to the same page it was originally going to with the same data, use the next() function to return the appropriate WixRouterResponse .

However, if you want the router to do something other than it was originally going to do before reaching your hook, you can use the forbidden(.)., notFound(), redirect(), or sendStatus() functions to return a WixRouterResponse.

In this example we create a hook on the dynamic prefix that restricts certain requests from being routed to their intended target.

The following code is placed in the routers.js file in the Backend section of your website.

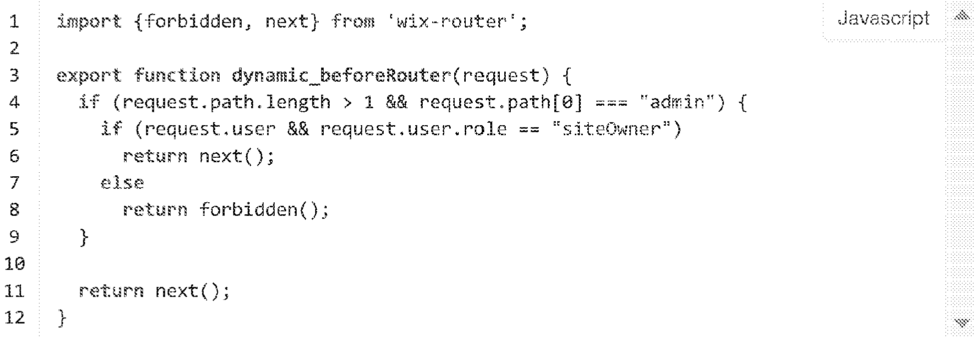

The functionality used to create data binding router hooks is contained in the Router API. To use some of this functionality, you need to import it.

Here we import the forbidden() and next() functions.

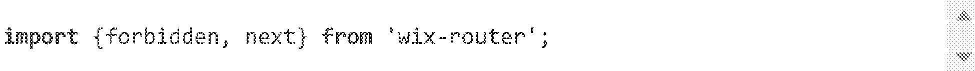

If you want to use more of the functionality from the Router API, you need to add it to the import statement.

In the hook function, we start by checking if the path begins with the string "admin" :

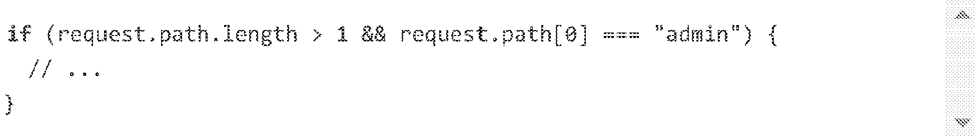

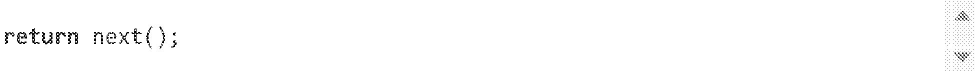

However, if the path starts with "admin" , we check to see what type of user is making the request:

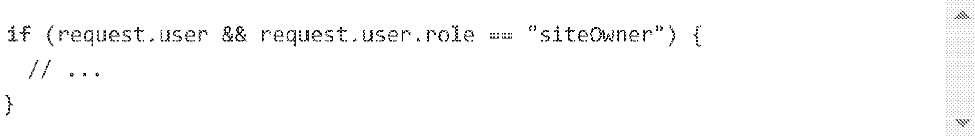

If the user is the owner of the site, we once again tell the router to continue to where it was going before being intercepted by the hook:

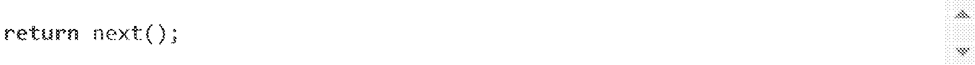

But if the user in not the owner of the site, we return a 403 response:

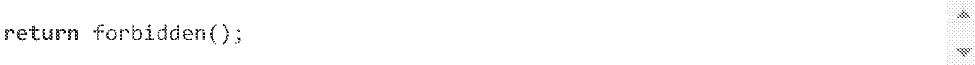

### customizeQuery( )

This hook is triggered before the page's data query is executed. You can use this hook to further refine or change the query that will determine what data is bound to your page's dataset.

The customizeQuery() hook receives a WixRouterRequest object that contains information about the incoming request, a string with the current route, and a WixDataQuery object containing query which is going to be used to get the data for the page being routed to.

Within the body of the hook you can write any code you want. The code you write there should help you determine if you want to continue with the initial data or if you want to change it in some way.

The function needs to return a WixDataQuery object that will be used to get the final data to be passed to the page that will be routed to.

However, if you want the router use different data, you can either refine the current query using the functions of the Data API or create a new query.

### Example

In this example we create a hook on the dynamic prefix that filters the query for a certain route to only find active users.

The following code is placed in the **routers.js** file in the Backend section of your website.

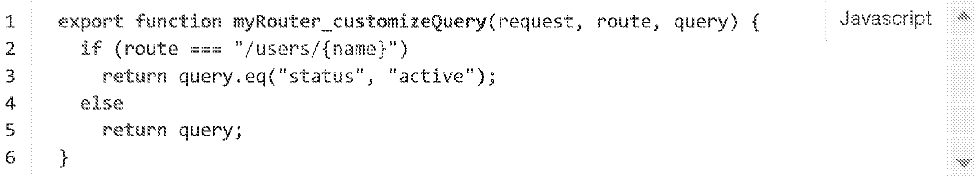

The functionality used to create queries is contained in the Data API. To use some of this functionality, you need to import it.

In the hook function, we start by checking if the route is going to a dynamic page that will be displaying users:

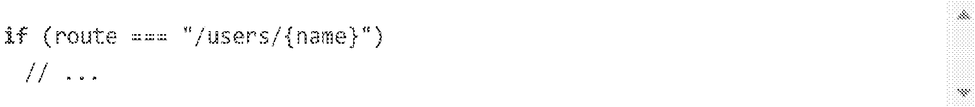

If it is going there, we refine the query to only get "active" users:

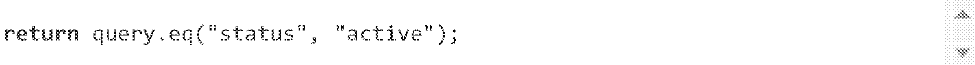

Otherwise, we return the same query we received:

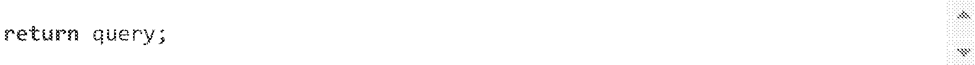

I his hook is triggered after the router has bound the data, but before the page is displayed. You can use this hook to change the router's response based on the data that was retrieved.

The afterRouter() hook receives a WixRouterRequest object that contains information about the incoming request and a WixRouterResponse object containing information about the router's response.

Within the body of the hook you can write any code you want. The code you write there should help you determine if you want to continue with the initial response or if you want to change it to another response.

The function needs to return a WixRouterResponse object that causes the router to continue its routing, or respond with an HTTP response code.

If you want the router to continue to the same page it was originally going to with the same data. return the object that the function received in the response parameter.

However, if you want the router to do something other than it was originally going to do before reaching your hook, you can use the Q.K..O., forbidden(), notFound(.)., redirect(), or sendStatus() functions to return a WixRouterResponse. To use the data from the router on a page that is different than the one the router was originally going to route to, you can use the [ok()] function to choose the page and pass it the response. data and response . header from the original response. For an example of this use case, see below.

### Example

In this example we create a hook on the **dynamic** prefix that routes the user to one of two pages. We have two versions of a page, one for horizontal oriented images and another for vertical oriented ones. After the image is pulled from the database, we check which type of picture is to be shown and route to the page that corresponds to that image's orientation.

The following code is placed in the **routers.js** file in the **Backend** section of your website.

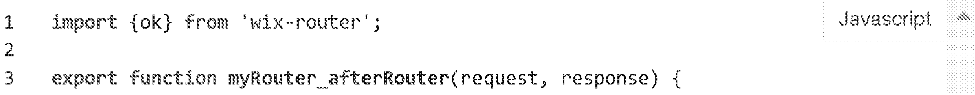

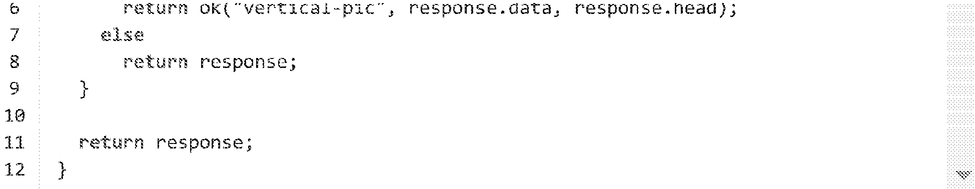

The functionality used to create data binding router hooks is contained in the Router API. To use some of this functionality, you need to import it.

Here we import the ok () function.

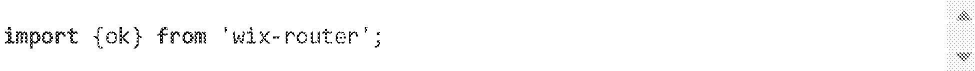

If you want to use more of the functionality from the Router API, you need to add it to the import statement.

In the hook function, we start by checking if the response status is the okay status and if the page the response is routing to is the page that displays pictures with a horizontal orientation:

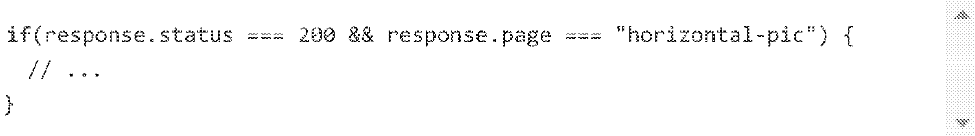

If we find any other status or if the page we're responding with is not the one we have two versions of, we just return the original response:

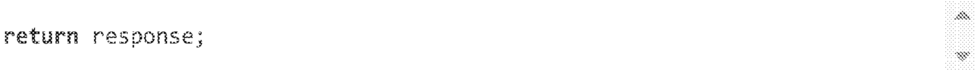

However, if the router is about to route to the page that displays horizontal images, we check the orientation of the image that will be displayed on the page. We do so by pulling the orientation

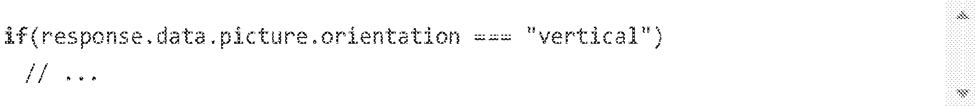

If the picture's orientation doesn't match the page it was being sent to, we route to a different page that does match its orientation and we take the data and head information from the original response and send it to the new page as well:

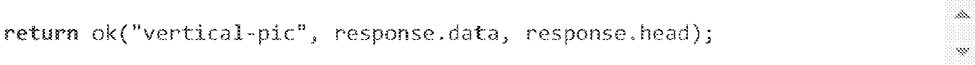

But if the picture's orientation already matches the page it was being sent to, we send it to where it was already going.

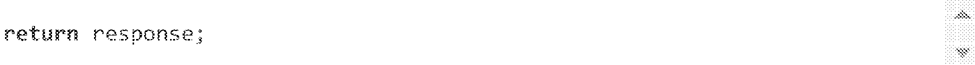

### afterSitemap( )

This hook is triggered after after a sitemap is created. You can use this hook to to revise the list of pages in your sitemap.

The afterSitemap( ) hook receives a WixRouterSitemapRequest object that contains information about the incoming request and a WixRouterSitemapEntry array containing the sitemap's entries.

Within the body of the hook you can write any code you want. The code you write there should help you determine if you want to continue with the initial sitemap entries or if you want to change them in any way.

The function needs to return a WixRouterSitemapEntry array with all of the sitemap's entries.

If you want the router to continue with the same sitemap entries the hook received, return the object that the function received in the sitemapEntries parameter.

However, if you want the router modify the sitemap entries, you can add, remove, or modify entries of the received array using standard Javascript array processing methods.

In this example we create a hook on the dynamic prefix that adds a search page to the sitemap. Note that the sitemap function only publishes a URL for the search page. To actually implement a page at this URL you can use a beforeRouter() hook to check for the request for the search page URL and route the user to a search page.

The following code is placed in the **routers.js** file in the Backend section of your website.

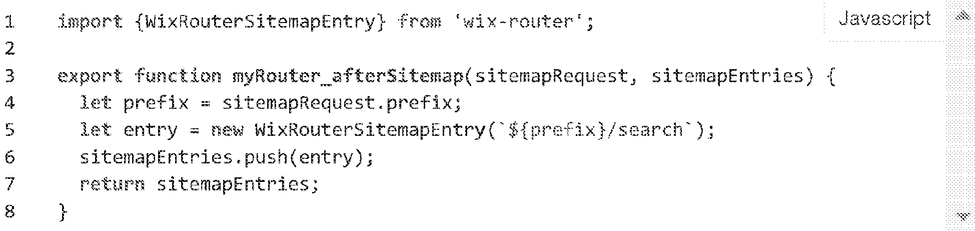

The functionality used to create sitemap entries is contained in the Router API. To use some of this functionality, you need to import it.

Here we import WixRouterSitemapEntry.

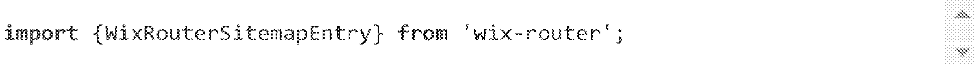

In the hook function, we start by getting the prefix of the request:

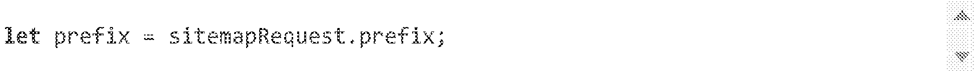

Then we create a new entry for our search page:

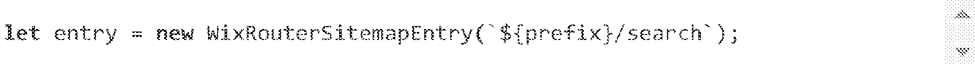

And add the new entry to the array of sitemap entries:
Finally, we wrap the array of entries in a Promise and return it:

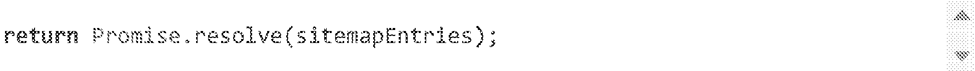

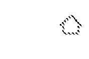

> Wix Code > Connecting Data

### Displaying Dynamic Content in a Repeater

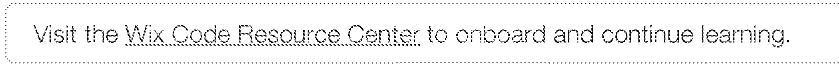

A repeater is an element that displays multiple items using the same layout. You create the layout you like, and then each repeater item uses that same layout to display different content.

Repeater items function like containers: you attach other elements to them. Any change you make to one repeater item is automatically reflected in all other items.

### Note:

You can use these elements when designing your repeater layout: text, images, shapes, boxes, buttons, galleries, and tables.

You can use repeaters to display static content, meaning you manually determine the content for each element in each item in the Editor.

You can also dynamically display content from your database collections by connecting your repeater and its attached elements to a dataset. Your repeater will then include one item for each item in your collection, with each repeater item using the same template but displaying different content. You control the number of items that are displayed at one time in the dataset settings.

Below is an example that shows some of the possibilities.

### Example

Let's say you have a recipes site where you store all your recipes in a collection, as in the picture below. It includes a picture of each dish, its cuisine, and the course it's served for. You have already created a dynamic item page that displays information about each recipe.

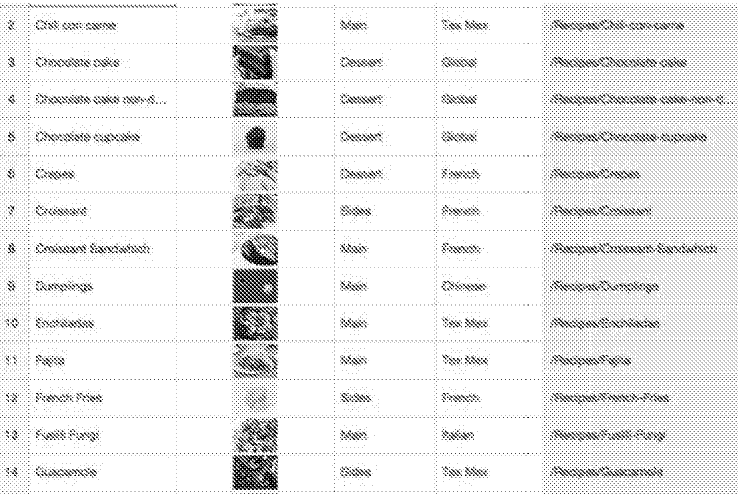

Now you want to use a repeater to list your recipes so your visitors can scroll through the list to find the one they're interested in. When visitors click the image of the dish, they go to that item's dynamic page. The image below illustrates what the repeater could look like. It shows a picture of the dish, its title, cuisine, and the course it's served for. The picture links to that item's dynamic page.

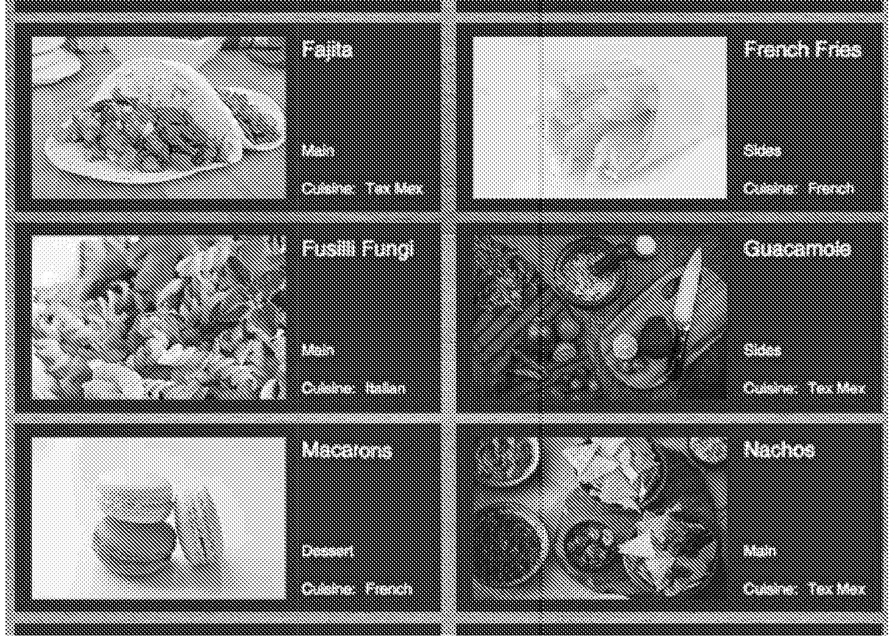

### Adding and configuring your repeater

repeater item by dragging the margin of one item.

Move the existing elements around in the repeater item and remove any elements you don't want. You can also attach new elements to your repeater, specifically text, images, buttons, boxes, shapes, galleries, and tables.

Whatever changes you make to the design or position of one item in your repeater are reflected in all the items automatically.

The figure below shows what our repeater looks like in the Editor. Note how we only have 2 repeater items, We do not need more because our repeater size is controlled from the dataset. Note also how both repeater items are identical.

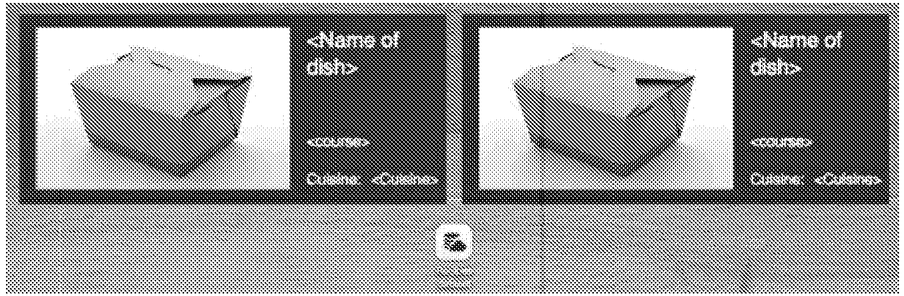

### Tip:

When adding large elements, first add them to your page and resize them. Then drag them onto the repeater element. When you see "Attach to item," you can drop the element.

### Connecting your repeater to a dataset

To show dynamic content, you need to connect your repeater to a dataset.

Once your repeater is connected to a dataset, it can retrieve the information from the associated collection. It also adjusts its size to match the number of items you want it to display. You control this in the "Number of items to display" field in the Dataset Settings panel. See below.

### Connecting attached elements to a dataset

Next you connect the attached elements to the dataset. Remember that any change you make to the template of one item is automatically reflected in all the items.
connect them to a dataset. Let's say you want to have a label that stays the same in each item. You can type the text in the text element and then leave it unconnected to a dataset.

In our example above, the image element is connected to the Picture field in our collection, and it links to the dynamic item page for that recipe. The <Name of Dish>, <course>, and <Cuisine> text elements are connected to their matching fields in the collection, so they can display dynamic content. The "Cuisine:" text element is not connected to any dataset, so it displays the same text in each repeater item.

### Changing the background image of repeater items

You can have each item display a different background image by connecting the background image of the repeater items to an image field in your dataset. The figure below shows what our repeater looks like when the background image is connected to the Picture field in our Recipes collection. We added a button that displays the name of the recipe and links to the recipe's dynamic item page.

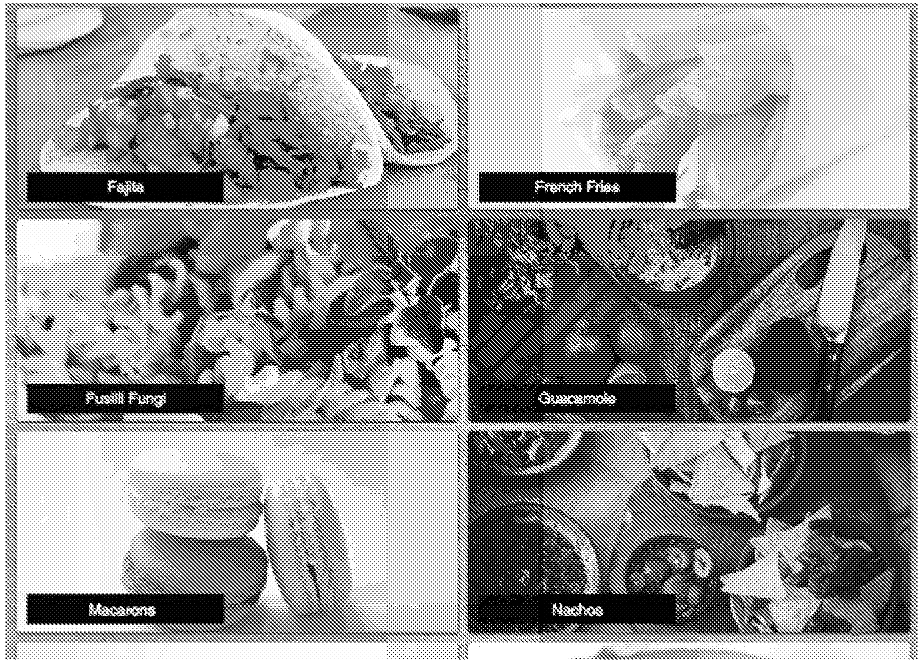

### Navigating through a repeater

The number of items your repeater displays by default is controlled by the dataset settings of the dataset connected to your repeater. This is called a repeater "page."
can see more items in your repeater. For more information, see Working with the Connect Button panel.

### Displaying information from more than one collection

Repeaters can also display related items from collections that have reference fields or in situations where you have filtered one dataset by another dataset. This allows you to create "master-detail" presentations, where each repeater item functions as the "master." See here for some ideas on creating master-detail pages.

### Related Content

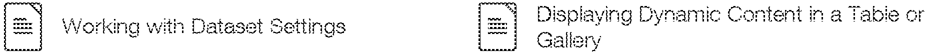

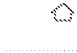

> Wix Code > Dynamic Pages

### Previewing Dynamic Pages

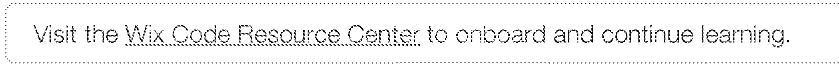

When you create a dynamic page, a Preview panel appears in the Editor. This panel contains a dropdown list that lets you choose which item or category from your collection you want to preview.

### Tip:

If you close the Preview panel, you can re-open it by navigating away and then back to your dynamic page.

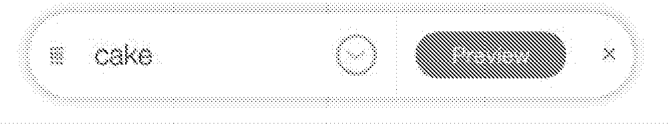

This dropdown list is automatically populated only with the items from your collection that can be viewed in this dynamic page. For a dynamic item page, this list includes all the items in your collection. For a dynamic category page, this list includes all the possible combinations based on the criteria you used to create your category page.

For example, if you have a recipes site and create a dynamic category page that filters on the course and meal of your recipes, this might be your list:

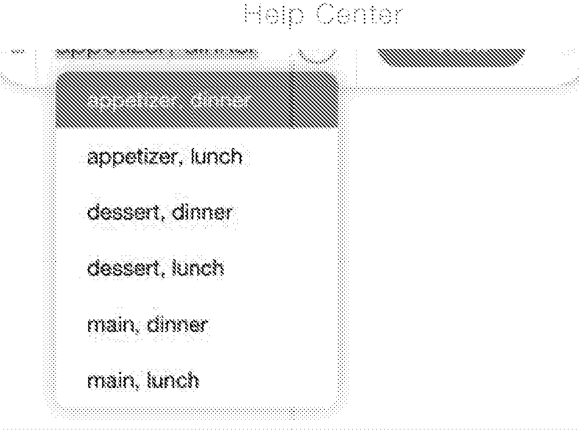

But the list for the item page for all your recipes would look like this: 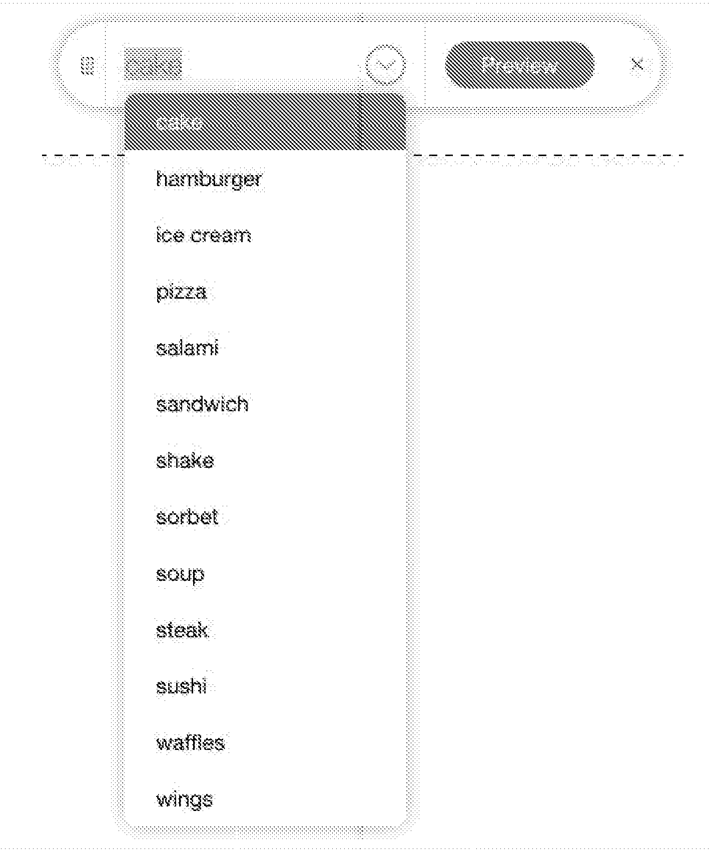 through and preview your items.

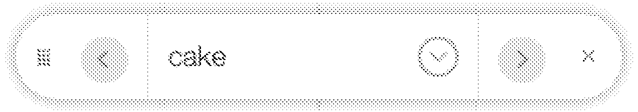

### Important:

In Preview Mode you are viewing your site with Admin permissions. This affects how your content is displayed and may not match your site visitors' experience.

### Related Content

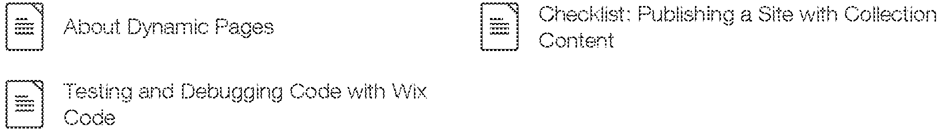

← All topics

### Connecting Data

### Articles

> About Datasets and Connecting Data
> Working with Dataset Settings
> Working with Datasets in the Editor
> Understanding the Different Ways to Add Links to Elements with Wix Code
> How to Add a Link to an Element with Wix Code
> Displaying Dynamic Content in a Table or Gallery
> Displaying Dynamic Content in a Repeater
> Working with the Connect Table Panel
> Filtering One Dataset by a Second Dataset
> How to Create a Filter by Dataset
> Working with the Connect Text Panel
> Working with the Connect Button Panel
> Working with the Connect Image Panel
> Working with the Connect Video Player Panel
> Working with the Connect Repeater Panel
> Working with the Connect Repeater Item Panel
> Working with the Connect Column Panel
> Working with the Connect Page Panel
> Filtering and Sorting Datasets
> Working with the Connect Strip Panel
> Dataset Actions for Buttons and Images
> How to Filter a Page Based on the Currently Logged-in User 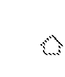
> Wix Code > **Connecting** Data

### About Datasets and Connecting Data

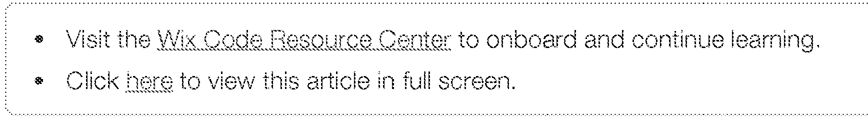

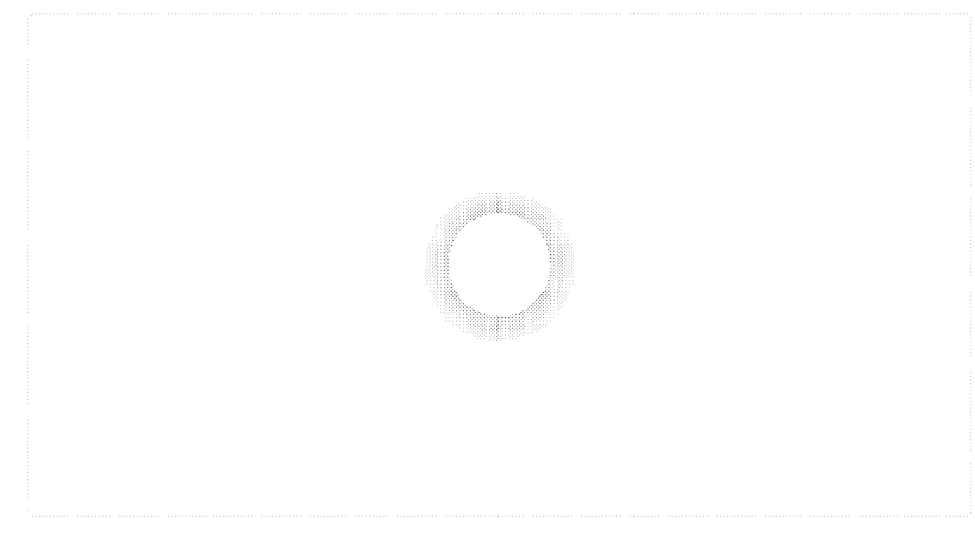

### Note:

Datasets appear as elements in the Editor but are not displayed in your published site.

Connecting data is the process of connecting your page elements to a database collection. This allows you to:
- Display the contents of a collection on your site pages
- Capture user input and store it in a collection available for your page elements to use.

A dataset controls:
- Which collection is available for your elements to use
- What your elements can do with the content in the collection (display, add, modify existing). This is also affected by your collection's permissions. See Working with Dataset Modes and Collection Permissions for more information.
- Whether displayed content is filtered or sorted

You can think of a dataset as the bridge, or connector, between the elements on your page and your collection. First you connect your dataset to a collection, and then you connect your elements to your dataset. This connects your elements to your collection, as illustrated in the diagram below.

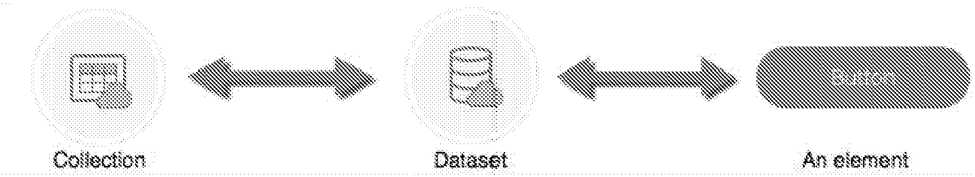

All the elements on your page that are connected to the same dataset work with your collection's content, as defined by the dataset. The dataset also tracks which item in your collection it is currently focused on. This affects how your collection's content is displayed, as well as how you capture user input. Let's look at some examples to see how this works.

### Displaying Content

Let's say you have a restaurant site and you want your visitors to be able to scroll through your menu options. You have a collection for all the items in your menu, and for each item you want to display:
- The name of the dish
- When it's served
- Whether it's an appetizer, main, or dessert
- Allergy information about the dish
- A picture of the dish

You can design your page to display each one of these items, but first you must do the following:
- Connect the elements on the page so that they display different items in your collection. 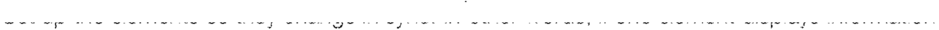
for a particular item in your collection, all the elements should display corresponding information for that same item.

### Connect the elements on the page so that they display different items in your collection.

To set up the elements, you would add the elements to your page and then use the 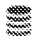 Connect to Data icon to connect them all to the same dataset. You would also define which field from your collection you want them to display.

### Add buttons to your page that let visitors scroll through your dishes.

Add buttons to your page to let your visitors move to the previous or next item in your dataset. These buttons need to be connected to the same dataset as your elements.

### Set up the elements so they change in sync.

When a visitor clicks the previous or next button on your page, all your elements display the content for the same item in your collection. This works because the dataset keeps track of the item that is currently in focus, so all your elements that are connected to the same dataset work together. If one of the elements changes the current item in focus, it changes for all the elements connected to that dataset.

### Capturing Content

Let's say you want to create a form for your restaurant that lets visitors sign up for a free dinner. With User Input elements you set up your form to collect the information you want from your visitors.

Here also you use the 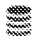 Connect to Data icon to connect each element to the same dataset. You also define which field in your collection you want to use to store the data that visitors enter in each input element.

### Tip:

Don't forget to set the permissions for your collection and dataset so users can write to your collection.

You also need to create a submit button. Your visitors will click this button after they've completed filling out the form to submit their information to your collection.

This button also needs to connect to the same dataset as your User input elements. When the visitor
This works because the dataset keeps track of the current item in your collection. In this case, the dataset is pointing to a new empty item in your collection. Because all of your elements are connected to the same dataset, they are all stored in the same item.

### About Dynamic Page Datasets

When you create a dynamic page, a dynamic page dataset is added to your page automatically. Like a regular dataset, a dynamic page dataset lets you connect your page elements to a collection. However, there are some ways that dynamic page datasets are different from regular datasets.

The content that a dynamic page can display is controlled by its URL. Because of this, unlike a regular dataset, in a dynamic page dataset you cannot change the collection that the dataset is connected to.

Because the URL controls the content the page can display, it also acts as a filter for your collection's content. Here, too, you change the content filtering by changing the URL definition in the page settings. You can still use the dynamic page dataset settings to add more filters and to sort the content on your page.

You also cannot delete a dynamic page dataset from your page. To remove the dataset, you need to convert the dynamic page to a regular pace.

### Related Content

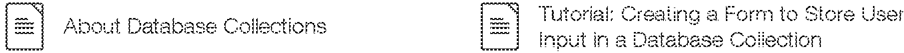

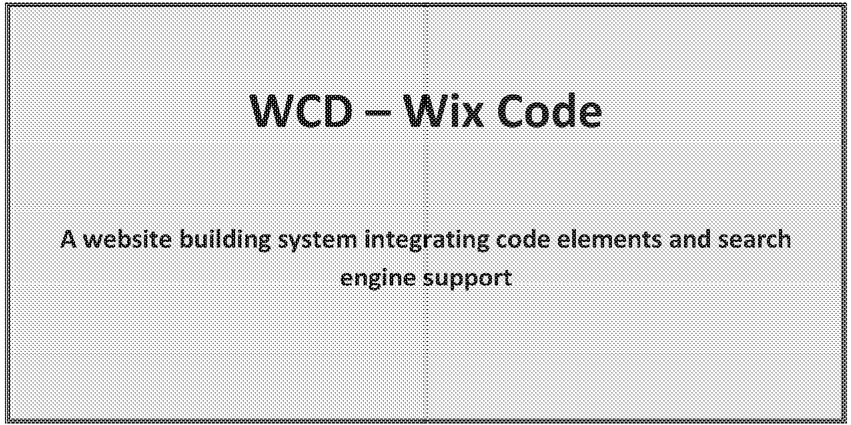

### Contents

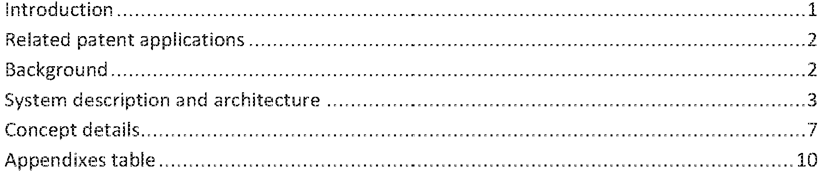

### Introduction

1. This patent application is directed to website building systems (and other visual editing systems), and describes sophisticated visual editing tools which provide for integration of User Provided Code (UPC) on both the client and the server side, while still generating web sites which may be indexed by search engines and may provide SEO support.
2. This patent application describes multiple concepts discussed in the context of Wix Code, a serverless site development platform being developed as part of the Wix website building system offered by Wix.Com Ltd. The discussion below includes a comprehensive description of such a system. It should be clarified that the Wix Code implementation is not the only embodiment of the concepts and technology, and additional and different embodiments may be constructed in accordance with the disclosure herein.

### Related patent applications

3. This application references (or is otherwise related to) the patent applications listed in appendix A1, all of which are assigned to the common assignee of the present application. The disclosure of each of the patent applications and patents listed in appendix A1 is expressly incorporated herein, in its entirety.

### Background

4. Applicant has identified a gap in the cloud ecosystem. The landscape of laaS (Infrastructure as a Service), PaaS (Platform as a Service), and SaaS (Software as a Service) provides solutions for VMs, Container and Networking, platforms of different types for backend developers, back-ends for mobile developers and ready-made software for individuals and enterprises. What is missing in the middle is a platform for web-sites and web-apps.
5. With the emergence of Serverless (also known as Serverless Computing), there are still no players in this gap. The applicant has developed WixCode, a platform for the development and deployment of web-sites and web-apps, in part, to address this gap. This platform provides elements such as frontend optimized JavaScript, SEO compatibility, WYSIWYG site builder, web methods, and backend JavaScript, as well as request time container boot.
6. In particular, disclosed systems provide the ability to visually create websites while specifying embedded code integrated with the web site for both front-end and back-end code. All of this may be done while preserving the ability of the web site to be indexed by search engines and apply SEO techniques.
7. A website building system may be a standalone system, or may be embedded inside a larger editing system. It may also be on-line (i.e., applications are edited and stored on a server), off-line, or partially on-line (with web sites being edited locally but uploaded to a central server). Disclosed systems may typically be a part of an on-line website building system, though they may be integrated with other types of website building systems.
8. Existing website building platforms based on a visual design environment are typically aimed at users with a skill set such as the one needed to operate Microsoft's Office suite. However, these types of users only build 5% of the sites.
9. Disclosed systems support more complex sites, which typically require a higher skill level to create. Such sites are typically created by designers, script writers, and developers - and include 95% of the sites in the Internet. Appendix A2 includes a presentation further describing this spectrum of site creators and site types.

### System description and architecture

10. Appendix A3 includes an in-depth internal technical description of an exemplary system and its elements.
11. Appendix A4 includes an internal technical description of an exemplary system for technical users / developers.
12. Appendix B includes a set of user-facing guides and tutorials describing an exemplary system's specification and use by users / developers.
13. Appendix C includes a set of presentation, tutorials and video scripts providing an overall introduction to an exemplary system.
14. The basic design of an exemplary system (as built in addition to the basic Wix system) consists of 15 sub-systems described below. A 16^{th} "sub-system" is the User-Provided Code (UPC) which may be provided by the site designer and executed as part of the system (with the appropriate encapsulation and separation in place).
15. These exemplary sub-systems may have client-side presence, server-side presence, or both. The exemplary sub-systems may include, among others: 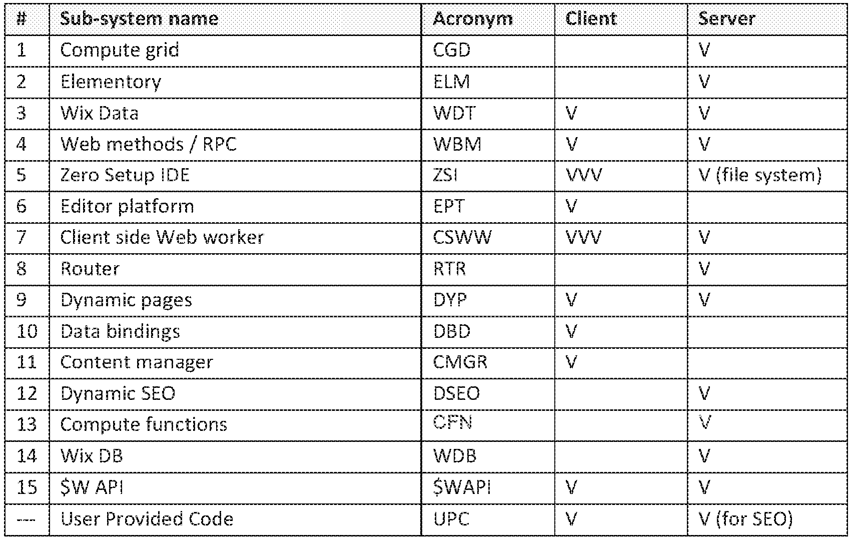
16. These exemplary sub-systems, and their example functionality, can be briefly described as follows: 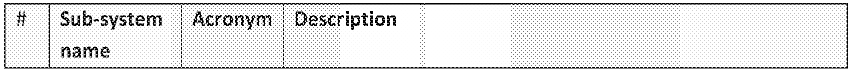 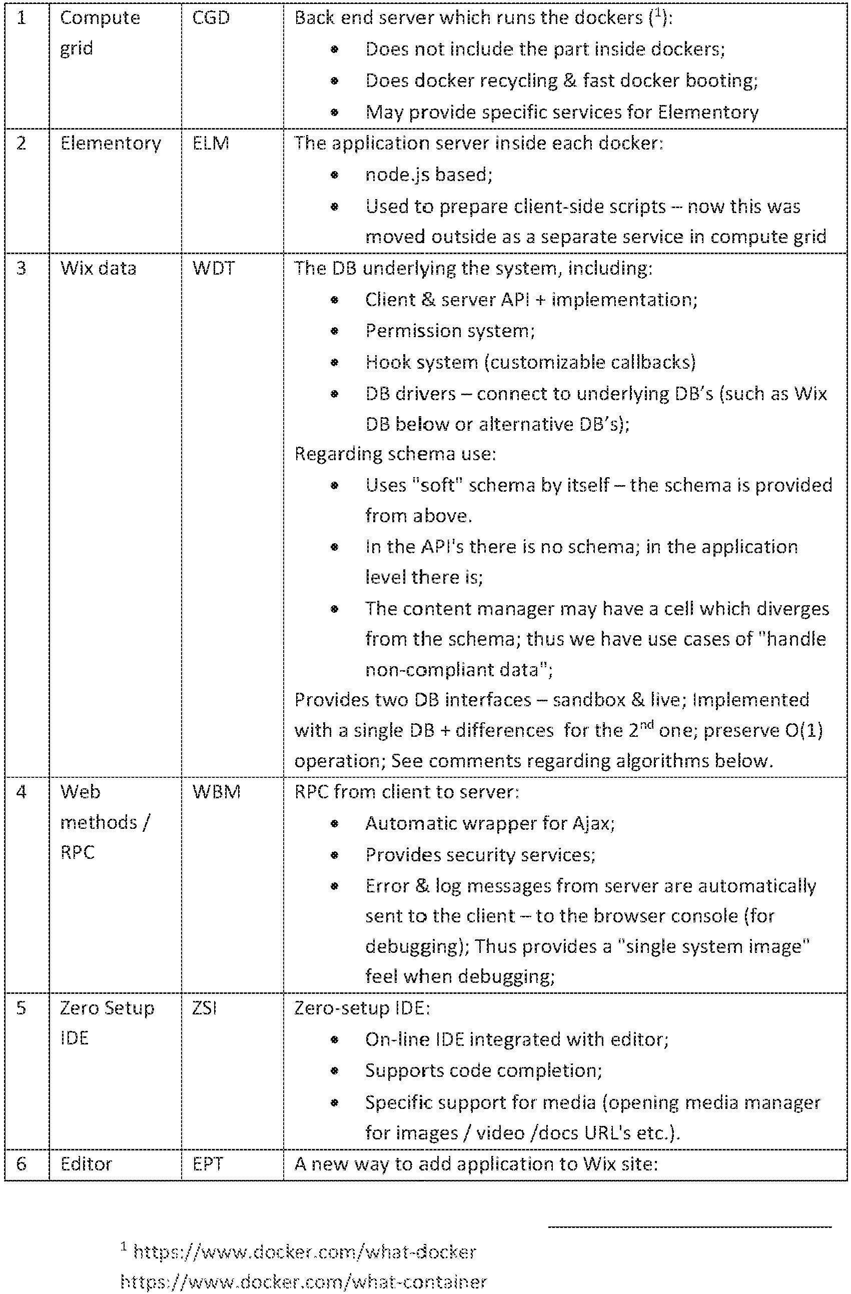 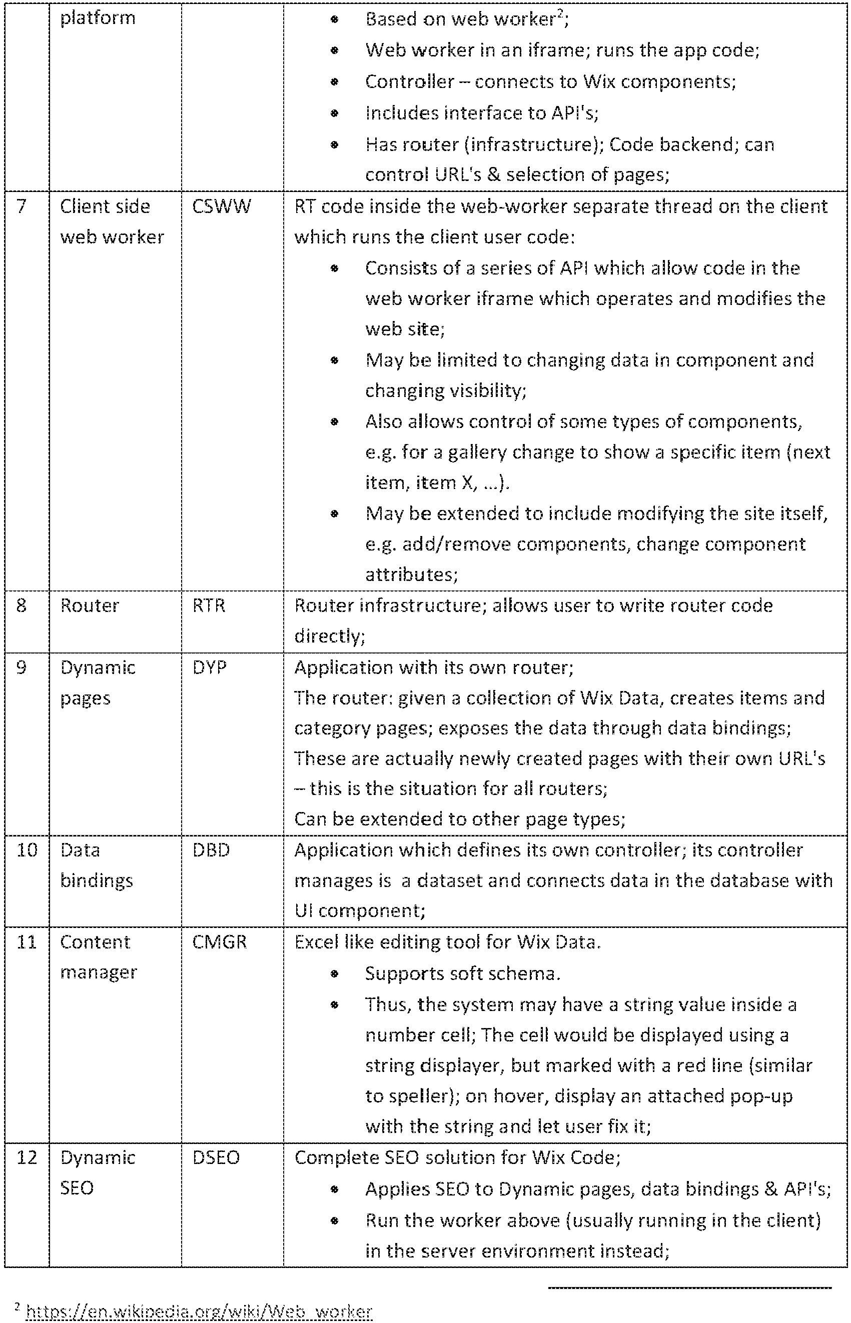 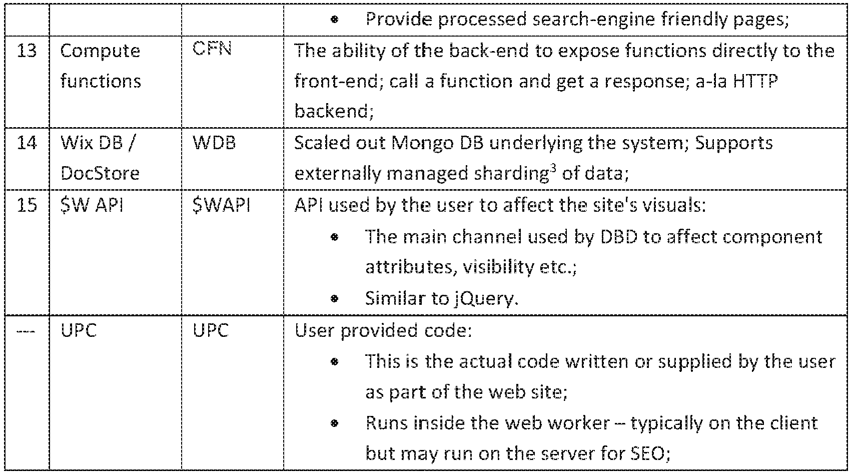
17. The relationship between the various sub-systems can be visualized as follows:
   ³ https://en.wikipedia.org/wiki/Shard (database architecture) 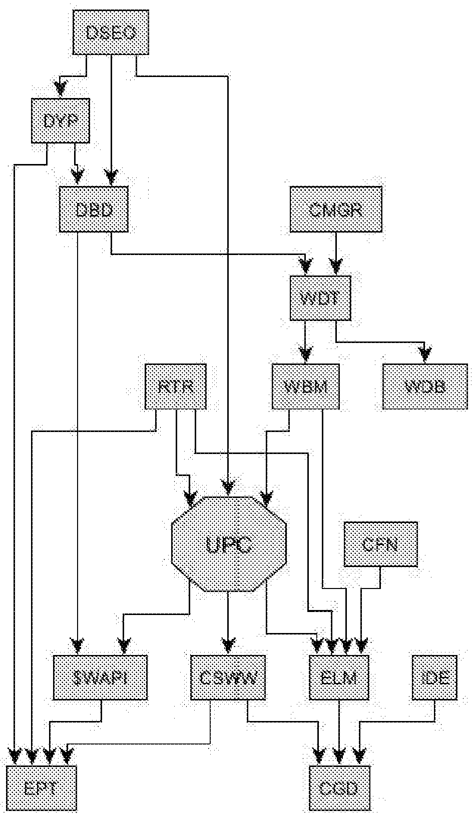
18. A detailed description of each of these exemplary sub-systems is included in appendix A5.
19. Appendix A6 includes a specific "database overlay" algorithm for the implementation of one embodiment of WDT above. An alternative embodiment may use "tombstone records" (signifying records which have been deleted) in the discussed "Plus DB" instead of using a "Minus DB".

### Concept details

20. Applicant has identified a number of areas, functions, and capabilities described in greater detail herein. These include the following:
   20.1. Custom Back-end Functionality in an Online Website Building Environment.
   20.2. Dynamic Preview of Database-Populated Web Pages.
   20.3. Editing a Database during Preview of a Virtual Web page.
   20.4. On-Demand Web-Server Execution Instance for Website Hosting.
   20.5. Common Database for Live Operation and Testing of a Website.
   20.6. Automatic Layout Recommendation Engine (Magic Layout).
   20.7. Automatic Website Design Recommendations to Improve SEO.
   20.8. Segregated User-Uploaded Plugins Avoid Infection Across Co-Hosted Websites.
   20.9. Segregating User-Uploaded Plugins for Websites.
   20.10. User-Supplied Plugins Extend Online Editor Functionality.
   20.11. iFrame Editor Interface Segregated from Design Tools.
21. Appendix D provides further details and disclosure regarding each of these concepts. Below are some specific additional clarifications regarding some of the concepts.
22. Custom Back-end Functionality in an Online Website Building Environment:
   22.1. The system may provide specific search engine spider support through a script or marker included in the HEAD tag of the generated pages.
   22.2. Such a marker or script may direct the spider to use our specific dedicated web service, helping the make the pages indexable.
23. On-Demand Web-Server Execution Instance for Website Hosting:
   23.1. This concept involves rapid boot of docker containers running a web server instance configured for a specific site (including the specific plug-ins and server-side user provided code for this site), and doing so quickly enough to respond to an HTTP request without timeout, and in a total timeframe acceptable to users.
   23.2. Starting a virtual machine typically takes a number of **minutes.** Starting a Docker container still takes 2-3 seconds. Both of these times are not acceptable.
   23.3. In disclosed systems, a pool of standby dockers (e.g., containers) may be provided containing all relevant non-site-specific code but without any user/site specific code.
   23.4. The system may listen on a live port for a request to attach to a server for the specific web site. If there is a live docker associated with the specific web site the system may attach to it. Otherwise, it can use a standby docker from the pool and inject the requested content into it, or instruct it to load such content.
   23.5. The system may drop standby containers if a site has not been active for a given period (such as 15 minutes).
24. Common Database For Live Operation and Testing of a Website:
   24.1. This concept involves having staging & live data running on the same DB.
   24.2. As noted above, an example algorithm is detailed in appendix A6.
   24.3. Any writing to the DB by the development system may create a copy of the data. This copy may be the one visible to the development system. The development data may not be visible for the live site.
25. Segregating User-Uploaded Plugins for Websites:
   25.1. The concept discusses the use of iFrames to take content from one site and incorporate into another site securely. However, such content incorporation may be implemented using a number of methods, including:
      25.1.1. Transferring the content via AJAX.
      25.1.2. Direct inclusion of the remote content subject to static code analysis, e.g. analyze the JS code to see if it is safe.
   25.2. Disclosed systems use a smaller (and typically invisible) iframe to run the plugin code, while the plugin UI itself may be native to the website building system. This is different from the arrangement used with TPA's (Third Party Applications), in which some or all of the TPA's UI is implemented in an iFrame, though the TPA may still communicate with other native components in the page hosting the TPA (as discussed in the TACA Wix patent application - see appendix A1).
   25.3. Plugins also differ from TPA in that plugins typically involve only user provided code (which runs on the client side only). TPA code on the other hand runs on the TPA provider server.
   25.4. Thus, disclosed systems may provide the following benefits:
      25.4.1. Allow installing a plugin into a site so it adds functionality but doesn't jeopardize the web site itself due to code isolation.
      25.4.2. The plugin can't access the cookies & DOM of the site - and this security measure can't be bypassed like the (limited) encapsulation provided by Web Components⁴ or similar systems.
      25.4.3. Disclosed systems allow installing multiple plugins so they won't interfere with each other (e.g. by placing them in separate iFrames).
      25.4.4. Disclosed systems may allow installing a plugin which extends another plugin - using a single iFrame for both, or using an API between multiple iFrames. Such plugins are not isolated or sandboxed from each other, e.g. they may be part of a plugin family provided by the same vendor.
      25.4.5. Disclosed systems may provide a secure plug-in sub-region with a rich API which is decoupled from the site itself, allowing multiple plugins to reside in the same area, and supporting a rich API though the $w API described above (possibly using a controlled cross-iFrame API as described in the TACA patent application - see appendix A1).
   25.5. This arrangement differs from regular iFrames, as iFrames do not have a developed API, and do not interact with the hosting WBS (website building system) or WBS page. It is also effective in preventing CSRF (Cross-site request forgery), cookie theft and XSS (Cross-site scripting). However, it can only be used in an on-line WBS.
   25.6. This should be contrasted with existing prior art systems, which typically rely on having correctly written plug-in, or are limited to specific plug-ins.
      ⁴ http://www.webcomponents.org/
   25.7. The implementation may rely, for example, on hooking on the gateway for PostMsg and filter the specific messages. Thus, disclosed systems may also implement a user-oriented permission technique, which allows the user to precisely control the access permissions granted to any plugin. This is similar to the way in which a Smartphone operating system provides precise control over the permission granted to any installed applications (e.g. "Can App XYZ use the GPS / access your contacts?"). However, this is done without requiring downloading of a copy of the plugin before installation.
   25.8. It should further be noted that disclosed systems, as an on-line WBS, may store plugins in a single place, with all installations of the plugin updated immediately when the plugin is updated. This is in contrast with existing off-line prior-art systems in which each plugin installation is separate and should be updated by itself.

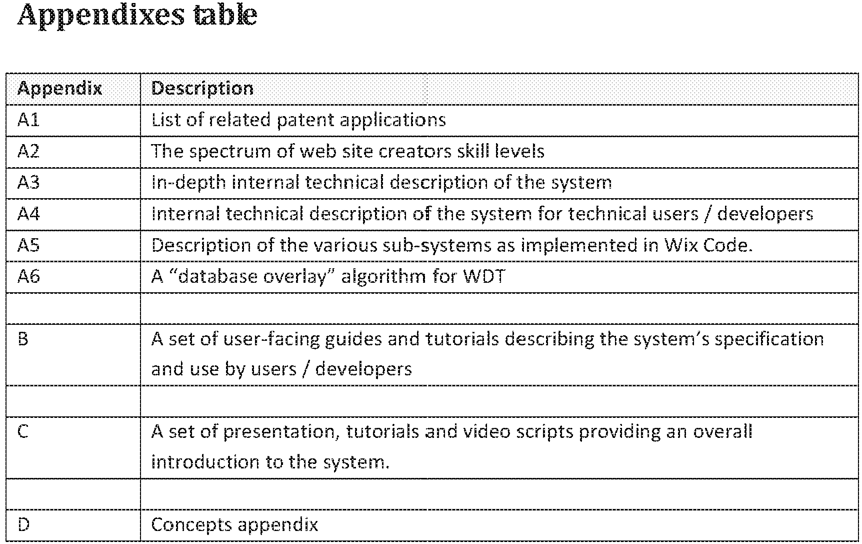

### 01 - CGD

### Compute grid

### Wix code compute grid

### Purpose and function

The grid has two main functions in wix code:
- When developing frontend and backend code, editor mode, it provides the underlying file system for the source code while providing front-end code bundling and backend code execution for preview purposes in a secure multi-tenant manner
- For public viewing, public mode, fast, secure multi-tenant reliable executors for user backend code.

### Compute Grid architecture

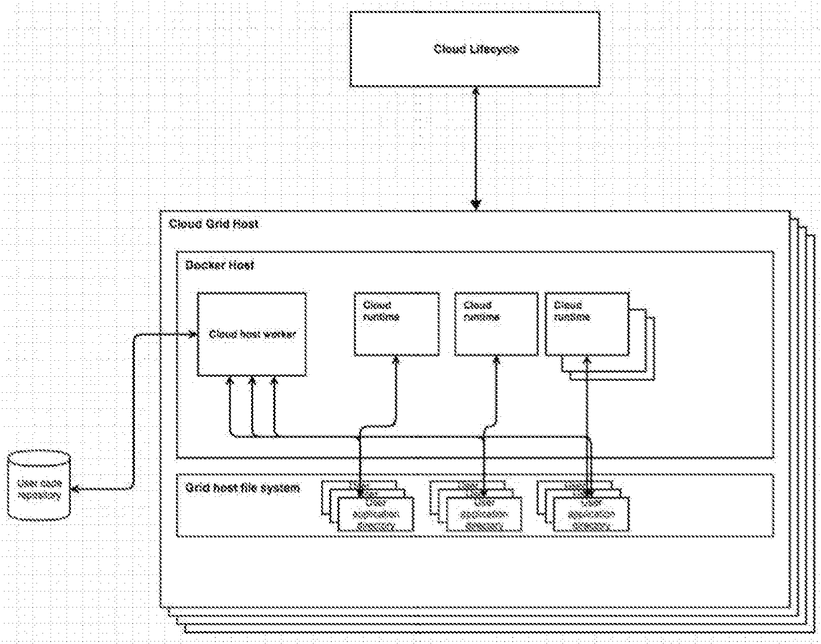

### Cloud Runtime FKA Elementory

### Purpose

- Cloud runtime execution is the one single purpose of the compute grid existence
- Cloud runtime containers are designed to be reliable, fast and secure

### Fast

- Cloud runtime container, are lightweight containers running a single node JS process.
- As it takes relatively long time to make a container ready to serve user code we maintain a pool of standby containers for that purpose
- It is the responsibility of cloud-lifecycle (see below) to make sure there are always enough standby containers to serve the on-demand capability

### Reliable

- In public (non editing) mode
   ∘ Containers are completely disposable
   ∘ The system can provision a running container with user-code in less than 100ms
- In editing mode
   ∘ User code is automatically archived periodically
   ∘ The user can execute and preview her code immediately since code editing is done on the same file-system the cloud runtime container is running.

### Secure

- A cloud runtime container only runs one application so no content leaks are possible
- Containers contain only a node JS binary, statically linked
- Root filesystem of the container is read-only
- Each container is executed under a unique user id
- User code is injected by Host Worker externally of the container
- A container can't access any code but the users whose code was assigned to it
- User code file system does not have execute permissions
- Disk quota, memory, cpu, network and other system resources quota limitations is enforced on the container

### Cloud Lifecycle

- Although external to the grid host, cloud lifecycle it is worth mentioning in this context. Its function is to control and manage the wix code compute grid.
- Lifecycle uses two components on the grid host to manage the host and cloud-runtime containers
   a. The docker daemon: To start, stop and control host-worker and cloud-runtime containers.
   b. Host worker: To manage cloud-runtime container filesystem permissions, quota and archiving features.
- Relevant to this document is lifecycles function to allocate a unix UID per each user-code container cloud-runtime is using

### Grid host

The compute grid is built of three main components which are managed by Wix-code lifecycle service. Each host on the grid has the following component:
1. Docker daemon
2. Host worker (in a docker container)
3. Cloud runtime fka "Elementory" (in a docker container)
   - When a grid host starts running it registers itself to lifecycle by sending a message container the grid host IP along with its defined resources: CPU and memory.
   - A grid host must have a working docker daemon installed and running for cloud lifecycle to manage it.

### Host worker

Host worker is part of the components used by cloud-lifecycle to manage the host. It has two responsibilities:
1. Extend lifecycle ability to manage and manipulate system permissions, quotas, network, file system and code archive.
2. Provide file system like API for the editor while the user is editing her code in Wix editor.

### Host worker lifecycle

1. Pre cloud-runtime container creation
   a. Create directories for use code
   b. Set appropriate permissions and disk quota
2. After cloud-runtime container is up "warm"
   a. Set network traffic enforcement on the container
   b. Periodically auto-archive user code while the user is editing her code
3. When cloud lifecycle decides to stop a container
   a. Save and upload user code to the database (in editor mode)
4. Run periodic tasks scheduled by lifecycle
   a. Located and kill "zombie" containers
   b. Clean up disk after code has been archived

### Host worker file system API

As mentioned above, the other responsibility of host worker is to provide virtual file system *(VFS)* API for the editor. Its responsibilities in that sense is to:
1. Provide basic file system manipulations such as:
   a. Create, Updated, Read and Delete operations for file and directories
2. Make sure the above operations are made only on-behalf-of the permitted user while maintaining quota and permissions restrictions.

### 02 - ELM

### Elementory

### Wix Code - Cloud Runtime / Elementory

### Overview

Cloud Runtime (aka elementory) is a node.js based service which handles user requests both for edit, preview and view mode. The service is responsible for executing user code in multiple scenarios and for serving and transpiling user client code.

### Main endpoints

- Web methods - specified in sub project #4 document.
- Dynamic routers - specified in sub project #8 document.
- Wix data - specified in sub project #3 document.
- Wix endpoints (compute functions) - specified in sub project #13 document.
- Static files - transpile, bundle and serve user code.

### Internal/extemal modules separation

The service is split into internal and external modules, the user code is mounted into the external module and the user can access the wix libraries from there (wix-data, wix-routers, wix-endpoints, wix-fetch).

In order to limit the user to access the external modules only, the service uses scoped-require module (open source project developed by wix).

### User code trarspilation

Wix code allows the user to write code using the latest ECMAscript features (till es2017 for now), one of cloud runtime responsibilities is to transpile this code into a supported version of JavaScript by the runtime environment.
- Client side code - cloud runtime has an endpoint for requesting .js and map files, the service is sharing the same core library with cloud-bundler-server for transpiling and bundling client side code.
- Backend code - the latest features of ECMAscript are not supported by the current LTS version of node(v6.11.0), the service uses babel-register in order to lazy evaluate the transpilation for required files.

### User code execution

Via web methods, wix-data hooks, custom router, data-binding router hooks and compute functions, the user can write backend code which eventually needs to be executed by cloud runtime service.

Cloud runtime uses node domain in order to wrap the user code with context and it enables to capture the user code stack trace and logs.

### 03 - WDT

### Wix Data

### Wix Data

### Wix Data API

Wix Data API - used to access the database. Wix Data API is used both in client side browser code (see CSWW) and in user backend code (see ELM). The API documentation can be found here.

Wix Data API module also performs data transformation and error handling.

Wix Data API communicates with Wix Data Provider using Web Methods Protocol (see WBM).

### Wix Data Provider

Wix Data Provider - is the implementation of the API. If user has no backend code of his own, the implementation runs and serves API requests in Cloud MultiTenant Server, otherwise it runs in user Docker container (see ELM). Wix Data Provider performs necessary Wix Data logic:
- Handles authorization. Permissions configuration defines what permissions does each role (site owner, data owner, anyone) have (read, insert, update, delete).
- Handles hooks. Hooks allow user code to intercept and modify Wix Data requests performed through API (see docs here)
- Performs necessary query and data transformations to support advanced Wix Data features
   ∘ Hides deleted fields from results and filters
   ∘ Enriches resulting objects with computed fields (computed field is a special field defined in schema, that allows generation of new fields based on existing field data)
   ∘ Joins referenced collection items
   o Enriches documents being saved with owner identification

Wix Data Provider is aware of the Schema and permissions stored in VFS.

### Docstore

Docstore - service that acts as a bridge between MongoDB and Wix Data Provider. It
- Performs query translation from Wix Data to Mongo format
- Includes database copying and data syncing capability (allowing us to sync data from sandbox to live and from template to users site)
- Performs data enrichment by generating ids and storing document creation and update times

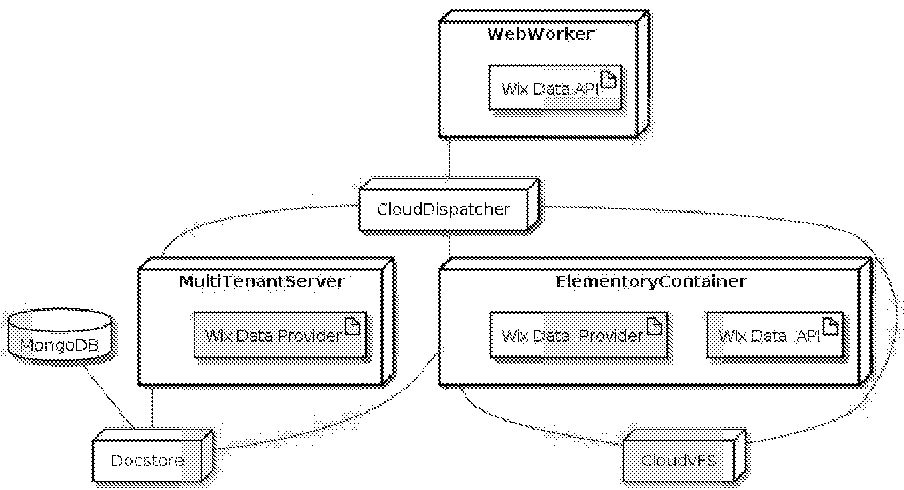

### User libraries

To the best of our knowledge there is no direct use of any Open Source code in any of the projects (as in copied).

Open source libraries used in Wix Data API and Wix Data Provider:

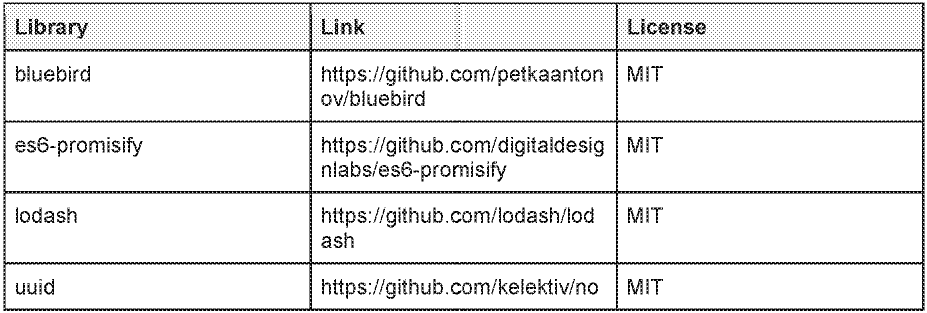

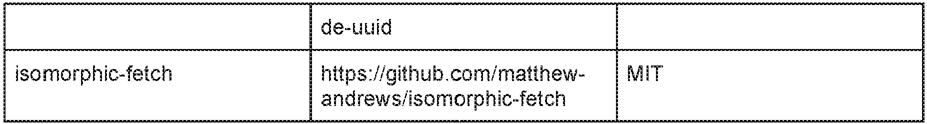

### 04 - WBM

### Web Methods / RPC

### WBM Web methods / RPC

Web methods are functions exported from ECMAScript modules that can be invoked over the network (such a module is called a web module). It is a mechanism to enable the code running in CSWW inside the end user's browser to seamlessly interact with code running in ELM. This mechanism handles authorization of which roles are permitted to invoke which web methods, injects request scoped information into web methods, propagates errors and logs to CSWW to be logged to the browser console. Additionally, it enables the same code to be invoked from user code in both CSWW and ELM using the same ECMAScript module import syntax. This approach allows for a "single image system" feel when debugging and developing applications.

The server part of web methods runs inside ELM and can be freely invoked as regular functions that return promises from user code running in ELM, such as RTR Hooks and Custom Routers, WDT Hooks and CFN. WBM is also used as the RPC mechanism for WDT, to make it possible to be used in the same fashion in backend code and in page code. JavaScript proxies for invoking web methods as regular functions that return promises are bundled with the user code and run inside CSWW.

The mechanism is implemented by the following components:
- web-method-domain - attaches request scoped information to node.js domains, which is later retrieved by functions generated by web-module-extension and additionally overrides node.js default logging functions to collect logs to this domain.
- web-module-extension - uses Babel register to override the behavior of the global require function to transpile ECMAScript 2015 code to target the version of node used in ELM and hooks into the require mechanism to wrap functions exported from user web modules with.
- web-method-express-router - is the entry point to ELM for requests coming from elementory-support. It handles authorization of web method invocations from CSWW. It also forwards any logs collected during the execution of the web method once the web method execution has finished.
- elementory-support - provides the client side of the web method over the wire protocol. Runs in CSWW and is invoked by webmethod-proxies. Also outputs any logs received from elementory to the user's browser console.
- webmethod-proxies are generated by performing static analysis of web modules to determine which functions are exported. These are bundled with the user code to run inside CSWW.

The web method loading and execution is implemented using babel-register with babel-preset-es2015-node6. Scoped-require is used to alter the file system locations of modules that can be imported from user code. Webmethod-proxies are generated by performing static analysis using the acorn parser and bundling the generated proxies together with the user page code using browserify. The over the wire protocol used by elementory-support and web-method-express-router is based on JSON with extensions for handling native JavaScript dates.

### Component diagram

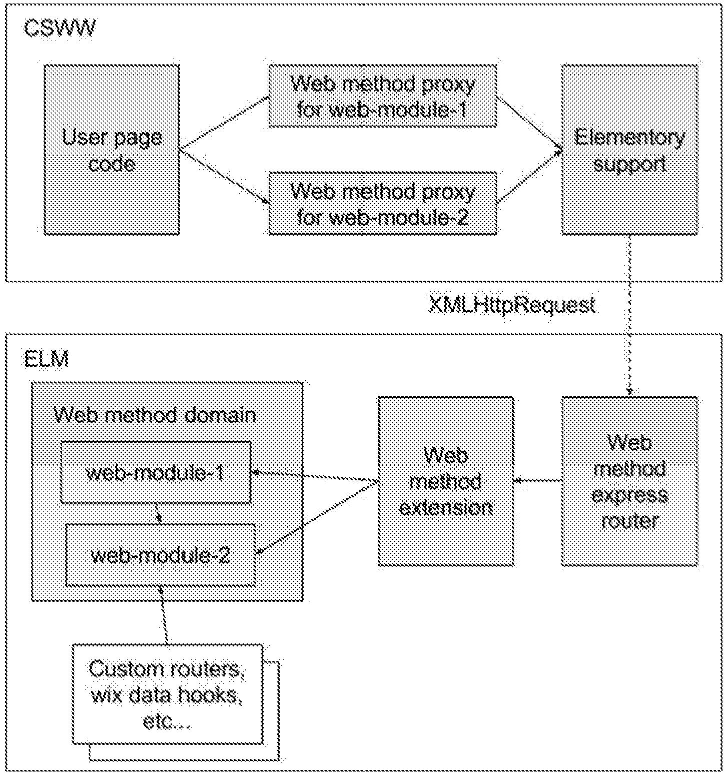

### 05 - ZSI

### Zero Setup IDE

### IDE

The IDE component is an online code editor embedded in the Wix Editor.

It can be used to edit code of existing site pages, or edit files that exist in the Wix Code file system (public and backend files).

The IDE also provides rich contextual code completion, Wix media manager integration, code formatting and custom warnings and errors.

All these custom features are built on top of an existing open-source IDE called Orion.

### Code Completion

The IDE provides to the user rich code completion, both for the standard JavaScript environment and the Wix Code API.

Code completion can suggest completions for the following:
1. Wix Code component API ($w) - provides suggestions depending on which elements exist on the current page, for example "$w('#button1')". Meaning the user will see suggestions only for the elements that exist on the current page, and not for elements from other pages. These suggestions won't appear in regular public/backend files, only when editing page code.
2. Wix Code general APIs, such as "wix-data", "wix-window", which don't depend on the context of the code, meaning they are available when editing code for a page or in regular public/backend files.
3. JS objects and functions, such as "console.log()", also available in all file types.
4. Templates - provides template suggestions both for module imports (for example "import location from 'wix-location' ") and for JS common templates, such as for-loops.
5. Function parameters - provides the parameters and their names for functions

The code completion widget also provides a brief description for every selected suggestion, along with a link to the full documentation.

### Media Manager Integration

A user can add code to a site that changes an image element source, meaning replacing the actual displayed image. She can set the source property of the image to any image URL, or to an image from the Wix media manager. When trying to set the source property, the code completion widget will suggest to open the media manager. There, the user can select an image, and its URL (custom Wix Code URL protocol) will be pasted to the code, for example: "$w("#image1").src = "image://v1/6e7958de786842eb811149ac9c25f73c.jpg/2362_4724/Cotton Candy Cone";" The user can also hover over the URL, and a tooltip will open showing the image, and a link to open media manager to replace the image.

### Technical information

The IDE is built on top of the open-source project Orion [https://wiki.eclipse.org/Orion]. In order to provide our own custom experience and Wix specific bug fixes and behavior changes, we override specific modules from Orion with our own. Instead of modifying the original Orion code, we have a custom module loading configuration, that knows to load our overriding modules instead of the original ones, keeping our code separate from the original source code.

We don't use any other libraries or packages in the production code except for Orion and Orion's dependencies.

In order to build and test the code, we use a myriad of open-source packages, such as grunt, mocha, karma, selenium-webdriver, lodash and more. The code for these packages is used only in development time and is not shipped as part of the final product.

In order to provide code completion, we depend on the internal module "wix-code-reference-docs". This module depends on all the Wix Code libraries that expose API (such as $w) and builds one big file that holds all the information needed to provide code completion. This file is copied during the build process and used in runtime by the IDE.

The entirety of code is written in JavaScript.

### 06 - EPT

### Editor Platform

### Editor Platform

The client side web-worker and SDK, enables custom code to run on the web application. The platform enables writing a code that is reusable, and therefore, can be distributed to multiple instances in the same web application and across web applications. The platform consists of the following components:
- **App Global Entity:** Shared state between its parts
- **Routers:** Controlling URLs and page resolution
- **Controllers:** Logic chunks of the app, Multiple instances
- **APIs:** Expose and mix everything

### Application Global Entity

A global state for the application enables scenarios such as:
- Shopping cart, aggregating items during a multi-stage buying experience
- Multi-page wizard experience
- Multi-stage checkout experience (cart, shipping information, account information)
- Authoring experience that saves all information after finished

The platform allows the user-code to store application global state to enable the scenarios above. It also provide abstraction for the client web worker to implement page transition and cleanup without impacting the logic aspects of the application

### Application Routers

The application can create routers (see section 8) and register it in the website. The application can store configuration information in the website, allowing the application developer to create a single server endpoint for the router and have multiple configurations per the distributed target. An example of a blog routing requirements can be:

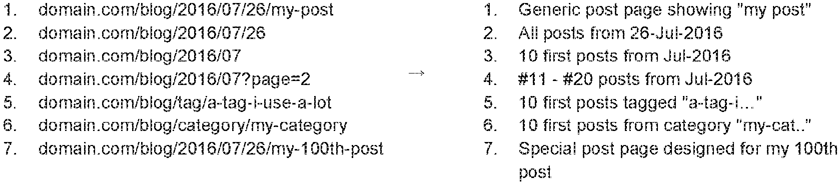

By allowing the application to configure the router and save it per-instance/site, the router server code can be created once and support different URL formats (with/without dates) and specific pages for specific posts, although the URL structure is the same. Common usages are:
- Cascading page templates based on specificity (i.e. item → product → digital goods)
- Different URL formats based on SEO (Search Engine Optimization) requirements
- Addition of pages by adding content in a CMS (content management system)

### Controllers

Controllers enable a creator of user code to package a piece of code with a list of components in a reusable way. In the normal (wix-code) method, the user accesses components based on their page-unique ID. This reduces the option to use it twice on the same page, and makes distribution hard. Controllers have the following properties:
- A **configuration,** save on the site. This configuration enables the code to be reusable as it provides a way to differentiate one instance of the controller from another. For example, if a controller code connects to external data source, fetches information, and presents it using an image and a text, the configuration would be the item ID in the remote system. This way, 2 separate controllers on the same page can represent 2 items in the remote system using a different image and text components
- **Connections** to components, using **role** (a string) as the name, with connection configuration. This enables the controller code to be written in advance, and then to be distributed, regardless of the IDs the components will receive on the page. This is especially useful for 2 or more controllers on the same page that access 2 different components, which can not have the same ID. In most cases, the controller will select (see selectors in section 15) the components to manipulate using the role. Each component can have multiple roles defined, but multiple controllers, to enable complex data binding scenarios and behavioral programming models (i.e. each controller is responsible for a different aspect of the component, for example a drop-down component can get the list of options from one controller and save the selected one through another)

### APIs

Each controller can expose its own APIs. This makes the controller appear as any component, and has similar behavior. It enables other code-creators, on a site level or of other controllers reuse the controller code as a black box, turning the controller to an extension block of the runtime environment

### 07 - CSWW

### Client Side Web Worker

### Client side web worker

The client-side web worker enables extending a website with custom functionality. The most common usages of that extension are:
- Dynamic content enrichment of the site
- Custom user flows
- Custom interactions

In order to enable this, while maintaining SLA, security, and the ability to host these extensions in a unified cloud, the following architecture is used:

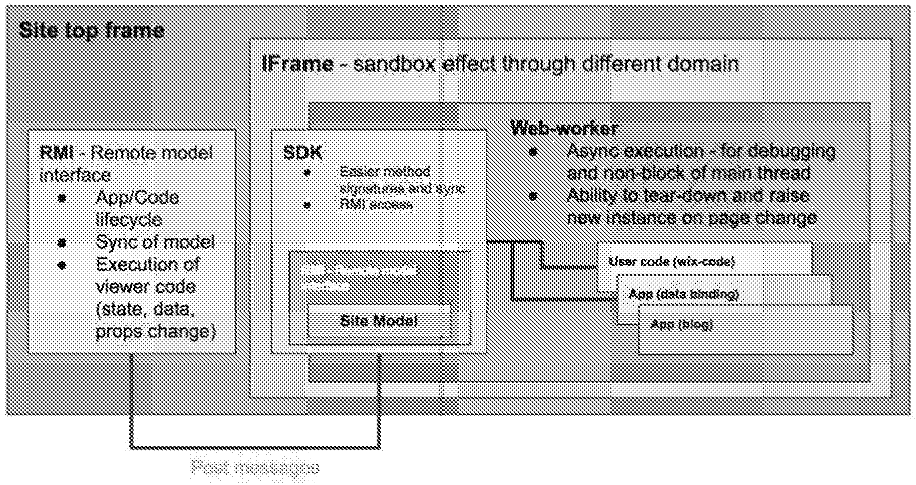

Below is a list of logical components of the system:
- **Site top frame:** This is the main page of the web application. It is served on a user's domain or the general domain of the hosting service (Wix). This is the main engine that runs the web application, AKA "the viewer" or "the runtime environment"
- **IFrame sandbox:** In order to preserve the security of the top frame from malicious code (cookie hijacking, etc.), an IFrame with a different domain is erected. The domain difference is sandboxing system resources (window, cookies, etc.) and memory (all communication can be done using postMessage only and not by memory sharing)
- **Web-worker:** A web worker is a standard browser capability that allows running asynchronous code. The web worker creates another layer of protection to the top frame, as all communication is possible via postMessage, and the API surface globally available in the web-worker is much limited than the top frame. For example, window global object is not available, DOM (document object model) access is forbidden, meaning that web-worker code cannot manipulate UI elements. In addition to the security benefit of the web-worker, it's async nature also ensures that the top-frame will not stop responding even when the web-worker is CPU intensive. Another benefit is the ability to debug and pause on user-code (code running in web-worker) without blocking the top frame execution context, and allowing the user to see propagation of the user-code in the UI layer, even while in breakpoint
- **RMI (Remote Model Interface):** This component is responsible to create and maintain a logical model of the top frame, and share it with the web-worker, via postMessage transport layer. Changes in the model will have effect on the web application. For example, a button's text and link are represented in the model. Changes of these values in the model will affect the visual button component, and its functionality. In addition, the RMI layer enables calling predefined methods in the top frame by the web-worker. This is used to enrich the functionality of the web-worker, and perform actions that are not related to the state, as represented by the model (i.e. animation). The remote model bridges the async barrier, allowing the user-code the perception of synchronous code, which is simpler to write, although the actions are async. For example, user-code changes an image URL from A to B. The next line of code reads the value to determine the next actions. The model already have the value changed from A to B, so it returns B, which is the consistent value, although the async behavior of the model does not guarantee that it is already presented in the UI of the web application
- **SDK:** The SDK is a wrapping layer on top of the RMI model. It is used to expose a simpler API to the user-code, simplifying the model into a consistent and documented method calls and property setters and getters. It exposes lifecycle methods and the $w object as the base context for the user-code. Detailed description is provided in section 15

### 08A - RTR

### Router

### RTR Router

Routers enable the site owner to define a custom URL structure for their site. Routers are used by dynamic pages to resolve a specific URL to a page and by SEO and the editor to get all the pages available in the site via the sitemap request. The routers also expose additional SEO information to be associated with a page. There are two types of routers: data binding and custom routers. The routers are backend components running inside ELM.

Data binding routers automatically connect a URL structure based on one or more database fields and custom text fragments provided by the site owner. This can be done completely through the UI in the editor and requires no user code. Additionally, these routers can be customized by hooks, allowing the user's code to modify the parameters passed to the router, modify the response and modify the query issued to WDT.

Custom routers give full control of the URL structure to the site owner. From the editor, the site owner can create a router for a specific prefix, where the rest of the URL will be interpreted by his custom router. The router requests are handled by two functions provided by the user: router and sitemap. The router function handles resolving single URL's to specific pages. The wix-routers API describes the data that is passed to this request. This function is expected to return one of the predefined responses in the API (e.g. OK, not found, forbidden, etc) along with any additional SEO information. The sitemap function is similar, except that it's expected to list all the pages available under the route.

The dynamic routing is achieved by two collaborators: one running in the user's browser and one in the backend. When a page is loaded via a URL that is handled by dynamic router, the default HTML page is loaded in the browser and an AJAX request is made to the backend to determine what page should be displayed. The backend part of the code is not aware of what prefixes are handled by what routers. All the data necessary to resolve a URL, including the pages the router can choose to display, is sent in this request and the response from the backend is used to open the appropriate dynamic page for the page and populate it with data. The router can choose to populate the data that will be exposed to the page when it will be opened, so that another round trip to the server can be avoided.

### 08B - RTR

### Router - detailed

### Dynamic Routing

### Data-Binding Router

### Custom Routing

### Introduction

Dynamic Routing Model
   Basic components of the dynamic routing model
   A more detailed explanation of routing
      Router endpoints
      The Resolve-URL endpoint
         Resolve URL endpoint inputs
         Resolve URL endpoint outputs
         Page Roles in depth
      Sitemap Endpoints
         implementing sitemaps correctly
            Accounting for user credentials
            Accounting for URLs that result in a 404 response code
            Accounting for routes
            Accounting for "no-index" flags on a dynamic page
         Sitemap endpoint inputs
         Sitemap endpoint outputs
            Side note: the Preview Picker
            Side note: link creation
      Dynamic routing and SEO meta-tags
      HTTP Cookies and Headers
      404 and 403 pages
      Cross domain issues when implementing a dynamic router
      Complete example
The Data-Binding Router
   Brief recap of data-binding concepts
   The data-binding router
      Transforming a URL into a wix-data query
      Returning data to the client
      Using a dataset to bind fetched data to Ul elements
   Generating links from URL patterns
      Schema extensions
      Ephemeral computed fields
      Reference fields
   Other considerations for data-binding router
      Page roles in the data-binding router
      Specifying SEO meta tags
      The site-map endpoint
      Hooks on the data-binding router
   Open issues
The Custom Router

### Introduction

This document outlines the architecture and different subsystem behind the ***Dynamic Routing*** capabilities that we plan to add to the editor/viewer stack. The document then outlines the new ***Data Binding Router,*** and the way it is built on top of the dynamic routing model. Finally, the document discusses how developers can build ***Custom Routers*,** to create their own dynamic routing implementations.

### Dynamic Routing Model

Dynamic Routing enables a wix site/app to define and manage ***Dynamic URLs.*** This allows users and editor apps to create sites that have more than just static pages with URLs that are known at publish time.

### Ultimately users and apps can:

- Define URL patterns that map to concrete rendered pages
- Create ***Dynamic Pages*** whose content depends on the incoming dynamic URLs
- Expose these URLs to bots (search engines and similar automated consumers)

### Basic components of the dynamic routing model

The basic components of this model are ***Apps, Routers, Routes, Router** endpoints, **URLs, Dynamic Pages, Page Roles*** and ***Sitemaps.*** Below we explore them and the way they interact to create the dynamic routing model.

The basic construct that allows for dynamic routing is the ***Router.*** A Router is owned by an ***App.*** Each app may have more than one router if it so needs.

A router is responsible for resolving a specific incoming URL to a specific dynamic page that the viewer should render.

Incoming ***Dynamic URLs*** have the following structure: ***<site>*/*<prefix>*/*<suffix>:***
- ***<site>:*** has the form *<my.site.com>* for premium sites, or the form *<user_name.wixsite.com*/*site_name>* for free sites.
- ***<prefix>:*** this part is what determines which router will handle the incoming URL. Each router registers a set of ***unique prefixes*** in the site header. This information is managed by the editor runtime. *The **editor ensures no two routers define the same prefix.***
- ***<suffix>:*** whatever comes after the prefix. This part. together with the prefix, is later used by the router to resolve the incoming URL.

Each router supports one or more ***Routes.*** A route is a template for the <suffix> part of a URL. Examples of routes (the routes are in bold):
- my.site.com/blog/
- my.site.com/blog/post-{id}
- my.site.com/blog/{year}/{month}/
- my.site.com/blog/featured-posts

An app may always support all of its possible routes, or it may let the user select which ones are enabled and which ones are not. For example, in a blog app, it may be up to the user to decide if he wants to use the featured-posts capability or not.

Note that it is up to the app and the specific router to make sure it can tell the difference between different routes. Consider the following two routes for a blog app:
- my.site.com/blog/{year}/
- my.site.com/blog/{author}/

It may be hard to tell which route to use to decode the incoming URL - there might be an author named "2016"... in such a case it may be better to create these routes instead:
- my.site.com/blog/{year}/
- my.site.com/blog/authors/{author}/

A ***Dynamic Page*** is simply any page that a router can route to. **Dynamic pages are *owned* by routers** - i.e. every router has a set of dynamic pages that it and only it can route to. Hence a router cannot route to a "legacy" static page.

Each dynamic page is assigned one or more ***Page Roles.*** Page roles help the router decide how to resolve an incoming URL into a concrete page to render.

### The (simplified) algorithm works as follows:

1. [viewer runtime] Incoming URL is parsed to decide which Router will resolve it, based on the <prefix> part
2. [viewer runtime] calls the chosen router's resolve_url endpoint, passing in the info the router needs in order to resolve the URL to a specific dynamic page ID.
3. [chosen router] Computes an ***ordered list*** of Page Roles for the incoming URL
4. [chosen router] Selects the dynamic page ID to resolve to, based on the list of dynamic pages and their associated page role. For each page role in the ordered list, the router looks for a dynamic page that matches that role. The search is terminated when a dynamic page that has that role is found. If no page is found, the URL resolves to a 404 response code.
5. [chosen router] Returns the selected page ID to the viewer, alongside auxiliary information needed to render a dynamic page (most importantly, an optional data payload)
6. [viewer] Renders the selected dynamic page

Note that it is perfectly OK for the router to resolve different incoming routes to the same page ID. For example, consider a Zoo management application. This application registers a Router under the <zoo> prefix, and supports two routes:
- /*zoo*/*animal_of_the_day*
- /*zoo*/*animals*/*{{animal_name}}*

In this case, both routes will resolve to the page role {animal_page}. If the incoming URL is *<*/*zoo*/*animals*/*tiger>,* and if tiger is currently the animal of the day, both routes will resolve to the dynamic page that renders an animal, and both will render a beautiful tiger on screen.

### A more detailed explanation of routing

As we've seen, the viewer uses a router to resolve the page to render. However, in order to correctly render a dynamic page, there are a few more considerations to take into account.

See a diagram that explains this in detail here.

### Router endpoints

### Each router must support the following two endpoints:

- ***Resolve URL endpoint*** used to resolve an incoming URL to a page ID
- ***Retrieve Site-map endpoint:*** used to retrieve the complete list of URLs this router can resolve

These endpoints and their behavior are detailed below.

### The Resolve-URL endpoint

This endpoint is used when an incoming URL needs to be resolved to a specific dynamic page.

### Resolve URL endpoint inputs

In order to resolve an incoming URL, the router potentially needs the following pieces of information:
- ***URL parts (site, prefix, suffix).*** Note that this should include the ***URL query string*** (the part after the '?' and before the '#' characters).
- ***App signed instance:*** The router endpoint needs to know the application instance ID so it knows which site the incoming request is from. For example consider a Blog application. In order to resolve the incoming URL for a specific blog post the router has to know the the blog app instance.
- ***User credentials:*** Part of the signed instance. The router needs to know the user credentials of the user currently issuing the request. This is needed, for example, to know if that user is allowed to view the information in the specific page requested. For example, a Blog router may want to forbid anonymous users from seeing the page behind *my.site.com*/*blog*/*admin.*
- **Routes *array:*** [This is part of the router configuration]. An array of the routes this app instance supports. Usually, each route will provide information about its URL pattern, about the Title and other SEO meta-tags for this specific route, etc. See more in the SEO section below.
- ***Router configuration:*** Extra information that is app and router specific. For example, consider a Blog App. Assume this app provides a dynamic page with all the posts for a given author. The URL for such a page might look like this: *my.site.com*/*{{author_name}}.* In this case, there's a router that handles these URLs, and it needs to be able to map the author name to a specific author ID in its posts database. In order to do that mapping, the router configuration will hold the following: {author_ID:123}. When the router endpoint is invoked, the posts for author_ID 123 will be retrieved.
- ***List of dynamic pages and their associated roles:*** Used by the router to select the page ID to render based on role matching like explained above.

### Resolve URL endpoint outputs

- ***Page ID to render:*** The primary result of the router's resolving of a URL.
- ***HTTP response* codes:** Since we're dealing with URLs, we need to account for the possible HTTP response codes. Specifically response codes include: {200, 301, 302, 403, 404}. The viewer runtime uses these codes to behave correctly.
- ***Data Payload:*** The router can potentially return a data payload that is later used to render the specific dynamic page. This payload can for example be fed into a dataset that is used to bind to components on the page.
- ***Title:*** The title for the page that will be rendered. The viewer runtime uses this to set the page's title for the browser. The title can be computed based on the content retrieved for the specific dynamic page. ***Typically, different routes may result in different titles.*** For example, the route *<*/*zoo*/*animal_of_the_day*/*>* may resolve to the dynamic page for showing an animal, with the title *"Our animal of the day - the Tiger!".* The route *<*/*zoo*/*animals*/*tiger>* may resolve to the same dynamic page, but the title will be just *"Our Tiger".* Hence, the template for creating the title is typically part of the router configuration for that specific route.
- ***SEO meta-tags:*** SEO related information, more on this later.

### Page Roles in depth

As explained above the system uses page roles to determine which actual dynamic page to resolve to. Page roles allow apps to create ***Fallbacks.*** By this we mean that an app's user can create specific dynamic pages for specific content, that may differ from the standard dynamic page used for other pieces of content.

### For example, in a blog app, there may be two different dynamic pages:

- Standard post page, with the role <post-page>.
- Specific post page, with the role <post-page-id-123>.

The router resolves an incoming URL of the form <site>/<blog>/<post-id-xxx>. It will compute the following page roles ordered list: {post-page-id-xxx, post-page}.

For all incoming URLs that have an id different than 123, the router will resolve to the standard post page. **However, for the** <site>/<blog>/<post-id-123> **URL, the router will resolve to the specific page for that 123 post.**

Through this mechanism we have created a **fallback strategy** for resolving dynamic pages. If the user later on decides to add a specific page for post id 321, all he needs to do is add a new dynamic page with the right page role, and the router will know to resolve to that page.

### Sitemap Endpoints

A ***Sitemap*** is a list of the URLs exposed by a given site. In the context of the dynamic model, this list contains the list of URLs, and for each one added information that the consumers of the site map need.

### Site maps serve two different scenarios:

- Firstly they are used for the classic intent of exposing the list of pages in a site to a bot request. In this scenario, the router sitemap endpoint computes the full list of URLs it can resolve, and returns them to the incoming bot request.
- Secondly, sitemaps can also be used in the editor. In this scenario the editor issues a request to the sitemap endpoint, and uses the returned results to let the end user select one of the returned URLs. This is useful in two distinct cases:
   - ***When the user creates a link to a dynamic page.*** In order for the link to be created, the editor needs the full URL to link to.
   - ***When* the *user wants to preview a dynamic page.*** In this case, we need to know the exact URL that resolves to this page so we know how to provide the page with the data it needs in order to render correctly.

### implementing sitemaps correctly

The following aspects must be taken into account.

### Accounting for user credentials

The list of URLs must take into account the user credentials for the call. For a bot (anonymous) request, the sitemap should only contain URLs that are publicly available. A bot should not see URLs that are forbidden to an anonymous user. For example, assume we have an app that has a router with prefix <my_app>. If that app has pages under *<site>*/*<my_app>*/*<admin*/*salaries>* to manage the salaries of employees, this URL should not be returned to the caller.

### Accounting for URLs that result in a 404 response code

It is possible that a router can resolve certain URLs, but that the site has not defined a dynamic page with the right page role to render that URL. in these cases, the router would resolve to a 404 response code. It is the router's sitemap endpoint responsibility to remove such entries from the results it returns to a bot request.

### Accounting for routes

A router may potentially support routes that are not used by a specific site. For example consider a blog router that supports routes such as </posts/post-id> and also </posts/featured-posts>. However, in a blog instance in a specific site, the user might have decided not to use the featured-posts capability, and hence didn't mark any posts as featured and didn't even create a dynamic page for featured posts.

In such a case, the sitemap shouldn't return this URL, otherwise a bot might try to look for it and will get a 404 response, or worse, get another dynamic page with an empty list of posts. The way to avoid these problems is for the sitemap generation to take into account the routes supported by the app instance in a site, and only generate URLs for supported routes.

### Accounting for "no-index" flags on a dynamic page

A user might mark a dynamic page as "no-index". This means that it should not be indexed by a search bot. When the sitemap endpoint computes the list of URLs, it should also compute the page ID each URL resolves to. If that page ID is marked as "no-index", that URL should be removed from the list.

### Sitemap endpoint inputs

### In order to compute the sitemap, the endpoint relies on the following inputs:

- ***Signed instance:*** Used by the endpoint to know which app instance's sitemap to generate
- ***User credentials:*** Encoded in the signed instance, so the router can generate the sitemap that contains the URLs that user is allowed to see
- ***"Is_editor" flag:*** So the endpoint can generate a sitemap that is suitable for the editor's use. The editor needs information to display the sitemap to the end user, which the bot doesn't require.
- ***Router configuration:*** Information about the way this specific router generates sitemaps.
- ***Routes in use* in *this site:*** (as part of router configuration) List of supported routes. The sitemap generated should only include routes that are in use in the specific instance of this app in this specific site.
- ***List of this router's dynamic pages and their page roles:*** Used to make sure the sitemap only includes URLs that actually map to a dynamic page. Any URL that resolves to no page should be excluded from the list.
- ***"No-Index" flag per dynamic page for this router (part of route configuration):*** URLs that resolve to a page that is marked with "no-index" should not appear in the sitemap generated for a bot. However, the same URLs should be included if the request comes in from the editor, since it that case it does not matter if the resolved page is indexed or not.

### Sitemap endpoint outputs

### For bot requests, the following should be output:

- ***List of URLs*** for the bot to scan
- Per URL, the following (all optional) parameters:
   - ***Last modified date***
   - ***Change frequency***
   - ***Priority* to *Index***

Note that a single sitemap request should not return more than 50,000 URLs. At this stage we do not plan to support paging of results - if you have more than 50,000 URLs, omit the extra ones.

For a complete specification of the sitemap protocol for bots, see here.

### For Editor requests, the following should be output:

- ***List of URLs***
- per URL, the following parameters:
   - ***Friendly title.*** Will be used when creating links in the editor to a specific dynamic page. and by the preview-picker box in the editor.
   - ***Page ID this URL resolves* to.** Will be used by the Editor's link creation dialog to let the user select a URL that resolves to a specific dynamic page.

### Side note: the Preview Picker

When the user wants to preview a dynamic page, the editor must know which URL suffix to use for this dynamic page. The preview picker element invokes the sitemap, and filters the results for URLs that resolve to this dynamic page ID. The user then browses the list, selects the URL by its friendly title. The editor now knows the right URL suffix to use in order to render the dynamic page.

### Side note: link creation

Assume the user wants to create a link to a dynamic page. The editor retrieves the sitemap, and looks for URLs that map to this page ID. The user browses the URLs by looking at their friendly title, and selects one. The editor now creates a "router link" to that specific page ID, using the selected URL's suffix.

### Dynamic routing and SEO meta-tags

A router should provide meta-tags as part of its resolve-URL endpoint. The main ones include: "title", "no-index", "description" and "image". It is up to the router to provide them per resolved URL, in whatever way makes sense for the app and that router. I.e. the viewer/editor infrastructure is agnostic to meta-tags. Each app can supply an iframe to define its meta-tags behavior. This iframe is rendered as part of the page settings dialog for a dynamic page. The information can then be persisted as part of the router's configuration and be used later to generate the correct response.

### HTTP Cookies and Headers

Cookies are not sent to the various endpoints. As for headers, the final list of headers that are important to support is still TBD.

### 404 and 403 pages

These pages have built-in support as part of the viewer/editor infra. The user can create such special pages, and if they exist, the infra will know to route to them in case the appropriate HTTP response code is received.

### Cross domain issues when implementing a dynamic router

Still TBD

### Complete example

Still TBD

### The Data-Binding Router

In this part of the document, we explain the ***Data Binding** Router* and the way it is built on top of the dynamic routing infra detailed in the first part of this document.

### Brief recap of data-binding concepts

We assume the reader knows the basics of the data-binding model.

Still, a short summary of data-binding components follows:
- ***Collection:*** a mongo-DB based set of records.
- **Schema:** the meta-model of data in a collection. A collection's schema is persisted in a schema file (one per collection).
- ***Content manager.*** a spreadsheet-like application through which the user can manage the content of collections
- ***Wix-data:*** a library that provides data access,as part of wix-code. Wix-data has a client interface as well as a backend layer that's responsible for executing user-provided hooks, enforcing permissions, performing validations, etc.
- ***Dataset:*** an editor/viewer element that enables users to bind UI elements to data provided through the wix-data APIs.
- ***Data-binding:*** the ability to bind a visual component to data through the use of a dataset.
- ***Dev DB:*** the database instance the editor works against.
- ***Prod DB:*** the database instance a live site works against.

### The data-binding router

In order to complete the offering of our data-binding system, we wish to provide a router that bridges the gap between a dynamic URL and the data needed to render a dynamic page.

Essentially, the data-binding router is responsible for parsing an incoming URL, and transforming it into a query using wix-data. Once results are obtained, they are fed into a special type of dataset, that in turn provides data to the element on the rendered page.

Let's review the different elements that make up this system: creating the right query, returning data to the client, and using a special dataset to bind the data to components on the page.

### Transforming a URL into a wix-data query

Assume we have an ***animals*** collection with animal record. Also assume we want our animal page to have the route: /animals/{{animal_name}}. How can our router generate the correct wix-data query?

### The router needs to perform the following:

- Know which collection to query ⇒ we'll keep the collection name as part of the router's configuration when defining the routes.
- Know which field(s) to query on ⇒ we'll maintain a mapping in the router's configuration. In this case, we map {{animal_name}} to the "name" field
- **Generate the right query syntax** ⇒ this is a bit more tricky. The value in the URL is always in lowercase, and with no spaces. However the value in the collection is usually in a more human-readable form. For example, the animal name might be "Grey Wolf" in the collection, but "grey-wolf" in the URL. To overcome this, the router needs to generate a "regex-query" - searching the collection for all possible permutations of "grey-wolf": {"Grey Wolf", "Grey-Wolf", "grey wolf", etc.}

### Returning data to the client

This is rather straightforward. The router provides its payload per the resolve_url() API and that's it.

### Using a dataset to bind fetched data to UI elements

Now that the data is available to use on the client side, we need a dataset to push in into the UI components on the page. This dataset has a few special characteristics, hence we'll call it a ***Router Dataset.*** This dataset has the following special behaviors:
- At runtime, it expects a data payload and initializes itself with it instead of issuing a wix-data query by itself.
- At runtime, when it needs to fetch more data (e.g. when a grid is scrolled, etc.), it needs access to the filter defined by the router for this URL. Hence, it knows how to generate a wix-data query that will return similar results as the query created by the router.
- At edit time, it does not allow the user to override its filters on the parts that are bound to the URL elements. Note that the user is allowed to add more filters and to specify sorting and page size, like for a normal dataset.
- At edit time, it does not allow the user to move it to be on the master page (as it is bound to the URL, which implies a specific page).
- Other UX-related behaviors (e.g. special notification if it's going to be deleted, or special behaviors when it's duplicated).

### Generating links from URL patterns

Let's now turn our attention to the generation of links. Assume that we want a very simple index page, that shows all animals in a grid, with a link to each animal's unique page. How do we generate these links, to be used in the grid?

The basic idea is to use the well known URL patterns, or routes, defined for dynamic pages for a specific collection. Once these patterns are known, we can generate links from them.

### For example, let's say we have three different URL patterns in our system:

- **[main route]** \zoo¥animals ⇒ collection page of all animals in the zoo
- **[habitat route]** \zoo\animals/{{habitat}} ⇒ shows animals that live in the {{habitat}}
- **[animal route]** /zoo/animals/{{animal_name}} ⇒ specific animal's page

Once we've defined these patterns, given a record in the animal collection, we can create all three of these URLs. The way to make this work involves a few new concepts in our system.

### Schema extensions

A ***schema extension*** is a segment in a collection's schema file that is provided by an application. This extension typically adds schema elements to an existing schema file.

In our case, once a new route is added (or changed, or removed) for a given collection, the system modifies the schema extension provided by the data-binding app for the relevant collection. For each route, we create an ***Ephemeral computed field*** (see below) that tells the system how to generate a URL for the route.

### Ephemeral computed fields

These fields are (a) computed and (b) ephemeral. This means they are never persisted in the actual record in the collection; rather they are computed on data retrieval per the computation specified. **These computations all take place at the wix-data backend layer.**

### In our case, for the example routes given above, we create three such fields:

- Main_URL: string. Val = "/animals/"
- Habitat_URL: string. Val = "/animals/" + to_url_part(field_val["habitat"])
- Animal_URL: string. Val = "/animals/" + to_url_part(field_val["name"])

Note that the computation above doesn't specify the <site> part of the URL, since it is unknown to the wix-data engine that performs the calculations. **It is up to the router to complete the computation and add the missing <site> part to create full URLs.**

### Reference fields

In future versions, we'll add reference fields from one collection to other collections. The existence of such fields will enable the creation of URLs that link from an item in collection A to items in collection B. i.e., if we have in collection A a reference field to collection B, in which we have an ID of an item in collection B, we can use that ID to generate the right URL links based on the ephemeral link fields defined on collection B.

### However, not for the current version.

### Other considerations for data-binding router

### Page roles in the data-binding router

Note that at least in v1 of this system, we do not plan to use multiple roles per dynamic page, or to let the user specify custom roles for a page. This means that users cannot create "fallback pages" or more specific pages per the generic capabilities of page roles.

### Specifying SEO meta tags

SEO metatags are managed through an iframe provided by the data-binding app to the page settings dialog infra provided by the editor. Through that iframe, the user can specify how to generate SEO metatags per dynamic page owned by the data-binding router.

This configuration is persisted as part of the router's configuration, and passed along to the router endpoints to generate the right meta-tags based on data retrieved from the database. For example, the user can specify the following expression for the title of the "animal" page: *"meet our magnificent {{name}}!".* The router will then generate the right title when retrieving data.

### The site-map endpoint

Implementing the sitemap is relatively straightforward:
- Per collection, retrieve all its items.
- Since we have computed fields per URL route, we already have the desired information.
- All that is left it to get the ***distinct* set** of computed URLs, and return it to the caller.

### Hooks on the data-binding router

We plan to support the ability to let user code run before and after the router performs its functionality. The basic mechanism is similar to backend hooks we have in wix-data today - the user can register a function that will be called before or after the router executes.

The before hook gets the same input parameters as the router itself, and may or may not pass them to the actual router implementation.

The after hook gets the output parameters from the router's execution, and may alter them before they are sent back as part of the HTTP response.

### Open issues

- dev/prod db
- Permissions on page level

### The Custom Router

- Creating a custom router
- Creating custom dynamic pages
- API for a custom router, including errors
- Using page roles with a custom router
- Using data binding with a custom router

### 09 - DYP

### Dynamic Pages

### Dynamic Pages

### General description

When you create a dynamic page, you're designing one page layout that can be used over and over again, each time displaying different content from your database collection.

As opposed to a regular page, which has only one url that may lead to it, a dynamic page can have different URLs. The content that is shown on the page depends on the URL that was used to access that page.

Since a dynamic page displays different content each time it's viewed, it's not like a regular page. A regular page stores its content in the page itself, while the content for a dynamic page is stored in a database collection.

### For example:

Let's say you have a recipes site and you would like to design a page that displays data for a single recipe. With regular static pages, you would have to create a separate page for each one of your recipes. With dynamic pages, you will only create one dynamic page, and assign it a URL pattern that can determine the specific recipe that should be displayed at runtime.

If each of your recipes (stored in a WixData collection) includes a field named "title", you may define the dynamic page's url to be "www..../recipes/{title}".

When a user browses to "www.../recipes/pizza", the page will display the content for recipe titled "pizza", etc...

### Main components / Related WixCode elements

### Content Manager (& WixData database)

Used by the user to create collections & manage their data

### Data-binding editor application

Enriches the Wix editor with panels that allow a user to create and manage dynamic pages and to connect page components to the content parts relevant to them.

### Data-binding router

A backend application that accepts 2 types of requests:
1. Routing request - when loading a dynamic page that belongs to the data-binding application, the wix viewer requests the router for page and content to display for a given input URL. The router will try to match the given URL with patterns defined by the site's owner and will look for relevant content in the database. If found, the router responds with the relevant page identifier and content.
2. Sitemap request - when a bot requests a Wix site's sitemap, and the site includes dynamic pages that belong to the data-binding application, the router will be requested to return a list of all possible URLs that it can resolve.

### Data-binding viewer application

Executes when a dynamic page is loaded. Receives the content returned by the router and binds it to the components on the page according to their configurations.

### Technical information

The entirety of code is written in JavaScript.

We use different open-source libraries that are shipped with the code, such as react, redux, lodash, co and more...

Other open-source libraries are used to build and test the code but are not shipped with it: webpack, babel, mocha, eslint, and more...

### Third-party services

### Sentry

The code uses a third-party service called Sentry (https://sentry.io) to log problematic flows that happen at runtime (both editor and viewer time).

Each time some error happens, the code sends information about the error and the current context to sentry. This information includes things like:
- Application version
- Editor configuration
- Description of the error
- Site / editor URL
- Referrer URL
- User-agent (browser type and version...)
- Operating system
- User's database content
- Code written by the user in the IDE
- User actions that lead to the error

### 10 - DBG

### Data bindings

### Dataset & Data binding

The core element of the data-binding system is the ***Dataset.*** A dataset is a client side provider of data, which visual constructs (i.e. editor components) can two-way-bind to. It is also the channel through which the client application manages data, by implementing a data-retrieval and data-mutation protocol with the backend logic layer and eventually with the datastore itself.

The simplest type of dataset is a ***collection dataset.*** Such a dataset simply retrieves data from a specific collection, enables sorting and filtering it based on the field metadata of the underlying model, and allows its consumers to iterate over records and potentially create new ones and update existing ones. The dataset is a ***query-based dataset.*** Such a dataset is driven by a query over a single collection.

Editor elements can be bound to a dataset. In particular, a property of the editor element is bound to a collection field representation in the dataset. Multiple elements can be bound to the same dataset field.

### At runtime, the following (simplified) scenario takes place:

- A page loads
- Page code gets executed. As part of that, one or more datasets are created (more on how datasets are attached to pages below).
- The dataset now wires itself to UI constructs. This happens as follows:
   - Locate page components that are bound to this dataset.
   - For each, create a matching ***adapter*** that facilitates the interaction between the dataset and the component.
   - The adapter registers itself as a listener on change events from that component, so it can relay the changes back to the dataset.
- Now the dataset is populated by executing its data retrieval capability.
- Once initial data is available, by using the relevant adapters, data is set to the relevant data-bound controls.
- Now, the dataset's state may change as a reaction to one of many events:
   - Calls to "next record", "prev record", etc.
   - Calls to "next page", "prev page", etc.
   - Changes to the current record via user inputs
   - Etc.
- On each such change to the datasets state, it fires update commands via its adapters to all its bound components
- Also, the dataset may ***"commit"*** changes to its backend store when requested to. This can happen either automatically when the "current record" pointer moves to a new record, or explicitly through a "commit changes" API call. More on this later.

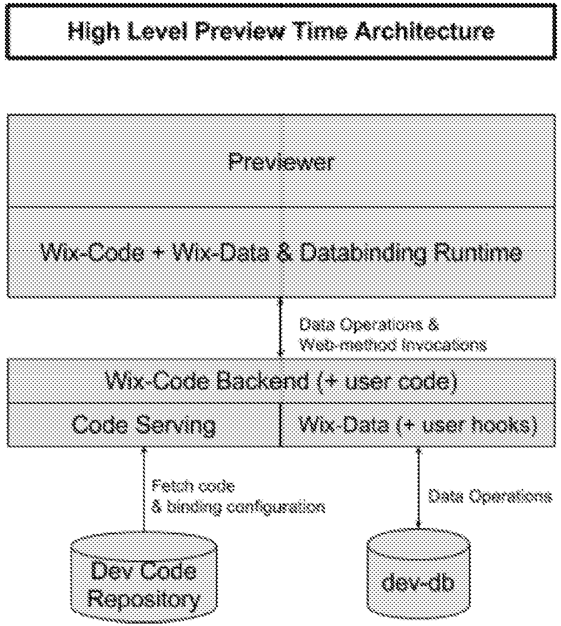

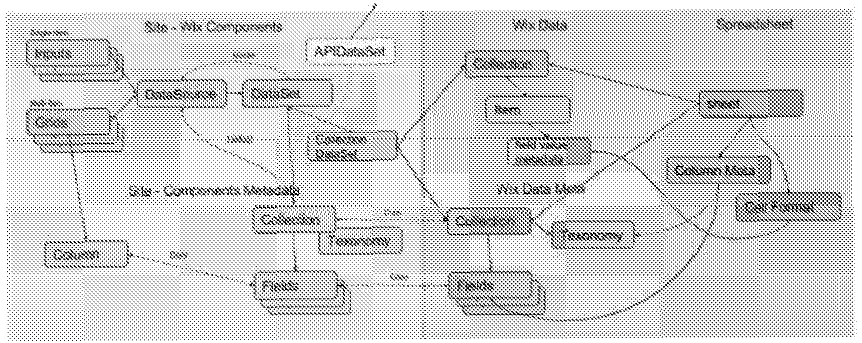

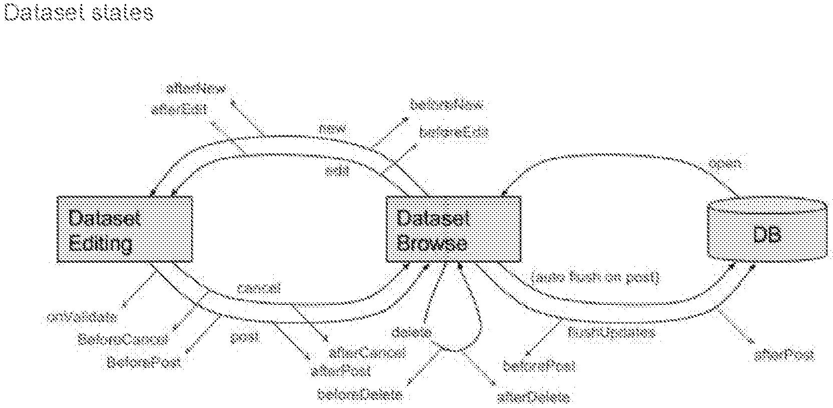

### 11 - CMGR

### Content manager

### Content Manager (CMGR)

CMGR is Excel-like data management application which enables the user to manipulate data that is stored in Wix Data collections. The application consists of two major parts: CMGR Editor application and CMGR My Account application, residing in respective parts of Wix site.

### Content Manager in Editor (CMGR Editor)

CMGR Editor is opened by Client Side Web Worker. It gets Editor SDK which is mediator between Editor API and CMGR and enables CMGR to manipulate the state of Wix site. CMGR Editor enables to:
- view and edit test/sandbox data of a site (using Wix Data API)
- edit collection permissions (using Editor SDK to modify files in Cloud VFS)
- view and edit Wix Data hooks (editing happens in an external panel in Santa Editor, modifications are stored in Cloud VFS)
- sync collection data from sandbox to live and vice versa (using Wix Data API)
- preview live data (using Wix Data API)
- manage schemas: create new ones, add/edit/remove fields (using Editor SDK to modify files in Cloud VFS)

### Content Manager in My Account (CMGR My Account)

CMGR My Account is opened by Wix Dashboard. It enables to:
- view and edit live data of a site (using Wix Data API)
- Add temporary (undefined) fields to data which are not persisted in schema

### Content Manager grid

It is primary component both in CMGR Editor and CMGR My Account. It uses collection's schema to construct columns of the grid. Schema is stored in Wix Code filesystem associated with a particular Wix site. It uses user's data loaded from Wix Data to construct rows of the grid. It enables to:
- Manage collection items (rows): add, edit, remove, duplicate (using Wix Data API)
- Toggle visibility of fields
- Filter data (using Wix Data API)
- Sort data (using Wix Data API)

### Data types

CMGR handles multiple data types: strings, numbers, Booleans, dates, page links, images, JavaScript arrays and objects, references.

Strings, numbers, Booleans, dates, arrays and objects are primitive types (natively supported by JavaScript).

Pagelinks are special strings that are not stored in a collection and are constructed by wixData on runtime given a pattern for a Dynamic Page. A pagelink can be used to link to a dynamic page in a Wix site.

Images are either strings to external resources or special Wix Media strings referencing files stored on Wix Media servers. User has ability to upload images via Wix Media Dialog.

References are pointers to other collections, used to enable joins between Wix Data collections.

### Implementation

The application is rendered by open-source framework React: https:/github.com/facebook/react

### Application state is handled with open-source library redux: https://qithub.com/reactis/redux

The grid is rendered by open-source library ag-grid consisting of three components:
1. ag-grid (https://github.com/ceolter/ag-grid).
2. ag-grid-enterprise (https://github.com/ceolter/ag-grid-enterprise)
3. ag-grid-react (https://github.com/ceolter/ag-grid-react)

### 12 - DSEO

### Dynamic SEO

### Wix Code - SEO subsystem description

The "regular" SEO renderer for Wix sites takes the static JSON data that represents the site and uses it to render a stripped-down version of the site for search bots (without using the regular rendering logic which is implemented on the client side).

Since Wix Code introduces the ability for the user to change the site dynamically, we need a different/additional mechanism that can render the site in a way that includes those changes, which can include dynamic page routing and arbitrary user logic.

### Main sub-components of the SEO subsystem

- A dispatcher service ("Cloud SEO Dispatcher") that receives RPC requests from the Wix SEO renderer and dispatches them to available workers for processing
- A grid of "Cloud SEO Workers" that process rendering requests. Each worker runs a headless Chrome browser that is used for running client code (a.k.a. "Mini Santa") that does the actual processing.
   (including running user code, etc.), and produces the result as a set of changes to apply on the static data structures that represent the site.
- A management service ("Cloud SEO Lifecycle") that keeps track of available workers and synchronizes them with any configuration changes.

### Rendering flow

The regular SEO renderer, when it recognizes that the site is WixCode-enabled, calls the "Cloud SEO Dispatcher" with the relevant data for the rendering, and expects as a response:
- Diffs to apply on the site's JSONs (for masterPage + current page)
- In case of dynamic page routing, the pagelD of the page to render + SEO metadata to render

The "Cloud SEO Dispatcher" hands the rendering task to one of the available "Cloud SEO Workers".

The Worker tells its managed headless Chrome instance to render the site by calling Mini Santa's rendering function with the parameters of the site to render.

The rendering function runs the code that renders the site, but instead of showing the result on the screen it computes and outputs:
1. The differences between the initial data structures of the static site and the runtime data structures after running the user code.
2. Dynamic page information - which page to render and what SEO metadata to add to the rendered result.

These resulting differences travel back up the chain of calls, up to the Wix "regular" SEO renderer, which applies them to the initial static data and renders the final HTML that is sent back to the search engine crawler.

### 13A - CFN

### Compute functions

### Wix Code - Compute Functions

### Abstract

For any Wix site, a user can have an ability to write a function which will be exposed as a web interface for the site via standard HTTP protocol.

This ability is valuable for server to server integrations, for example registering to 3rd party applications via a webhook, or exposing a REST API for the web site.

### Adding a Function

Via the Wix Code IDE a user has the ability to add a *compute function -* which will open a dedicated page for writing the code for it. The name of the function represents the web path prefix relative to the web site address, via which the function can be called using HTTP protocol.

For example, the function named *compute* will be accessible via the URL: *http[s]:*//*mysite.com*/*_api*/*endpoints*/*compute*/*...*

User can also optionally define which HTTP methods (GET / POST / PUT / DELETE) the function will be available for. The code is stored in a multi-tenant service, called *VFS* under the user's site dedicated space.

The user will have the following HTTP request information available for processing: URL, query parameters, headers, payload, HTTP method.

The user can generate an HTTP response with the following parts: status code, payload, headers.

### Execution of a Function

After the function is available for HTTP access, and an HTTP request is called for a wix code web server (dispatcher), first validation is performed for testing the existence of a function definition. If the function does not exist - status 404 (Not Found) is returned. If the function exists, the code will be executed in an isolated docker container via the *elementory* application server (ELM) running there.

### Testing Before Publishing and Debugging

During the development phase of a *compute function* it is possible to test the function via a test HTTP URL, which is supplied via the Wix Code IDE. It is also possible to see the logs of the function execution be it already published or currently developed.

### 13B - CFN

### Compute functions - detailed

### Wix Code - Compute Functions

### Overview

This document will outline the functional requirements and the technical specification proposal for exposing Web Endpoint as an API via HTTP.

This document is based on the research paper

### Functional Requirements

Ability to expose a method for web access without authorization
- Ability to define supported HTTP methods: POST, GET, PUT, DELETE (on the same path)
- Ability to extract (read) the request's HTTP method, path, headers, query parameters and body
- Ability to write the response's HTTP status code, headers
   ∘ Nice to have: Ability to define the HTTP Accept header for the requests
   o Nice to have: Ability to define the HTTP *Content-Type* header of the response
- Unauthorized access to *data* should be handled (enforced) by the *data* layer

### Web API HTTP Specification

When a method is exposed for web access, the method will be exposed with the following specification.

### URI

### Free Sites

**Published site:** https://{user name}.wixsite.com/api/endpoints/{site name}/*
**Development:** https://{user name}.wixsite.com/ api-dev/endpoints/{site name}/*

### Premium Sites

**Published site:** https://{user domain}/ api/endpoints/*
**Development:** https://{user domain}/ api-dev/endpoints/*

The **/_api/endpoints/** (and /_api-dev/endpoints/) relative path to the site root will be the root entry point to the whole user defined APIs. We will call this entry point as the *API root.* From user perspective, this URL will be permanent one. The use cases when the URL is going to change is:
- In free site - user changed the site name
- In premium site - user changed the domain
- When user changes internal sub paths after the *API root.*
- Transferring site - domain name can be changed
- Upgrade to premium - buying a domain / assigning an existing domain

All to all - seems that backward compatibility of the API is solely user's responsibility.

### Security

The URLs are on the same domain as the user's site. The potential security risk may arise if those URLs are accessed via browser, and the user writes some unintentionally non-secure code.

We can address CSRF and XSS attacks using the following:
- CSRF - employ cookie / header validation for browser user agents
- XSS - employ Content-Security-Policy functionality by default on the user's domain, with option to opt out or to define the white list

We could further improve security by using SSL.

### Request

- **Allowed HTTP methods:** according to the definition of the *endpoint*
- The function's code is responsible to extract the request's body, headers, query params, IP

### Response

- **Response's status code:** responsibility of the *endpoint's* code
- It is the responsibility of the *endpoint's* code to supply a response's body with the appropriate format
- Response headers can be supplied also

### Wix Code Design

### Preface

General direction is to differentiate the Web Modules used by the *public* site scripts from the definition of the *methods* which are exposed via web publicly for any HTTP consumer - let's call them *compute functions.* It will allow simpler design and implementation, when a shared code is needed to be used from the *public* script and at the same time it's result default format cannot be used as is for the web *compute functions* exposure and needs some massaging.

It will also allow to define web *compute functions* which are totally unrelated to the site's presentation layer (the *public* scripts).

For example, a web compute function which listens to github webhook, parses the data and stores some info in a database collection, and there is a dynamic page which present the data from the same collection. No public site script is involved here.

### The Location

We will store the compute function's code in a dedicated JS file. User will have an ability to define *compute functions -* and the UI will open the file where the code of all the *compute functions* will be located.

Maybe we need to revisit this aspect, if the code in that file can becomes big.

### How to Define a Compute Function?

There are 2 aspects of a *compute function.*
1 **. The design time aspect** - how the user defines a *compute function* and configures its various aspects, such as the HTTP method, the request's content type it accepts, the response content type it generates, etc.
**2. The runtime aspect** - once such a *compute function* is defined - an appropriate HTTP *endpoint* should be exposed and when called to be redirected to running the *compute function's* code, and when an existing *compute function* is deleted - an existing HTTP *endpoint* should be removed. Of course, this should be available only after the publishing of the site, or before publishing for testing purposes of the compute function by the user.

### The Design Time Aspect

- We will define exported functions for each compute function prefix
- We will have the following prefixes for the functions: *get*_ , *post_ , put_ , delete_, use_*
- The function name after the prefix will represent the web endpoint's path prefix
- TODO: still need to close the UI aspect of how to define new compute function

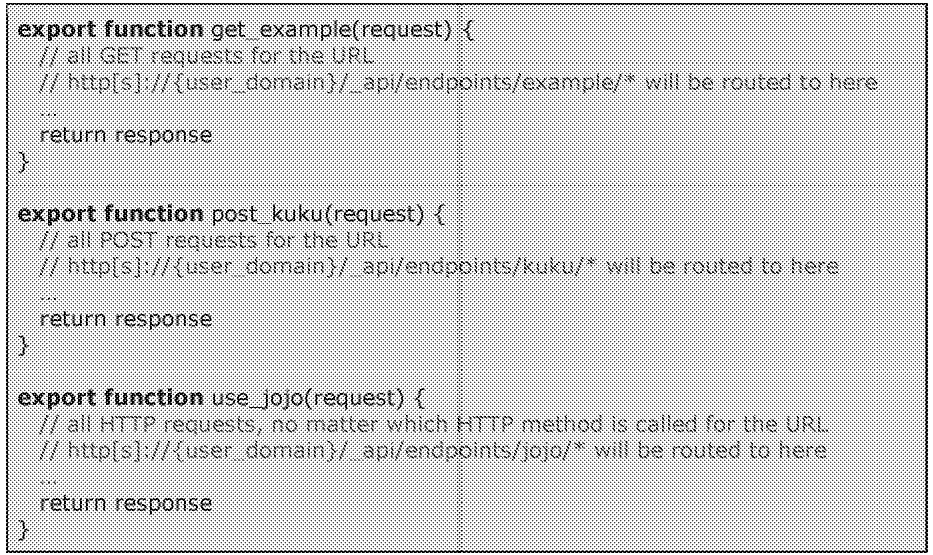

For some other rejected alternatives, please see *Appendix A.*

### Pros:

- Simple definition, can be easily assisted by UI
- Configuration is close to the code
- No reflection is needed
- Using the current publicly available spec of JS

### Cons:

- Dynamic binding of functions to HTTP calls - no predefined configuration exists
- Ambiguous definitions can occur - e.g. get_ and use_ on the same endpoint
   o Can be solved by simple precedence algorithm, which should be documented. Specific methods take precedence over *use_**
- Some characters cannot be part of the prefix (e.g. the '-' character)
   ∘ All characters which are not supported to be located in JS function name

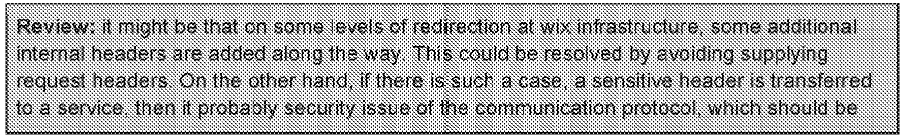

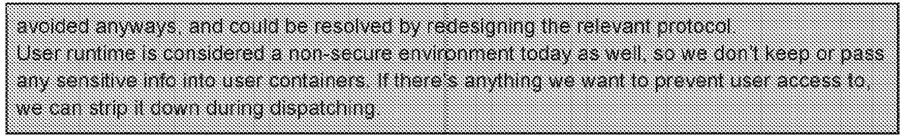

### Request and Response Data Structure

We will strive to have a unified data structure for the request and response objects as for the routers feature.

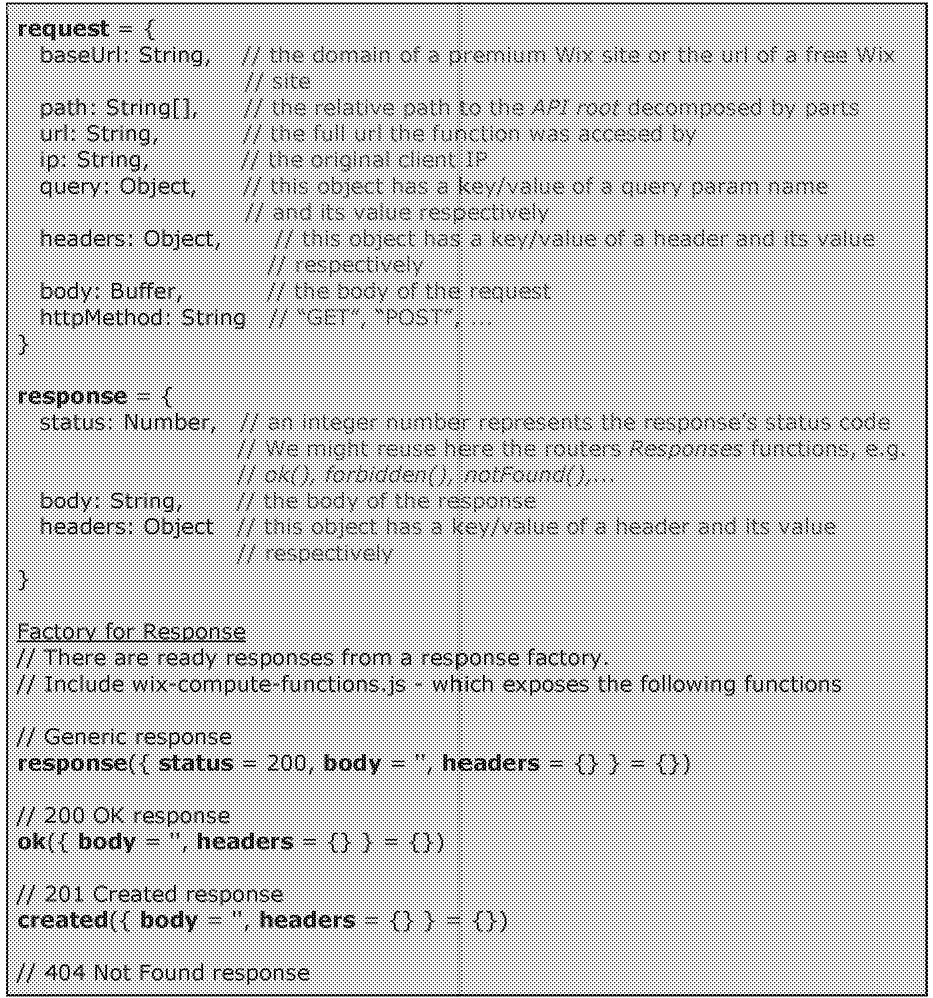

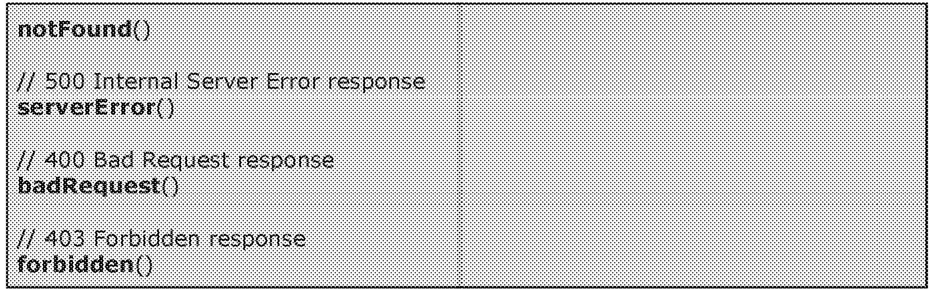

### The Runtime Aspect - Mapping for Execution

Reminder - so we have a file called *compute-functions.js* for each site, where the endpoint's URL to function mapping is located together with the function's code itself.

### Mapping Site to Wix-Code Compute Function

- Upon creation of a compute function via UI - a file under the *relevant site context* will be created in the elementory in the path /compute-functions.js

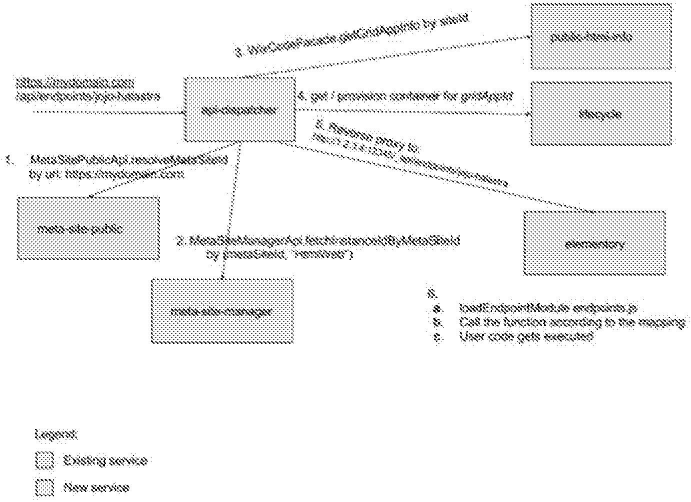

It seems, that there is no easy way to get the siteld from the domain. There are 3 RPC calls in order to understand which *gridAppld* we should launch.

We probably want to cache those 3 RPC calls, however, in case of a change of metaSiteld / siteld / domain - we need event to update the cache, or update the cache by some periodic poll, which will imply eventual consistency (in any alternative of cache update, since we cannot rely that the events are bulletproof). From our understanding, there is no event of metaSiteld change or domain change.

The proposal is to cache *domain -> gridAppld. gridAppld* can potentially be changed after a save, so we will invalidate the cache on each save - this event is already handled in wix-code. It would be better, if we had listened to the publish event, it such exist.

If there is a change in domain name / free site name - the new domain will not be in cache, so first it will perform the whole flow for this new domain again and cache.

The cache should have some eviction policy based on last touch time.

### The Runtime Aspect - Preview vs. Published

When user develops his compute function - should we supply some "dev mode" for the web endpoint before publishing?

For new functions - it is useful if the function's code manipulates data. User wants to make sure the new code doesn't corrupt existing data, thus wants to test the code prior publishing. In addition, when a compute function is already published, and user needs to update it, for instance to support some new protocol, he doesn't want to break the existing functionality of the function, until he is sure that his newer function's code is running as expected.

How this capability should be supplied? Meaning - expose the updated function to the web which will work in parallel to the currently published web endpoint?

### The Algorithm

- When editor client loads, it sends its SCARI to the api-dispatcher service (via ide-server)
- The api-dispatcher service will have a mapping *domain -> gridAppld* for testing
   ∘ We might want to separate the editor segment (testing) and the public segment (published sites api access)
   ∘ This *gridAppld* will represent the current developed version in editor, it can be the published one, if no changes occurred since publishing, or a newly developed one (the not saved one)
- Whenever there is a call to wix-code-service of *cloneCodeApp* / *duplicateCodeApp* / *createApp* - the newly generated *gridAppld* will be propagated to the api-dispatcher service
- Accessing currently developed version will be via the *development* URI as stated in the URI section

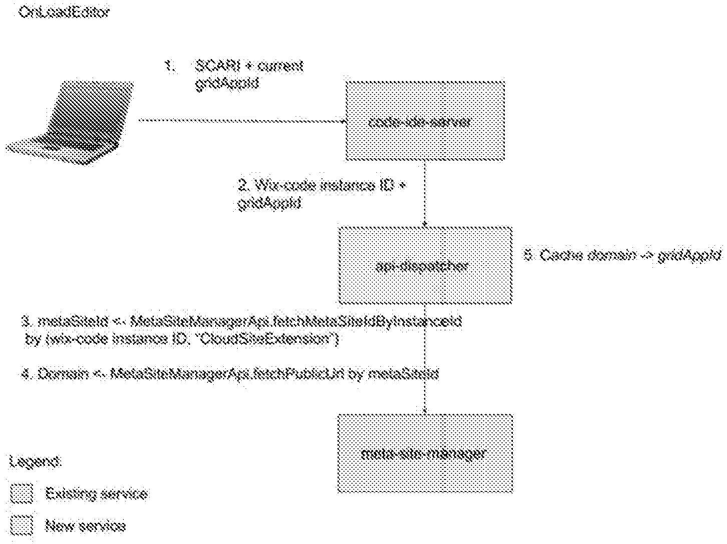

And then, when the request for *api-dev* is received by *api-dispatcher,* it will look the cache for *gridAppld* by domain. If not exist, it can fallback to the similar protocol as for published sites, and cache the last saved version's gridAppId.

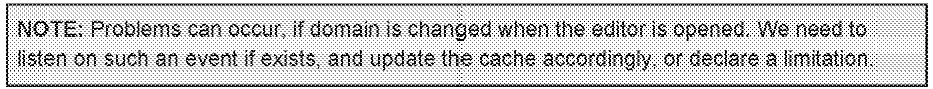

Another alternative can be that on editor load - we will cache the *wix-code instanceld -> gridAppId* which was sent by the client (without resolution of the domain), and then on actual *api-dev* request similar flow to resolute the domain as on the above diagram, and cache also the *domain -> gridAppld.*

And then, when *cloneCodeApp* / *duplicateCodeApp* occurs - update both of the caches by previous *gridAppld* (we will have also inverse index by *gridAppld).*

This will also solve the "changed domain" problem.

This seems rather a complex mechanism. Can't we have a limitation, and require to save before testing? Or maybe some other "on demand" event for testing an API, say - *test API?*

### Debugging

One of the pains in the hackaton with webhooks was the lack of debugging capabilities for the backend code. We will need to add some capability, it is a product open question.

### Preferred Solution

User will have a web endpoint for continuous stream of console.log outputs, similar to this. [https://webtask.io/docs/api_logs]

We will need to consider this carefully, this can be very resource consuming.

### Other Alternatives

- Supply some logging API, and have some rolling log file per site, which user will have the ability to download via the editor.
- Open a special UI in *dev-mode,* where those logs will be printed
   o Actually this can be an addition to the *preferred solution* above
- Developer can supply a header, say *x-debug* and in return will receive a response header with a unique URL holding the debug information about the request. Up to 50 URLs per site. The info will be held in memory for 5 minutes
   ∘ There should not be any problem memory wise, if this is kept in-memory of elementory, given, that we have 200 elementory per machine.

### Appendix

### Rejected Design Time Aspect Alternatives

### Alt. 1: Almost a copy / paste from jax-rs API

It would be nice if we could use *@decorators* , however, it seems that it will be available for the next spec of javascript, ES8.

Babel transpiler supports it in some experimental mode.

We can then use reflection to search all those compute function methods and map them accordingly to the configuration.

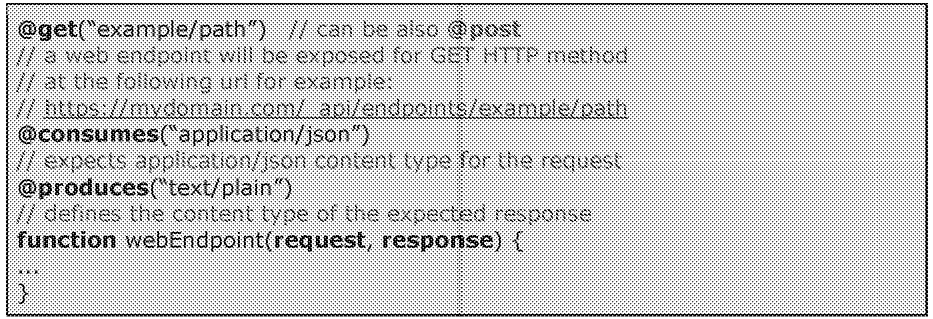

### Pros:

- Clear and easy declaration

### Cons:

- Seems like such mapping of *request's Accept* and *response's Content-Type* headers will be difficult for the dispatcher, if for example wildcards are used. Maybe should be dropped
- Using non-finalized spec (currently stage 2 - https://github.com/tc39/proposal-decorators)
- Reflection is needed to find the relevant mappings

### Alt.2: Configuration of the Compute Functions is Stored Separately from Code

We can supply a special method, by predefined name, where the mapping will be declared by the user.

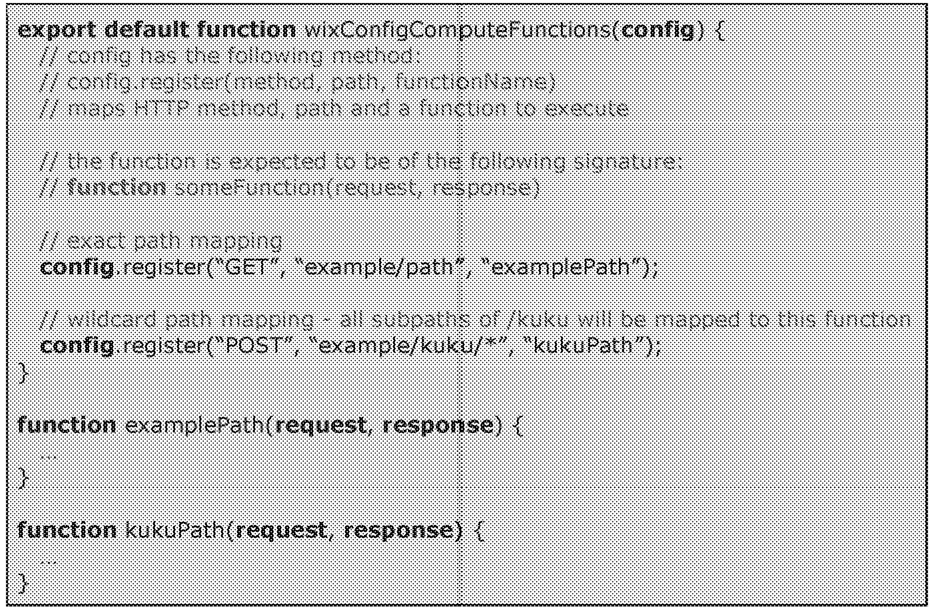

### Pros:

- Pretty simple declaration
- No reflection is needed
- Using the current publicly available spec of JS

### Cons:

- Function name is declared as string - typos can occur
- Configuration is "far" from the method itself

### Alt.3: Express-like Configuration

We will have some global object, which will be act as registrar for the compute functions, e.g. *WixComputeFunctions.*

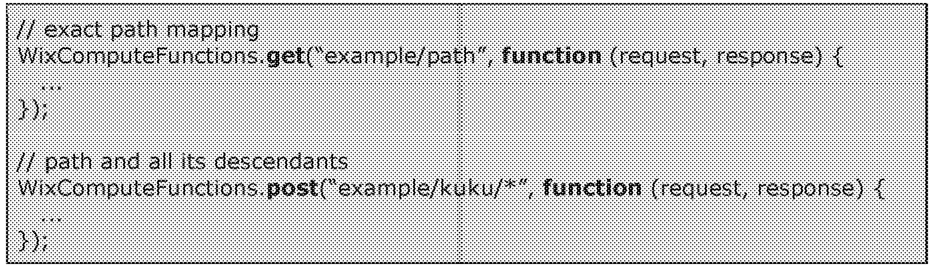

### Pros:

- Simple definition, express like API
- Configuration is close to the code
- No reflection is needed
- Using the current publicly available spec of JS

### Cons:

- Exposing global object
- Ambiguous definitions can occur - need some precedence algorithm

### Alt.3.1: Configuration Function with Express-like Syntax

An *express* like pattern for configuring the HTTP method, path and the function to execute.

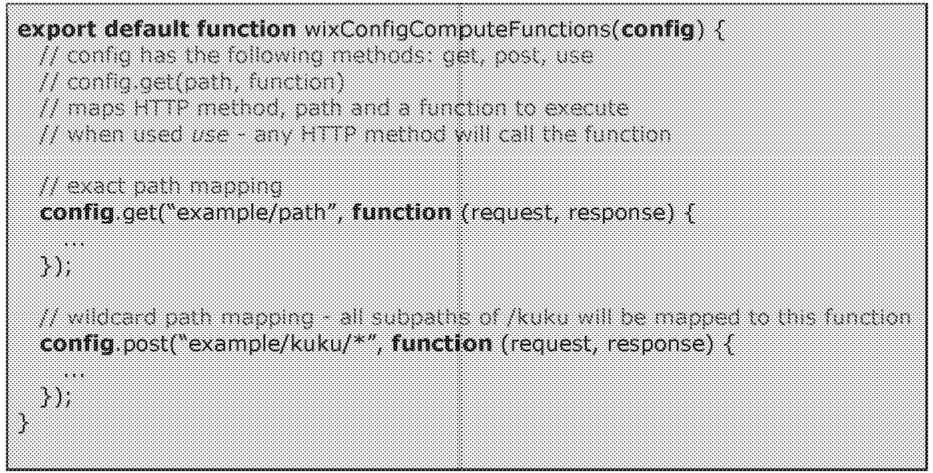

### Pros:

- Simple definition, express like API
- Configuration is close to the code
- No reflection is needed
- Using the current publicly available spec of JS

### Cons:

- Ambiguous definitions can occur - need some precedence algorithm

### 14 - WDB

### Wix DB

### Overview

DocStore is a generic multi-tenant document-style data service that exposes a RESTful API for managing data. Every tenant can have several separate virtual databases. The service also has an administration server-to-server (not user facing) API for managing tenant's databases and possibly disabling a tenant.

### Storage Model

The underlying database used to store data is MongoDB and the service supports multiple physical MongoDB databases for sharding purpose.

### Virtual/Physical Database Mapping

Upon first request and after it passes authentication check, each tenant virtual database is assigned to one of the physical MongoDB databases the service is working with and from that moment on, all incoming requests of that tenant's database executes against that physical database.

Virtual tenant database to physical database mapping is maintained in an administration database and hot mapping records are kept in an LRU based in-memory cache.

### Virtual Database Model

Each tenant virtual database can contain one or more collections of documents. Each virtual collection is mapped to one physical MongoDB collection. Collection mapping is done using a simple namespacing system. Each physical collection is named <tenantId>@<vdb-name>@<collection-name>. Accordingly, when a request comes in, after it passes authentication check, the tenant ID, target database and collection name are resolved, the physical collection name is constructed and can be accessed.

### Physical Database Allocation

When a new tenant database is introduced it needs to be assigned with a permanent target physical database. Physical database selection is done based on database size right now. A background task is scheduled to run periodically and collect statistics from all the active databases the service is configured to work with. Statistics are stored in an in-memory data structure, so that when it's time to allocate a new database, the smallest one can quickly be selected as a target.

### 15 - $WAPI

### $W API

### $w API

$W API is the way we allow users to interact with viewer components using code. The SDK is used to wrap the internal communication layer used between the worker, where the user code / extension is running and the runtime (AKA the viewer). Following is a diagram that represents the logical architecture:

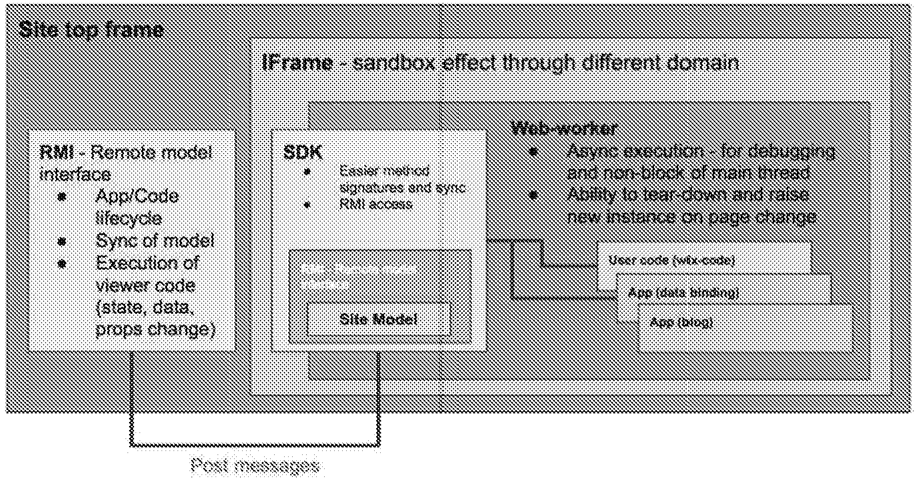

### The need:

The internal model of RMI is too complex for users that want to control and modify only parts of the system, and is undocumented and contains proprietary information needed in order to run. The $W SDK wraps this, and turns it into a more common pattern of locating elements and manipulating them.

### Coding pattern:

The coding pattern supported by the $w SDK contains of 2 parts:
1. **Page lifecycle events:** Using lifecycle methods, a code using the SDK is triggered at predefined stages. During these stages, the SDK is available, and the code can perform various tasks, such as external data loading, initialization of components or event registration. Currently a single method is available, which happens before the page is presented, and called PageLoad. By returning a javascript promise, the code can defer the presentation of the page until all asynchronous information is loaded (such as external data coming from wix-data or external services)
2. **Selection:** $w is representing the global context of a page. Similar context objects can exists, i.e. an $item when drawing repeater items. Using the context, the user selects elements using a string query. Selectors are similar to regular CSS selector, with small differences. Selection can return a single element, or multiple elements. For example:
   $w('#myElement') - this would select the element with myElement ID
   Selectors have the following types:
   ∘ ID selectors - selecting using a page unique ID
   ∘ Type selectors - selecting using a type of a component
   ∘ Array of types selector
   ∘ Role selector - this is used by controllers, to select using their own pre-defined names. An element can have an ID, and multiple roles, given by the the controller
3. **Element manipulation:** once a reference to an element is acquired, the element is providing with methods to manipulate it. Some methods are available on all elements, such as hiding and element and showing it. Some methods are available only on certain elements. The full list is provided in the SDK documentation
4. **Event registration:** each element supports a pre-defined set of events. The code that is using the SDK can register to these events, and provide a callback methods that will be called when they occur. During the callback, selection and manipulation is possible.

Also disclosed herein are the following numbered clauses:
1. A non-transitory computer readable medium for updating a back-end database containing data sets that populate a plurality of web pages of a website, the computer readable medium containing instructions that when executed by at least one processor cause the at least one processor to perform the steps of:
   receive via a user interface, a plurality of data elements, the data elements organized into one or more groups of at least one data element, each group for display on a separate web page of a website;
   store the groups of at least one data element in a database;
   generate a plurality of virtual web pages, wherein each virtual web page is a preview of a corresponding actual web page before the corresponding actual web page goes live, wherein each of the corresponding actual web pages is not designed with functionality for updating the database;
   display each group of at least one data element in a separate one of the plurality of virtual web pages;
   display an editing tool to permit a user to edit a virtual web page from the plurality of virtual web pages;
   translate the edits to the virtual web page into updates for the database;
   store the updates in the database; and
   enable, during a live view of a corresponding actual web page associated with the virtual web page, a display on the corresponding actual web page with the updates made to the virtual web page during the preview.
2. The non-transitory computer readable medium of clause 1, wherein each of the plurality of virtual web pages is displayable within a frame associated with an editor interface of the user interface.
3. The non-transitory computer readable medium of any preceding clause, wherein the steps further comprise display of a user-selectable feature enabling the user to navigate through the plurality of virtual web pages to individually and dynamically display each of the plurality of virtual web pages.
4. The non-transitory computer readable medium of any preceding clause, wherein the steps further comprise display of a user-selectable feature enabling the user to select a particular virtual web page from the plurality of virtual web pages based on an identifier of the particular virtual web page.
5. The non-transitory computer readable medium of clause 4, wherein the identifier of the particular virtual web page is based on a data element associated with the particular virtual web page.
6. The non-transitory computer readable medium of any preceding clause, wherein the steps further comprise associating a unique URL with each of the plurality of virtual web pages.
7. The non-transitory computer readable medium of clause 6, wherein each of the plurality of virtual web pages is generated based on a sitemap referencing the unique URL of each of the plurality of virtual web pages.
8. The non-transitory computer readable medium of any preceding clause, wherein the editing tool is configured to receive edits to the stored groups of at least one data element in the database.
9. The non-transitory computer readable medium of any preceding clause, wherein the editing tool is configured to receive edits to attributes of the plurality of virtual web pages.
10. The non-transitory computer readable medium of any preceding clause, wherein the editing tool is configured to receive edits to code that is used to generate the plurality of virtual web pages.
11. The non-transitory computer readable medium of any preceding clause, wherein the editing tool is configured to display a plurality of segments of skeleton code representing actual code used to generate the plurality of virtual web pages, and receive edits to the skeleton code that are translated into edits to the actual code.
12. The non-transitory computer readable medium of any preceding clause, wherein the data elements are received via the user interface from an external source.
13. The non-transitory computer readable medium of any preceding clause, wherein the operations further comprise:
   access a software-based router associated with the plurality of virtual web pages; and
   configure the software-based router to generate a different version of each of the plurality of virtual web pages based on one or more segments of a received URL.
14. The non-transitory computer readable medium of any preceding clause, wherein a subset of each group of at least one data element are organized by a repeater function, the repeater function generating one or more displayed instances of the subset of each group of at least one data element.
15. The non-transitory computer readable medium of clause 14, wherein the live view of the corresponding actual web page includes the one or more instances.
16. A computer-implemented method for updating a back-end database containing data sets that populate a plurality of web pages of a website, the method comprising:
   receiving via a user interface, a plurality of data elements, the data elements organized into one or more groups of at least one data element, each group for display on a separate web page of a website;
   storing the groups of at least one data element in a database;
   generating a plurality of virtual web pages, wherein each virtual web page is a preview of a corresponding actual web page before the corresponding actual web page goes live, wherein each of the corresponding actual web pages is not designed with functionality for updating the database;
   displaying each group of at least one data element in a separate one of the plurality of virtual web pages;
   displaying an editing tool to permit a user to edit a virtual web page from the plurality of virtual web pages;
   translating the edits to the virtual web page into updates for the database;
   storing the updates in the database; and
   enabling, during a live view of a corresponding actual web page associated with the virtual web page, a display on the corresponding actual web page with the updates made to the virtual web page during the preview.
17. The computer-implemented method of clause 16, wherein each of the plurality of virtual web pages is displayable within a frame associated with an editor interface of the user interface.
18. The computer-implemented method of clause 16 or 17, further comprising displaying a user-selectable feature enabling the user to navigate through the plurality of virtual web pages to individually and dynamically display each of the plurality of virtual web pages.
19. The computer-implemented method of any of clauses 16-18, further comprising displaying a user-selectable feature enabling the user to select a particular virtual web page from the plurality of virtual web pages based on an identifier of the particular virtual web page.
20. The computer-implemented method of any of clauses 16-19, wherein the identifier of the particular virtual web page is based on a data element associated with the particular virtual web page.
21. The computer-implemented method of any of clauses 16-20, further comprising associating a unique URL with each of the plurality of virtual web pages.
22. The computer-implemented method of clause 21, wherein each of the plurality of virtual web pages is generated based on a sitemap referencing the unique URL of each of the plurality of virtual web pages.
23. The computer-implemented method of any of clauses 16-22, wherein the editing tool is configured to receive edits to the stored groups of at least one data element in the database.
24. The computer-implemented method of any of clauses 16-23, wherein the editing tool is configured to receive edits to attributes of the plurality of virtual web pages.
25. The computer-implemented method of any of clauses 16-24, wherein the editing tool is configured to receive edits to code that is used to generate the plurality of virtual web pages.
26. The computer-implemented method of any of clauses 16-25, wherein the editing tool is configured to display a plurality of segments of skeleton code representing actual code used to generate the plurality of virtual web pages, and receive edits to the skeleton code that are translated into edits to the actual code.
27. The computer implemented method of any of clauses 16-26, wherein the data elements are received via the user interface from an external source.
28. A system for enabling dynamic edits to web pages to update a back-end database containing data sets that populate the web pages, the system comprising:
   an online database configured to store a plurality of data elements for display on a plurality of web pages, the data elements organized into one or more groups of at least one data element, each group for display on a separate web page of a website, each separate web page lacking functionality for updating the online database; and
   at least one processor configured to:
      provide instructions remotely to a browser to provide an interface displaying an editable version of a first web page generated based on a group of at least one data element, the interface permitting a user to edit the at least one data element;
      translate edits received via the interface on the editable version of the first web page into updates for the online database;
      store the updates in the online database; and
      enable, during a live view of the first web page, a display on the first web page with the updates made to the editable version to the first web page.
29. The system of clause 28, wherein the at least one processor is further configured to generate a plurality of separate editable versions of web pages, wherein each separate editable version of a web page is displayable within a frame associated with an editor interface of the interface.

### ITEMS:

1. A computer-implemented method for online website building using customized back-end functionality, the method comprising:
   maintaining an online database configured to store a library of website building elements for configuring a front-end of an indexable web page;
   transmitting first instructions to a client, the first instructions permitting the client to access the stored library via a unified interface displayable by the client, and to permit a user of the client to select a website building element from the stored library for constructing the front-end of the indexable webpage, wherein the unified interface provides the user access to both the website building elements from the stored library and dynamic customized back-end functionality associated with the indexable webpage;
   automatically accessing, based on rules stored in the online database, code associated with the selected website building element, and making available the code to the client;
   enabling, via the unified interface, the user to configure a programmable event for activating user-editable code providing dynamic customized back-end functionality associated with the indexable webpage;
   storing the user-editable code in a code storage system in communication with the online database; and
   in response to a trigger associated with the programmable event, executing the user-editable code for implementing the dynamic customized back-end functionality.
2. The computer-implemented method of item 1, further comprising, in response to the trigger, obtaining data external to the online database and external to the client for using in the executing of the user-editable code for implementing the dynamic customized back-end functionality.
3. The computer-implemented method of item 1 or 2, wherein at least some portions of the user-editable code are made accessible for editing to the user in the form of selectable segments of code.
4. The computer-implemented method of any preceding item, wherein the execution of the user-editable code for implementing the dynamic customized back-end functionality occurs based on a hook that causes the execution of the user-editable code.
5. The computer-implemented method of item 4, wherein the hook is at least one of a web hook, a data hook, or a data-binding router hook.
6. The computer-implemented method of any preceding item, wherein the automatically accessed code includes a function associated with the website building element selected by the user and a snippet of code associated with that function.
7. The computer-implemented method of any preceding item, wherein the unified interface displayable by the client includes a front-end website editing window and a customized back-end editing window.
8. The computer-implemented method of any preceding item, wherein the trigger includes at least one of:
   data activity involving a particular data set that is associated with the dynamic customized back-end functionality;
   an update entered on the indexable web page;
   a page transition on the indexable web page; or
   a defined interaction between the user and the indexable web page.
9. The computer-implemented method of any preceding item, further comprising, in response to the trigger associated with the programmable event, executing the user editable code to implement a plurality of dynamic customized back-end functionalities.
10. The computer-implemented method of any of itemitems 1 to 8, further comprising, in response to a plurality of triggers associated with a plurality of programmable events, executing the user editable code to implement the dynamic customized back-end functionality.
11. The computer-implemented method of any preceding item, wherein the code storage system is configured to store code for a software-based router that handles incoming client requests to the indexable web page.
12. The computer-implemented method of any preceding item, wherein the code storage system and the online database are the same storage system.
13. The computer-implemented method of any preceding item, wherein the indexable webpage is a dynamic webpage which changes appearance based on the dynamic customized backend functionality.
14. The computer-implemented method of any preceding item, wherein the client is operating on at least one of: a personal computer, a mobile device, or a tablet device.
15. The computer-implemented method of any preceding item, further comprising:
   receiving a selection, from a user, of the website building element for constructing the front-end of the indexable webpage.
16. The computer-implemented method of item 15, further comprising:
   receiving, from the user, the programmable event configured by the user for activating user-editable code.
17. The computer-implemented method of item 16, further comprising:
   receiving user edits to the user-editable code for implementing the dynamic customized back-end functionality associated with the programmable event.
18. An online website building system configured to permit website builders to add back-end functionality to a centrally hosted website, the centrally hosted website including web pages indexable by a search engine, the system comprising:
   the online database; and
   at least one processor configured to perform the method of any preceding item.
19. A computer-readable medium storing computer-executable instructions which, when executed by one or more processors, causes the one or more processors to perform the method of any of items 1 to 17.

## Claims

1. A computer-implemented method for on-demand assignment of a web-server execution instance for a website server, the method comprising:
storing, in a first memory location, generic website server code for hosting a plurality of websites;
storing, in a second memory location that is segregated from the first memory location, website specific code unique to each of the plurality of websites;
controlling a plurality of web-server execution instances, at least some of the instances running website specific code unique to at least one of the plurality of websites, and at least others of the web-server execution instances running the generic website server code devoid of the specific unique code for any one website;
receiving a request to access a specific website, the specific website having been built on a platform including the generic website server code;
determining whether the specific website is already hosted by one of the plurality of web-server execution instances; and
when it is determined that the requested specific website is not already hosted by one of the plurality of web-server execution instances:
directing the request to a first one of the plurality of web-server execution instances running the generic website server code;
injecting into the first one of the plurality of web-server execution instances running the generic website server code, additional website specific code unique to the requested website from the at least one second memory location; and
responding to the request, via the first one of the plurality of web-server execution instances, through a combination of both the generic website server code and the injected website specific code unique to the requested website.

2. The computer-implemented method of claim 1, wherein the plurality of web-server execution instances includes one or more containers, virtual machines, or physical machine processes.

3. The computer-implemented method of any preceding claim, wherein the request is an HTTP request, HTTPS request, or a network request; and wherein the method further comprises responding to the request before the request times out.

4. The computer-implemented method of any preceding claim, further comprising:
delegating the determining to a proxy server to help determine how to handle the request.

5. The computer-implemented method of any preceding claim, wherein the determining further comprises querying a web-server execution instance manager as to whether the specific website is already hosted by one of the plurality of web-server execution instances.

6. The computer-implemented method of any preceding claim, wherein the determining further comprises forwarding the request to a web-server execution instance manager and if the request fails, determining therefrom that the requested specific website is not currently hosted by one of the plurality of web-server execution instances.

7. The computer-implemented method of any preceding claim, wherein the determining further comprises determining, based on a state table, that the specific website is already hosted by one of the plurality of web-server execution instances.

8. The computer-implemented method of claim 7, when dependent on claim 4, wherein the state table is maintained at the proxy server, for use in determining a status of the plurality of web-server execution instances.

9. The computer-implemented method of any preceding claim, wherein the injected additional website specific code unique to the requested website comprises backend code.

10. The computer-implemented method of any preceding claim, wherein the injected additional website specific code unique to the requested website comprises frontend, backend, and plugin reference code.

11. The computer-implemented method of any preceding claim, further comprising:
monitoring the number of available web-server execution instances; and
spinning-up new web-server execution instances and adding them to a set of available web-server execution instances when the number of web-server execution instances in the set of available web-server execution instances is less than a threshold.

12. The computer-implemented method of any preceding claim, further comprising:
monitoring the number of available web-server execution instances; and
shutting down web-server execution instances in the set of available web-server execution instances when the number of web-server execution instances is higher than a threshold.

13. A computer system configured to perform the method of any preceding claim.

14. A computer-readable medium storing computer-executable instructions which, when executed by one or more processors, cause the one or more processors to perform the method of any of claims 1 to 12.
